# EUROPEAN PATENT SPECIFICATION

(11) **EP 2 221 734 B1**
(45) Date of publication and mention of the grant of the patent: **29.11.2017**
(21) Application number: 09425065.1
(22) Date of filing: 16.02.2009
(51) Int. Cl.: G06F 9/54

(54) **CROSS COMMUNITY INVITATION AND MULTIPLE PROVIDER PRODUCT INFORMATION PROCESSING SYSTEM**
EINLADUNG ÜBER COMMUNITYGRENZEN UND INFORMATIONSVERARBEITUNGSSYSTEM FÜR PRODUKTE VON VERSCHIEDENEN ANBIETERN
INVITATION AU TRAVERS DE COMMUNAUTÉS ET SYSTÈME DE TRAITEMENT D'INFORMATIONS DE PRODUIT DE PLUSIEURS FOURNISSEURS

(43) Date of publication of application: 25.08.2010
(73) Proprietor: Accenture Global Services Limited, Dublin 4 (IE)
(72) Inventor: Macchietti, Alessandra, 00149 Rome (IT); Privitera, Roberto, 00139 Rome (IT); Racioppoli, Antonio, 80126 Naples (IT)
(74) Representative: Müller-Boré & Partner Patentanwälte PartG mbB

(56) References cited:
- US-A1- 2008 052 373
- Ian Braithwaite ET AL: "A Framework for Real-Time Embedded PC Programming", Work-In-Progress Sessions of The 21st IEEE Real-Time Systems Symposium (RTSSWIP00), Orlando, Florida, November 27-30, 2000, 30 November 2000 (2000-11-30), pages 1-4, XP055314250, Internet Retrieved from the Internet: URL:http://www.iau.dtu.dk/secretary/pdf/ia n.pdf [retrieved on 2016-10-26]

## Description

### BACKGROUND OF THE INVENTION

### 1. Technical Field.

This application relates to telecommunications products and services. In particular, this application relates to coordinating electronic cross community invitations and to multiple provider product information processing systems.

### 2. Related Art.

With the advent of the Internet and on-line social communities, people find themselves in increasingly extensive webs of relationships. While creating many relationship has its advantages, people are often associated with numerous different communities and the number of relationships they create can reach a level where it is nearly impossible for a service subscriber to manage. One practical problem that arises is that when a subscriber wishes to invite friends to meet at a location, the subscriber would undergo a time consuming process to look for contact information for all the invitees. In the past, the subscriber, in most cases, had to manually type in the names and contact information of the invitees. The situation becomes acute when the subscriber is associated with a large number of different community sites each with different sets of contact information. The subscribers are forced to manually gather information from different sources of contacts and this process can be very time consuming. Tracking, contacting, and maintaining contacts across multiple social network platforms is a difficult technical challenge.

Also, significant numbers of new commercial items are introduced into the market each day. The number of items that are available in the market is so large that consumers face the technical challenge of gathering information on the items that will assist them in making a well reasoned purchasing decision. Especially for newly introduced items, the consumers have virtually no information about the item on which to base their buying decisions. Even if the consumer has decided to purchase the item, the items are often not available in a store that the consumer is familiar with. In such a case, consumers are faced with the further challenge of actually purchasing the new item. Furthermore, even when armed with information that describes a new item, the purchaser may have insufficient knowledge or experience with such items to make a reasoned purchasing decision. Although there are, for some types of items, sources of rating information, there is the further technical challenge of determining which sources of rating information are available, and which sources of rating information to rely on.

US 2008/052373 A1 discloses systems and methods for providing a desktop user interface for accessing and using community-based contact management, communication tools, websites and application pods in an integrated fashion, in an always-on mode. The desktop user interface resides on the user's desktop as an application and provides access to the aforementioned community-based services in a convenient, integrated manner without the need to open a browser in order to access the community-based services.

### Summary

A method for cross community invitation includes receiving at a service delivery platform a search query from a subscriber, retrieving a location information of the subscriber in response to the search query, retrieving through the service delivery platform a search result from a plurality of information sources based on the search query, returning the search result to the subscriber, receiving a search result selection from the search result from the subscriber, building a contact information list from community data associated to the subscriber and obtained from a plurality of contact sources in response to the search result selection, returning the contact information list to the subscriber, receiving a contact selection from the contact information list from the subscriber, and transmitting an invitation message based on the contact selection to recipients corresponding to the contact selection.

A method for multiple provider product information searching includes receiving at a service delivery platform an object identification information from a subscriber though an interface layer, receiving at the service delivery platform a search preference information from the subscriber, retrieving through the service delivery platform a search result from a plurality of information sources based on the object identification information and the search preference information, returning the search result to the subscriber, receiving a location search indication associated with the search result from the subscriber, retrieving a subscriber location information in response to the location search indication, retrieving through the service delivery platform an object location information from a plurality of object location information sources based on the first selection, the subscriber location information, and the search preference information, returning the object location information to the subscriber.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 shows an overview of the cross community invitation and multiple provider product information processing system.
Figure 2 shows a view of an embodiment of the service delivery platform layer implemented with various capabilities.
Figure 3 shows an overview of various features of the System.
Figure 4 shows an overview of the Cross Community Invitation Search ("CCIS") Logic.
Figure 5 shows an overview of the Multiple Provider Product Information Search ("MPPIS") Logic with video recognition.
Figure 6 shows an overview of the MPPIS Logic with barcode recognition.
Figure 7 shows an overview of the Mobile Media Server Logic.
Figure 8 shows a detailed implementation view of the CCIS Logic for retrieving information and advertising messages.
Figure 9 shows a flow diagram of the CCIS Logic for retrieving information and advertising messages.
Figure 10 shows a detailed implementation view of the CCIS Logic for managing events and sending cross community invitations.
Figure 11 shows a flow diagram of the CCIS Logic for managing events and sending cross community invitations.
Figure 12 shows a detailed implementation view of the MPPIS Logic with video recognition for recognizing items.
Figure 13 shows a flow diagram of the MPPIS Logic with video recognition for recognizing items.
Figure 14 shows a detailed implementation view of the MPPIS Logic with video recognition for retrieving shops on a map.
Figure 15 shows a flow diagram of the MPPIS Logic with video recognition for retrieving shops on map.
Figure 16 shows a detailed implementation view of the MPPIS Logic with barcode recognition for recognizing items.
Figure 17 shows a flow diagram of the MPPIS Logic with barcode recognition for recognizing items.
Figure 18 shows a detailed implementation view of the MPPIS Logic with barcode recognition for retrieving shops on a map.
Figure 19 shows a flow diagram of the MPPIS Logic with barcode recognition for retrieving shops on map.
Figure 20 shows a detailed implementation view of the Mobile Media Server Logic.
Figure 21 shows a flow diagram of the Mobile Media Server Logic.
Figure 22 shows a detailed implementation view of the Log On process.
Figure 23 shows a flow diagram of the Log On process.
Figure 24 shows a Communication Solution Differentiation in the Integration Method.
Figure 25 shows SOAP message Body structure.
Figure 26 shows a SOWirelessHeader structure.
Figure 27 shows a specificBody structure
Figure 28 shows a ServiceResult structure

### DETAILED DESCRIPTION OF THE PREFERRED EMBODIMENTS

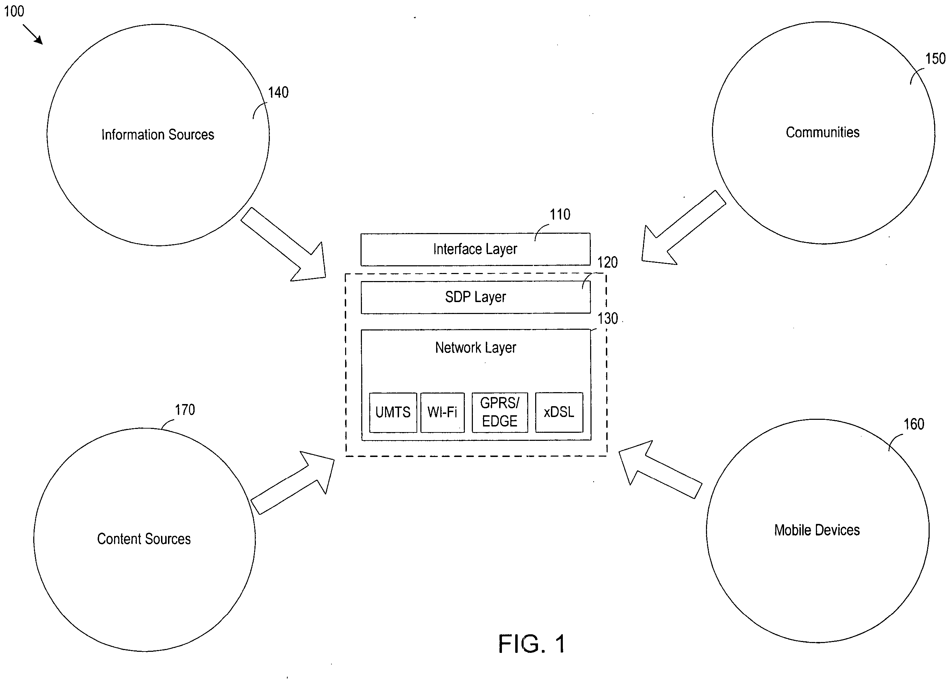

Figure 1 shows an overview of a telecommunications products and services provider system ("System") 100. In the system 100, an Interface Layer 110 interacts with a service delivery platform ("SDP") layer 120 and a network layer 130. The SDP layer 120 communicates with mobile devices 160, social communities 150, information providers 140 and content providers 170 via the network layer 130. The mobile devices 160 may include cellular phones, personal data assistants, portable game systems, and other mobile devices. Examples of social communities 150 include the Facebook (TM) community, the MSN (TM) community, the Flickr (TM) community and the MySpace (TM) community. Examples of the information providers 140 include Google, Yahoo!, and Amazon.com. Examples of content providers 170 include music providers, video providers (e.g., YouTube), game providers, and movie providers (e.g., Netflix). The network layer may utilize various communication technologies such as Universal Mobile Telecommunications System (UMTS), Wi-Fi, General Packt Radio Service (GPRS)/ Enhanced Data rates for GSM Evolution(EDGE) or Digital Subscriber Line (xDSL).

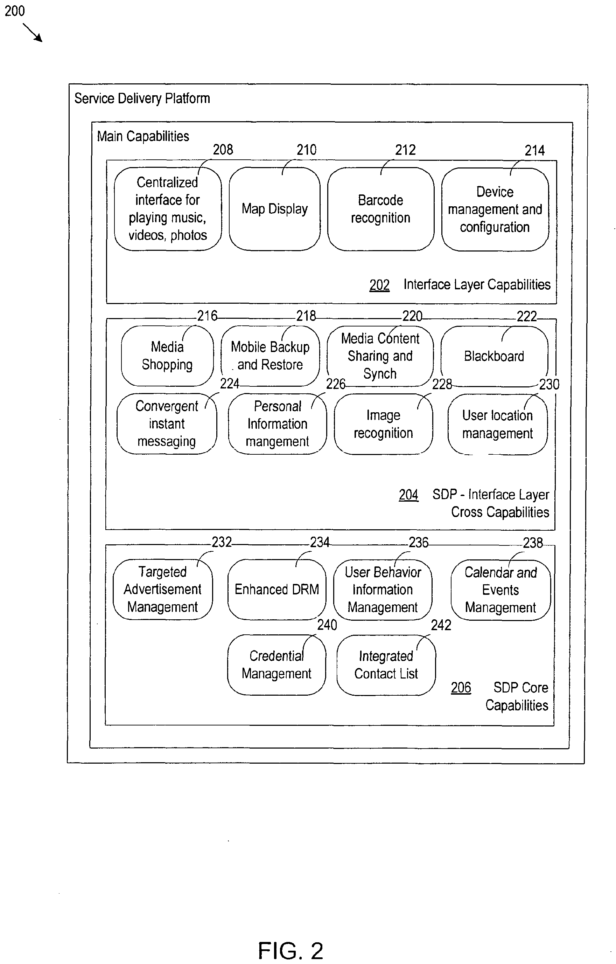

Figure 2 shows an embodiment 200 of the SDP layer 120 implemented with selected capabilities. The SDP layer 120 is largely divided into three capability units: Interface Layer Capabilities 202, SDP-interface layer cross capabilities 204, and SDP core capabilities 206. The interface layer capabilities 202 include a centralized interface unit 208 for playing music, videos and photos, a map display unit 210, a barcode recognition unit 212, and device management and configuration unit 214. The SDP-interface layer cross capability 204 includes a media shopping unit 216, a mobile backup and restore unit 218, a media content sharing and synch unit 220, a blackboard unit 222, a convergent instant messaging unit 224, a personal information management unit 226, an image recognition unit 228, and a subscriber location management unit 230. The SDP core capabilities 206 include a targeted advertisement management unit 232, an enhanced DRM unit 234, a subscriber behavior information management unit 236, a calendar events management unit 238, a credential management unit 240, and an integrated buddy list management unit 242.

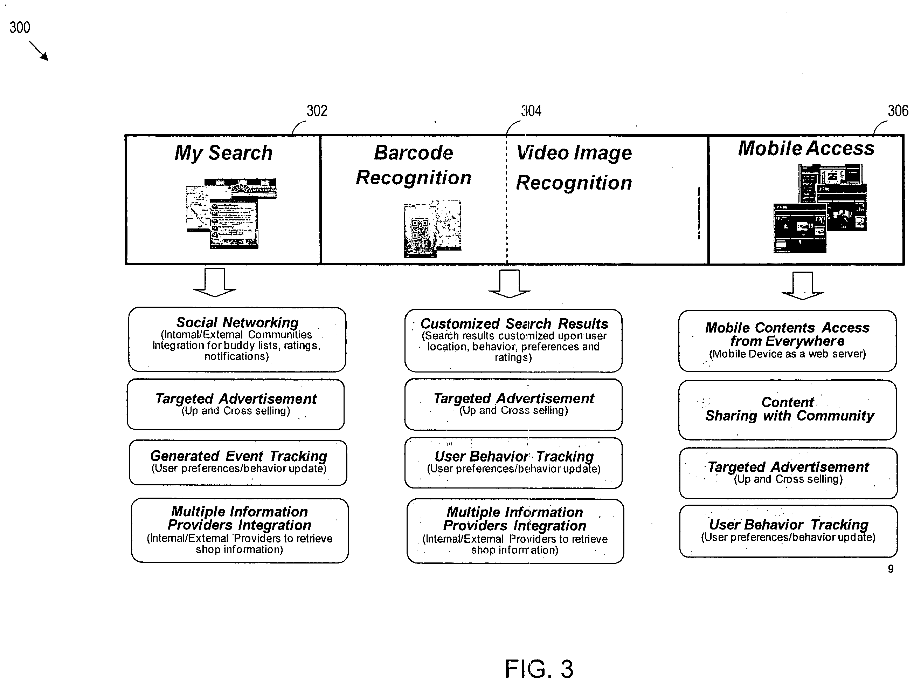

Figure 3 shows an overview of the specific features of the System 100 that the Interface Layer 110 may support. In one embodiment, the Interface Layer 110 supports the Cross Community Invitation Search ("CCIS") logic 302. The CCIS logic 302 allows the subscriber to perform a search based on a category and/or keywords, share the results with the subscriber's friends (or other selected contacts) and send invitations to selected friends or contacts based on the search results. The embodiment may also be implemented to support the Multiple Provider Product Information Search ("MPPIS") logic 304. The MPPIS logic 304 allows the subscriber to scan in a barcode of an item or send a live video feed to the SDP 120, and retrieve information associated with the object, which may include the item price and an identification of stores selling the item. The system 100 may also implement the mobile media server logic 306. The mobile media server feature 306 allows a subscriber to access mobile contents such as music, videos and photos anywhere, and share the contents with the subscriber's friends or other contacts.

Figure 3 also shows selected capabilities of the CCIS logic 302, such as social networking integration to reach internal and external communities, access buddy lists, ratings, and provide notifications; targeted advertising; generated event tracking, to help identify user preferences and behavior; and multiple information provider integration, to facilitate retrieval of shopping information from internal and external providers of goods and services.

In addition, Figure 3 shows that the MPPIS logic 304 provides similar features, as well as customized search results. The customized search results may be influenced by subscriber location, behavior, preferences, and rating. User behavior tracking maintains information concerning subscriber preferences and behaviors.

The media server logic 306 provides widely ranging access to mobile content as well as content sharing with a community of subscribers.

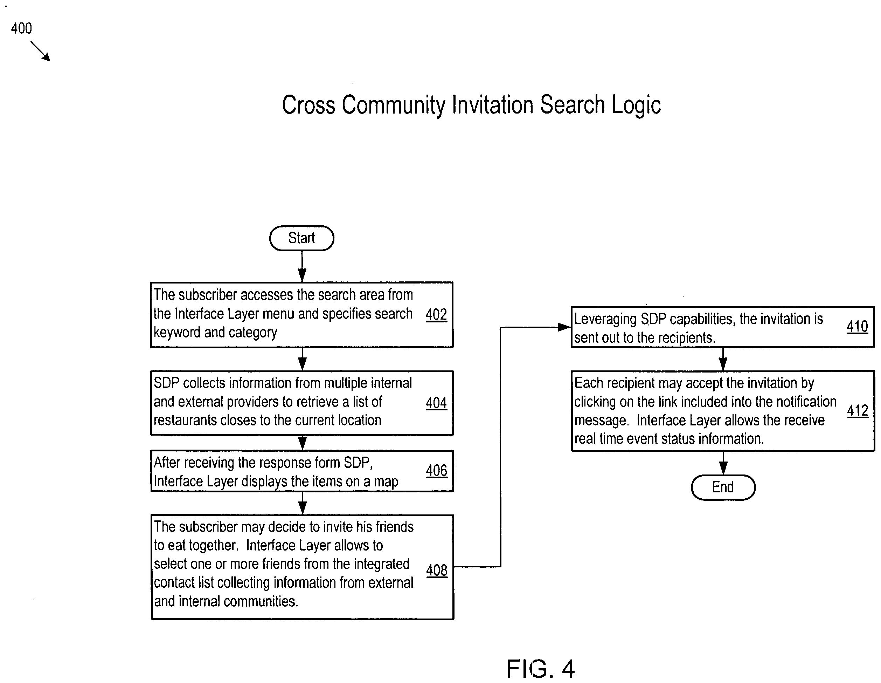

An exemplary implementation 400 of the CCIS Logic 302 will be described with reference to Figure 4. A subscriber accesses the search area from the Interface Layer menu and specifies a search keyword (402). Examples of keywords are: pizza, French, action, country, or other words that describe food, music, movies, or any other area or item of interest. The subscriber may also specify a category. Examples of categories are: restaurants, movie theatres, sporting goods stores, or any other category for items of interest. The subscriber may, for example, search for the closest French restaurant. When the subscriber submits the search, the information is sent to the SDP 120 and the SDP 120 collects information from multiple internal (e.g., maintained internal to the SDP 120) and external (e.g., maintained by a third party) information providers to retrieve a list of restaurants closest to the current subscriber location (404). The SDP 120 sends the retrieved information to the Interface Layer 110, which displays the information on a map (406). The subscriber may decide to invite his friends to the restaurant. The Interface Layer 110 accepts subscriber input of a selection of one or more friends from an integrated contact list, which may show contact entries collected from external and internal social communities (408). Alternatively, the SDP 120 may search a local database for the subscriber's contacts, and create and send the contact list to the subscriber's device. The SDP 120 also determines how to contact each friend and sends the invitations via the determined methods of communication such as short messaging services (SMSs) or community messages (410). The invitees will be notified, and may accept or decline the invitation by, for example, clicking on a link included in the invitation message. The interface layer 110 may receive real time event status information (412), such as event location, date and time, event organizer, event subject and invitation message, list of attendees.

In building a contact list, the system or the subscriber device may apply filters. For example, the system may filter contacts to add or reject from the contact list according to preference data stored with the contact information. The preference data may, for example, establish common interests with respect to the search keyword or category and/or the selected search result, such that the filter would add those contacts with the same or similar interests to the contact list.

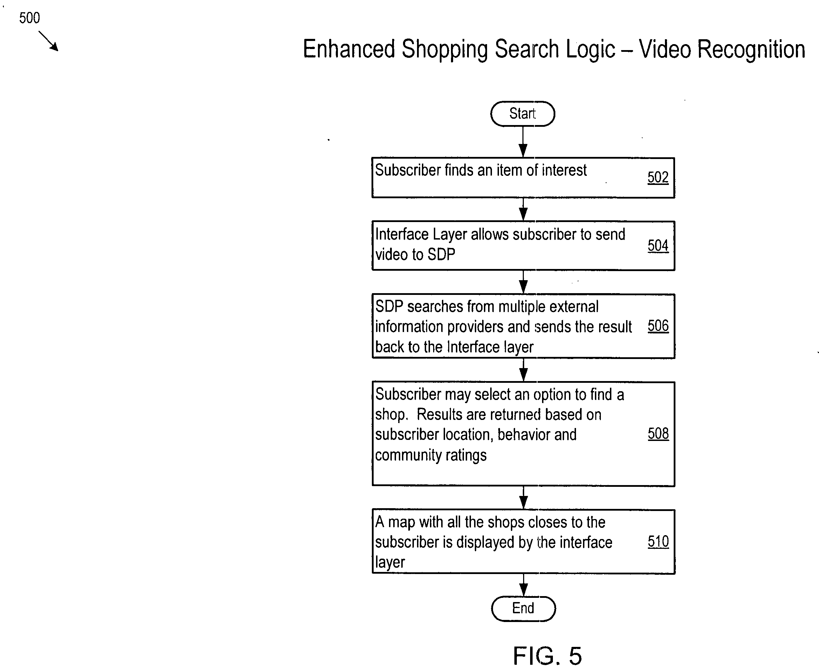

An exemplary implementation 500 of the MPPIS Logic 304 with video recognition will be described with reference to Figure 5. A subscriber may find an item of interest in a shop (502), and through the Interface Layer 110 installed on the subscriber's mobile device, the subscriber may establish a video call with the System 100. The System identifies the item depicted in the video call and displays on the interface layer a video associated with the item so that the subscriber may verify that the System has correctly identified the item (504). At the same time, the system searches through any number of desired information providers to obtain information relating to the item identified from the video call. The information may include price, ratings on the item made by other subscribers, or other item information. The System also retrieves targeted advertisement information based on the identified item, and sends the advertisement information to the interface layer for display to the subscriber along with the search results (506). After viewing the information related to the item contained in the search result, the subscriber may select an option to find places the subscriber may purchase the identified item from. The system searches through various information providers for places where the item is available for sale (508). The search may be prioritized based on various factors, such as subscriber location, community ratings, and subscriber behaviors. The subscriber may also select which sources of community ratings the System may use to prioritize the results. The System then displays the prioritized search result on a map which identifies the location of the stores (510).

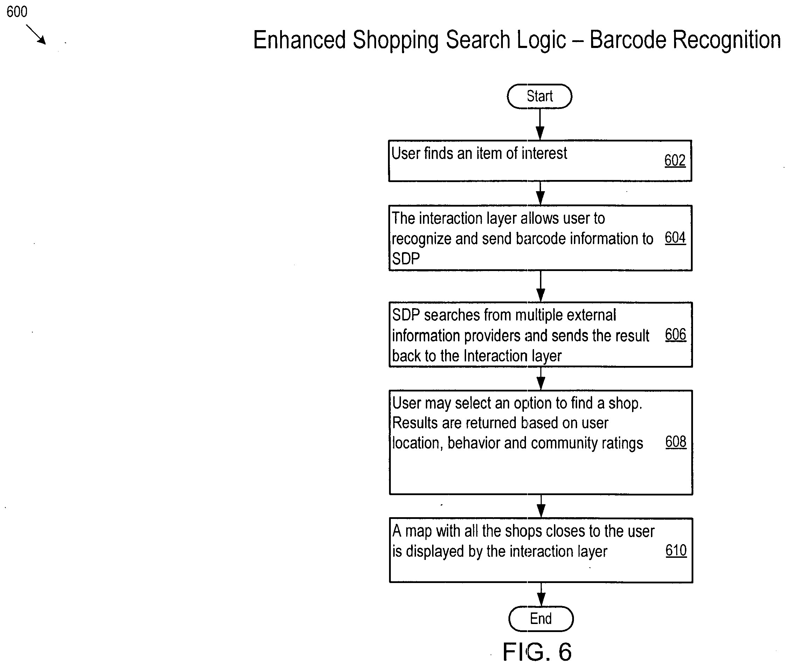

An exemplary implementation 600 of the MPPIS logic 304 with barcode recognition will be described with reference to Figure 6. A subscriber may find an item of interest in a shop (602), and through the interface layer of the System installed on the subscriber's mobile device, the subscriber may scan a barcode image into the mobile device (604). The System identifies the item represented by the barcode searches through various information providers to obtain information relating to the item identified barcode. The information may include price, ratings on the item made by other subscribers. etc. The System also retrieves targeted advertisement information based on the identified item, and sends the advertisement information to the interface layer for display to the subscriber, along with the search results (606). After viewing the information related to the item contained in the search result, the subscriber may select an option to find places the subscriber may purchase the identified item from. The system searches through the information providers for places where the item is available for sale (608). The search may be prioritized based on various factors, such as subscriber location, community ratings, and subscriber behaviors. The subscriber may also select which sources of community ratings the System may use to prioritize the results. The System then displays the prioritized search result on a map which identifies the location of the stores (610).

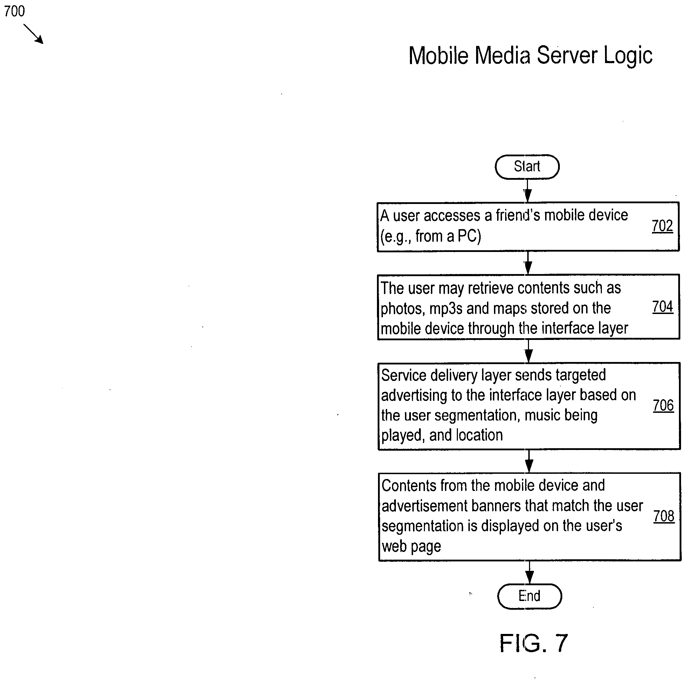

An exemplary implementation 700 of the Mobile Media Server logic 306 will be described with reference to Figure 7. A subscriber who is part of a community may access a mobile device of another member of the community via a website (step 702). The interface layer of the System allows the subscriber to retrieve contents such as photos, mp3 files, and maps from the mobile device (step 704). At the same time, SDP 120 of the System sends targeted advertisement which is selected based on factors such as the subscriber segmentation, music being played, and location to the interface layer (step 706). Subscriber segmentation is a list of categories the subscriber is interested in (such as sport, fashion, traveling, music, electronics, etc.). This information is typically updated on SDP 120 according to the subscriber behavior (e.g. the performed search categories or the generated event types) and may be used for advertisement purposes. The Interface Layer 110 of the system 100 in turn allows the subscriber to view the advertisement that matches the subscriber's segmentation along with the contents from the mobile device on the webpage on the PC (step 708).

Additional features may also be implemented in the system 100. They may include, as examples, a guide for tourists which recognizes famous paintings and historical buildings and allow a subscriber to retrieve detailed descriptions and tourist guides along with other information provided by information sources. A security feature may also be implemented, which provides face recognition, electronic surveillance, and monitoring functions. A health care feature recognizes images of pharmaceutical products, retrieves detailed descriptions including product specifications, side effects, medical suggestions associated with the pharmaceutical products, and display a list of closest pharmacies with corresponding prices, product availability and day/night shift information.

Detailed descriptions of the various features of the embodiments of the System will follow.

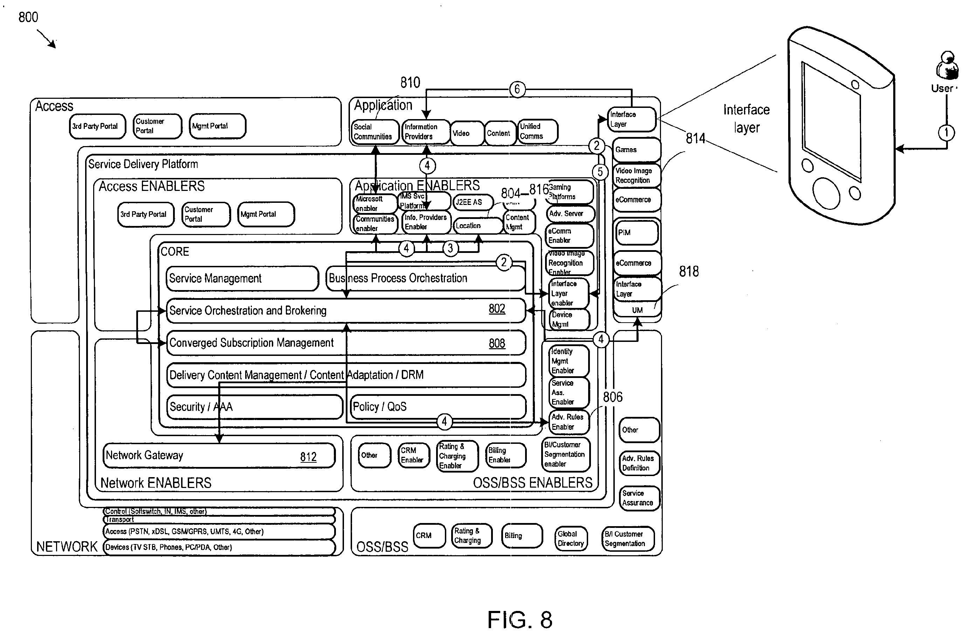

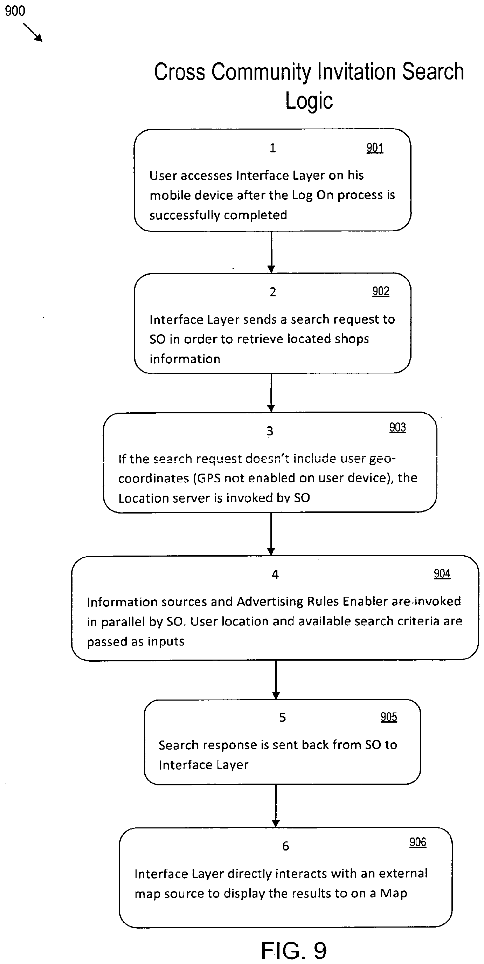

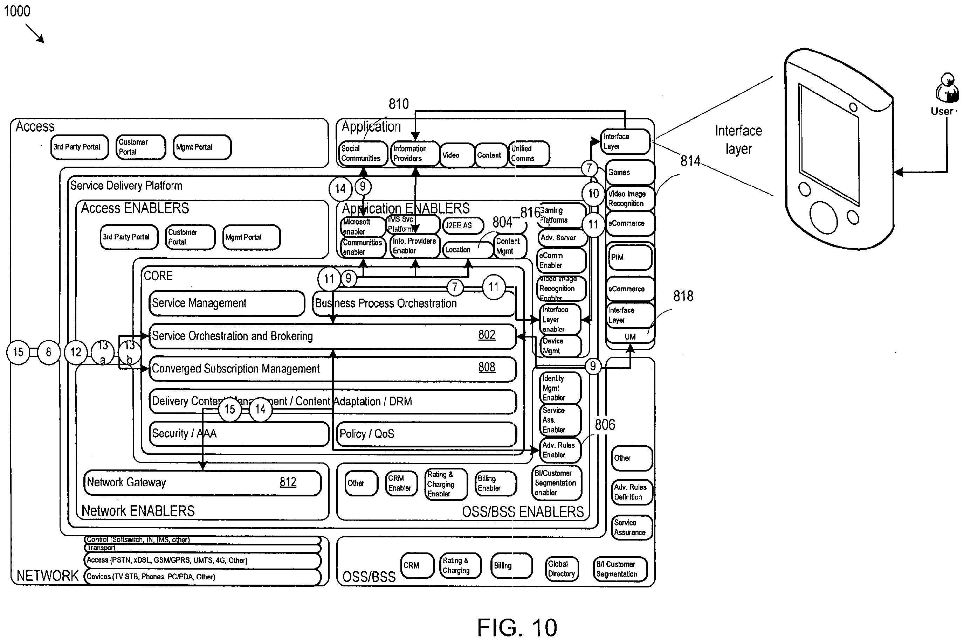

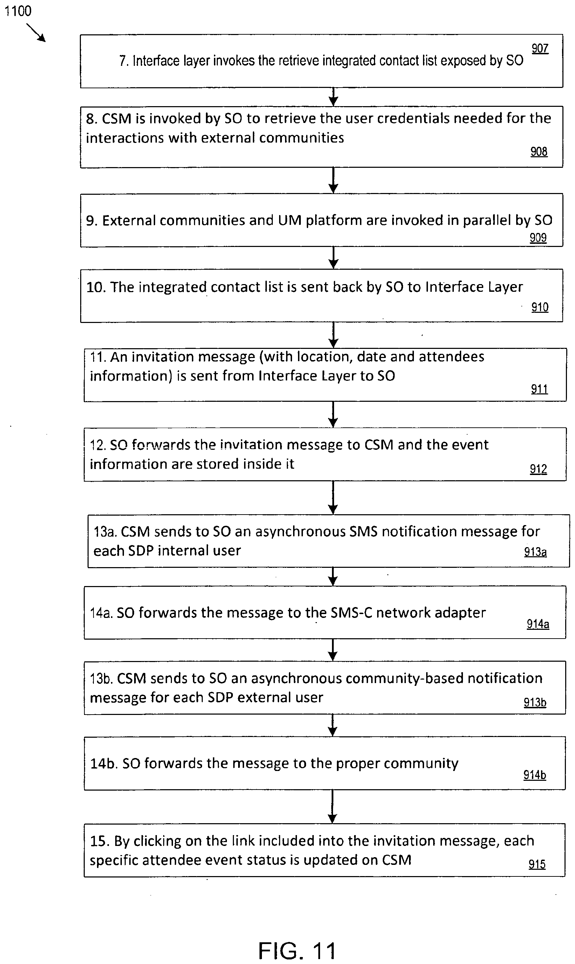

Figures 8-11 show an embodiment of the CCIS Logic 302 implemented in the System in more detail. In particular, Figures 8 and 10 show an architecture 800/1000 of the system 100, while Figures 9 and 11 show logic flow 900 / 1100 through the architecture 800 for the CCIS logic 302. A subscriber may access the Interface Layer 110 on a mobile device after a log-on process is successfully completed (901). The subscriber may enter a search keyword and category in the Interface Layer 110, and the Interface Layer sends a search request to the Service Orchestration & Brokering module ("SO") 802 in order to retrieve information on a shop (902). The search request may include a subscriber geo-coordinate information if the mobile device is equipped with a location tracking system such as a Global Positioning System (GPS). If the search request does not include a subscriber geo-coordinate information, the SO 802 invokes the Location server 804 (903), which attempts to obtain the subscriber's location using any desired location finding techniques. Next, the information sources 140 and the Advertisement Rules Enabler module 806 are invoked in parallel by SO 802. Subscriber location information and search criteria are passed as inputs (904). Next, a search response is sent back from SO 802 to the Interface Layer 110 (905). Upon receiving the response, the Interface Layer 110 directly interacts with a map source to display the search results on a map (906).

Once the results are displayed on the Interface Layer 110, the subscriber may wish to invite his/her friends to a location on the search result. When the subscriber makes a selection on the search result and indicates a desire to invite friends, the Interface Layer 110 invokes the retrieve integrated contact list module in the SO 802 (907). SO 802 also invokes the Converged Subscription Management ("CSM") module 808 to retrieve the subscriber credentials needed for the interactions with external communities 910 (908). Next, the external communities 910 and the Unified Messaging ("UM") platform 812 are invoked in parallel by SO 802 (step 909). UM platform 812 is a convergent communication solution as well as a community enabler internal to SDP 120. A contact list management for the community is implemented in the UM platform 818. The contact lists from various external communities are integrated and sent back by SO 802 to the Interface layer 110 (910). The Interface Layer 110 displays the integrated contact list and the subscriber may select from the contacts those he/she wants to invite. Subsequently, an invitation message containing location, date and attendee information is sent from the Interface Layer 110 to SO 802 (911). The SO 802 forwards the invitation message to CSM 808 and the event information contained in the message, such as Event Location, Date and Time, Event Organizer, Event Subject and Invitation Message, and List of attendees, is stored in CSM 808 (912). CSM 808 then sends an asynchronous Short Messaging Service ("SMS") notification message to SO 802 for each SDP internal subscriber (913a). SDP internal subscribers are subscribers belonging to an SDP community such as the UM service. Subsequently, SO 802 forwards the invitation message to the SMS-C network adapter 812 (914a). SMS-C is a network gateway to be invoked by SDP 120 in order to send SMSs. CSM 808 also sends an asynchronous community-based notification message to SO 802 for each SDP external subscriber (913b). SDP external subscribers are subscribers belonging to a community external to the SDP 120. SO 802 then forwards the invitation message to the proper community (914b). Each recipient may respond to the invitation by clicking on a link included in the invitation message. Each specific attendee status is updated on CSM 808 (step 915).

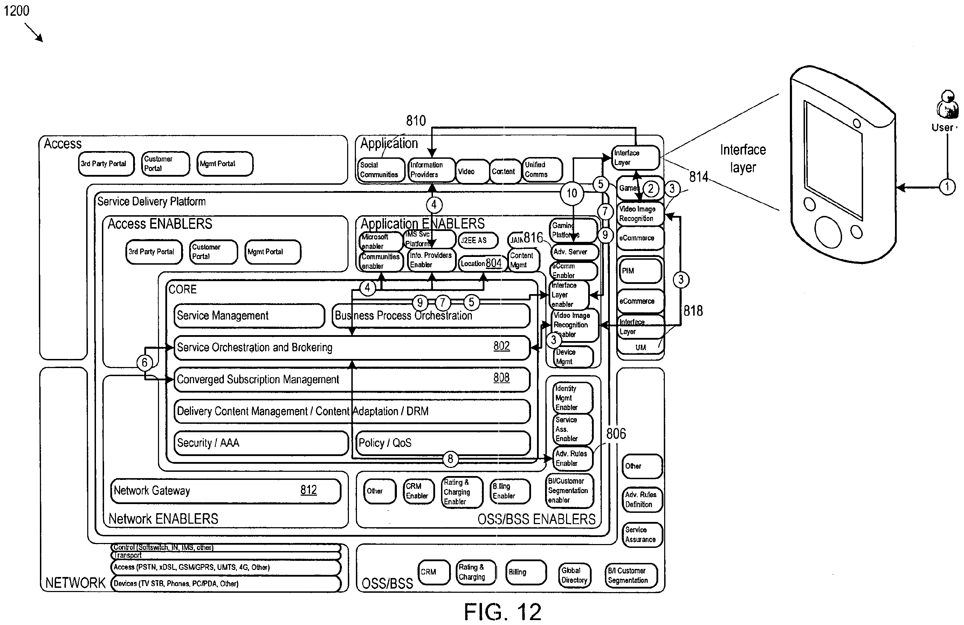

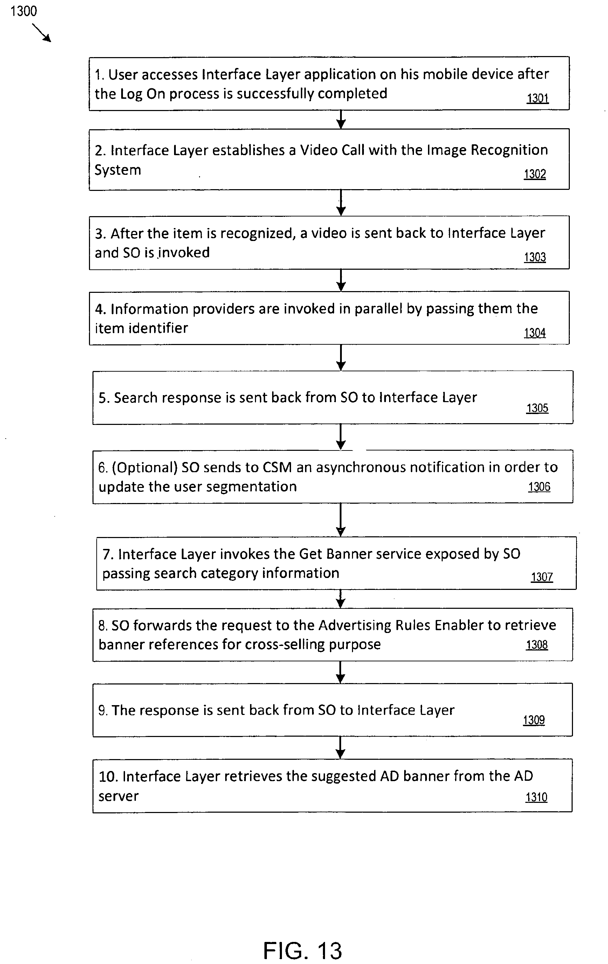

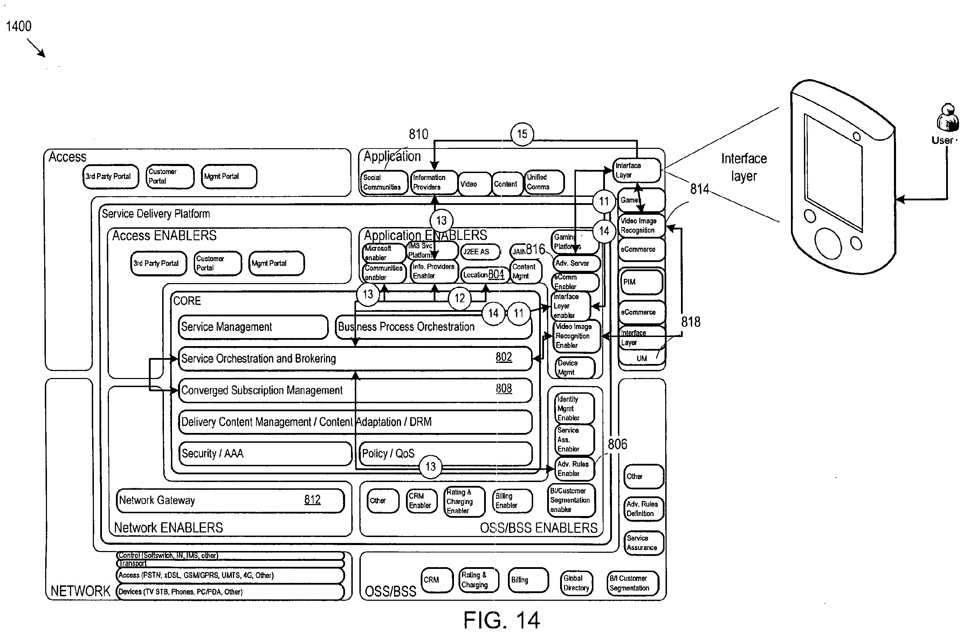

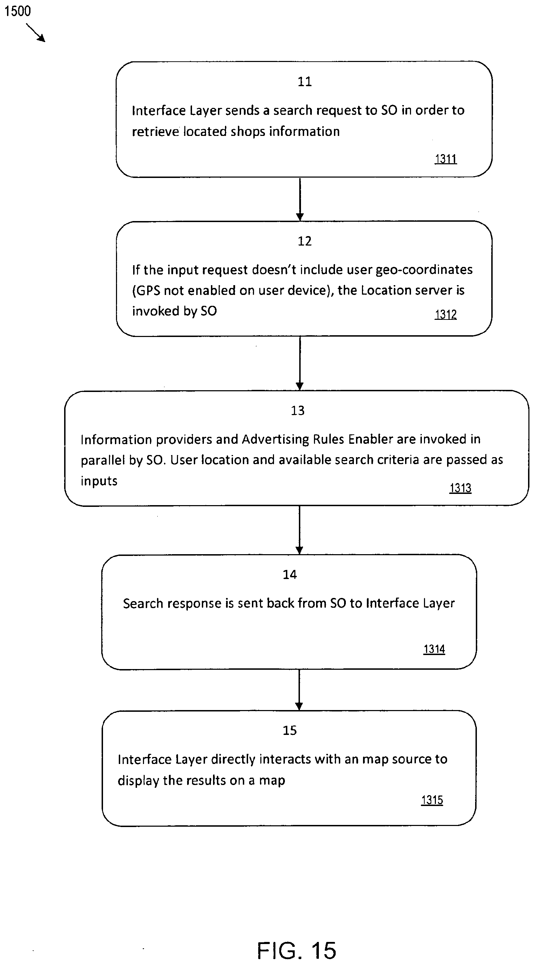

Figures 12-15 show an embodiment of the MPPIS logic 304 with video recognition implemented in the System in more detail. In particular, Figures 12 and 14 show an architecture 1200 / 1400 of the system 100, while Figures 13 and 15 show logic flow 1300 / 1500 through the architecture 800 for the MPPIS logic 304. The subscriber access the Interface layer 110 on a mobile device after a log on process is successfully completed (step 1301). When a subscriber activates the MPPIS Logic with video recognition, the Interface Layer 110 establishes a video call with the Video Image Recognition module 814 (1302). When the subscriber takes the video image using the mobile device, the image is sent to the Video Image Recognition module 814 and the module identifies the video image as an item. After the item is recognized, a video is sent back to the Interface Layer 110 and SO 802 is invoked by receiving an item identifier (1303). The SO 802 in turn invokes the information source 140 in parallel by passing the item identifier to the information source (1304). SO 802 receives a search response from the information source 140 and SO sends the response to the Interface Layer 110 (1305). Optionally, SO 802 may send an asynchronous notification to CSM 808 in order to update the subscriber segmentation (1306). Subsequently, the Interface Layer 110 invokes the Get Banner Service module in the SO 802 by passing the search category information (1307). SO 802 forwards the request to the Advertising Rules Enabler 806 to retrieve advertising banner references for cross-selling purposes (1308). SO 802 then sends the response back to the Interface Layer 110 (1309). Based on the response, Interface layer 110 retrieves the suggested advertising banner from the Advertising Server module 816 (1310).

Once the subscriber views the search result displayed on the Interface Layer 110, the subscriber may send a request to search for places where the subscriber may purchase the recognized item. The Interface layer 110 sends a location search request to SO 802 in order to retrieve a shop location information (step 1311). The location search request may include a subscriber geo-coordinate information if the mobile device is equipped with a location tracking system such as a Global Positioning System (GPS). If the location search request does not include a subscriber geo-coordinate information, the SO 802 invokes the Location server 804 which estimates the subscriber's location based on the subscriber's last known location (1312). Next, the object location information sources 140 and the Advertising Rules Enabler module 806 are invoked in parallel by SO 802. The subscriber location information and available search criteria are passed as inputs (1313). A search response is sent back from SO 802 to the Interface Layer 110 (1314). The Interface Layer 110 directly interacts with a map source to display the search results on a map (step 1315).

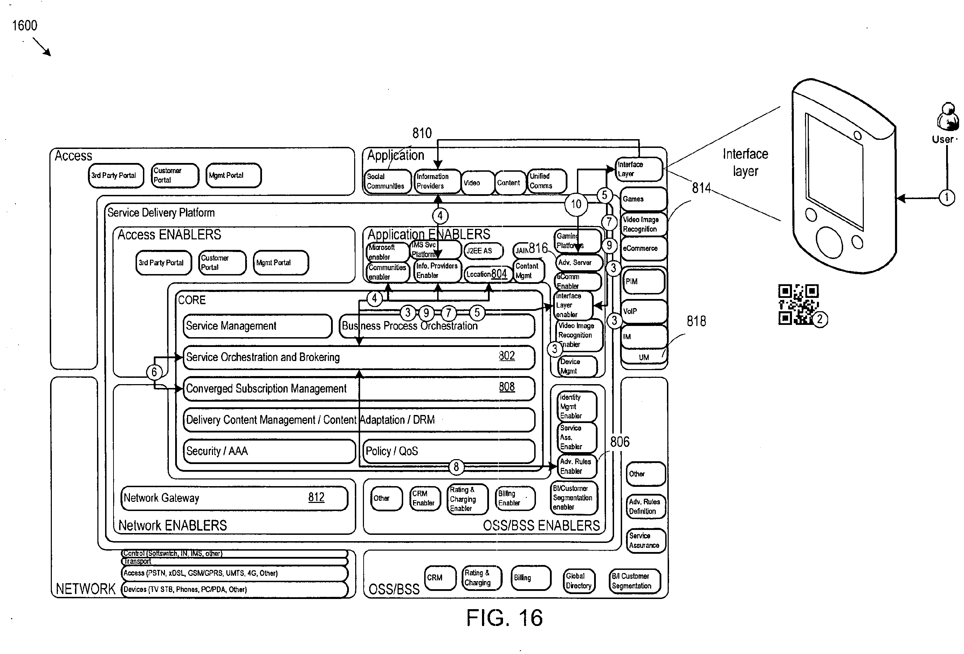

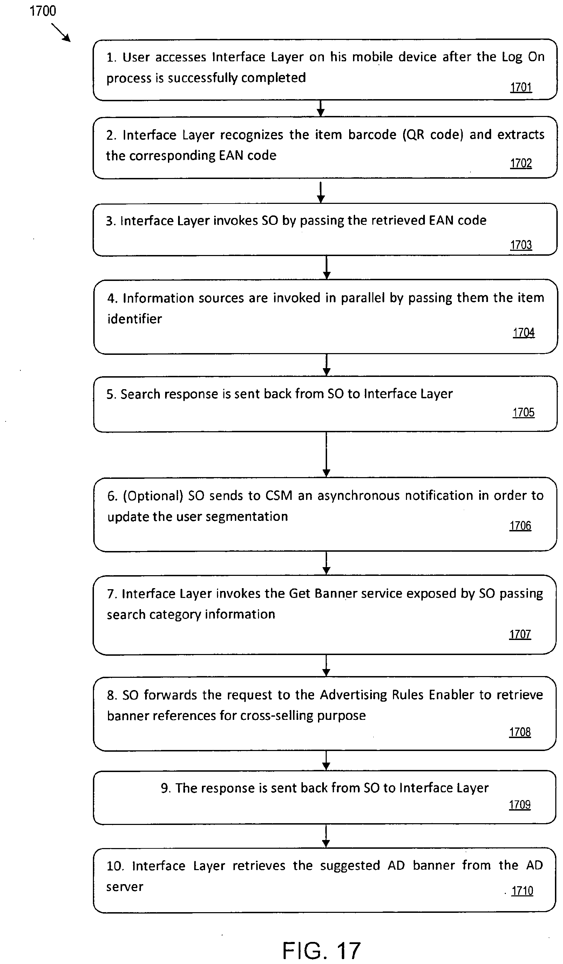

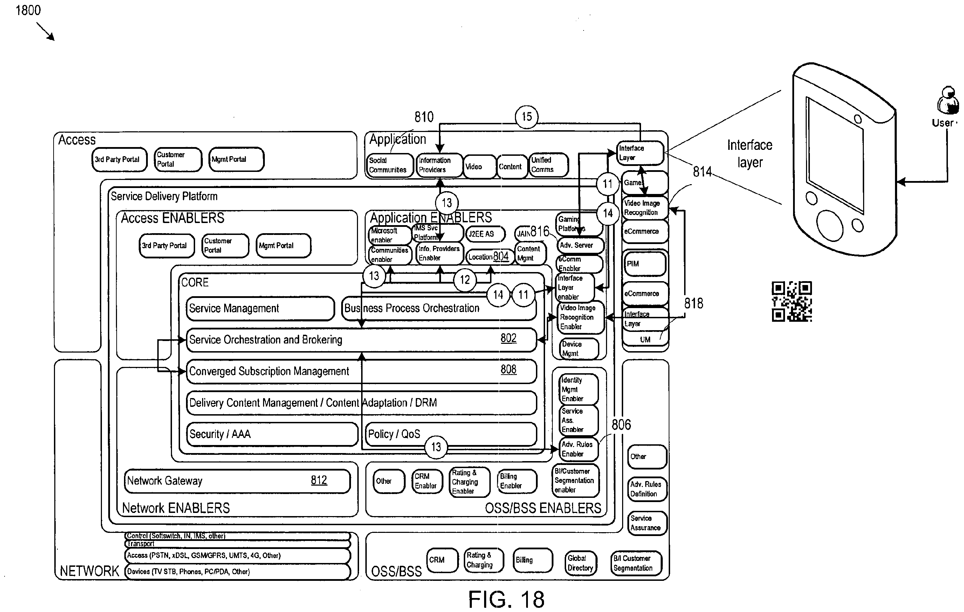

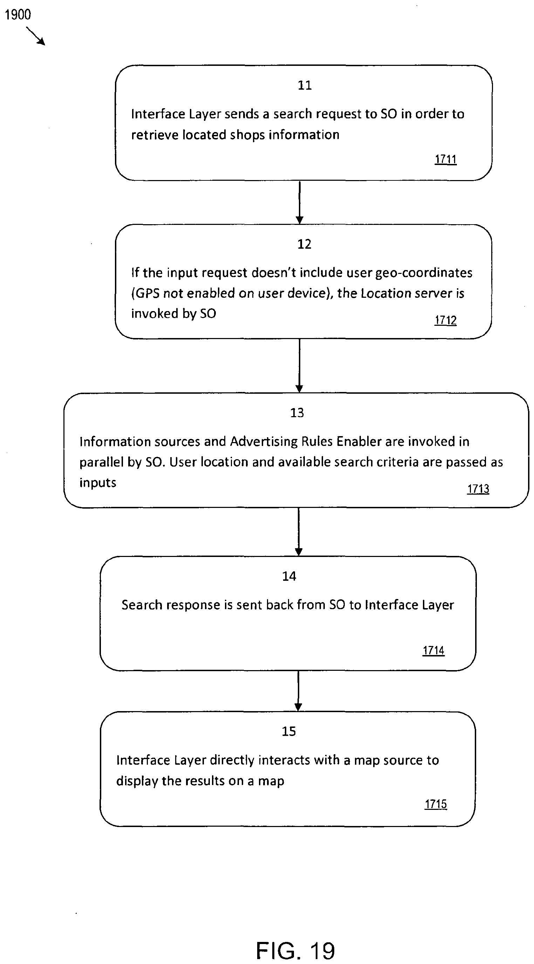

Figures 16-19 show an embodiment of the MPPIS Logic 304 with barcode recognition implemented in the System in more detail. In particular, Figures 16 and 18 show an architecture 1600/1800 of the system 100, while Figures 17 and 19 show logic flow 1700 / 1900 through the architecture 800 for the MPPIS logic 304. As an initial matter, it is noted that the system 100 may read, interpret and process any desired type of barcode, whether, one, two, or three dimensional. Furthermore, the system 100 and mobile devices may be extended to read, interpret, and process other types of codes or identification mechanisms other than bar codes, such as radio frequency tags, or other identification mechanisms. The subscriber access the Interface layer 110 on a mobile device after a log on process is successfully completed (1701). When a subscriber activates the MPPIS Logic with barcode recognition, the Interface Layer 110 allows the subscriber to scan a barcode image of an item. When the subscriber scans the barcode image of an item, Interface Layer 110 recognizes the item barcode and extracts the corresponding EAN code (1702). Next, Interface Layer 110 invokes SO 802 by passing the retrieved EAN code (1703). The SO 802 in turn invokes the information source 140 in parallel by passing to the information source 140 the item identifier (1704). The SO 802 receives a search response from the information source 140 and SO sends the response to the Interface Layer 110 (1705). Optionally, SO 802 may send an asynchronous notification to CSM 808 in order to update the subscriber segmentation (1706). Subsequently, the Interface Layer 110 invokes the Get Banner Service module in the SO 802 by passing the search category information (1707). The SO 802 forwards the request to the Advertising Rules Enabler 806 to retrieve advertising banner references for cross-selling purposes (1708). The SO 802 then sends the response back to the Interface Layer 110 (1709). Based on the response, Interface layer 110 retrieves the suggested advertising banner from the Advertising Server module 816 (1710).

Once the subscriber views the search result displayed on the Interface Layer 110, the subscriber may send a request to search for places where the subscriber may purchase the recognized item. The Interface layer 110 sends a location search request to SO 802 in order to retrieve a shop location information (1711). The location search request may include a subscriber geo-coordinate information if the mobile device is equipped with a location tracking system such as a Global Positioning System (GPS). If the location search request does not include a subscriber geo-coordinate information, the SO 802 invokes the Location server 804 which estimates the subscriber's location based on the subscriber's last known location (1712). Next, the object location information sources 140 and the Advertising Rules Enabler module 806 are invoked in parallel by SO 802. A subscriber location information and available search criteria are passed as inputs (step 1713). A search response is sent back from the SO 802 to the Interface Layer 110 (1714). The Interface Layer 110 directly interacts with a map source to display the search results on a map (step 1715).

Next, an embodiment of the Mobile Media Server logic 306 which may be implemented in the System will be described in more detail.

In the Mobile Media Server logic 306, the mobile phone may act as a web server, reachable from the Web via a standard Uniform Resource Locator. Subscribers who are part of the same community may access a web page composed using the contents and information stored on a mobile device (e.g., songs, photos, position / location). A web page with a banner that matches the subscriber segmentation is retrieved from the SDP. On the Web page, subscriber on the PC can play songs on the mobile device. SDP will provide a banner that better matches subscriber segmentation and the genre of song that the subscriber is listening to. A map with the mobile subscriber location is centered on the Web page. SDP will provide, on the Map, the located banners that match Community Events, location and Comments with the rating given by community's members.

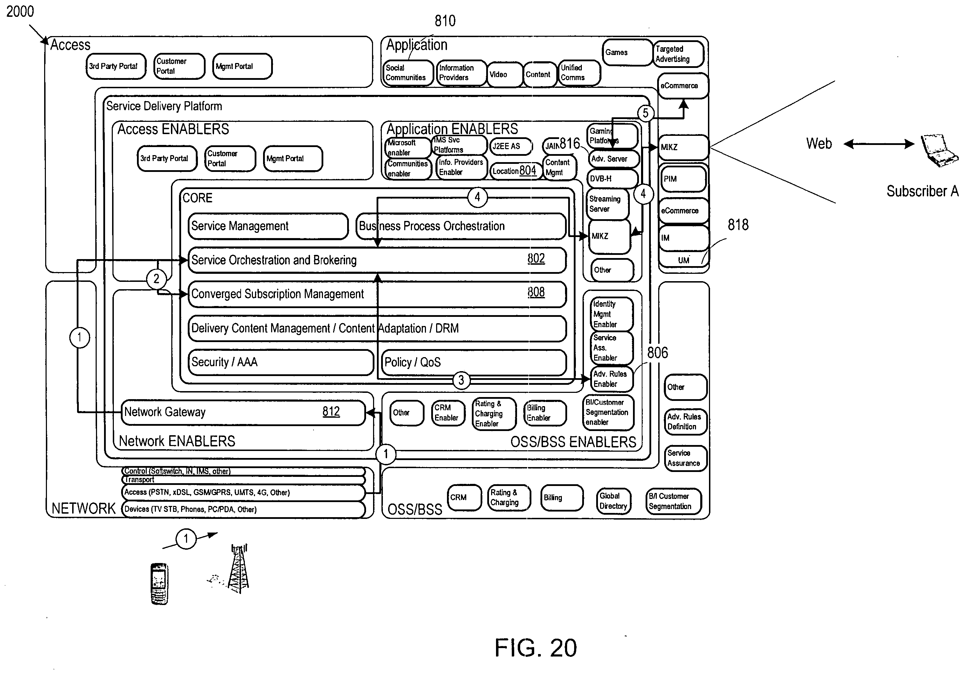

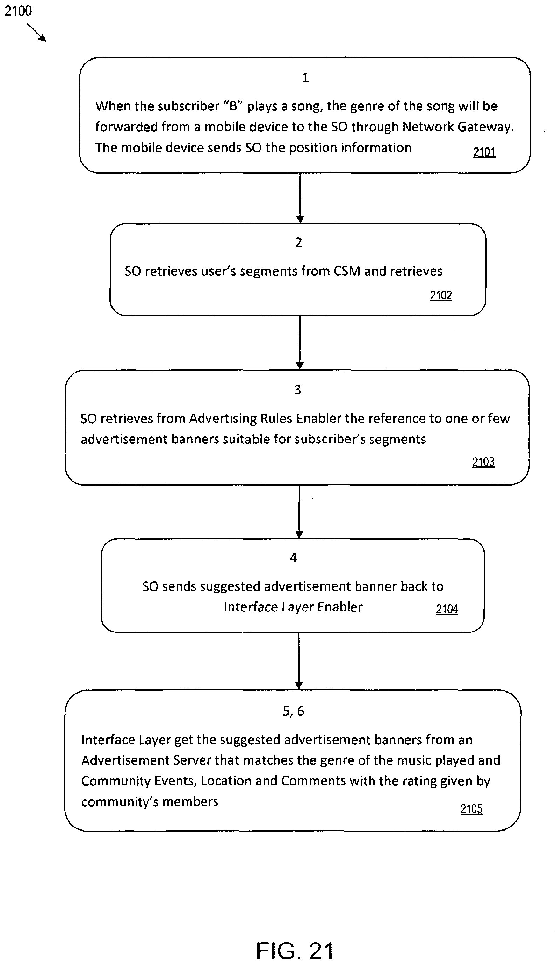

Referring to Figures 20-21, Figure 20 shows a system architecture 2000 and Figure 21 illustrates logic flow 2100 through the architecture 2000. As one example, when a subscriber "B" plays a song on a mobile device, the genre of the song (and any other desired indicia) will be forwarded from the mobile device to the SO 802 through the Network Gateway 812. The mobile device also sends a subscriber location information to SO 802 (2101). SO 802 also retrieves the subscriber's segment information from CSM 808 (2102). Next, SO 802 retrieves from the Advertising Rules Enabler 806 references to one or more Advertising banners that are suitable for the subscriber's segments (2103). SO 802 then sends the suggested advertisement banner information back to Interface Layer 110 (2104). Interface layer 110 retrieves the suggested Advertising banners from the Advertising server 816 that matches the played music genre and community events, location and comments with the rating given by community's members (2105).

An embodiment of the installation/removal process of the System is described. To install the System, a Bluetooth connection is established between the mobile device and the laptop on which the Interface Layer application .jar file is located. The Interface layer .jar file is sent to the mobile device. Once the .jar file is sent to the mobile device, the subscriber may accept the message asking for the Interface Layer application installation. To remove the System, the subscriber may select the Interface Layer from the applications menu and click on "Options". The subscriber may next click on "Delete" and accept the confirmation message to remove the System from the mobile device.

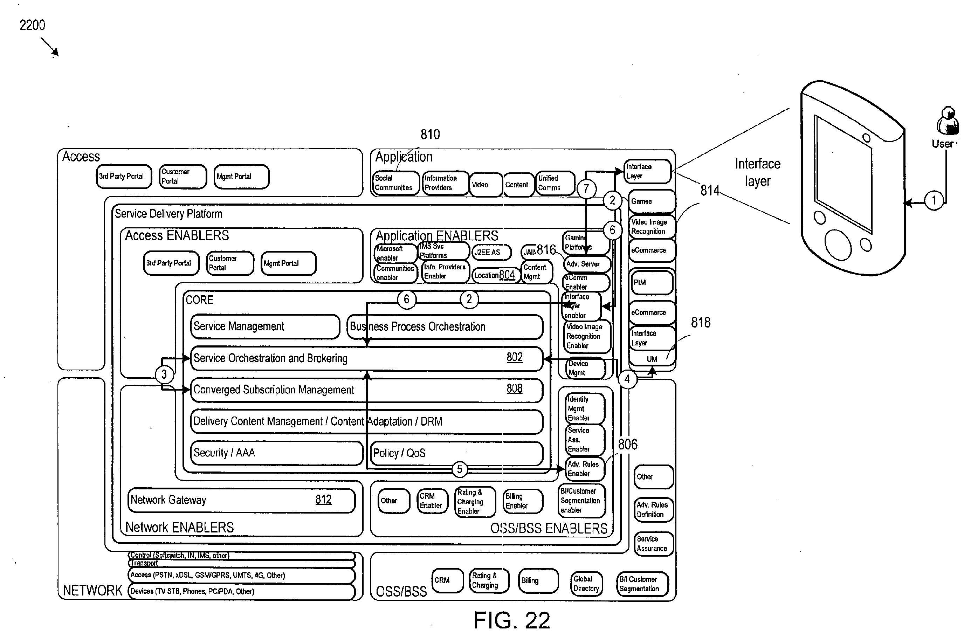

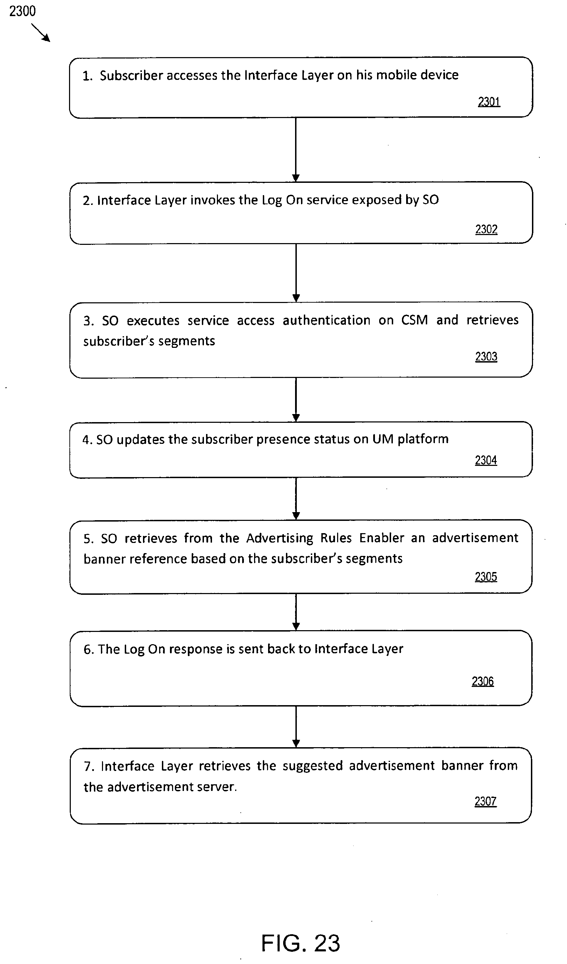

Next a subscriber log on process to the System is described in detail with reference to Figures 22-23. Figure 22 shows a system architecture 2200 and Figure 23 illustrates logic flow 2300 through the architecture 2000. When the subscriber accesses the Interface Layer on his mobile device (2301), the Interface Layer 110 invokes the Log On service implemented in the SO 802 which is accessible by the Interface Layer (2302). The SO 802 executes a service access authentication on the CSM 808 and retrieves the subscriber's segments (2303). SO 802 updates the subscriber preference status on the UM platform 818 (2304). Next, the SO 802 retrieves from the Advertising Rules Enabler 806 an Advertising banner reference based on the subscriber's segments (2305). The Log On response is sent back to the Interface Layer 110 (2306), and the Interface Layer retrieves the suggested Advertising banner from the Advertising server 816 (2307).

The SDP 120 may also incorporate an application interface layer which will be described in detail below.

| Table 1 - Glossary of Terms | |
|---|---|
| Acronym | Definition |
| ACS | Accenture Communications Solutions |
| API | Application Program Interface |
| BPM | Business Process Model |
| BSS | Business Support System |
| CDM | Common Data Model |
| CLM | Common Log Message |
| ECDM | External Common Data Mode |
| CEM | Common Error Message |
| EHC | Error Handling Console |
| DB | Database |
| CS | Component Service |
| BS | Business Service |
| IS | Infrastructure Service |
| HTTP(S) | Hyper Text Transfer Protocol (Secure sockets) |
| XML | Extensible Markup Language |
| SDP | Service Delivery Platform |
| SO | Service Orchestration |
| CSM | Converged Subscription Management |
| WS | Web Services |
| WSDL | Web Service Description Language |
| SOAP | Simple Object Access Protocol |
| ESB | Enterprise Service Bus |
| XSD | xml Schema Definition |
| ESB | Enterprise Service Bus |
| IPM | Intelligent Policy Manaqer |
| UM | Unified Messaging |

The application interface layer helps the SDP 120 to support a new set of business services for a new typology of consumers: those who execute applications and widgets on mobile devices. The application interface layer facilitates integration of the capabilities noted above with a set of external information providers and communities. The application interface layer behaves as a transparent abstraction layer providing to any mobile widget or application a set of simple, flexible and standard interfaces that hide the complex integration with multiple and heterogeneous information providers, networks, service platforms and domains.

All the external providers may be invoked in parallel and the responses collected, merged, customized (e.g., based upon user profile, preferences and segmentation) and, finally, sent back to the mobile widget or application. The SDP 120 internally manages the possible changes related to the interfaces exposed by external platforms as well as possible future new integrations, thereby avoiding any client-side code update. Moreover, through the application interface layer, the SDP 120 hides from the mobile client applications the complex management of user location information (typically retrieved through the interaction with network elements) and may customize such data upon return to the SDP 120 or mobile device.

The concepts underlying the application interface layer are described below.

### Coupling with external providers:

The SDP SO integrates the following main provider categories:
1) External Information Providers (e.g., Yahoo!, Amazon, or other third party providers) to retrieve items, shops, ratings, and prices information;
2) Internal Information Providers (e.g., SDP IPM repository for items, shops, ratings, and prices information as well as for advertising messages; and
3) Social Network Providers (e.g., Facebook and SDP UM to retrieve communities information and to interact with them.

One advantage of the application interface layer is that it implements a low complexity coupling between client applications and the involved external systems. At the same time, the SDP 120 is typically the unique point of impact in case of provider-side updates or changes, which fully abstracts the client application from what happens in the back end.

Thus, the SDP 120 hides from the mobile device and its applications, the following: Flow complexity, Data transformations to the provider specific interfaces, Orchestration rules and criteria, and Rules and policies used to generate search results.

The SO interfaces provide lists of results (e.g., shops, restaurants, cinemas, DVDs, CDs, Books, and other lists) customized upon user preferences and behavior, and sorted by rating. Ratings information can come from external providers, can be suggested by user communities or can be defined internally by SDP based on commercial agreements with retailers. The application interface layer achieves the difficult technical challenge of allowing the mobile applications to be agnostic about all these rules and presents to the final user the returned data in a transparent way.

### Interfaces and common features:

The technical implementation of the application interface layer is described below and facilitates solving the technical problems noted above as well as allowing a robust and scalable integration between SDP and widget applications for mobile devices. As an initial matter, the application interface layer may be implemented using SOAP / HTTP protocols, though other protocols may also be employed.

### Header:

Because of differences in mobile widget topologies, the SOAP HEADER structure and the parameters that are typically included in the header are moved into the message BODY.

### XML Structure:

The XML structures are made as simple as possible by reducing the amount of returned fields, the size of the exchanged messages and the number of nested levels. The reduced XML structure complexity helps to ensure performance and stability in case of mobile devices with limited processing resources and available memory.

### Data Types:

Only basic types (such as strings, integers and dates) for XML element definitions are preferably used in order to ensure compliance with the maximum number of client mobile devices.

### Application Interface Layer - Wireless Common Data Model:

A Wireless Common Data Model (WCDM) implements a common structure for all the messages managed by the SDP Service Orchestration component for mobile application integration purposes. In other words, WCDM defines a common data format on which is based on the SDP Application Interface Layer.

Furthermore, the application interface layer permits departures from the WCDM under controlled circumstances, noted below:

### 1) an external system API has to be invoked.

In this case the message request will be transformed from WCDM schema to the ECDM schema as requested by external system interface specification.

This capability allows a plug-and-play approach and to easily plug in - plug out external systems from the SDP architecture.

### 2) The Message Logger IS is invoked.

In this case the message will be transform from the WCDM specifc for the SDP area to a CLM (Common Log Message).

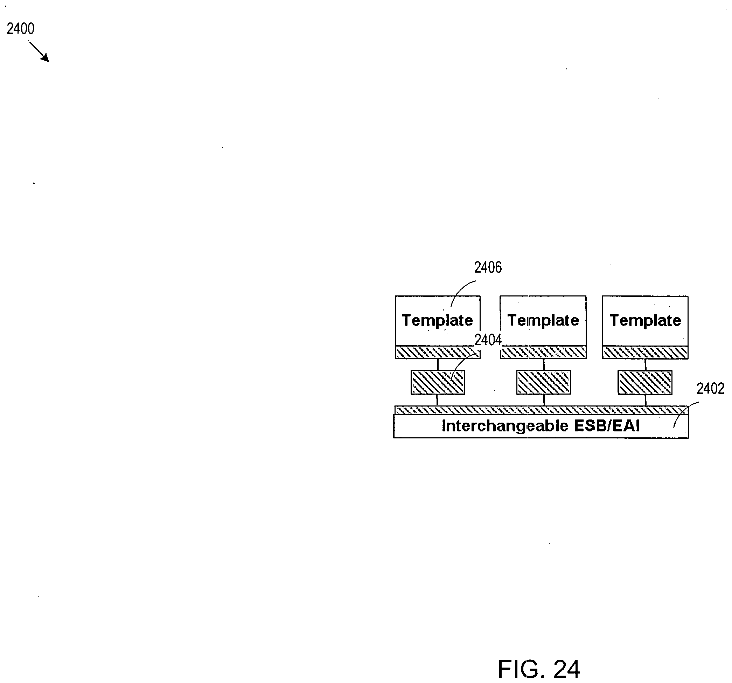

Figure 24 shows a solution differentiation 2400 for an application interface layer. The differentiation includes differences in the integration method. Figure 24 shows an interchangeable ESB / EAI layer 2402 in communication through connectors 2404 to templates 2406.

### Body Structure:

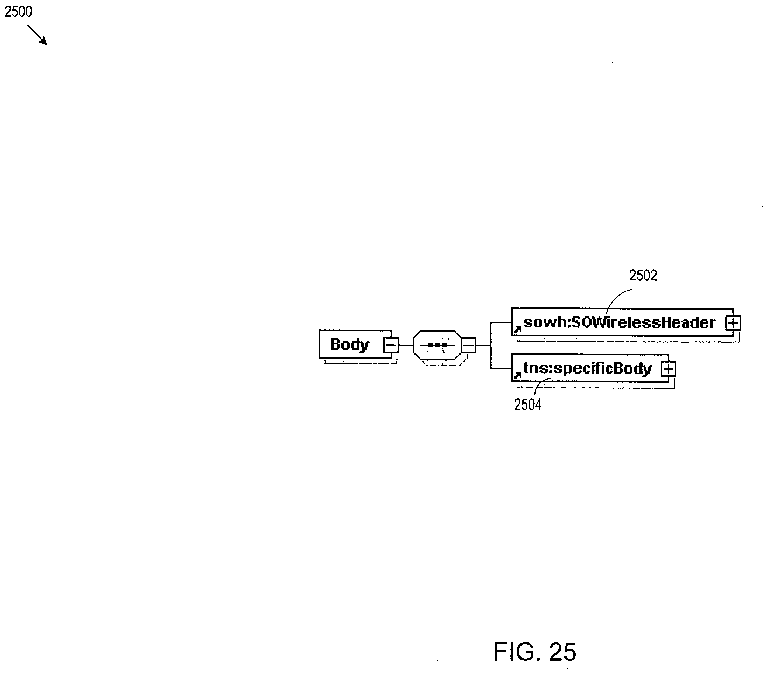

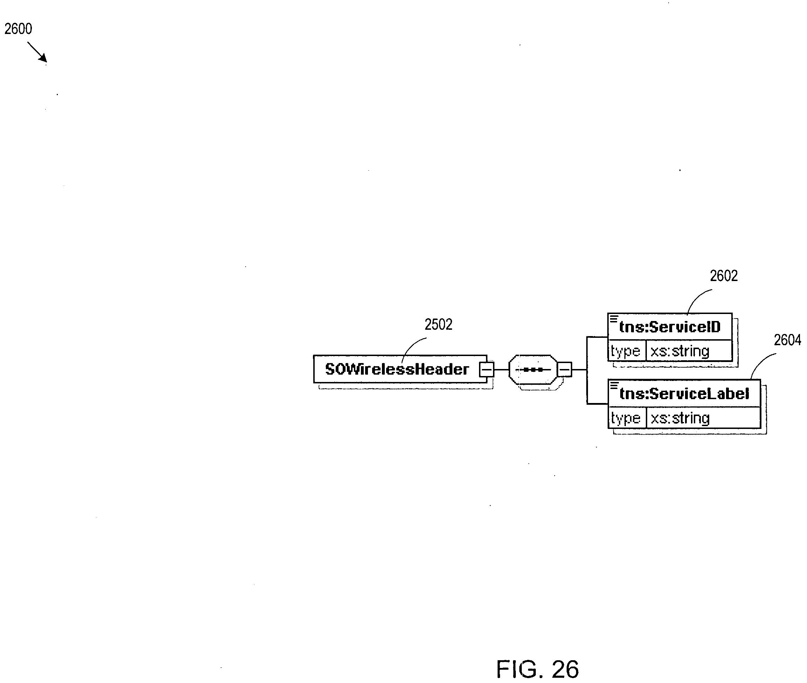

The Wireless Common Data Model defines the SOAP message Body structure and is composed by 2 groups of elements as shown in Figures 25 and 26. Figure 25 shows a body structure 2500 composed of a SOWirelessHeader element 2502 and a specificBody element 2504.

Figure 26 shows a SOWirelessHeader 2600. The SOWirelessHeader object 2502 may include two elements, ServicelD 2602 and ServiceLabel 2604, which respectively identify the transaction and the target workflow.

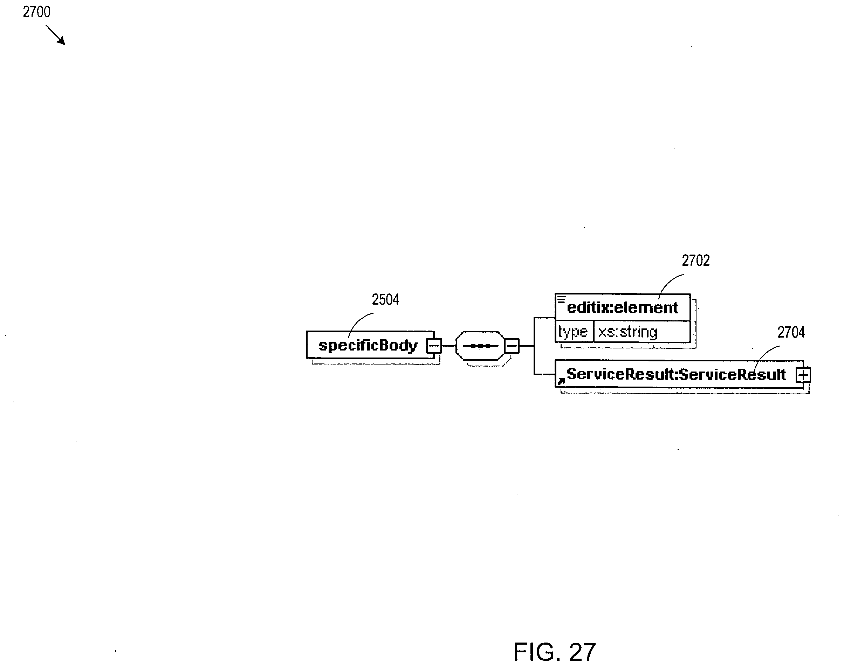

Figure 27 shows a diagram 2700 of a specificBody structure 2504. The specificBody element 2504 includes the parameters needed as input/output for the execution of a specific business process. The first part of the specificBody element 2504 (denoted as "editx:element" 2702) is typically different for each one of the exposed SO APIs and is associated to a specific XSD definition, while the second part. ServiceResult 2704, is common and may be included only in response messages.

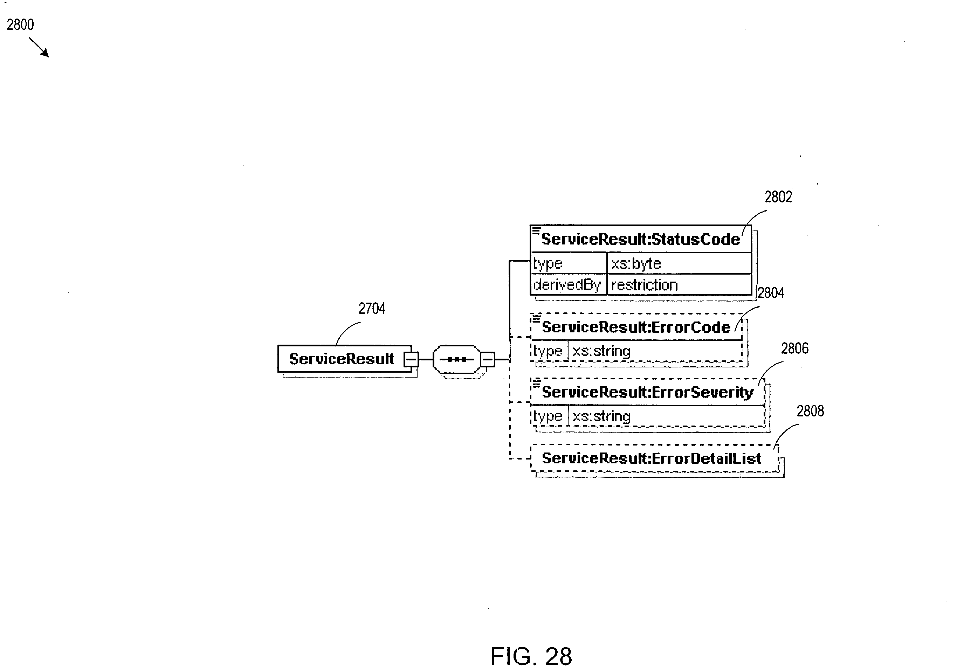

Figure 28 shows the ServiceResult structure 2800. As explained above, the ServiceResult structure 2800 may be returned only as output for a process. The ServiceResult structure 2800 may determine if the process has been correctly executed or not. The ServiceResult structure 2800 may include the following attributes:
1) StatusCode 2802: its value is 0 for success, otherwise 1 if an error occurred
2) ErrorCode 2804: if an error occurred, it contains the code of the error
3) ErrorSeverity 2806: if an error occurred, it contains the severity of the error
4) ErrorDetailList 2808: if an error occurred, it contains the description of the error of the error

The following file name conventions may be used to define namespaces:
XSD namespace: http://[location]so/bs/{Service Name}
WSDL namespace: http://[location]/so/wsdl/{Service Name}

### BUSINESS SERVICES

### Wireless Log On:

### Description:

The Wireless Log On service allows the mobile application to authenticate the user in CSM, Log on to the application on SDP UM platform (updating the corresponding user presence status), and finally retrieve the best advertising banner from IPM (Intelligent Policy Manager) based on the user segment.

**Input:**

| Table 2 - Wireless Log On Input Structure | | | | | |
|---|---|---|---|---|---|
| NAME | 2° Level | TYPE | M/O | MIN-MAX OCCURRENCE | NOTES/VALUES |
| WirelessHeader | ServicelD | string | M | 1,1 | <unique identifier> |
| | ServiceLabel | string | M | 1,1 | LOGON |
| device | | string | M | 1,1 | <device> |
| password | | string | M | 1,1 | <password> |
| usemame | | string | M | 1,1 | <usemame> |

**Output:**

| Table 3 - Wireless Log On Output Structure | | | | | |
|---|---|---|---|---|---|
| NAME | 2° Level | TYPE | M/O | MIN-MAX OCCURRENCE | NOTES/VALUES |
| WirelessHeader | ServicelD | string | M | 1,1 | <unique identifier> |
| | ServiceLabel | string | M | 1,1 | LOGON |
| bannerLink | | string | M | 1,1 | <the banner link> |

### Wireless Log Off

### Description:

The Log Off service is invoked by the mobile application to disconnect the end user from the SDP UM system.

**Input:**

| Table 4 - Wireless Log Off Input Structure | | | | | |
|---|---|---|---|---|---|
| NAME | 2° Level | TYPE | M/O | MIN-MAX OCCURRENCE | NOTES/VALUES |
| WirelessHeader | ServicelD | string | M | 1,1 | <unique identifier> |
| | ServiceLabel | string | M | 1,1 | LOGOFF |
| usemame | | string | M | 1,1 | <usemame> |

**Output:**

| Table 5 - Wireless Log Off Output Structure | | | | | | | |
|---|---|---|---|---|---|---|---|
| NAME | 2° Level | 3° Level | 4° Level | TYPE | M/O | MIN-MAX OCCURRENCE | NOTES/VALUES |
| WirelessHeader | ServicelD | | | string | M | 1,1 | <unique identifier> |
| | ServiceLabel | | | string | M | 1,1 | LOGOFF |
| ServiceResult | | | | | M | 1,1 | |
| | StatusCode | | | byte | M | 1,1 | < 0 or 1> |
| | ErrorCode | | | string | O | 0,1 | <error code for process> |
| | ErrorDescription | | | string | O | 0.1 | <error description for process> |
| | ErrorDetailList | | | | O | 0,1 | <error Detail List for process> |
| | | ErrorDetail | | | O | 0,1 | <error Detail for process> |
| | | | SystemName | string | M | 1,1 | <SystemName> |
| | | | SeverityLevel | string | M | 1,1 | <SeverityLevel> |
| | | | ComponentID | string | M | 1,1 | <ComponentlD> |
| | | | Detail | string | M | 1,1 | <Detail> |
| | | | ErrorDetail | string | M | 1,1 | <ErrorDetail> |

### Wireless Get Banner

### Description:

The Get Banner service allows the mobile application to retrieve an advertisement banner based on user segmentation for up selling purpose. The service accepts as input the username, retrieves from CSM the user segmentations and, finally, extracts a banner link (or a list of links) from the SDP advertisement rules engine (IPM) to be sent back to the mobile application. Optionally, banner location information can also be returned as output.

**Input:**

| Table 6 - Wireless Get Banner Input Structure | | | | | |
|---|---|---|---|---|---|
| NAME | 2° Level | TYPE | M/O | MIN-MAX OCCURRENCE | NOTES/VALUES |
| WirelessHeader | ServicelD | string | M | 1,1 | <unique identifier> |
| | ServiceLabel | string | M | 1,1 | GETLOCATEDBANNERS |
| device | | string | M | 1,1 | <device> |
| usemame | | string | M | 1,1 | <usemame value> |

**Output:**

| Table 7 - Wireless Get Banner Output Structure | | | | | | | |
|---|---|---|---|---|---|---|---|
| NAME | 2° Level | 3° Level | 4° Level | TYPE | M/O | MIN-MAX OCCURRENCE | NOTES/VALUES |
| WirelessHeader | ServicelD | | | string | M | 1,1 | <unique identifier> |
| | ServiceLabel | | | string | M | 1,1 | GETLOCATE DBANNERS |
| BannersList | | | | | | | |
| | url | | | string | M | 1,1 | *<the banner link>* |
| | longitude | | | string | O | 1,1 | <the Longitude value of the banner> |
| | latitude | | | string | O | 1,1 | <the Latitude value of the banner> |
| | text | | | string | O | 1,1 | |
| ServiceResult | | | | | M | 1,1 | |
| | StatusCode | | | byte | M | 1,1 | < 0 or 1> |
| | ErrorCode | | | string | O | 0,1 | <error code for process> |
| | ErrorDescription | | | string | O | 0,1 | <error description for process> |
| | ErrorDetailList | | | | O | 0,1 | <error Detail List for process> |
| | | ErrorDetail | | | O | 0,1 | <error Detail for process> |
| | | | SystemName | string | M | 1,1 | <SystemName> |
| | | | SeverityLevel | string | M | 1,1 | <SeverityLevel> |
| | | | ComponentID | string | M | 1,1 | <Componentl D> |
| | | | Detail | string | M | 1,1 | <Detail> |
| | | | Error Detail | string | M | 1,1 | <ErrorDetail> |

### Get Located Search

### Description:

The GetLocatedSearch service allows retrieval of localized search information based on the input category/keywords as well as user physical location. It extracts the required data from the SDP internal advertisement rules engine (IPM) and external information providers, customizes them upon user preferences, segmentation and location, and, finally, associates them a rating value.

Note that ratings information can come from external providers, can be given by user communities or can be defined internally by SDP based on commercial agreements with retailers. The user location can be optionally passed as input (when GPS capabilities are enabled on user mobile device) or can be retrieved from SDP Location Server interacting with the proper network elements. The GetlocatedSearch service hides from the mobile application the fact that multiple providers are invoked in parallel and that the results are customized. ProviderlD field associated to each output result represents the source for that specific record.

**Input:**

| Table 8 - GetlocatedSearch Input Structure | | | | | |
|---|---|---|---|---|---|
| NAME | 2° Level | TYPE | M/O | MIN-MAX OCCURRENCE | NOTES/VALUES |
| WirelessHeader | ServiceID | string | M | 1,1 | <unique identifier> |
| | ServiceLabel | string | M | 1,1 | GETLOCATEDSEARCH |
| UserPosition | | | O | 0,1 | |
| | longitude | double | M | 1,1 | <user longitude> |
| | latitude | double | M | 1,1 | <user latitude> |
| device | | string | M | 1,1 | <user device identifier> |
| usemame | | string | M | 1,1 | <usemame value> |
| msisdn | | string | M | 1,1 | <user msisdn> |
| category | | string | M | 1,1 | <search category> |
| keyword | | string | O | 0,1 | <search keyword> |

**Output:**

| Table 9 - GetlocatedSearch Output Structure | | | | | | | |
|---|---|---|---|---|---|---|---|
| NAME | 2° Level | 3° Level | 4° Level | TYPE | M/O | MIN-MAX OCCURRENCE | NOTES/VALUES |
| WirelessHead er | ServiceID | | | string | M | 1,1 | <unique identifier> |
| | ServiceLabel | | | string | M | 1,1 | GETLOCAT EDSEARCH |
| SearchResult | | | | | | | |
| | imageurI | | | string | O | 0,1 | *<result image link>* |
| | longitude | | | Double | M | 1,1 | <the Longitude value of the result> |
| | latitude | | | double | M | 1,1 | <the Latitude value of the result> |
| | text | | | string | O | 1,1 | <result address> |
| | name | | | string | M | 1,1 | <result name> |
| | telephone | | | string | O | 0,1 | <result telephone number> |
| | providerid | | | string | M | 1,1 | <Information provider id (e.g. Yahoo or IPM)> |
| | rating | | | doubl e | M | 1,1 | <rating> |
| ServiceResult | | | | | M | 1,1 | |
| | StatusCode | | | byte | M | 1,1 | < 0 or 1 > |
| | ErrorCode | | | string | O | 0,1 | <error code for process> |
| | ErrorDescription | | | string | O | 0,1 | <error description for process> |
| | ErrorDetailList | | | | O | 0,1 | <error Detail List for process> |
| | | ErrorDetail | | | O | 0,1 | <error Detail for process> |
| | | | System Name | string | M | 1,1 | <SystemName> |
| | | | Severity | String | M | 1,1 | <SeverityLe |
| | | | Level | | | | vel> |
| | | | ComponentID | string | M | 1.1 | <Component ID> |
| | | | Detail | string | M | 1,1 | <Detail> |
| | | | ErrorDetail | string | M | 1,1 | <ErrorDetail > |

### Product Search

### Description:

The Product Search Service allows to search for a specific product among several providers and obtain information about the object (e.g., prices and descriptions). A single service may be exposed to the caller application, hiding the fact that multiple providers are invoked in parallel and that the results are customized upon user profile and preferences.

### Input Data:

The input fields that the caller system sends to the service exposed by the application are detailed in the table below.

| Table 10 - Product Search Input Data Structure | | | | | | |
|---|---|---|---|---|---|---|
| NAME | 2° Level | TYP E | M/O/C | Condition | MIN-MAX OCCURRENCE | NOTES/VALUES |
| WirelessHeader | ServiceId | String | M | | 1,1 | Unique Identifier of the request |
| | ServiceLabel | String | M | | 1,1 | "PRODUCTSEARCH " |
| ProductSearchRequest | | | M | | 1,1 | |
| | PrdId | String | M | | 1,1 | Identifier of the product to search for |
| | MSISDN | String | M | | 1,1 | MSISDN of the user |
| | Type | String | M | | 1,1 | Type of the input |

### Output Data:

This service does not send a response directly back to the caller (e.g., the Image Recognition System), since the result of the research is to be provided to the mobile application. The response containing the results collected from different providers is stored into an external repository accessed by mean of Java callouts. The data inserted into the repository and containing the search results can be extracted through the BS_GerSearchResult business service.

### Get Search Result

### Description

The Get Search Result Service allows retrieval from SDP of the results of a specific search requested from the user. A single service may be exposed to the caller application, while different providers are invoked in parallel, based on the user's settings and preferences. The ProviderName field associated to each output result represents the source for that specific record.

### Input Data:

The input fields that the caller system sends to the service exposed by the application are detailed in the table below.

| Table 11 - Get Search Result Input Data Structure | | | | | | |
|---|---|---|---|---|---|---|
| NAME | 2° Level | TYPE | M/O/C | Condition | MIN-MAX OCCURRENCE | NOTES/VALUES |
| WirelessHeader | ServiceId | String | M | | 1,1 | Unique Identifier of the request |
| | ServiceLabel | String | M | | 1,1 | "GETSEARCHRES ULT" |
| GetSearchResultRequest | | | M | | 1,1 | |
| | MSISDN | String | M | | 1,1 | MSISDN of the user |

### Output Data

The output fields that this service gives back to the caller in the response are detailed in the table below. The set of information returned may change based on the kind of research performed.

| Table 12 - Get Search Result Output Data Structure | | | | | | | | |
|---|---|---|---|---|---|---|---|---|
| NAME | 2° Level | 3° Level | 4° Level | 5° Level | TYPE | M/O/C | MIN-MAX OCC | NOTESNALUES |
| WirelessHeader | ServiceId | | | | String | M | 1,1 | Unique Identifier of the request |
| | ServiceLabel | | | | String | M | 1,1 | 'SEARCH' |
| GetSearchResultResponse | | | | | | M | 1,1 | |
| | PrdCategory | | | | String | O | 0,1 | Category where the product is classified |
| | PrdName | | | | String | O | 0,1 | Name of the product the search was made for |
| | PrdDescription | | | | String | O | 0,1 | Description of the product the search was made for |
| | PrdImgURL | | | | String | O | 0,1 | URL of the image of the product |
| | ResultList | | | | | O | 0,N | List of item retrieved on the providers |
| | | ProviderName | | | String | M | 1,1 | Name of the provider |
| | | Providerlm qURL | | | String | M | 1,1 | URL of the provider logo |
| | | Price | | | String | M | 1,1 | Price of the item retrieved |
| | Service Result | StatusCode | | | Integer | M | 1,1 | < 0 or 1 > |
| | | ErrorCode | | | string | O | 0,1 | <error code for process> |
| | | ErrorDescription | | | string | O | 0,1 | <error description for process> |
| | | ErrorDetailList | | | | 0 | 0,1 | <error Detail List for process> |
| | | | ErrorDetail | | | O | 0,1 | <error Detail for process> |
| | | | | Syste mName | string | M | 1,1 | <SystemName> |
| | | | | Severit yLevel | string | M | 1,1 | <SeverityLevel> |
| | | | | ComponentID | string | M | 1,1 | <ComponentID> |
| | | | | Detail | string | M | 1,1 | <Detail> |
| | | | | ErrorDetail | string | M | 1,1 | <ErrorDetail> |

### Retrieve Integrated Buddy List

### Description:

The Retrieve Integrated Buddy List service allows retrieval of the subscriuber's buddy list from multiple communities (e.g., Facebook and SDP UM). A single service may be exposed to the caller application, while different communities are invoked in parallel. The ProviderlD field associated to each output result represents the buddy source community (e.g., UM or Facebook). The SDP 120 hides from the mobile application the complex logic needed to interact with multiple communities including the user multiple credentials management and the communities log-in/out processes.

### Input Data:

The input fields that the caller system must send to the service exposed by the application are detailed in the table below.

| Table 13 - Retrieve Integrated Buddy List Input Data Structure | | | | | |
|---|---|---|---|---|---|
| NAME | 2° Level | TYPE | M/O | MIN-MAX OCCURRENCE | NOTES/VALUES |
| WirelessHeader | ServiceID | string | M | 1,1 | <unique identifier> |
| | ServiceLabel | string | M | 1,1 | GETLOCATEDBANNERS |
| usemame | | string | M | 1,1 | <usemame value> |

### Output Data:

The output fields that this service gives back to the caller in the response are detailed in the table below.

| Table 14 - Retrieve Integrated Buddy List Output Data Structure | | | | | | | |
|---|---|---|---|---|---|---|---|
| NAME | 2° Level | 3° Level | 4° Level | TYPE | M/O/C | MIN-MAX OCC | NOTES/VALUES |
| WirelessHeader | ServiceID | | | string | M | 1,1 | <unique identifier> |
| | ServiceLabel | | | string | M | 1,1 | RETRIEVEINTEGRATED BUDDYLIST |
| BuddyLlst | | | | | O | 0,1 | |
| | Buddy | | | | O | 0,N | |
| | | username | | string | M | 1,1 | <usemame of buddy> |
| | | Status | | string | M | 1,1 | <buddy online,offline> |
| | | Photo | | string | O | 1,0 | <photo buddy> |
| | | Mood | | string | O | 1,0 | <mood buddy> |
| | | providerId | | string | M | 1,1 | <identification community> |
| | | statusTime | | string | O | 1,0 | <time of the latest status update> |
| | | statusTimeRel | | string | O | 1,0 | |
| | | addInfo | | string | O | 1,0 | <additional info> |
| ServiceResult | | | | | M | 1,1 | |
| | StatusCode | | | byte | M | 1,1 | < 0 or 1> |
| | ErrorCode | | | string | O | 0,1 | <error code for process> |
| | | | | | | | |
| | ErrorDescription | | | string | O | 0,1 | <error description for process> |
| | ErrorDetailList | | | | O | 0,1 | <error Detail List for process> |
| | | ErrorDetail | | | O | 0,1 | <error Detail for process> |
| | | | SystemName | string | M | 1,1 | <SystemName> |
| | | | SeverityLevel | string | M | 1,1 | <SeverityLevel> |
| | | | ComponentID | string | M | 1,1 | <ComponentID> |
| | | | | | | | |
| | | | Detail | string | M | 1,1 | <Detail> |
| | | | ErrorDetail | string | M | 1,1 | <ErrorDetail> |

### Create Event

### Description:

The CreateEvent service allows creating an event inside SDP and to send automatically the invitations to each one of the attendees. SDP is able to manage multiple notification channels and different user communities in a transparent way from the client application point of view. In particular, the event information (such as Event Location, Date and Time, Event Organizer, Event Subject and Invitation Message, List of attendees) are stored into SDP CSM and are forwarded to each one of the event attendees according to the following rules:
1) If the attendee belongs to SDP UM Community the invitation channel is the SMS;
2) If the attendee belongs to the Facebook Community the invitation is sent through the Facebook chat.

The SDP 120 may automatically include a link into the invitation message in order to allow the user accepting or rejecting the participation to the event.

**Input:**

| Table 15 - Create Event Input Structure | | | | | | |
|---|---|---|---|---|---|---|
| NAME | 2° Level | 3° Level | TYPE | M/O | MIN-MAX OCCURRENCE | NOTES/VALUES |
| WirelessHeader | ServiceID | | string | M | 1,1 | <unique identifier> |
| | ServiceLabel | | string | M | 1,1 | CREATEEVENT |
| event | | | | M | 1,1 | |
| | subject | | string | M | 1,1 | <event subject> |
| | message | | string | M | 1,1 | <event invitation message> |
| | location | | string | M | 1,1 | <event location> |
| | owner | | string | M | 1,1 | <event owner/organizer> |
| | date | | Date | M | 1,1 | <event date> |
| | duration | | Float | M | 1,1 | <event duration> |
| | expirationdate | | Date | O | 0,1 | <invitation expiration date> |
| | type | | string | O | 0,1 | <event type> |
| | listofattendees | | | M | 1,N | |
| | | name | string | M | 1,1 | <event attendee> |

**Output:**

| Table 16 - Create Event Output Structure | | | | | | | |
|---|---|---|---|---|---|---|---|
| NAME | 2° Level | 3° Level | 4° Level | TYPE | M/O | MIN-MAX OCCURRENCE | NOTES/VALUES |
| WirelessHeader | ServiceID | | | string | M | 1,1 | <unique identifier> |
| | ServiceLabel | | | string | M | 1,1 | CREATEEVENT |
| eventID | | | | string | M | 1,1 | <event unique identifier> |
| ServiceResult | | | | | M | 1,1 | |
| | StatusCode | | | byte | M | 1,1 | < 0 or 1> |
| | ErrorCode | | | string | O | 0,1 | <error code for process> |
| | ErrorDescription | | | string | O | 0,1 | <error description for process> |
| | ErrorDetailList | | | | O | 0,1 | <error Detail List for process> |
| | | ErrorDetail | | | O | 0,1 | <error Detail for process> |
| | | | SystemName | string | M | 1,1 | <SystemName> |
| | | | SeverityLevel | string | M | 1,1 | <SeverityLevel> |
| | | | ComponentID | string | M | 1,1 | <ComponentID> |
| | | | Detail | string | M | 1,1 | <Detail> |
| | | | ErrorDetail | string | M | 1,1 | <ErrorDetail> |

### Get Event

### Description:

The GetEvent service allows the mobile application to retrieve the events associated to a specific owner/organizer. The information (such as Event Location, Date and Time, Event Organizer, Event Subject and Invitation Message) are extracted from SDP CSM and are sorted by date. This service provides to the mobile client applications a simple and transparent interface for real-time event tracking.

**Input:**

| Table 17 - Get Event Input Structure | | | | | | |
|---|---|---|---|---|---|---|
| NAME | 2° Level | 3° Level | TYPE | M/O | MIN-MAX OCCURRENCE | NOTES/VALUES |
| WirelessHeader | ServiceID | | string | M | 1,1 | <unique identifier> |
| | ServiceLabel | | string | M | 1,1 | GETEVENT |
| usemame | | | string | M | 1,1 | <event owner/organizer> |

**Output:**

| Table 18 - Get Event Output Structure | | | | | | |
|---|---|---|---|---|---|---|
| NAME | 2° Level | 3° Level | TYPE | M/O | MIN-MAX OCCURRENCE | NOTES/VALUES |
| WirelessHeader | ServiceID | | string | M | 1,1 | <unique identifier> |
| | ServiceLabel | | string | M | 1,1 | CREATEEVENT |
| event | | | | O | 0,N | <list of events> |
| | id | | string | M | 1,1 | <event unique identifier> |
| | subject | | string | M | 1,1 | <event subject> |
| | message | | string | M | 1,1 | <event invitation messaqe> |
| | location | | string | M | 1,1 | <event location> |
| | owner | | string | M | 1,1 | <event owner/organizer> |
| | date | | Date | M | 1,1 | <event date> |
| | duration | | Float | M | 1,1 | <event duration> |
| | expirationdate | | Date | O | 0,1 | <invitation expiration date> |
| | type | | string | O | 0,1 | <event type> |
| | status | | string | M | 1,1 | <event status> |
| ServiceResult | | | | M | 1,1 | |
| | StatusCode | | byte | M | 1,1 | < 0 or 1> |
| | ErrorDescription | | string | O | 0,1 | <error description for process> |
| | ErrorDetailList | | | O | 0,1 | <error Detail List for process> |
| | | ErrorDetail | | O | 0,1 | <error Detail for process> |
| | | | string | M | 1,1 | <SystemName> |
| | | | string | M | 1,1 | <SeverityLevel> |
| | | | string | M | 1,1 | <ComponentID> |
| | | | string | M | 1,1 | <Detail> |
| | | | string | M | 1,1 | <ErrorDetail> |

### VALIDATION

Validation may be performed at two different levels:

### 1) Schema Validation

### 2) Logical Validation

The Schema Validation is based on the interfaces schema definition (refer to WSDLs and XSDs structure for further details), and if it fails an error is raised. The Logical Validation validates attributes in the request with particular reference to mandatory attributes and further validation criteria mentioned in data mapping documents. If the validation is successful, SO is able proceed to next steps while, if the validation fails, a negative response is created and sent back to the calling system.

### ERROR DATA & SOAP FAULTS

There are three possible errors occurring during the execution of the services and managed through the ServiceResult structure:

1) Errors due to Schema Validation failure. In this scenario an error is raised and a soap fault message with the description of the error is send back to the calling system;

2) Errors due to Logical Validation failure. In this scenario an error is raised and a negative response message with the description of the error is sent back to the calling system;

3) Errors received from an invoked External System. In this scenario the response is sent to the caller with the corresponding technical details.

The ServiceResult may be returned to the calling system by Service Orchestration in case of success and failure as explained in the previous paragraphs. The most common SOAP exceptions that can be returned to the caller system in case of errors that are not managed errors are mentioned below.

| Table 19 - Common SOAP exceptions | |
|---|---|
| Fault Code | Description |
| Server.CommunicationException | An Error occurred while communicating with a resource |
| Server.ConnectionException | Unable to establish a connection with a required resource |
| Server.ApplicationResourceException | Application Resources are not available to complete the request |
| Server.SystemResourceException | System Resources are not available to complete the request |
| Server.TimeoutException | A timeout occurred either on the backend service or target application |
| Server.SOAException | Error validating the SOA header. The rules bag is not populated correctly |
| Server.TargetSystemException | The target system reported a system error. |
| Server.RuntimeException | This soap fault will be thrown when an exception is caught that was not thrown by the code. |
| Server. LookupException | A property server lookup failed. |

The systems, modules, components and logic described above may be implemented in many different ways. The functionality may be implemented in a single system or functionally partitioned across multiple systems. As another example, the modules, components, systems, and logic may be implemented as computer-executable instructions or as data structures in memory may be stored on, distributed across, or read from many different types of machine-readable media. The machine-readable media may include RAM, ROM, hard disks, floppy disks, CD-ROMs, a signal, such as a signal received from a network or partitioned into sections and received in multiple packets communicated across a network. The systems may be implemented in software, hardware, or a combination of software and hardware.

Furthermore, the systems may be implemented with additional, different, or fewer components. As one example, a processor or any other logic, module, or component may be implemented with a microprocessor, a microcontroller, a DSP, an application specific integrated circuit (ASIC), program instructions, discrete analog or digital logic, or a combination of other types of circuits or logic. As another example, memories may be DRAM, SRAM, Flash or any other type of memory. The systems may be distributed among multiple components, such as among multiple processors and memories, optionally including multiple distributed processing systems. Logic, such as programs or circuitry, may be combined or split among multiple programs, distributed across several memories and processors, and may be implemented in or as a function library, such as a dynamic link library (DLL) or other shared library.

The interface between components and systems such as the core SDP may include Transport Control Protocol (TCP), Real Time Transport Protocol (RTP) or other transport logic. The network gateway may route information based on Internet Protocol v4, v6 (i.e., IPv4 or IPv6) or other network layer protocols. The data link layer may include wired or wireless links, such as IEEE 802.11, WiFi, WiMAX, Asynchronous Transfer Mode (ATM), Fiber Distributed Data Interface (FDDI), Ethernet, or other data link layers over optical fiber, coaxial cable, twisted pair or other physical layers.

Interfaces between the systems and the logic and modules within systems may be implemented in numerous ways. For example, interface between systems may be Web Services, Simple Object Access Protocol, or Enterprise Service Bus interfaces. Other examples of interfaces include message passing, such as publish / subscribe messaging, shared memory, and remote procedure calls.

The hardware and software platforms that run in the SDP DS may vary widely. As examples, the endpoints may run the Windows CE (TM) operating system, JAVA ME (TM) system, Symbian (TM) operating system, Palm (TM) operating system. The hardware platforms may be implemented with a general purpose processing platform, such as those available from Sun Microsystems, Hewlett Packard, or International Business Machines and running Unix, Windows (TM), Linux or other operating systems.

While various embodiments of the invention have been described, it will be apparent to those of ordinary skill in the art that many more embodiments and implementations are possible within the scope of the invention. Further embodiments, implementation details and background are described in the following documents entitled "WSDL and XSD Code Appendix". Accordingly, the invention is not to be restricted except in light of the attached claims and their equivalents.

### WSDL and XSD Code Appendix

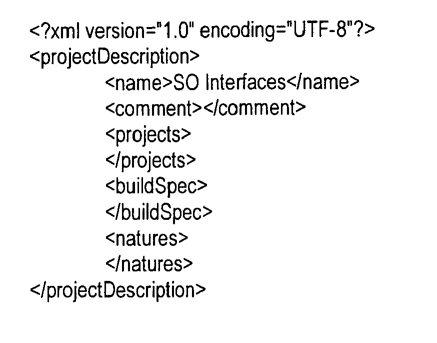

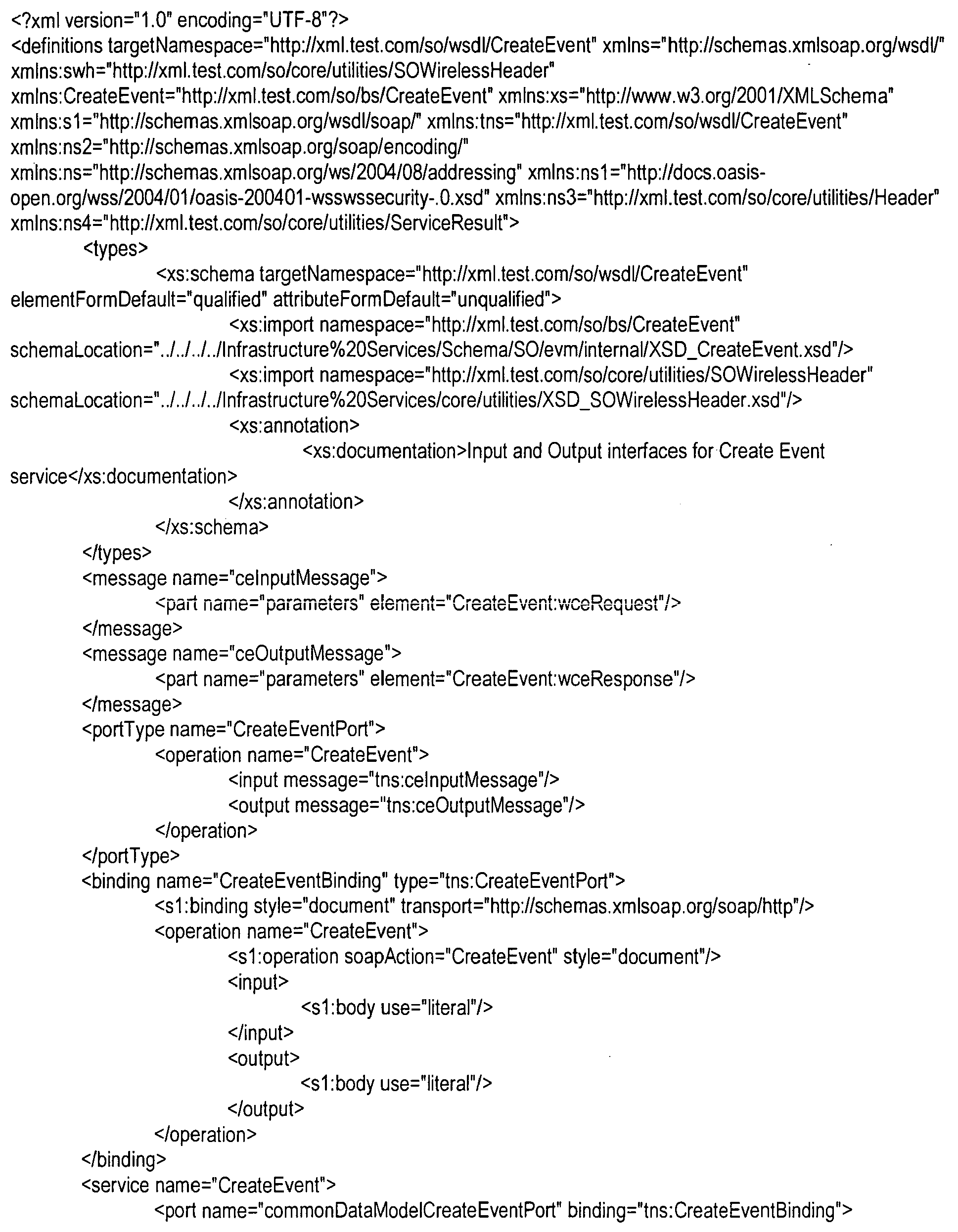

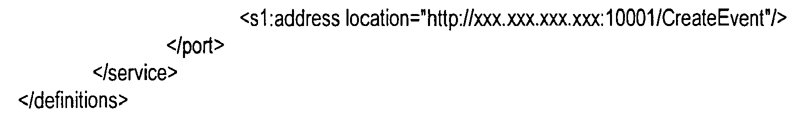

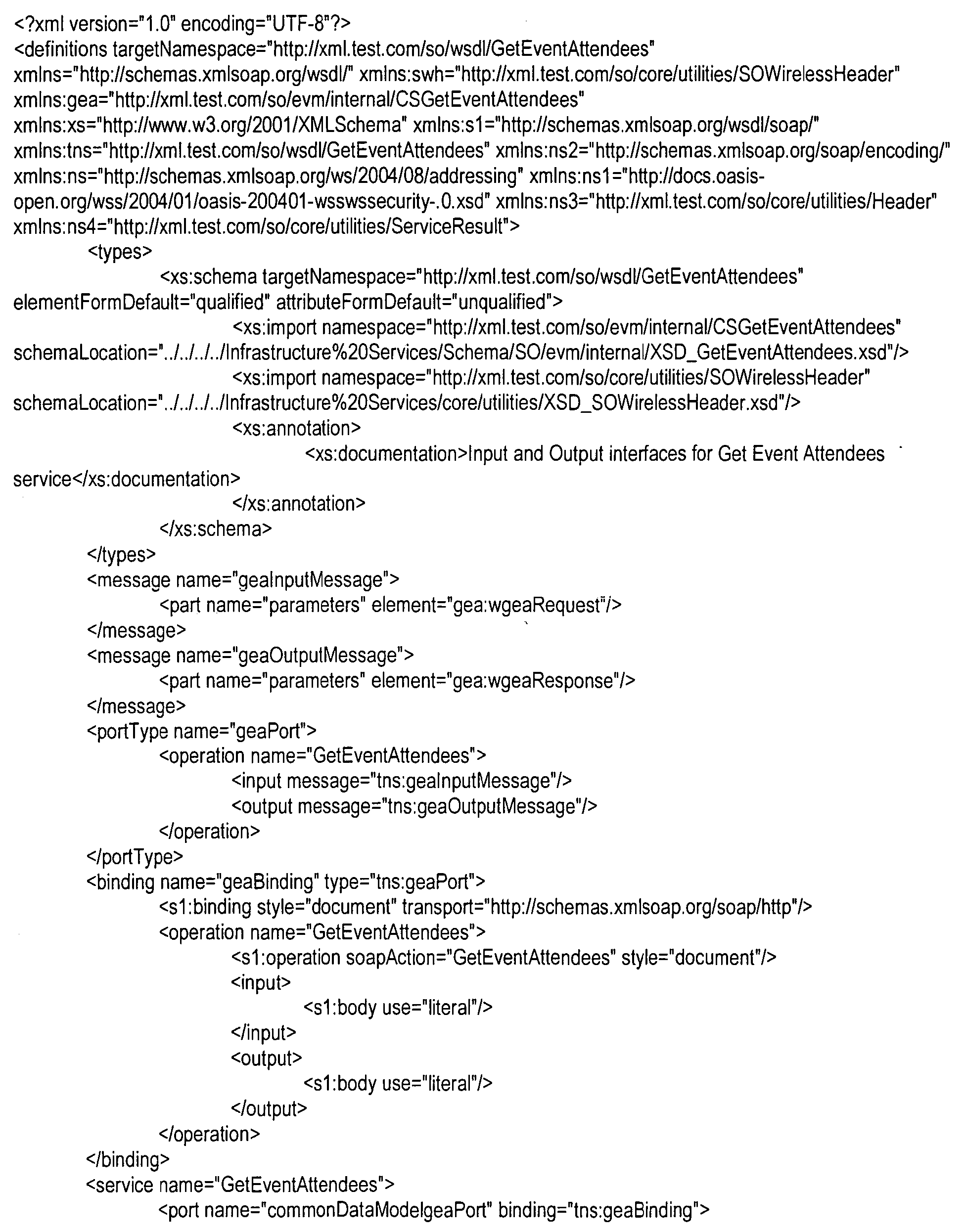

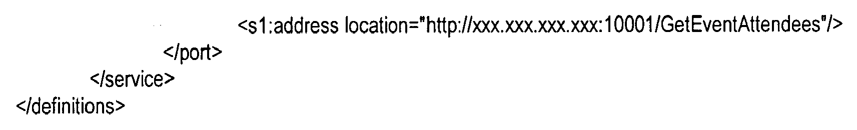

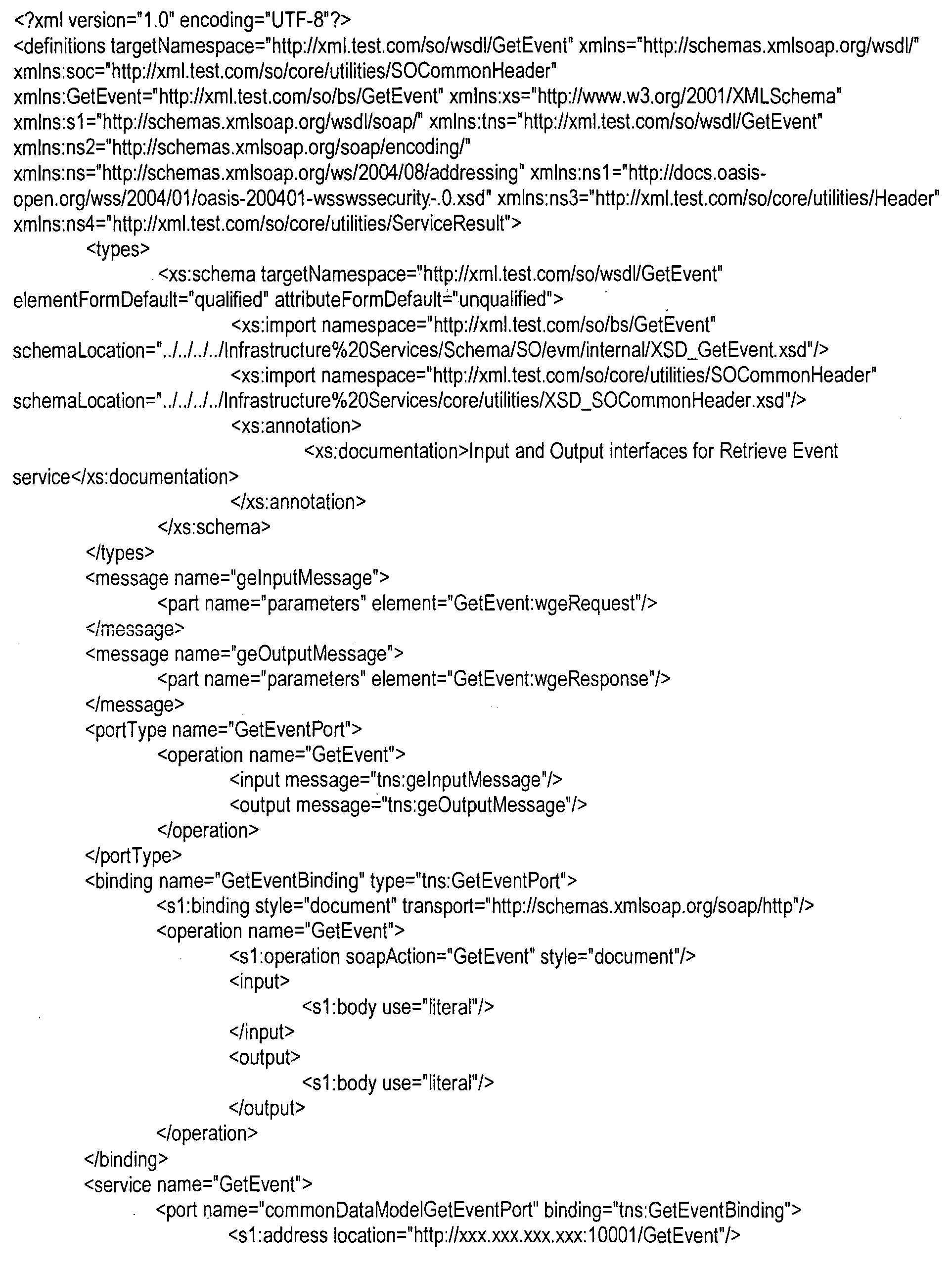

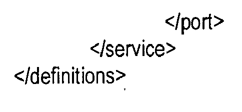

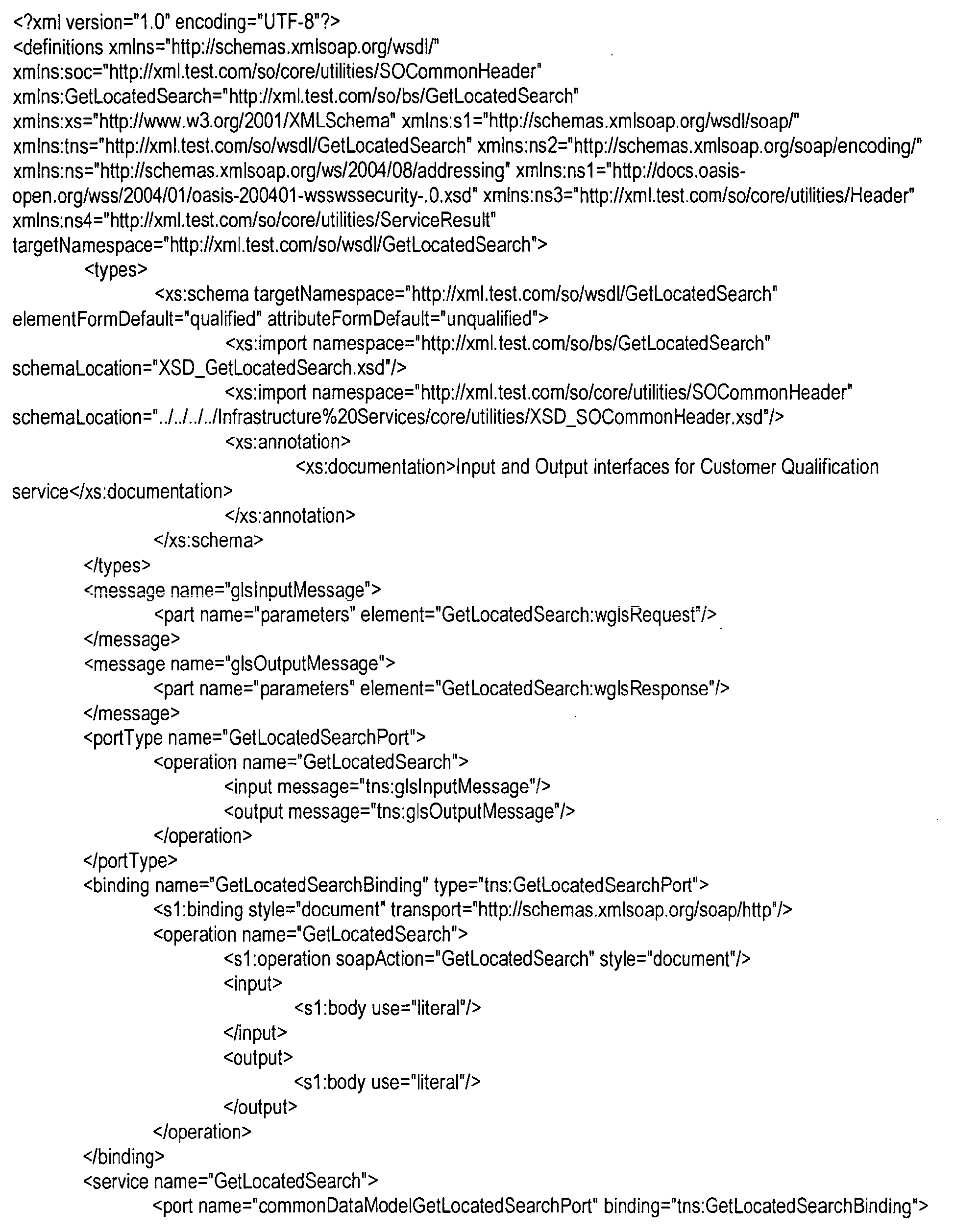

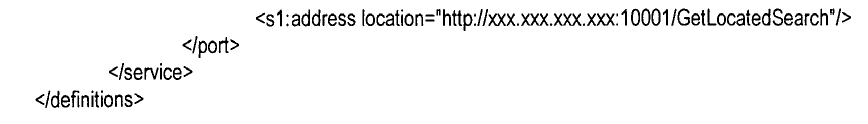

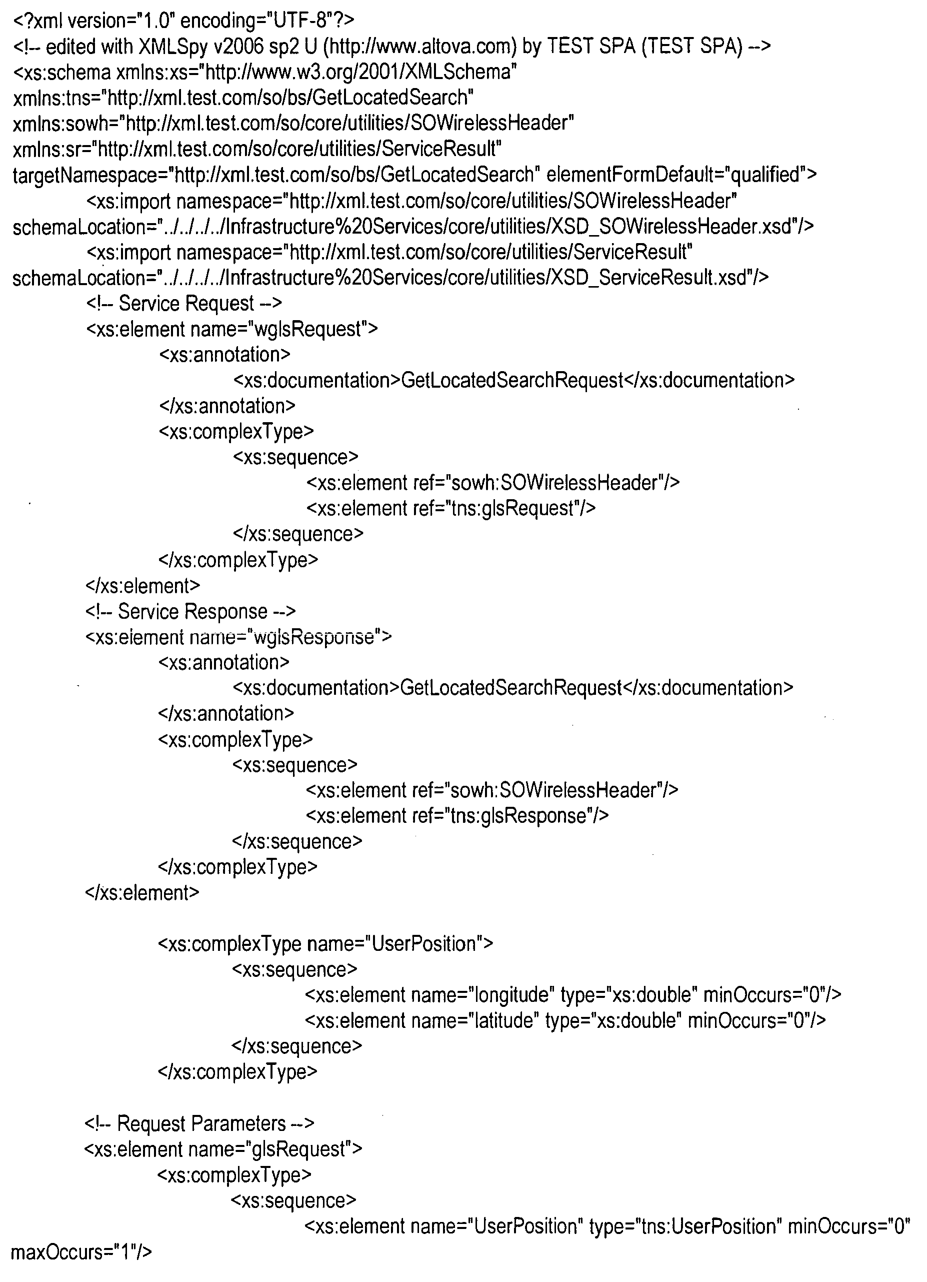

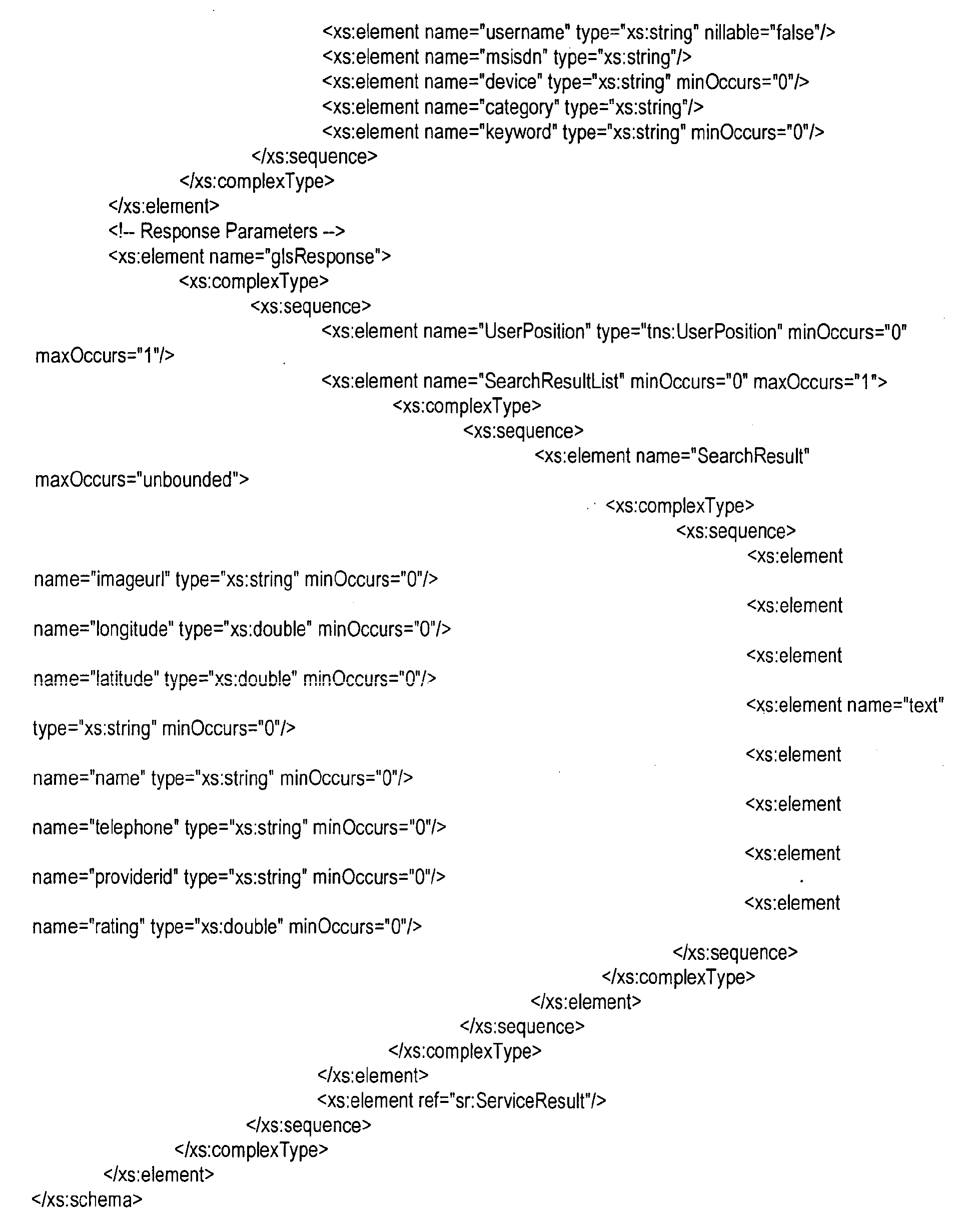

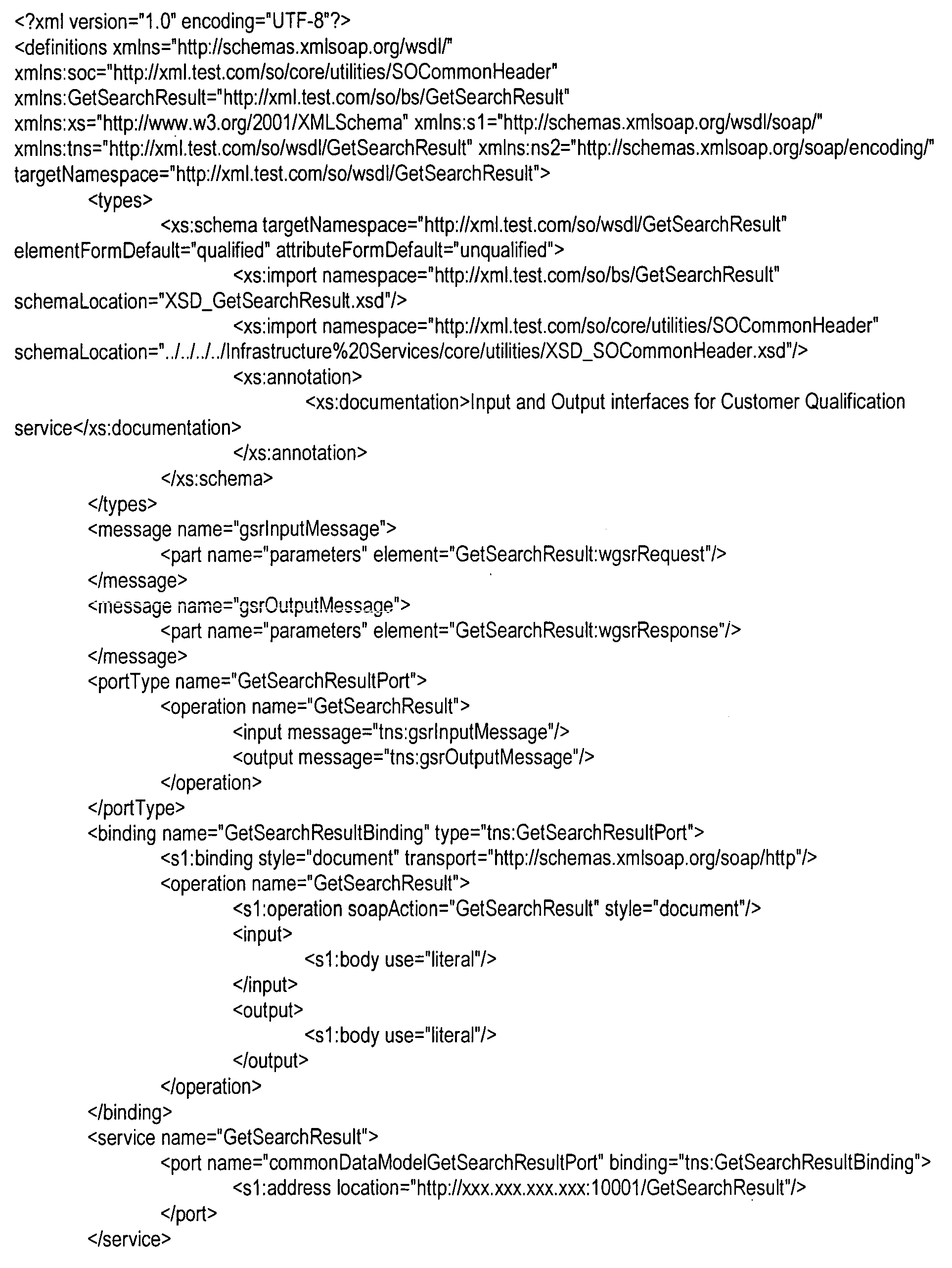

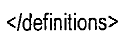

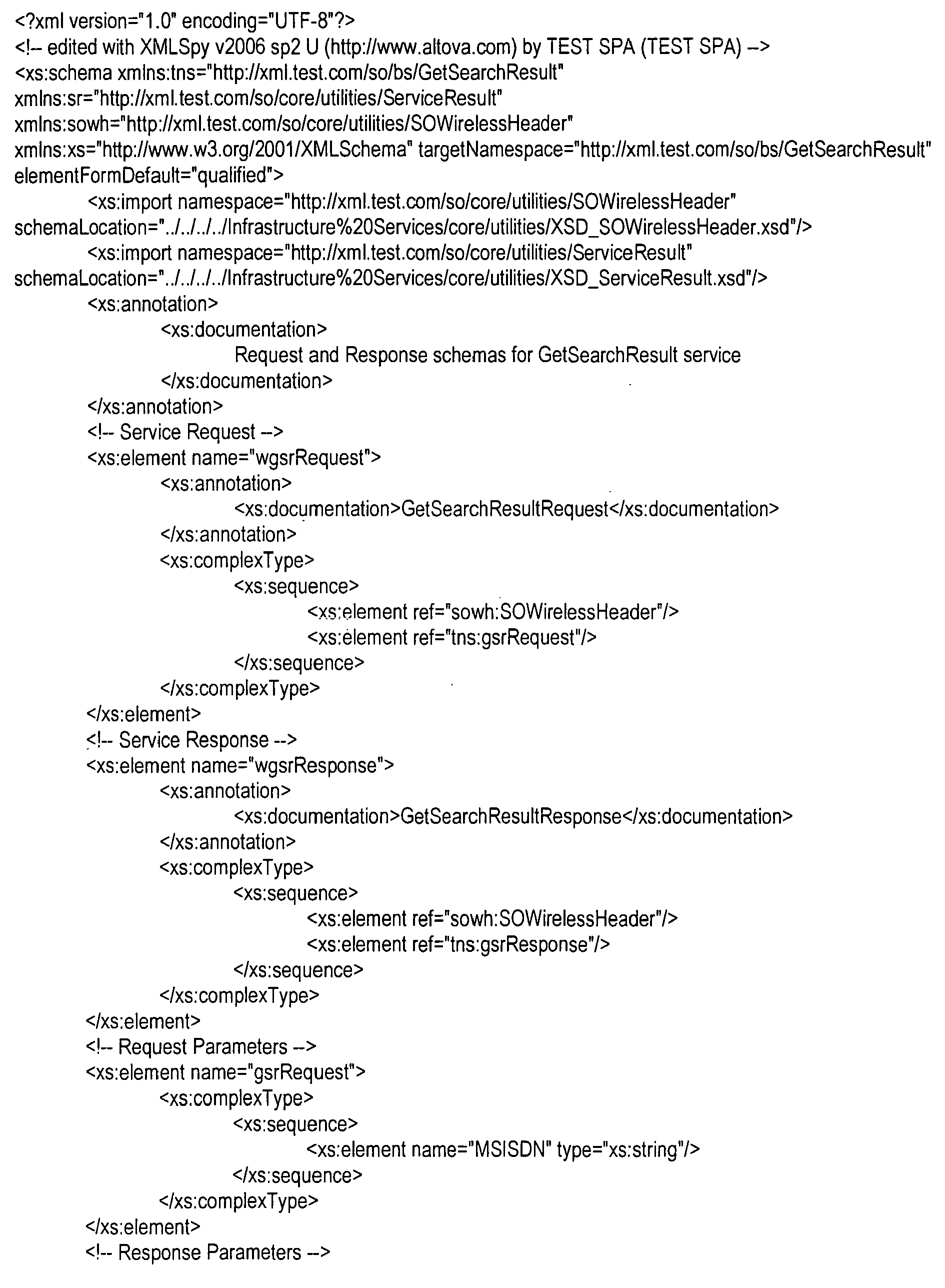

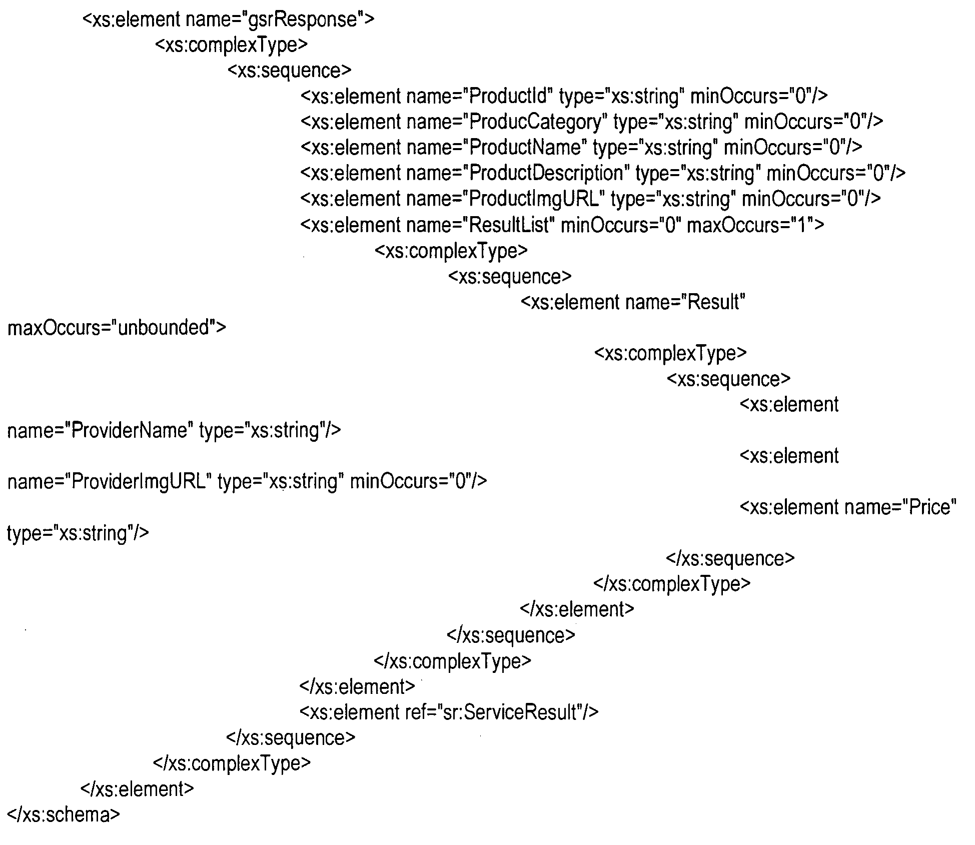

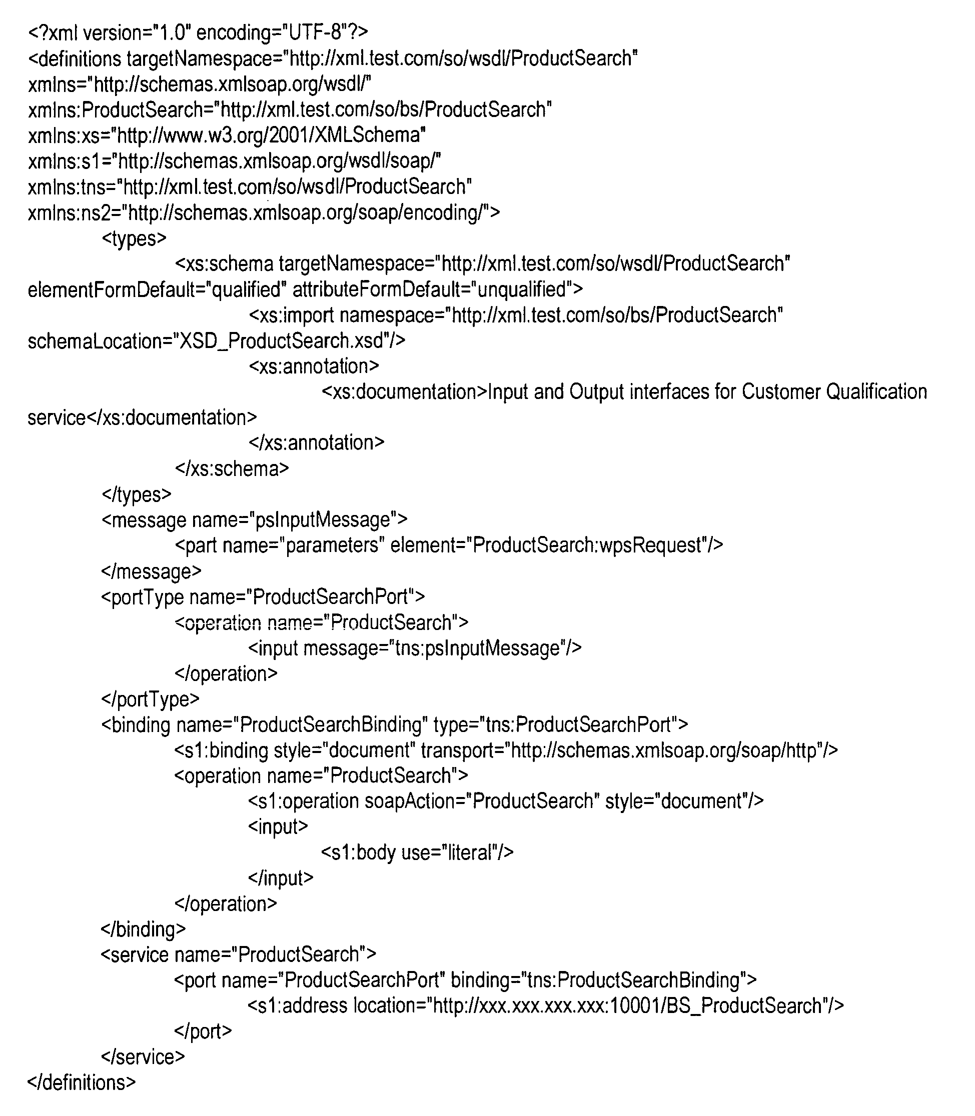

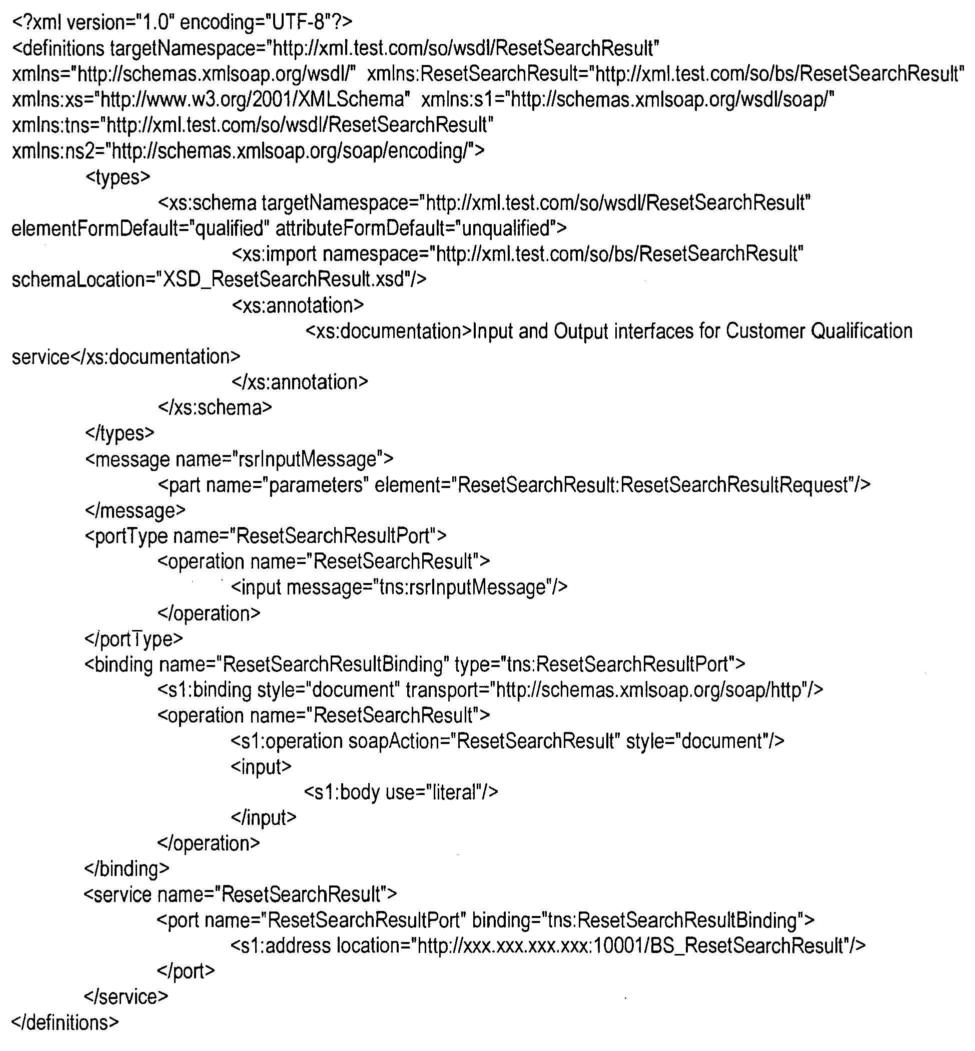

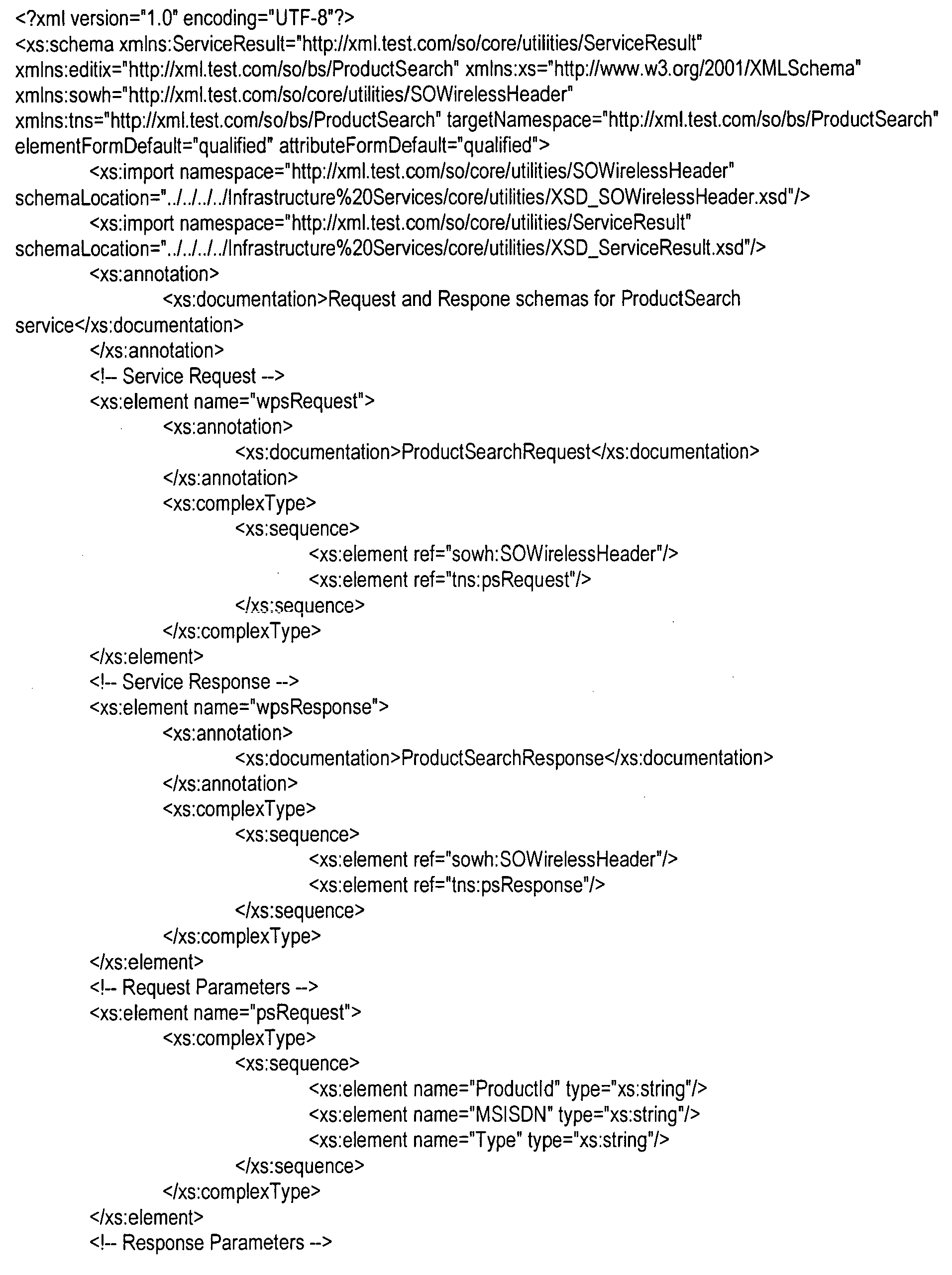

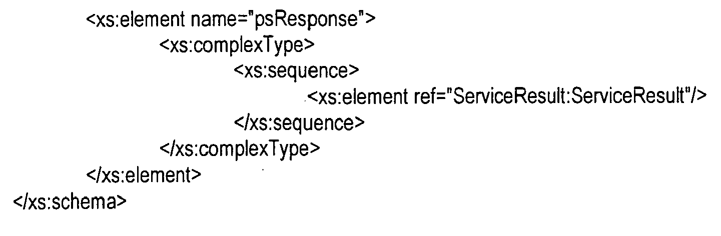

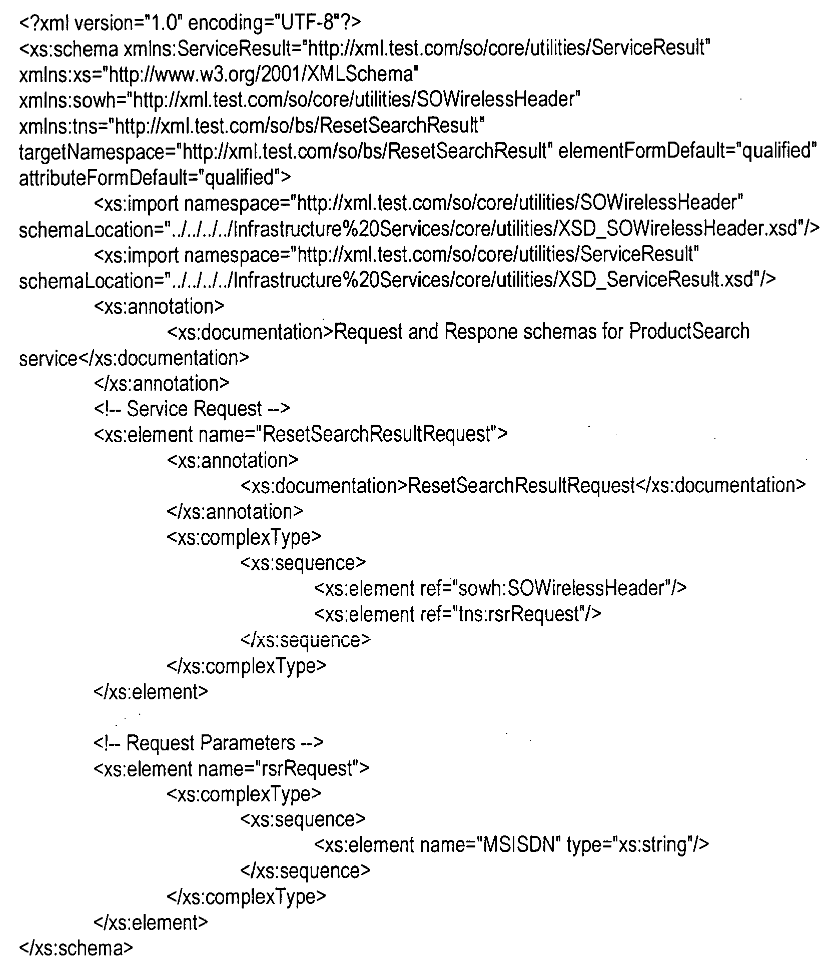

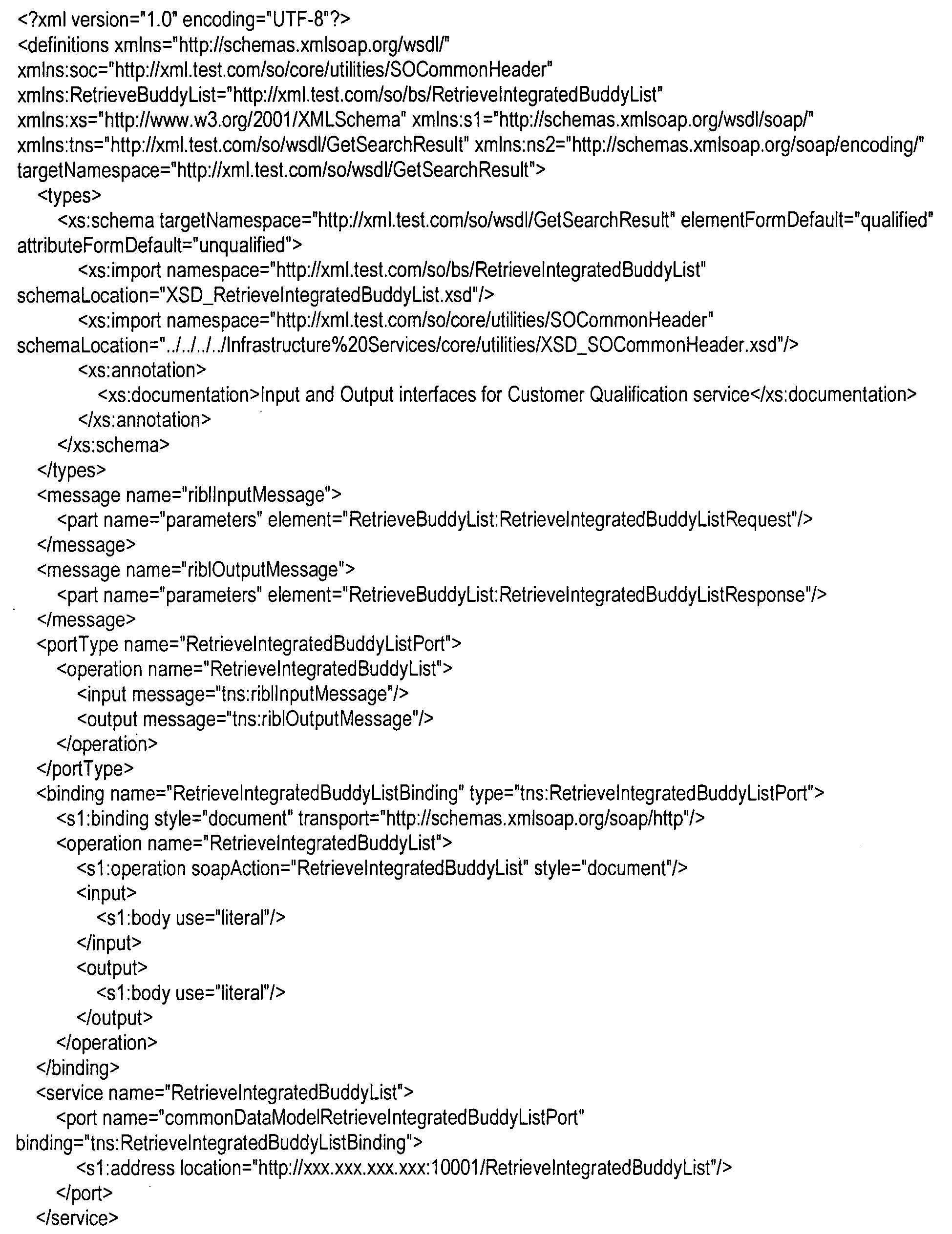

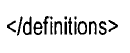

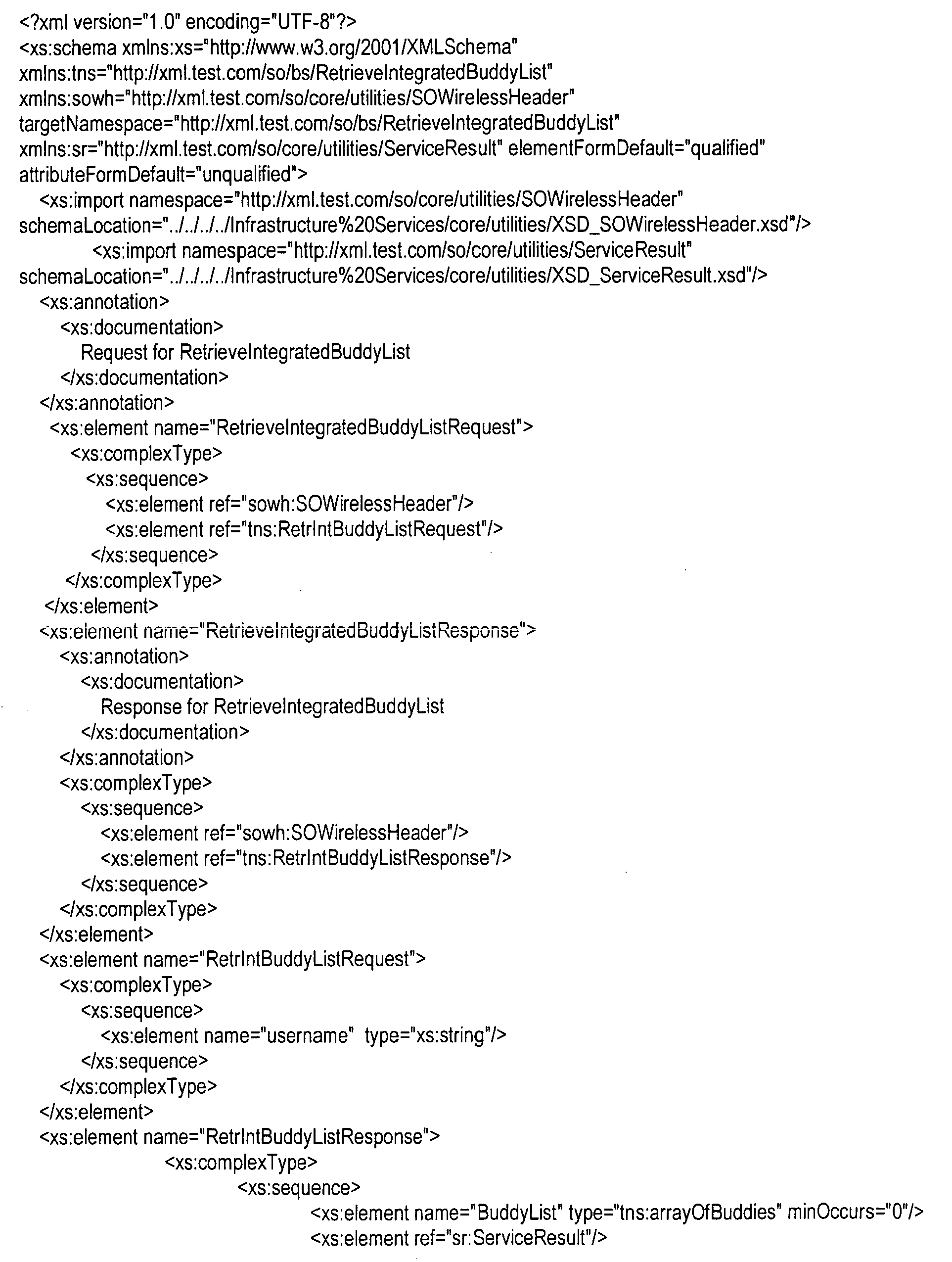

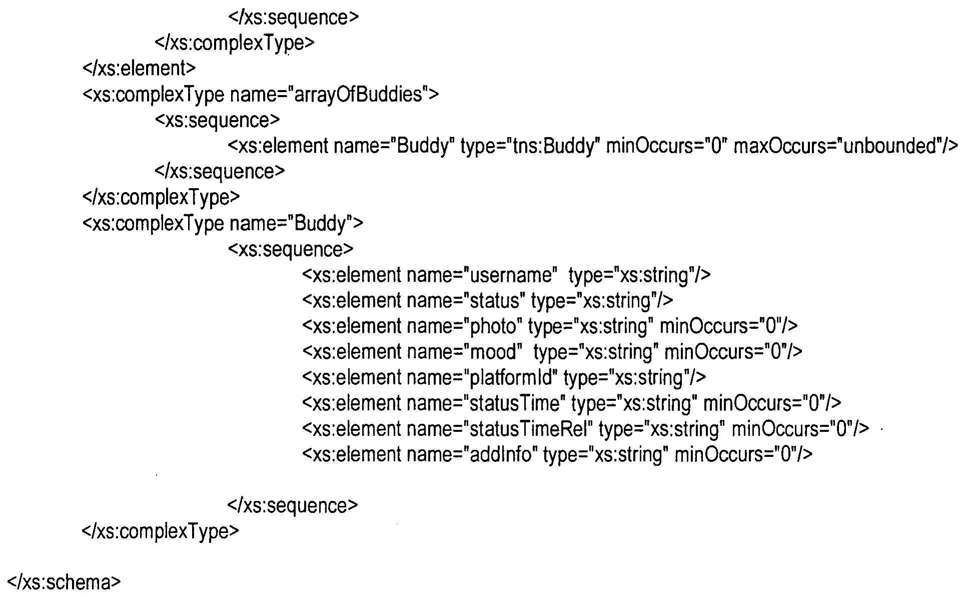

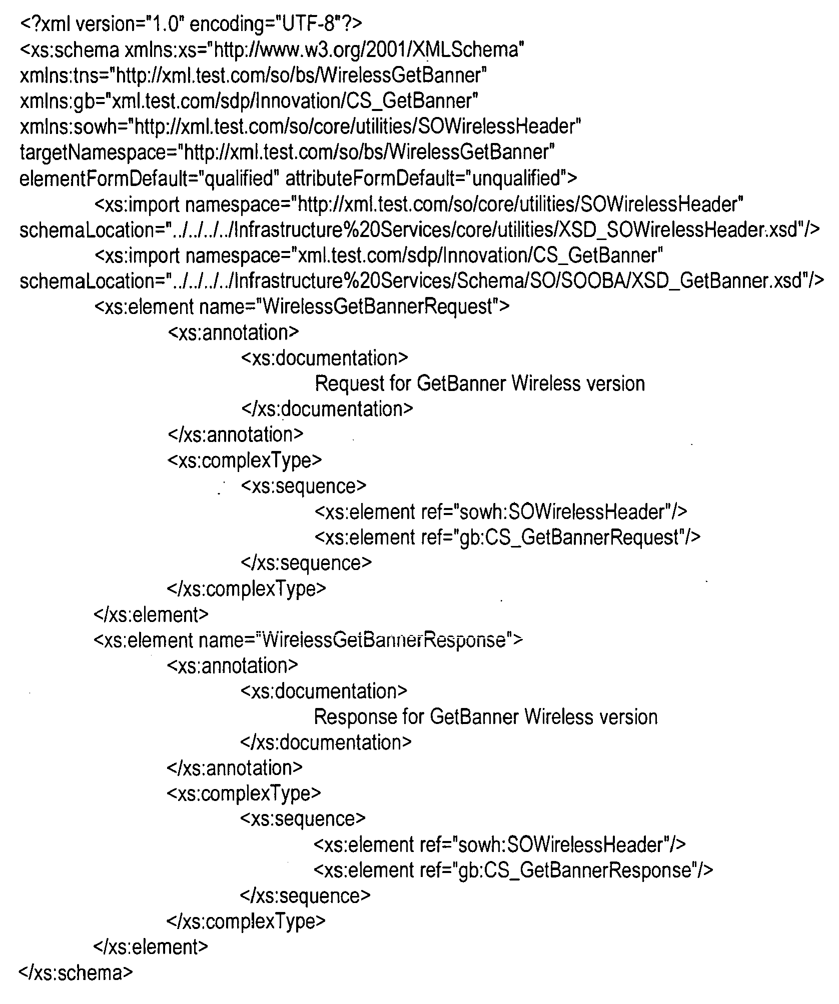

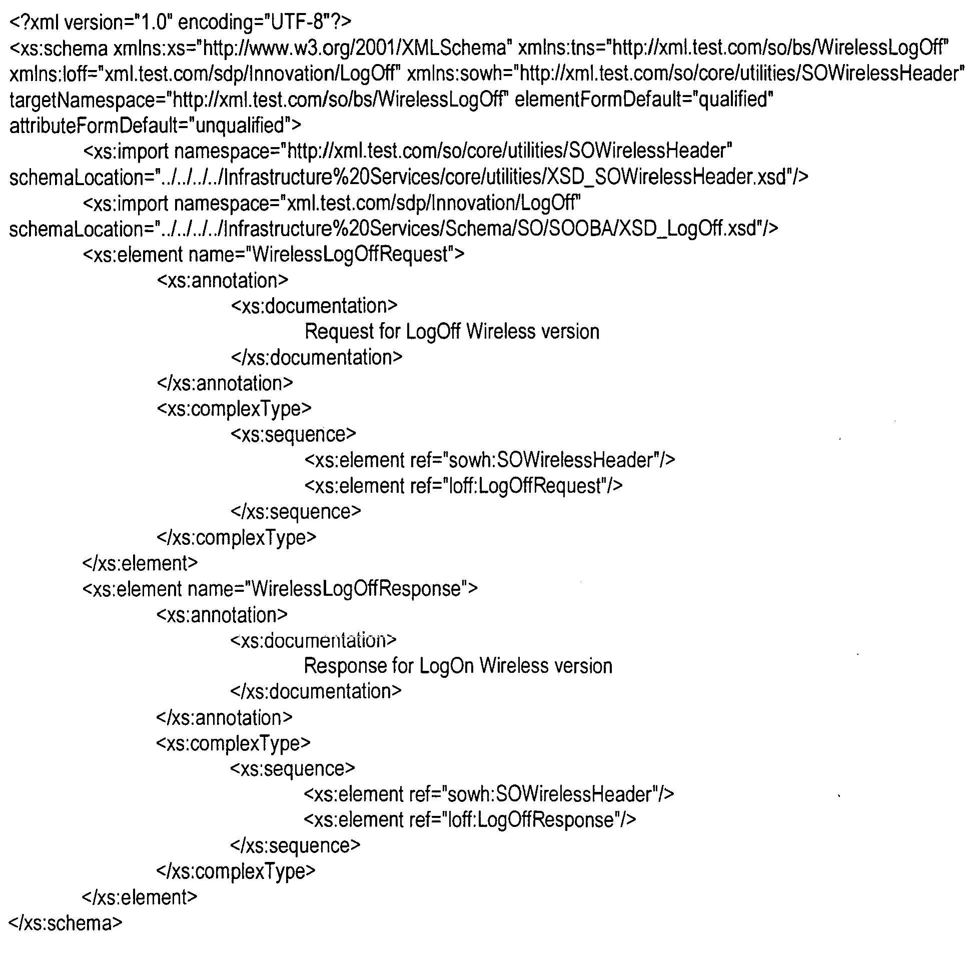

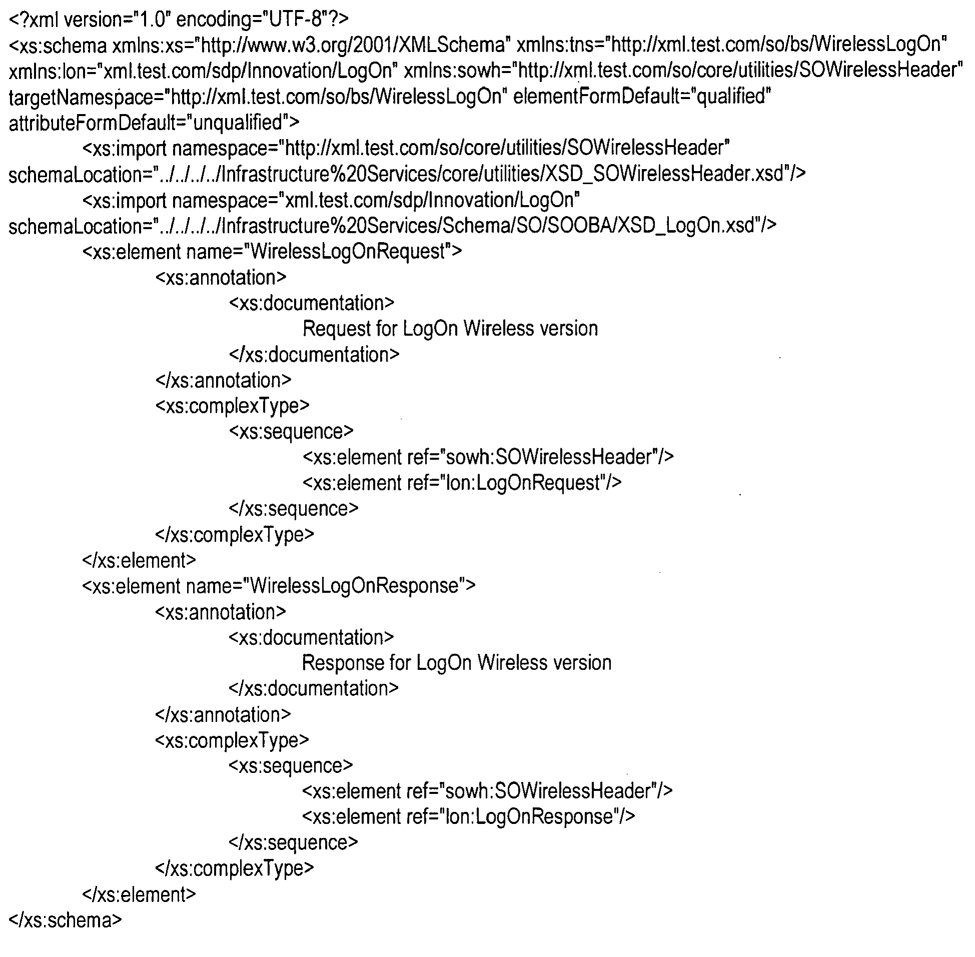

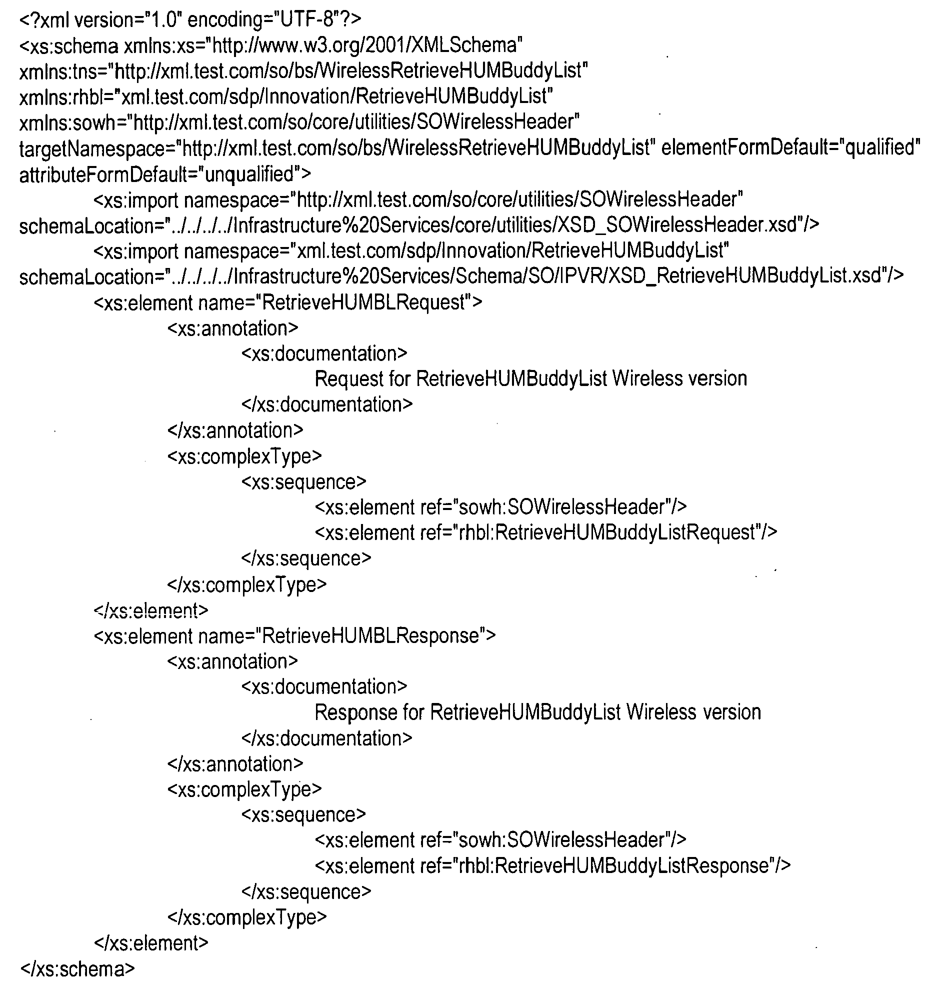

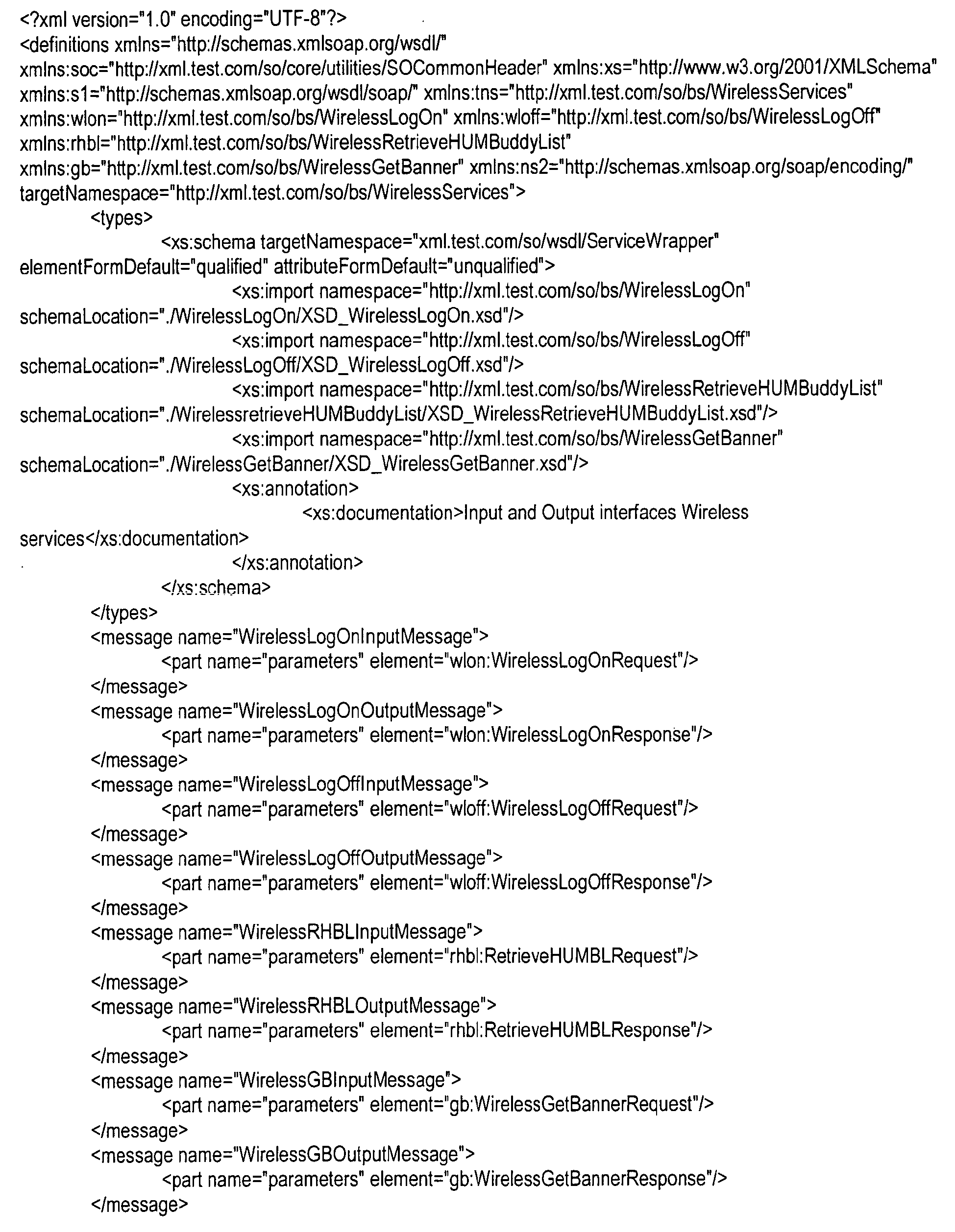

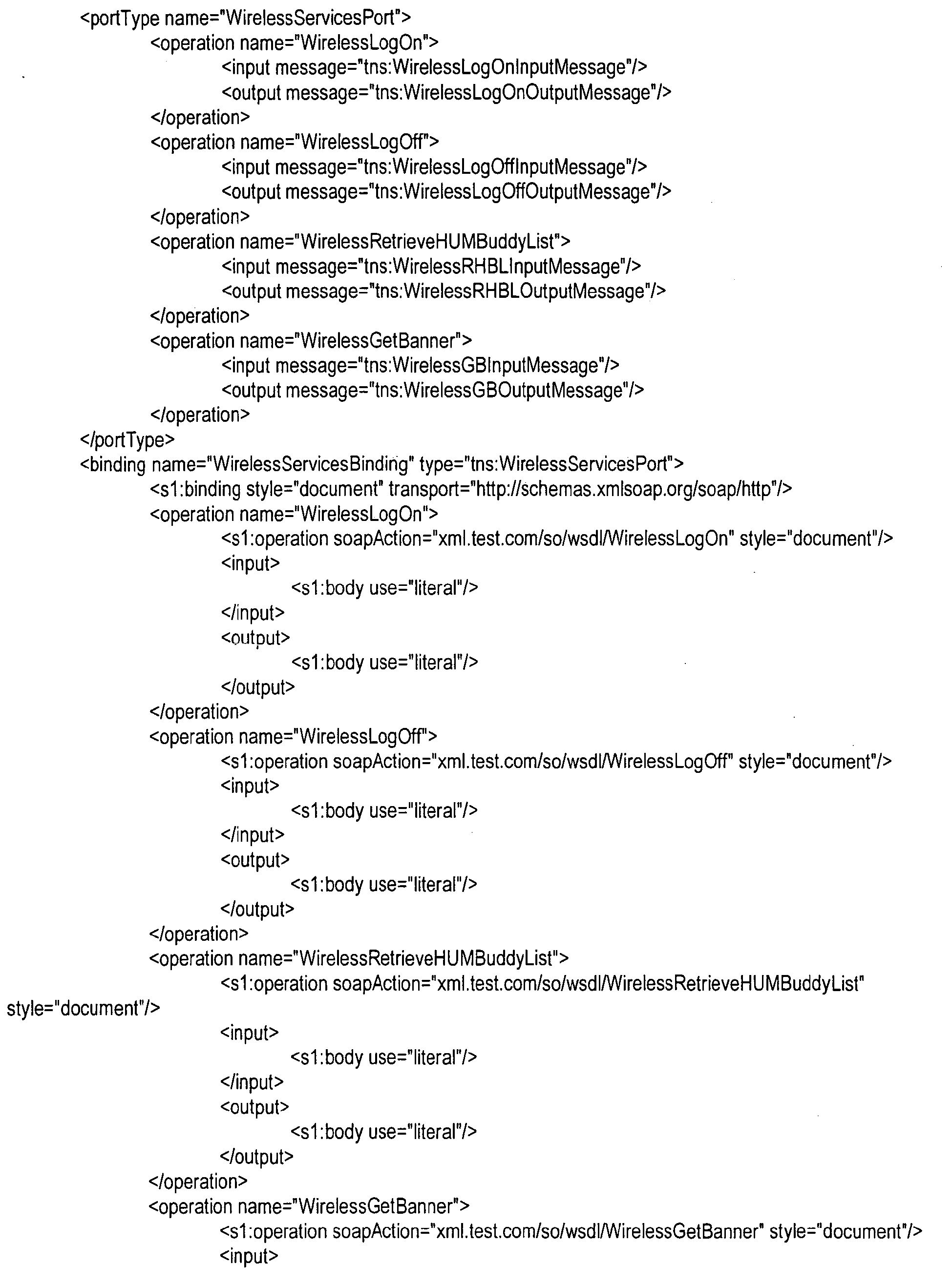

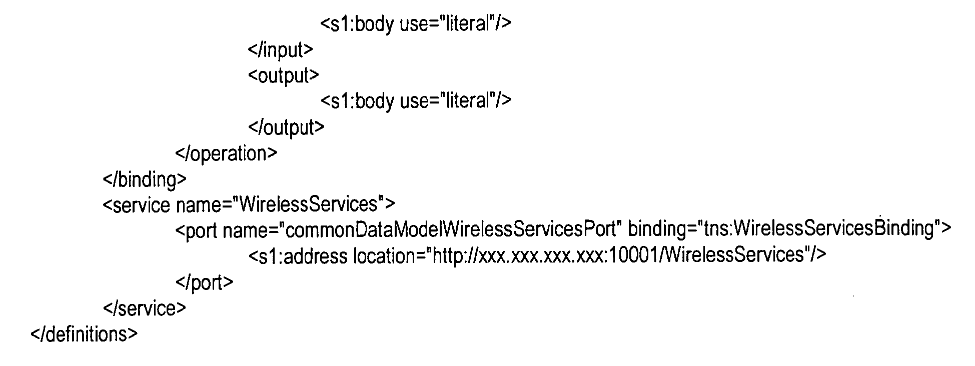

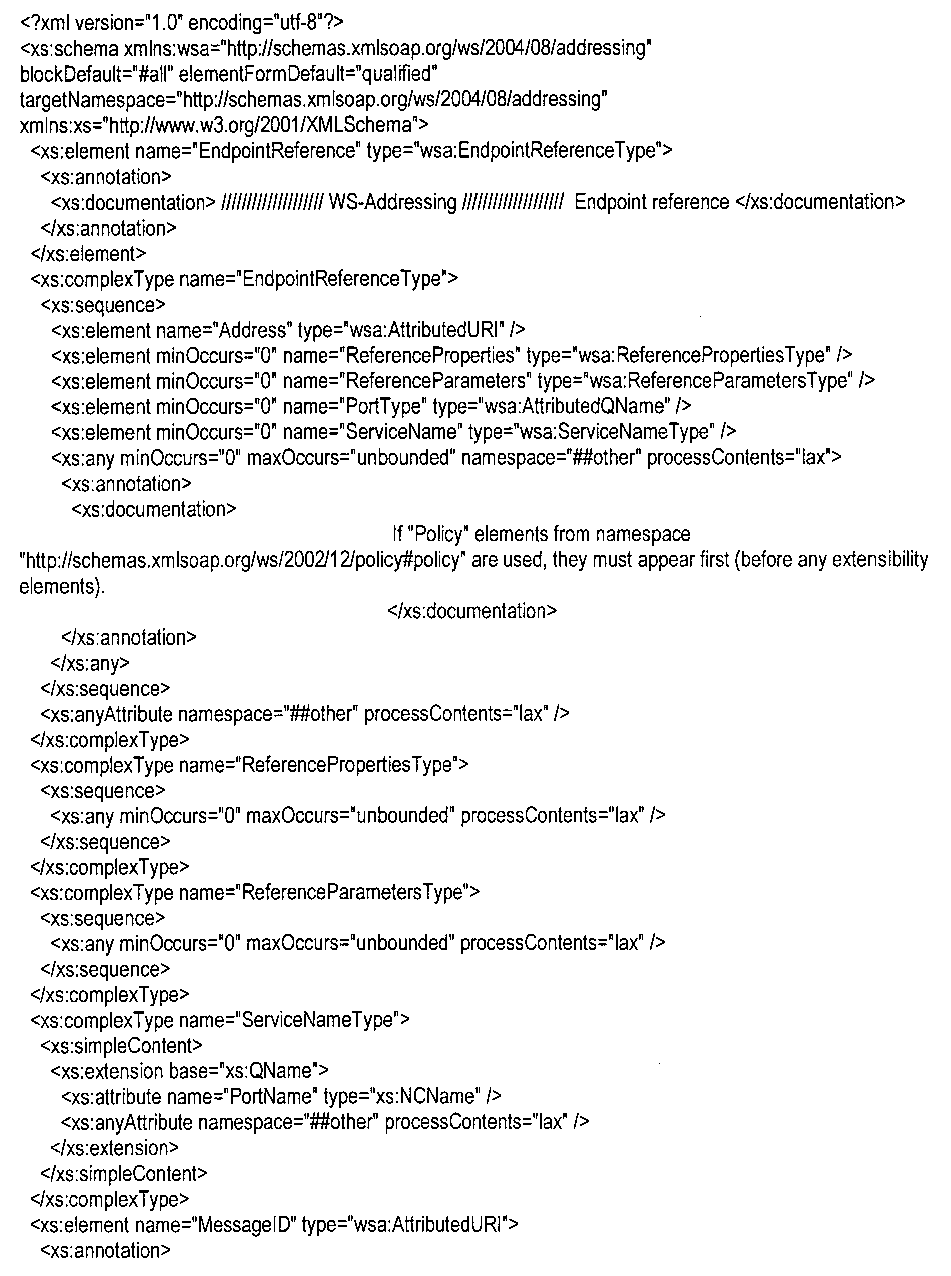

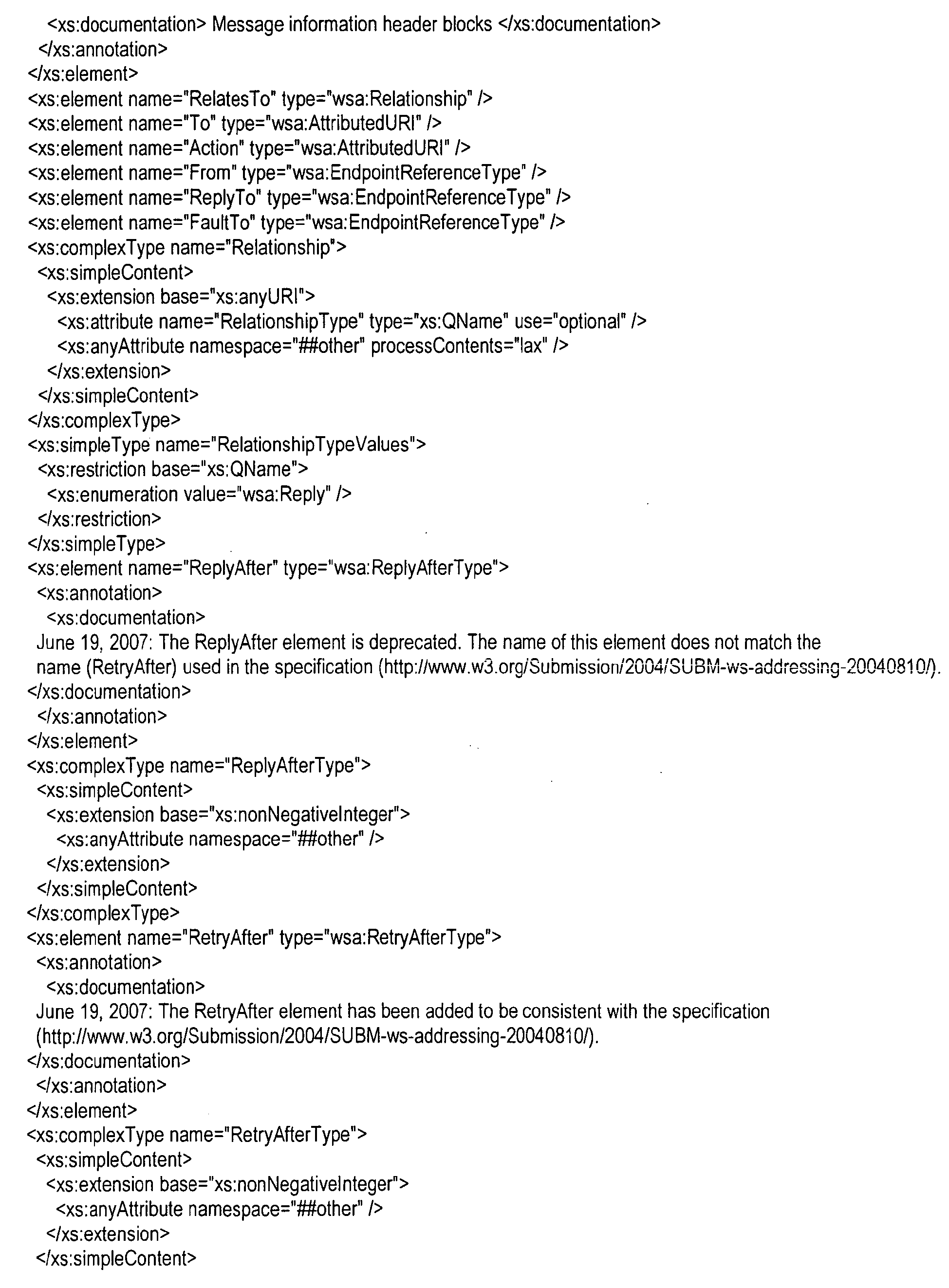

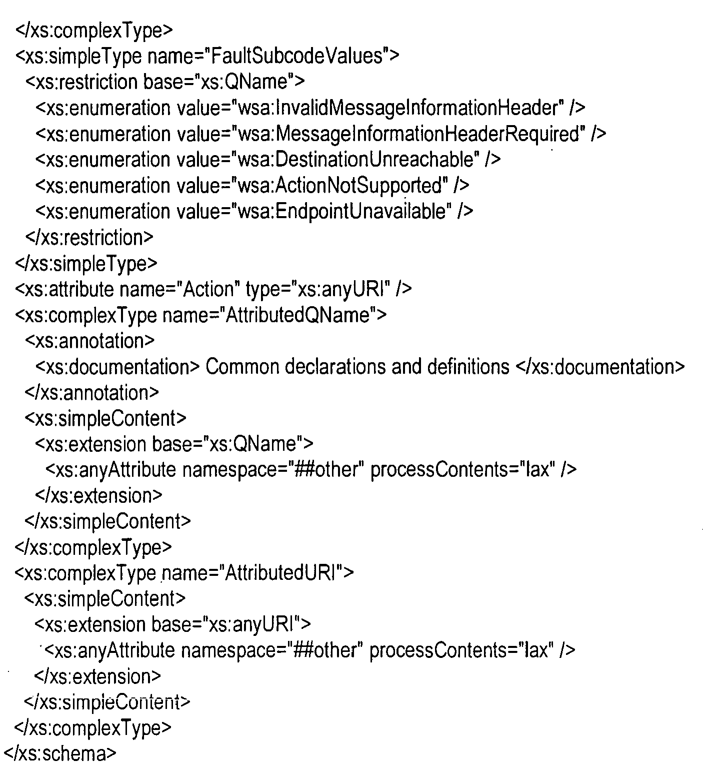

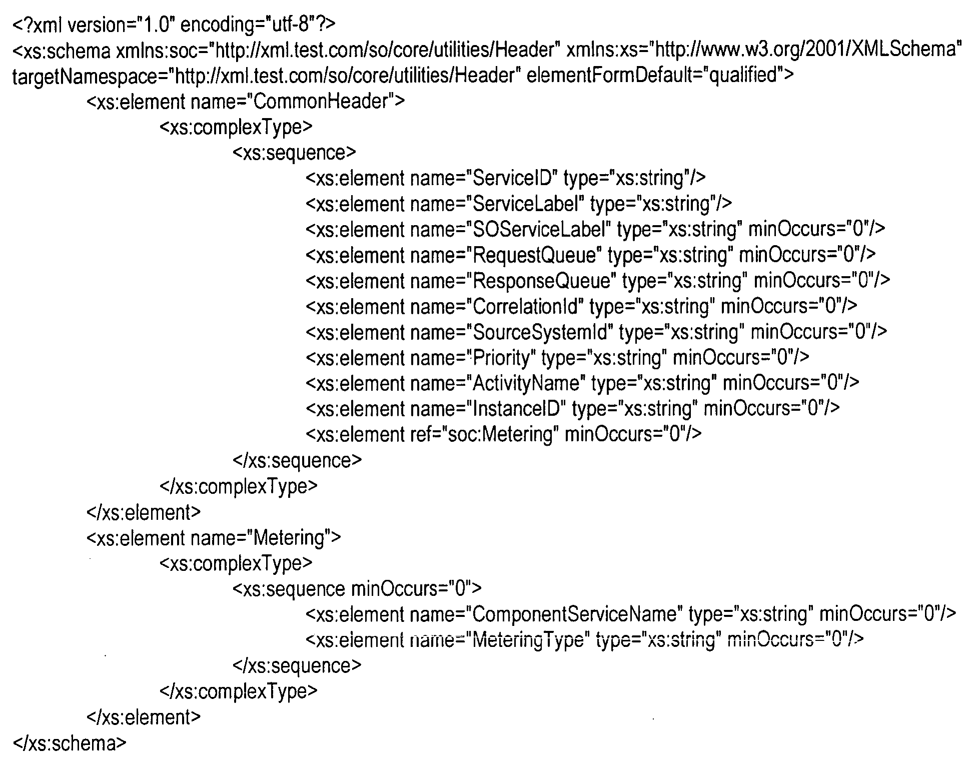

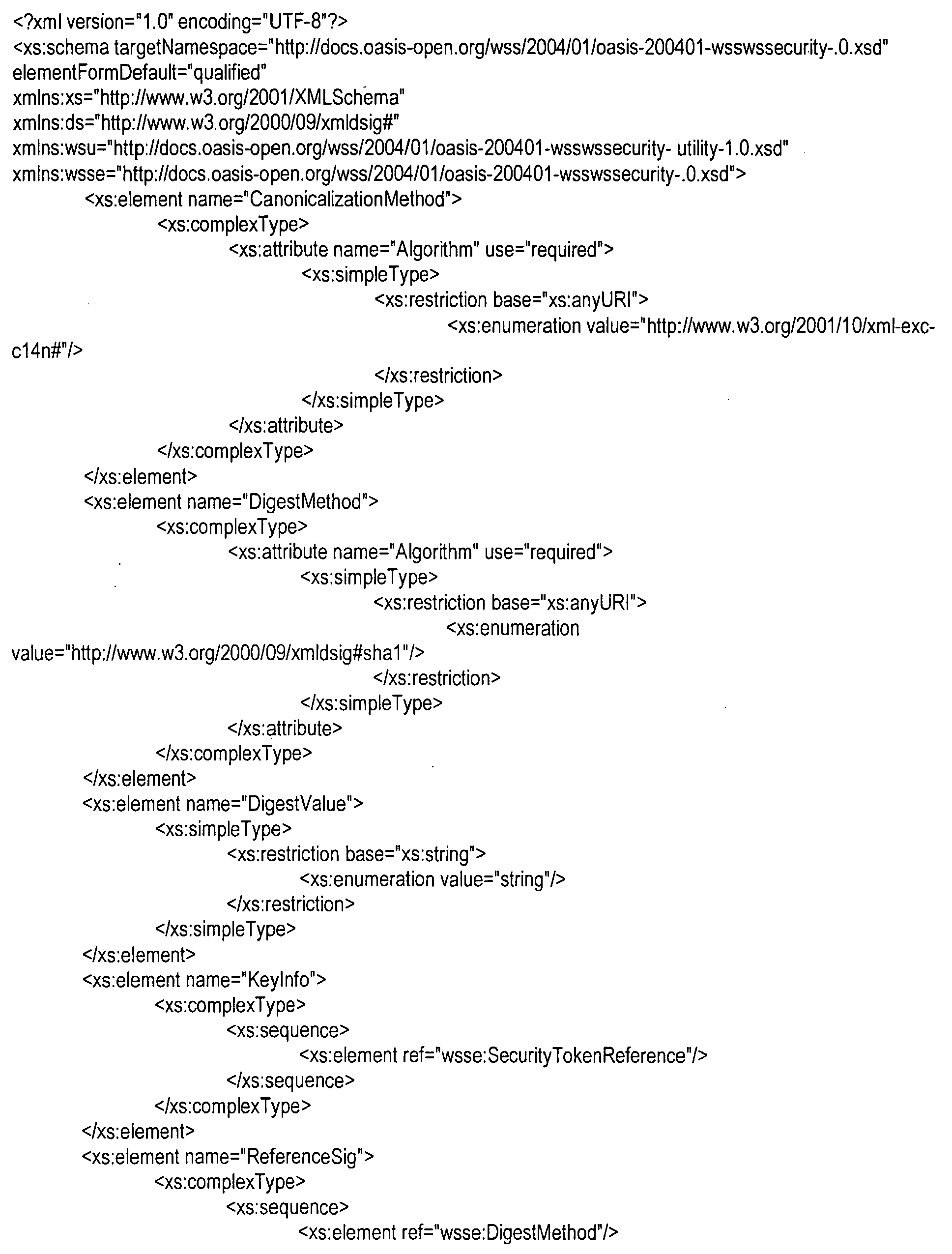

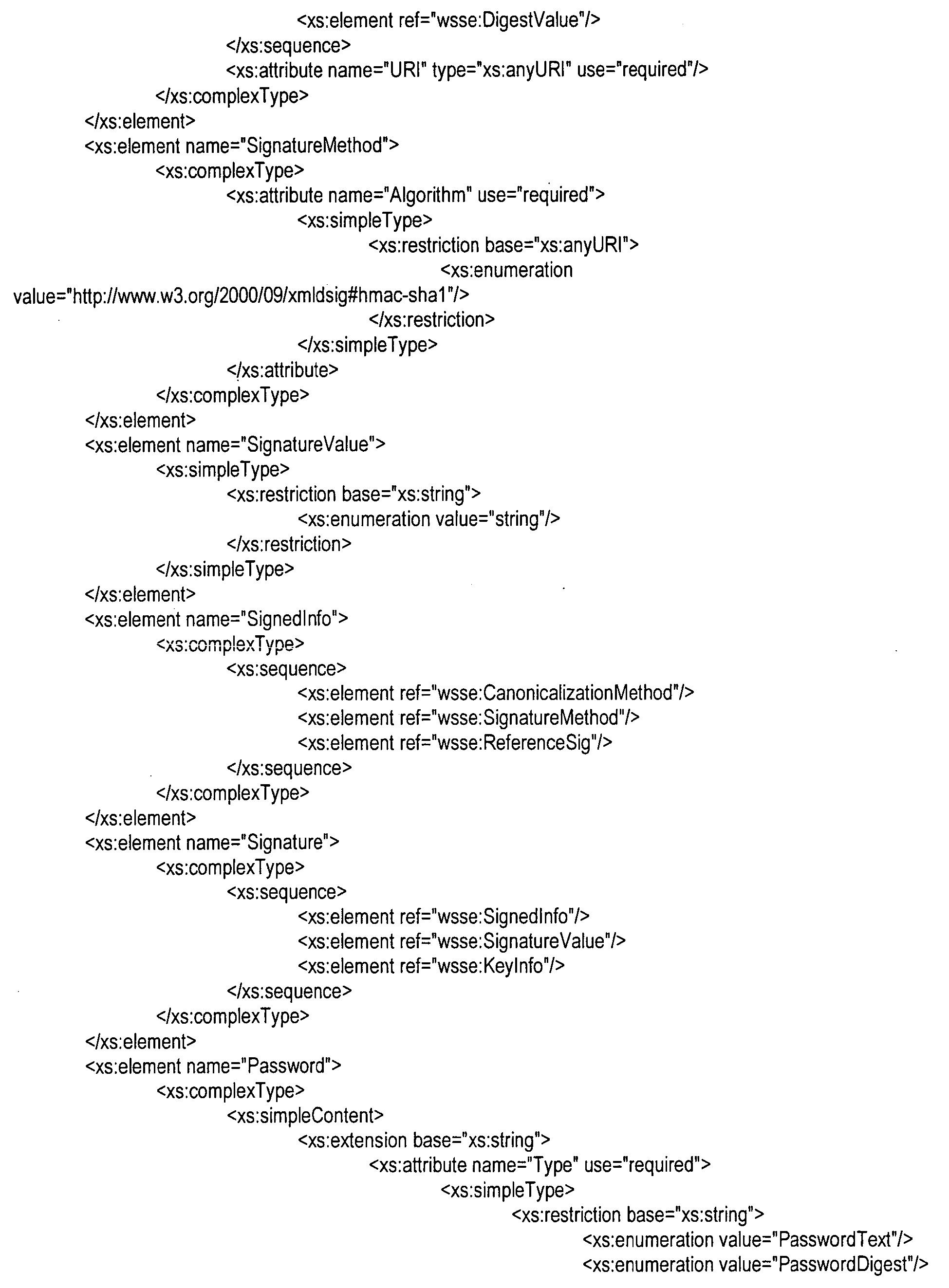

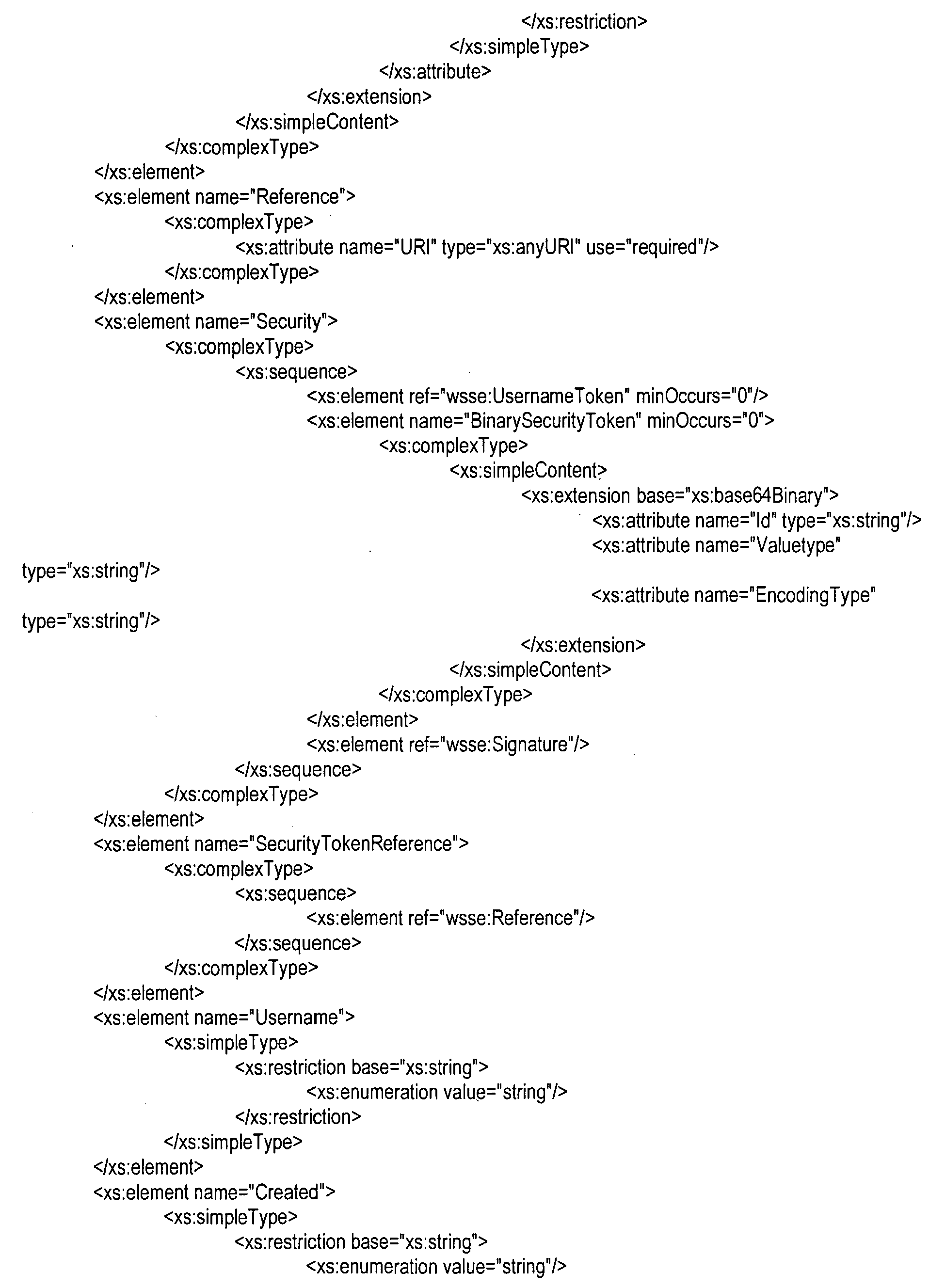

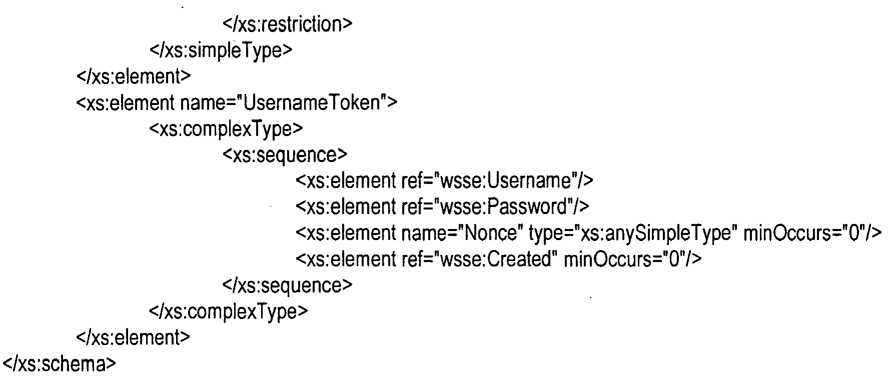

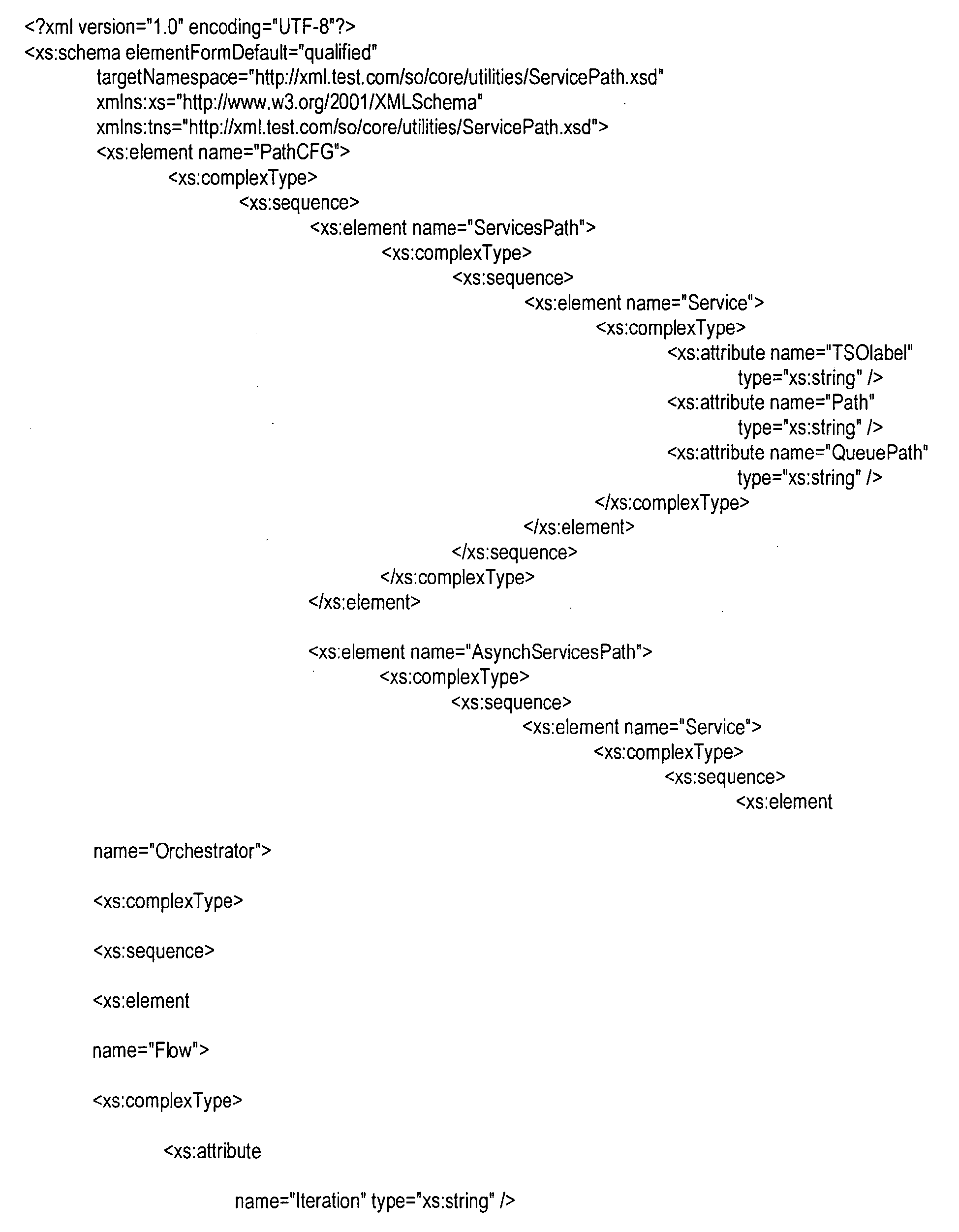

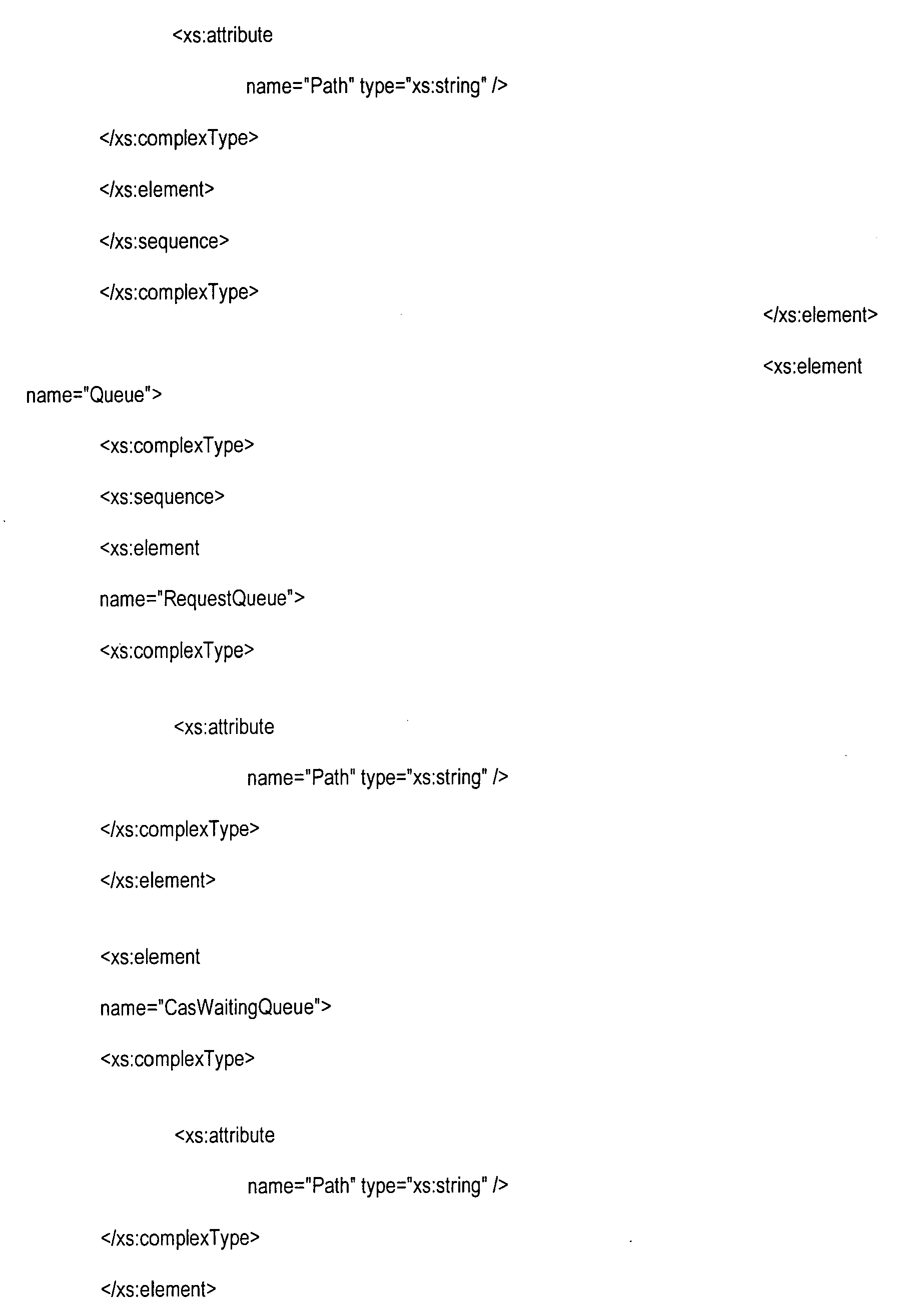

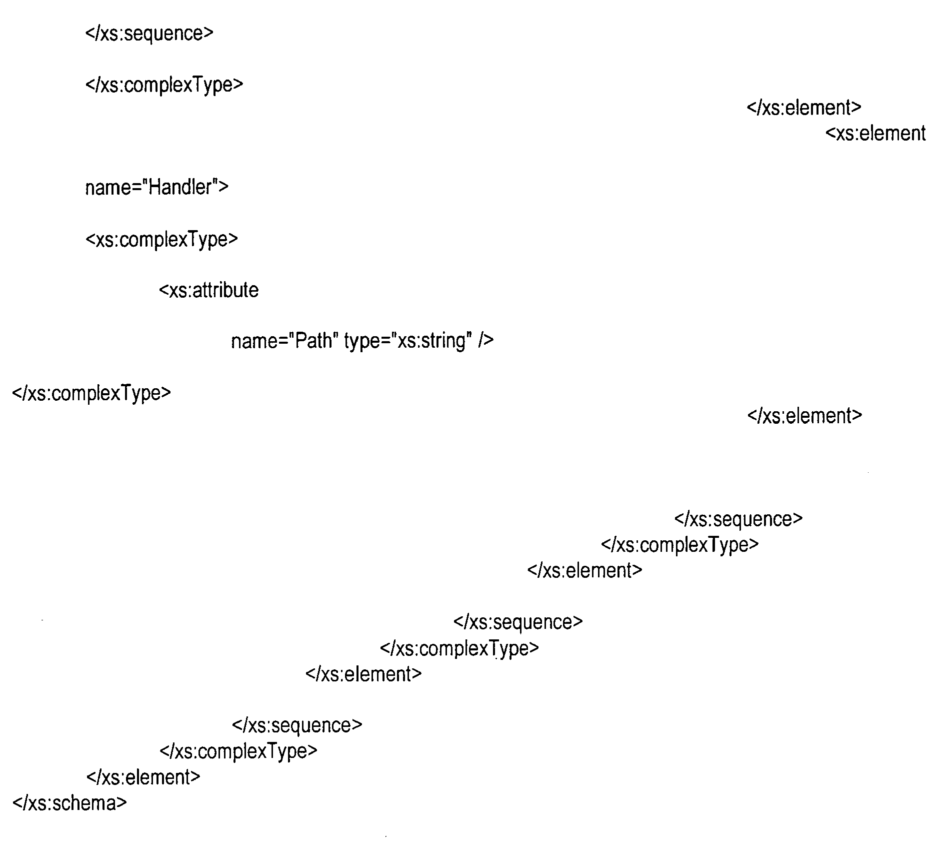

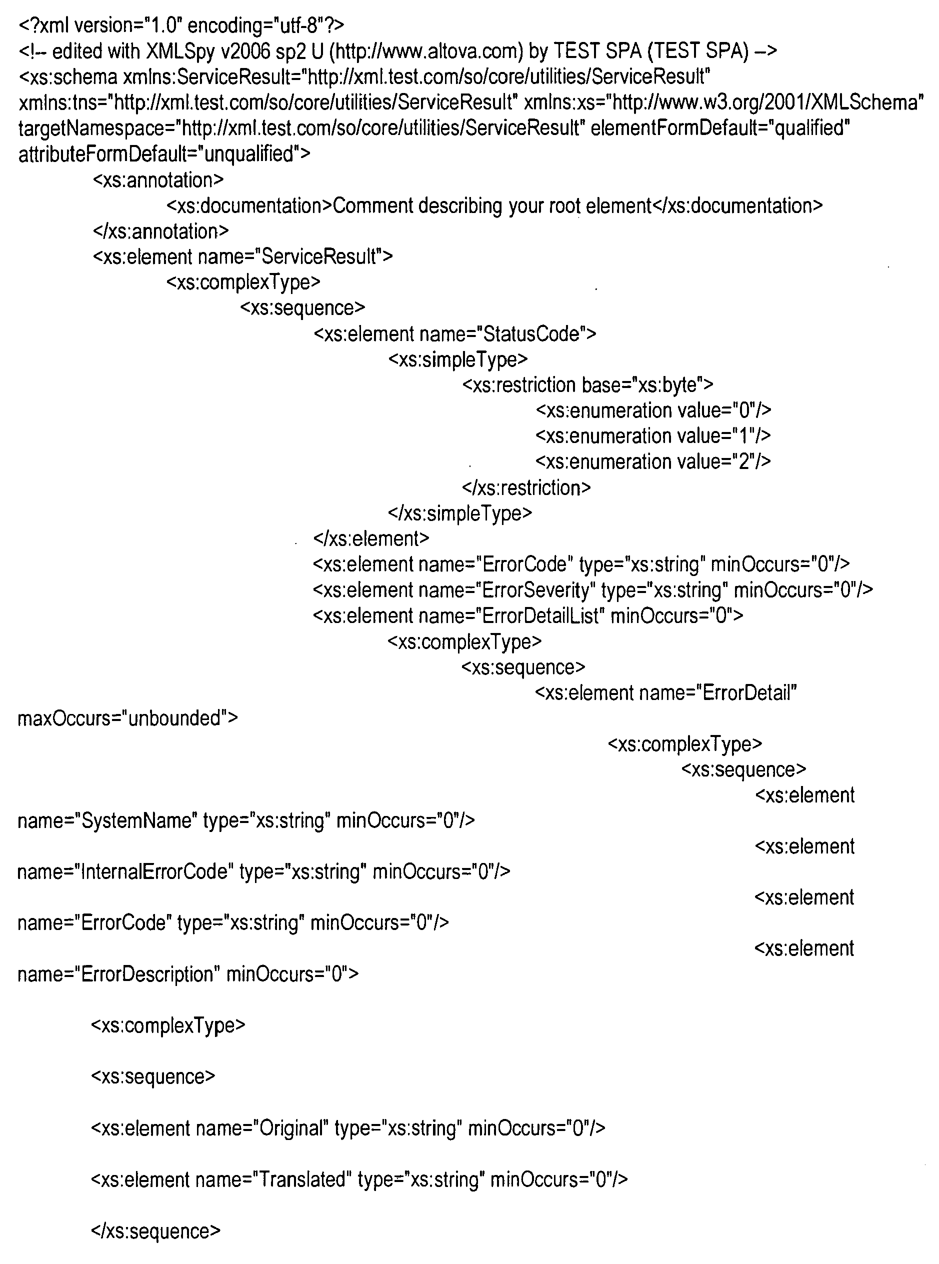

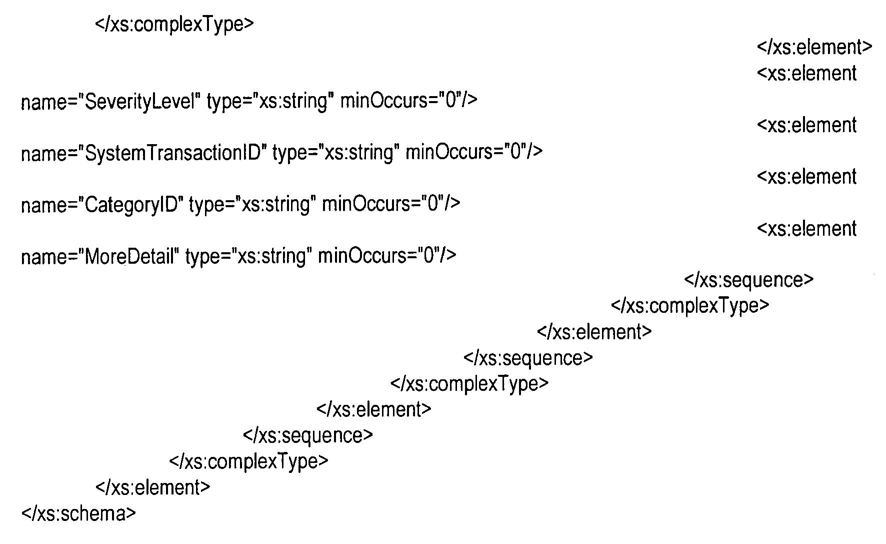

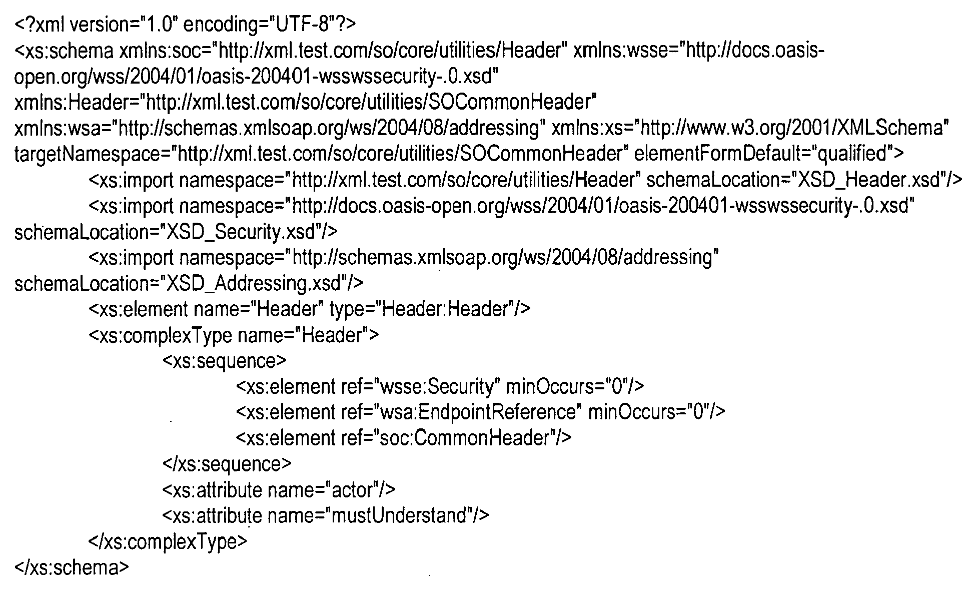

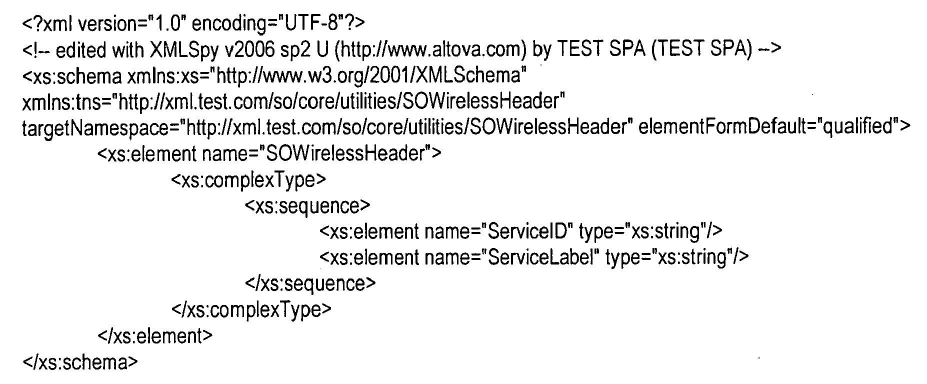

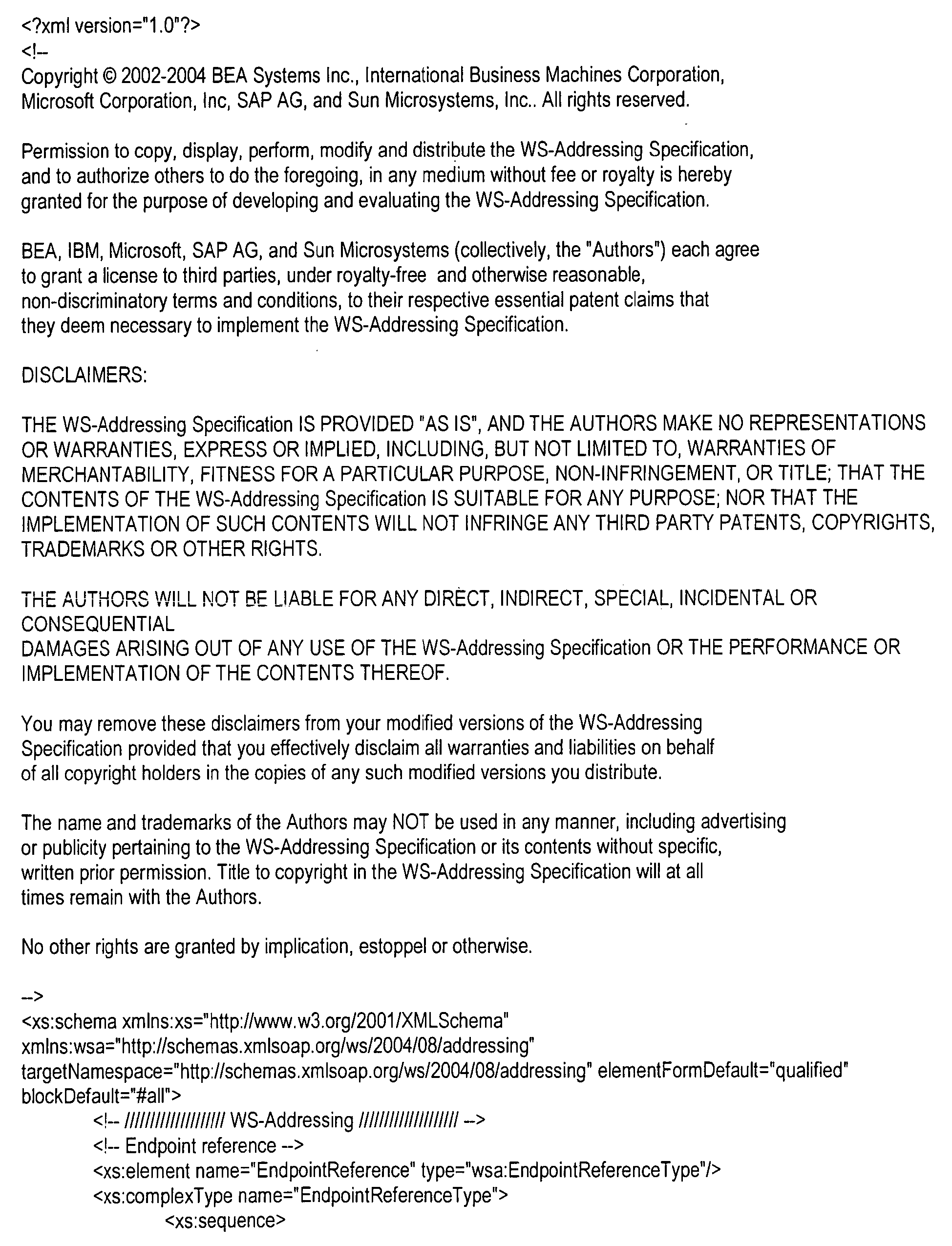

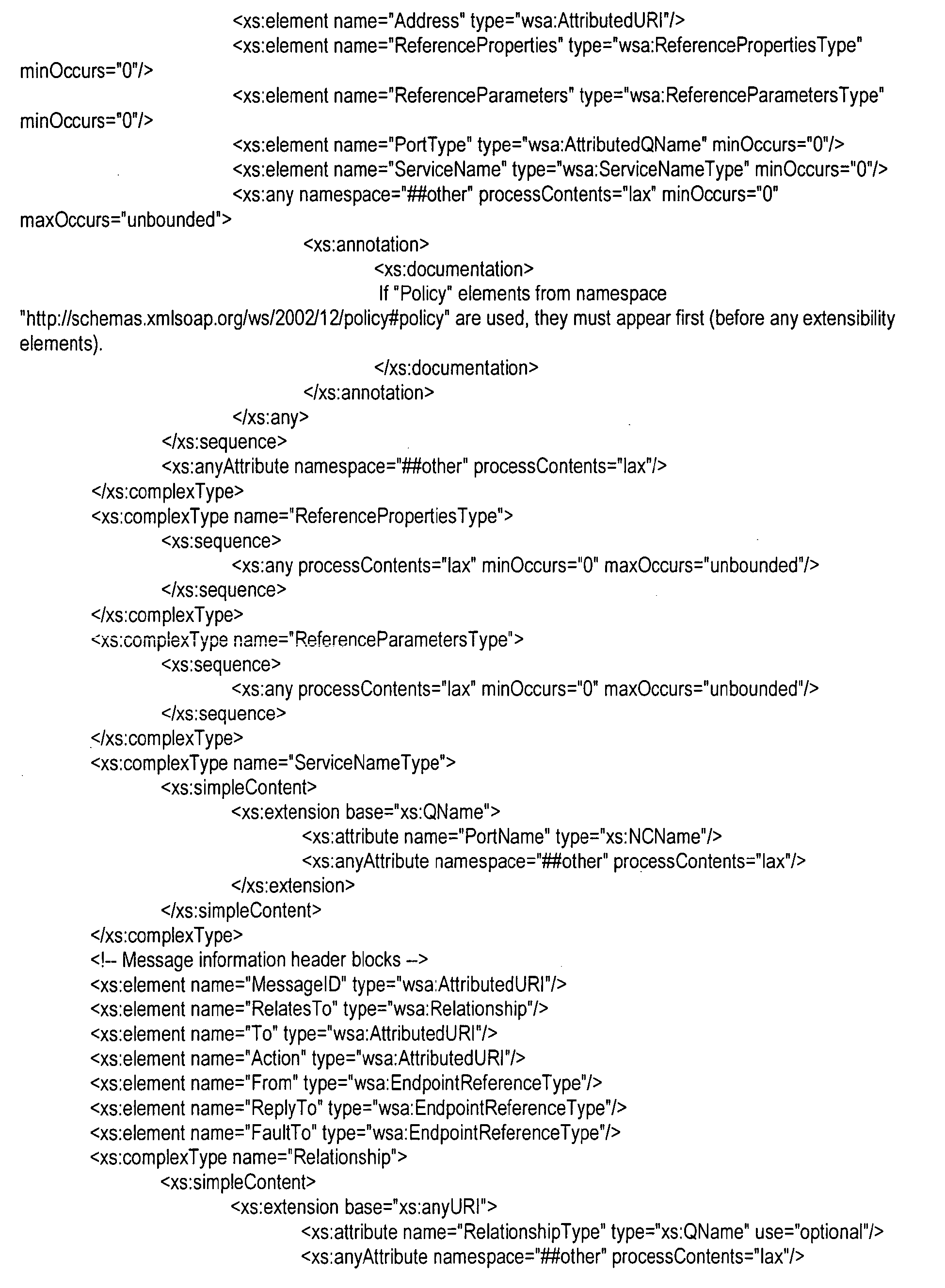

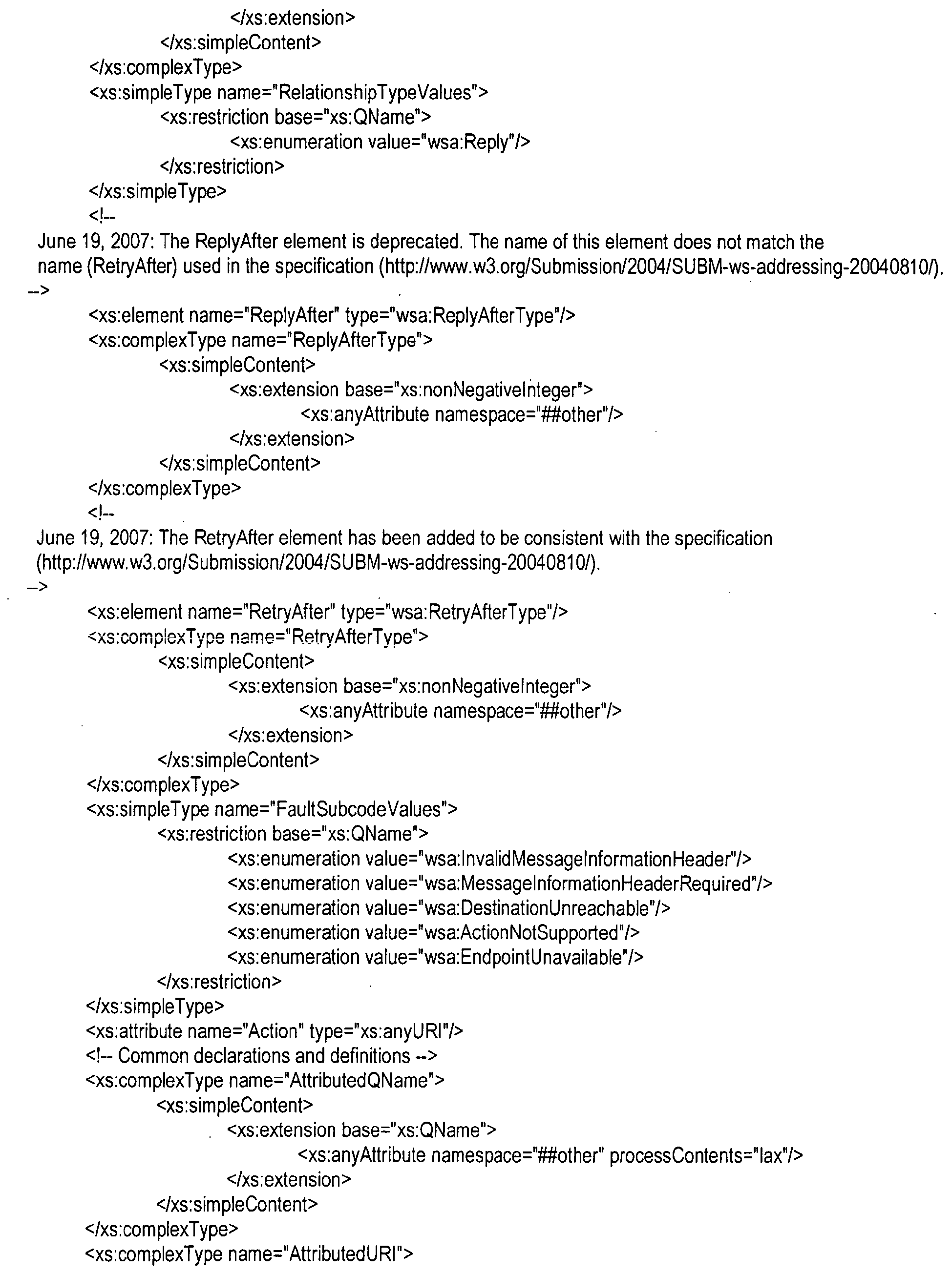

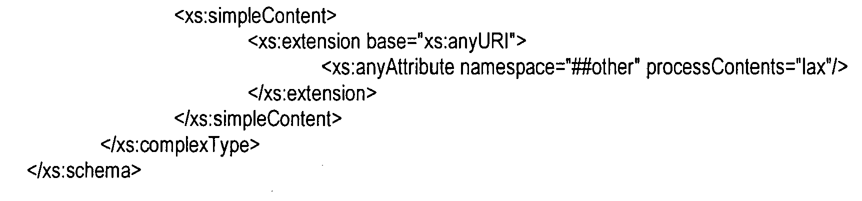

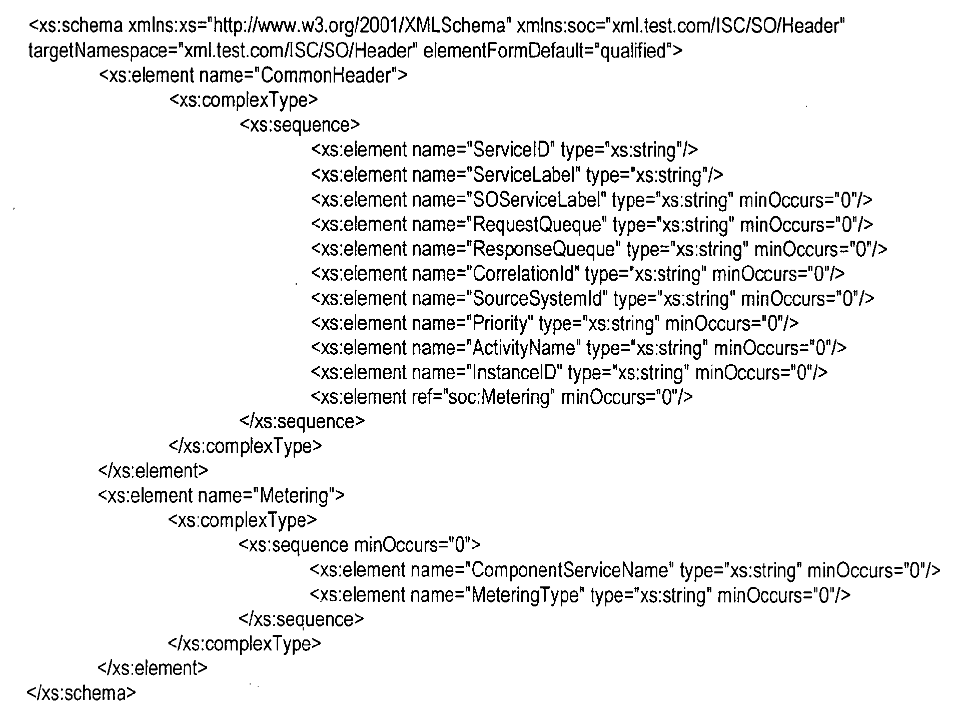

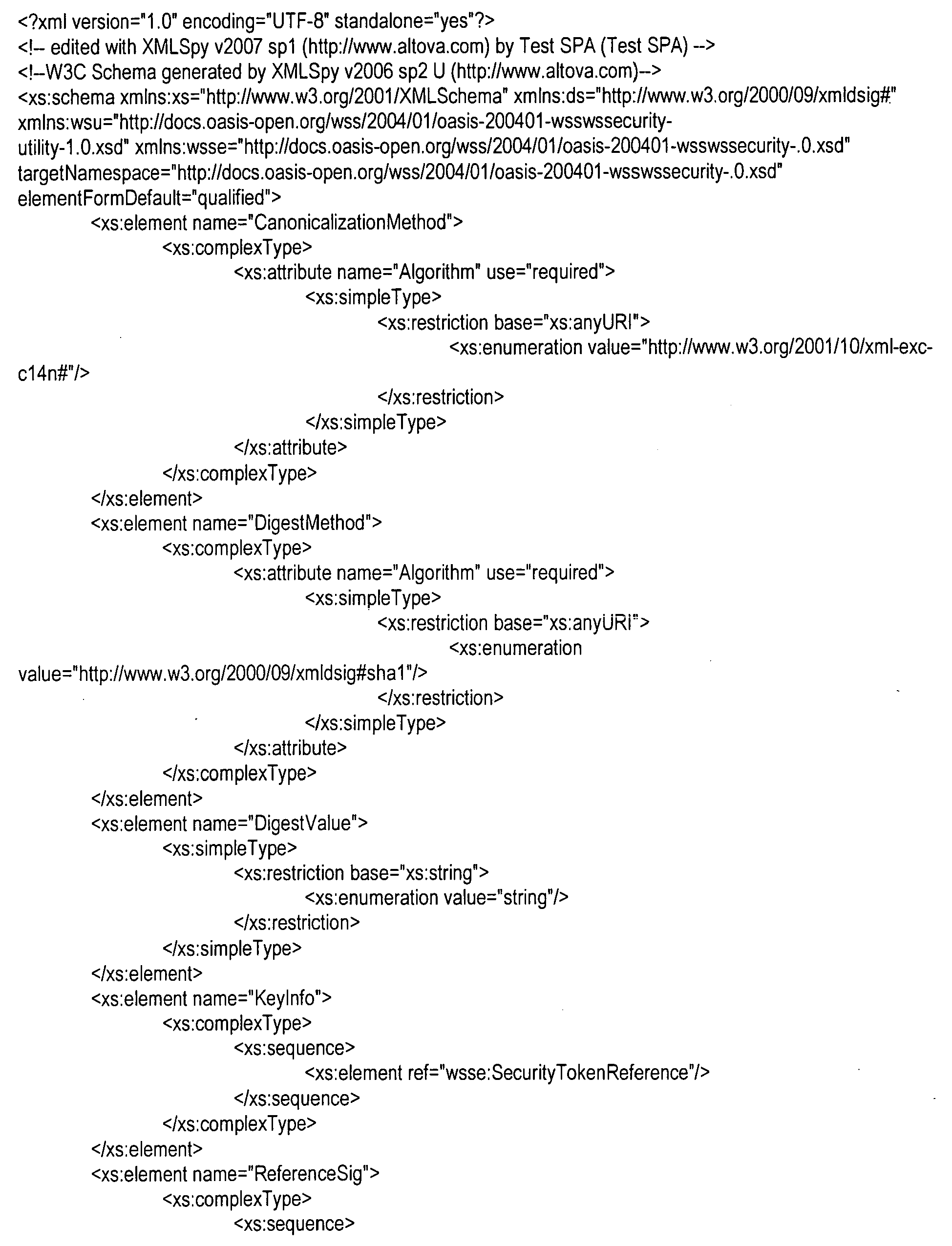

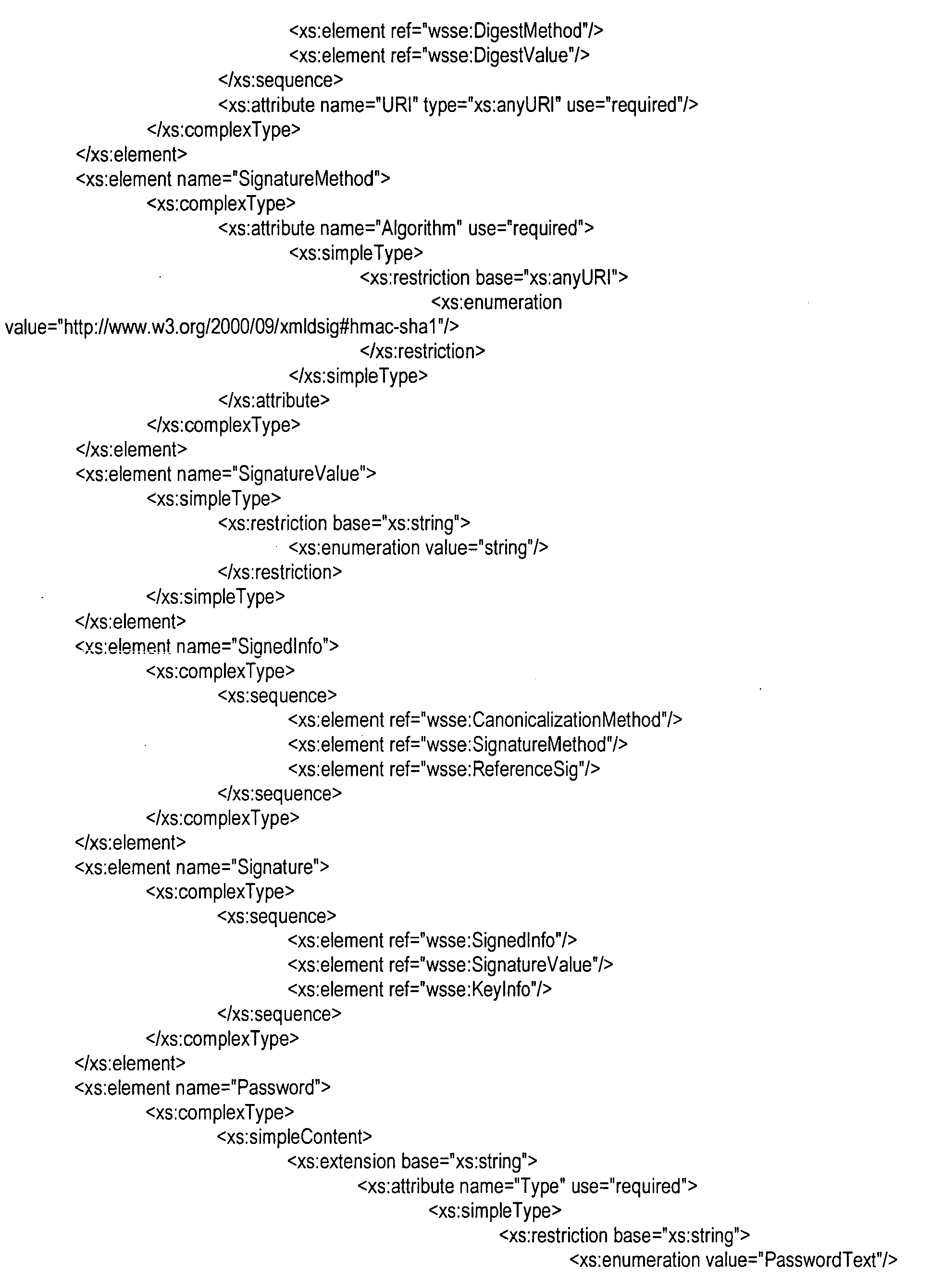

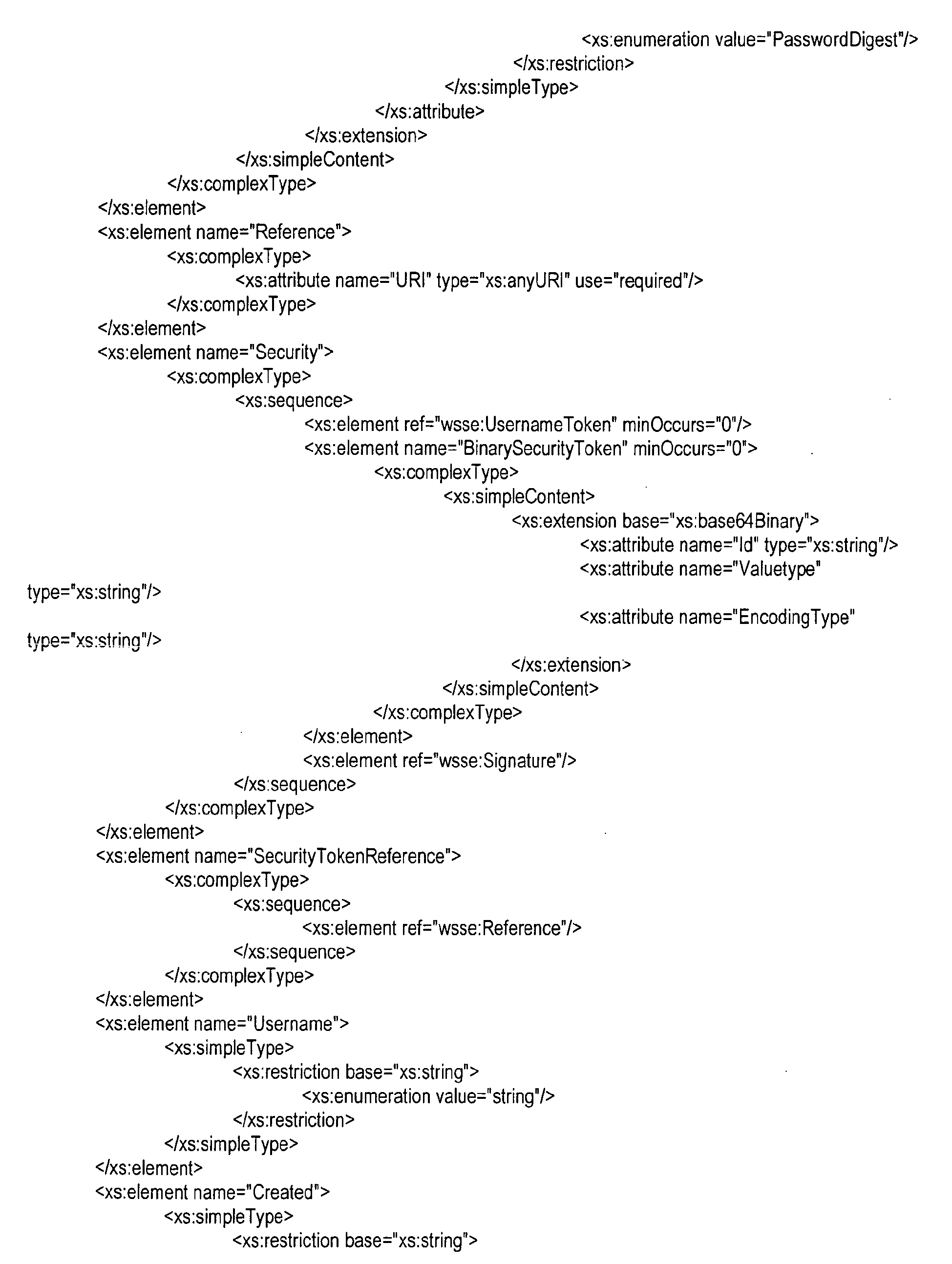

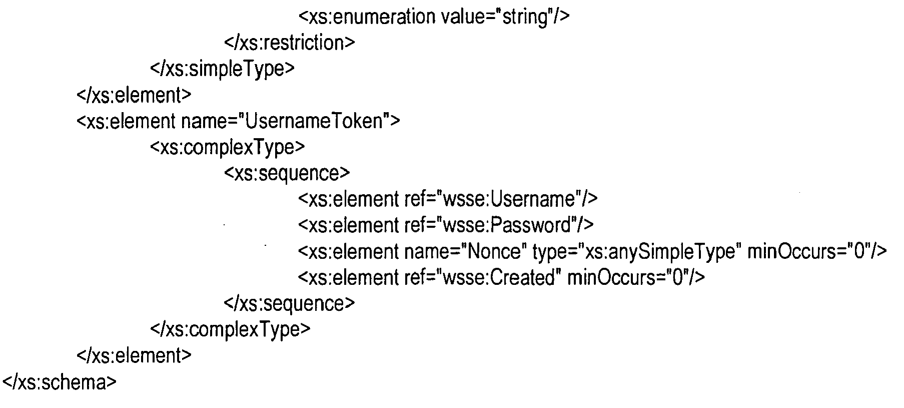

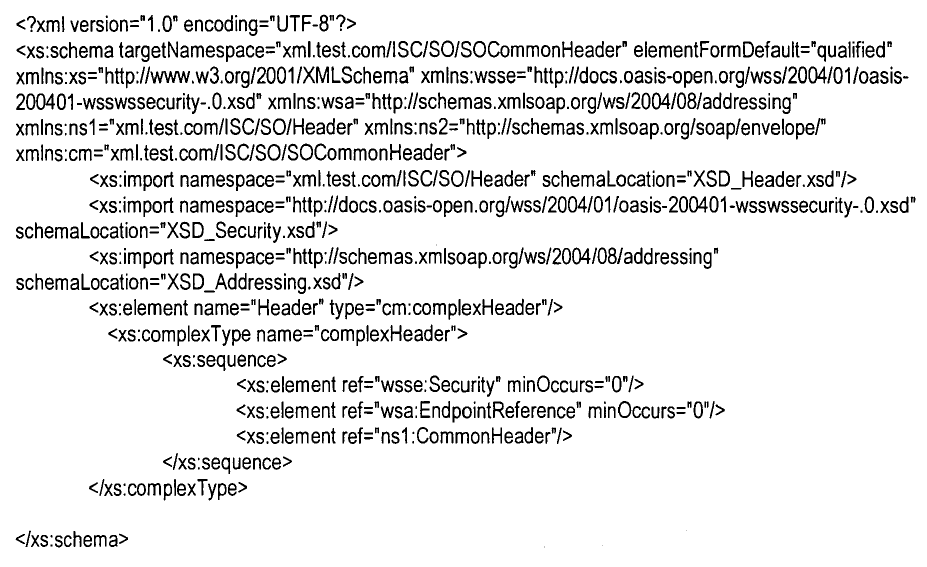

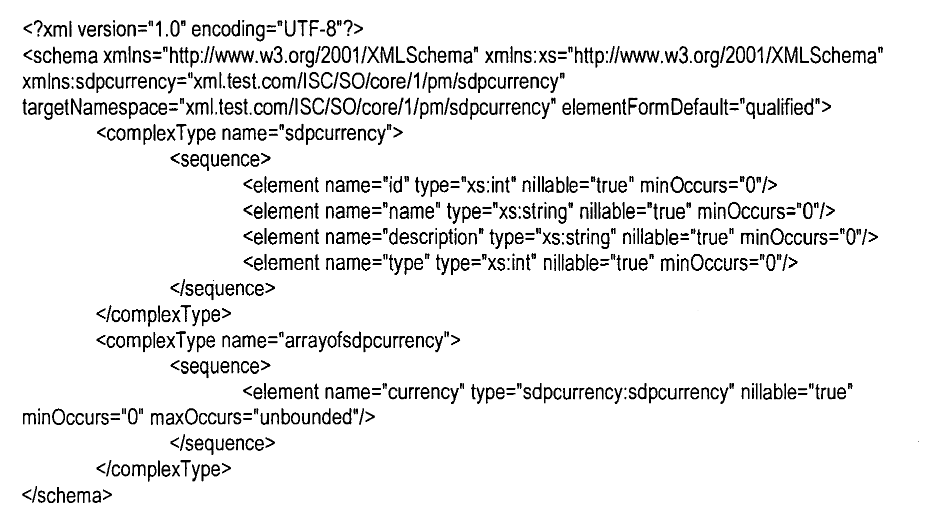

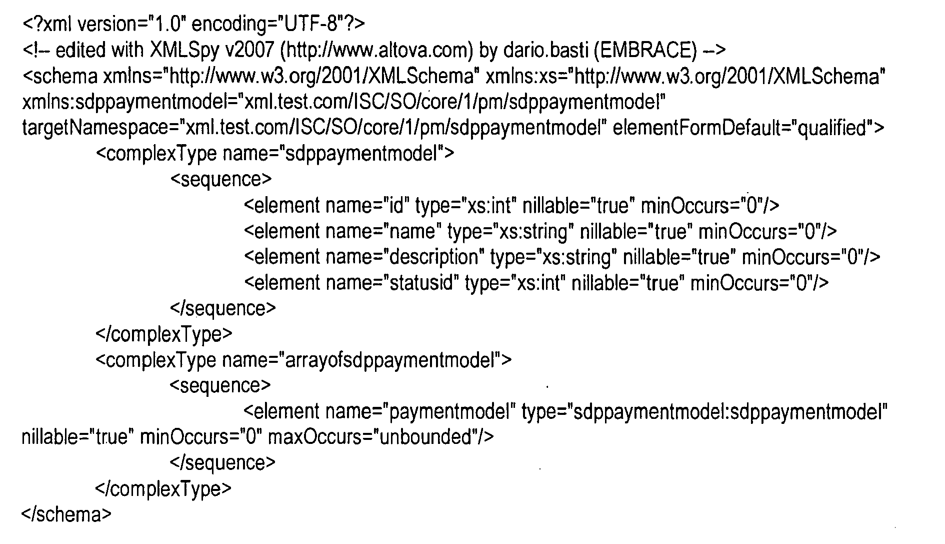

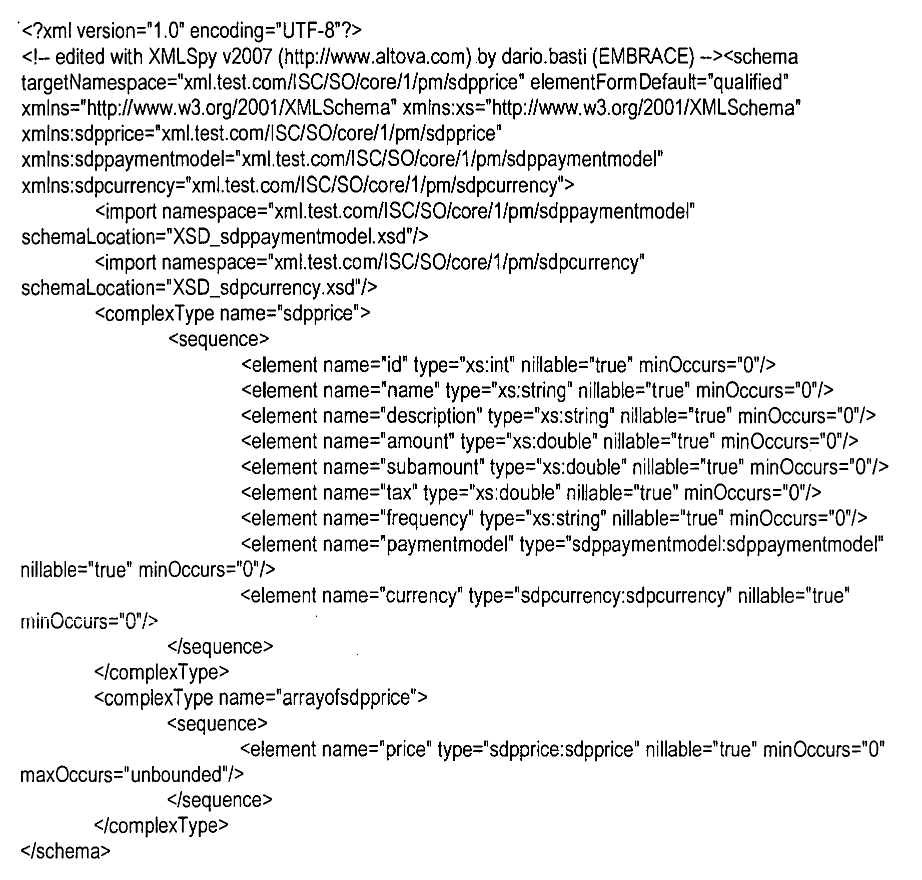

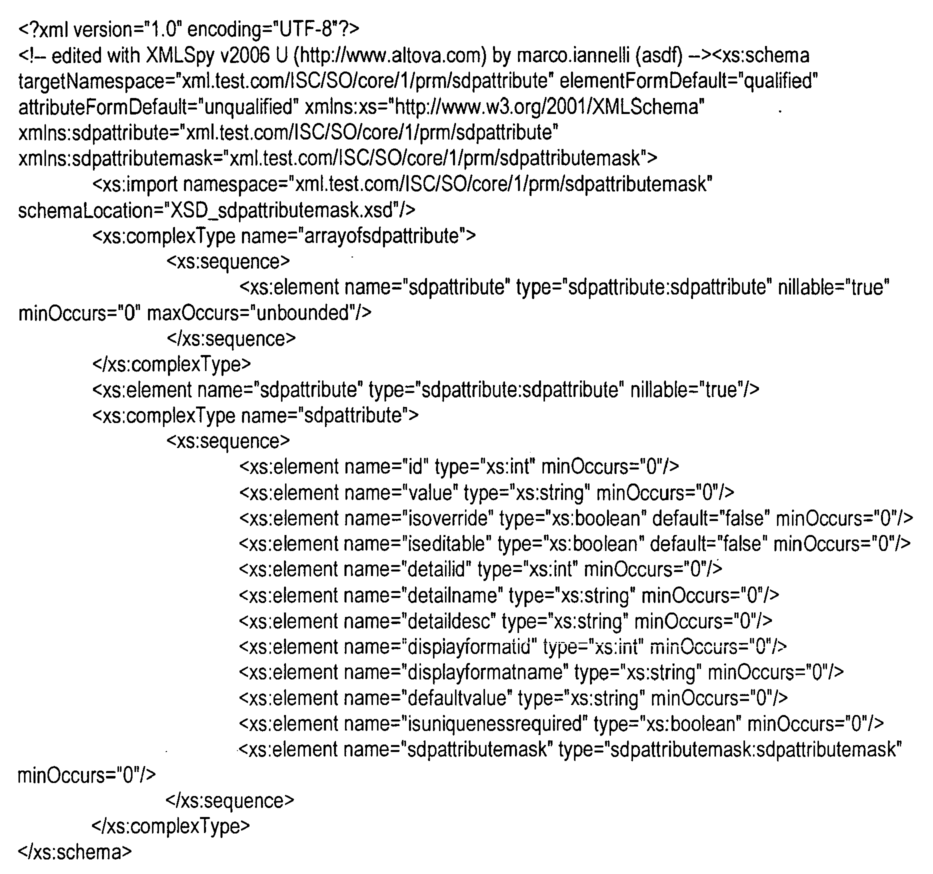

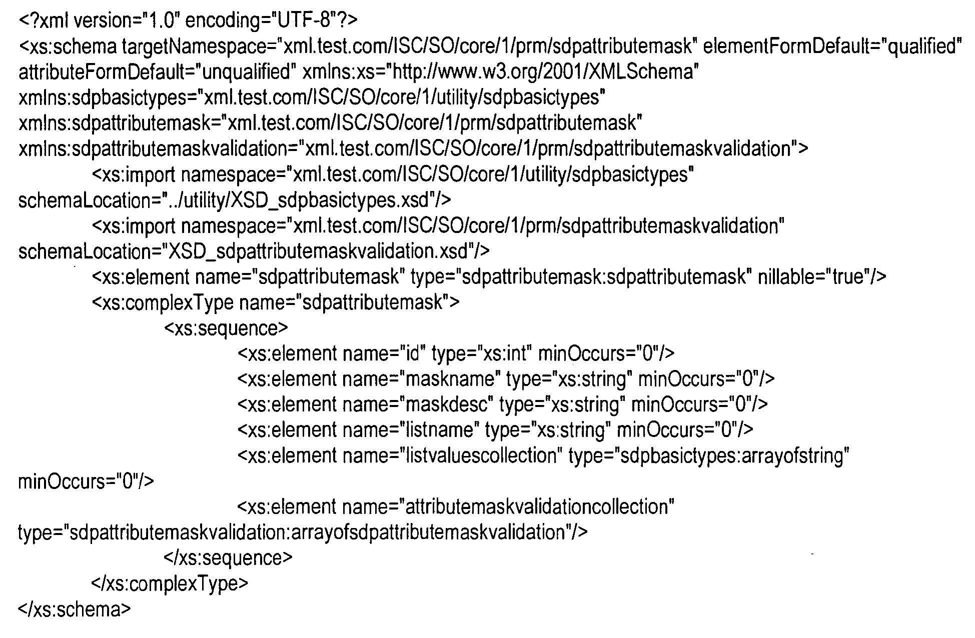

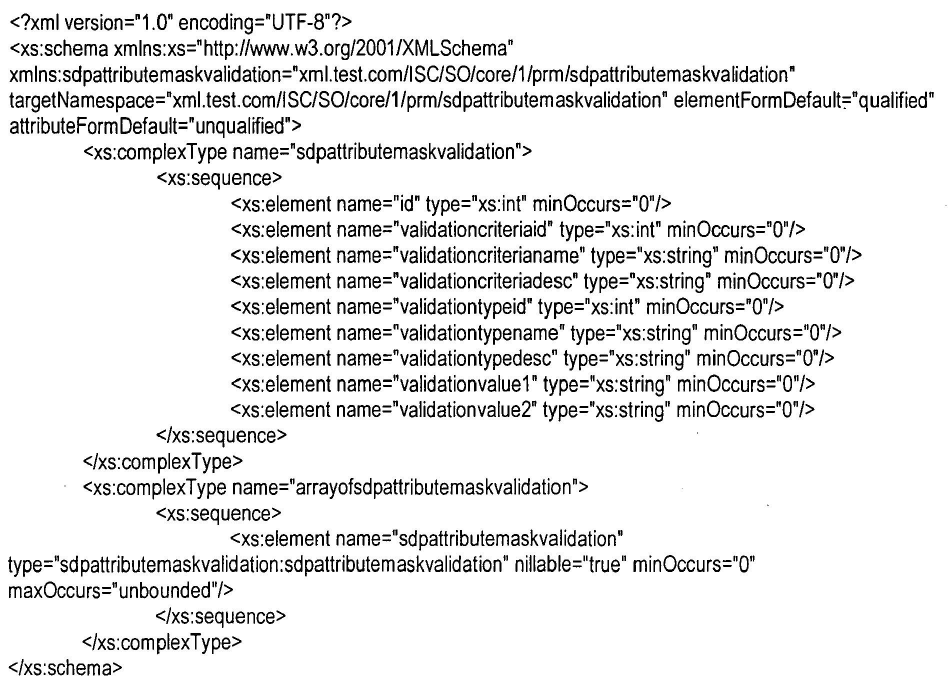

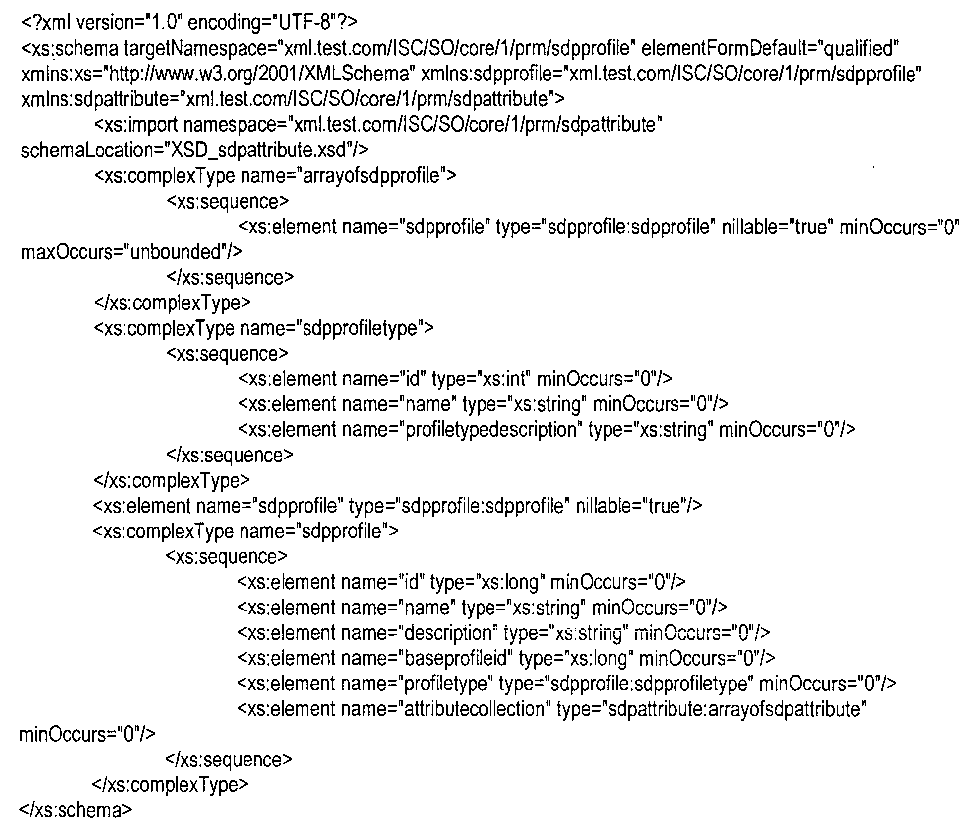

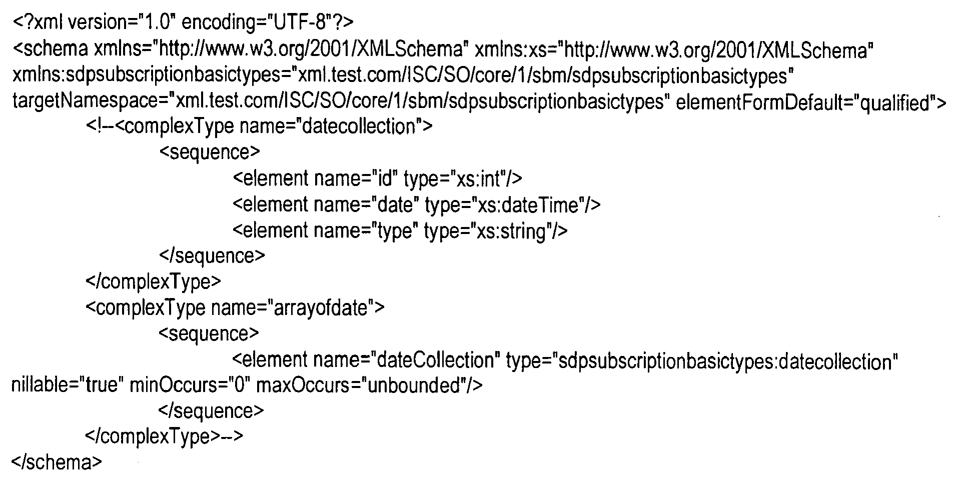

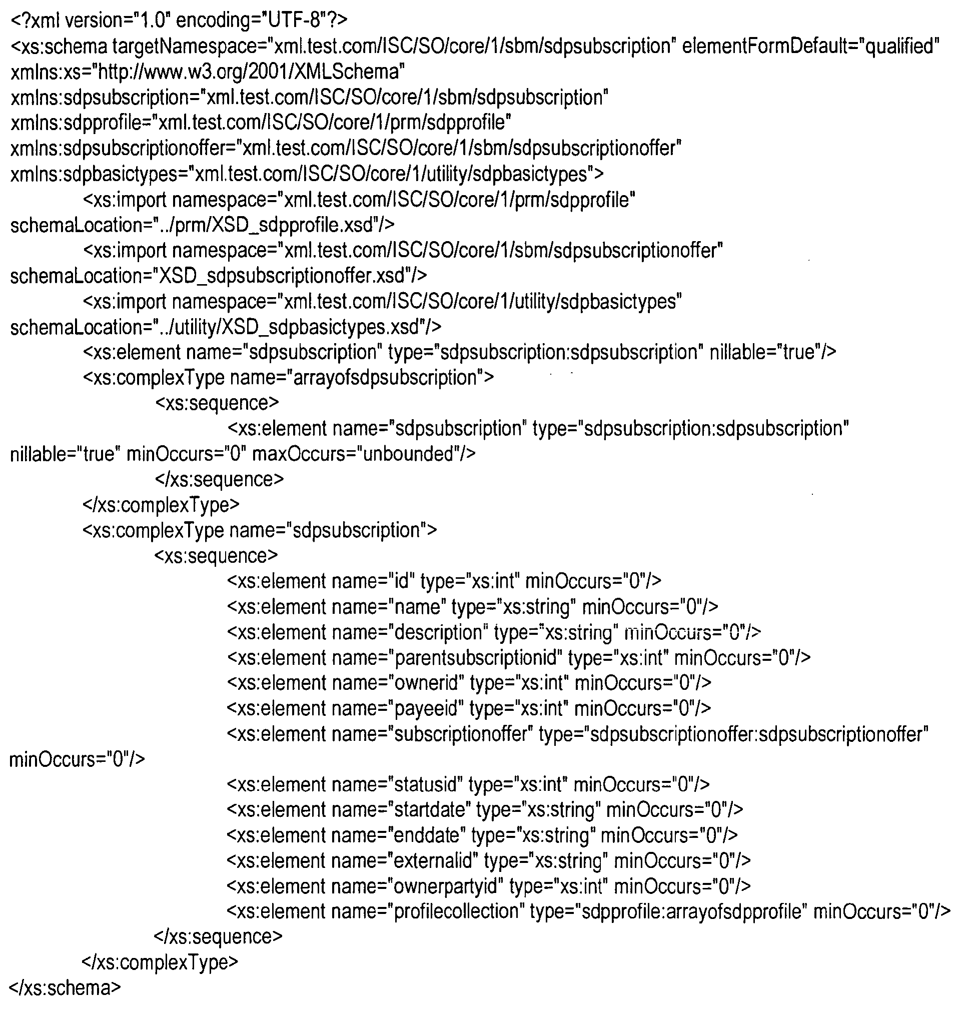

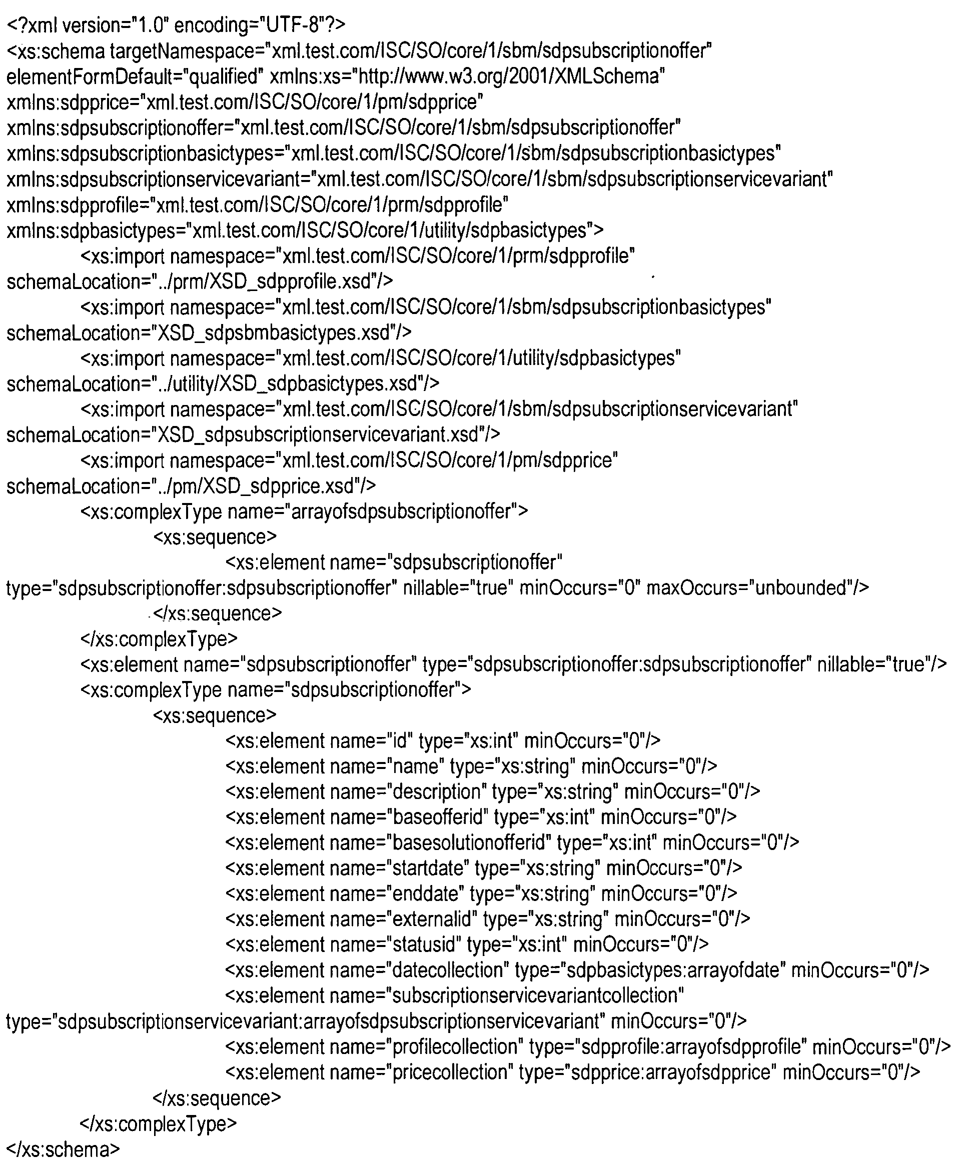

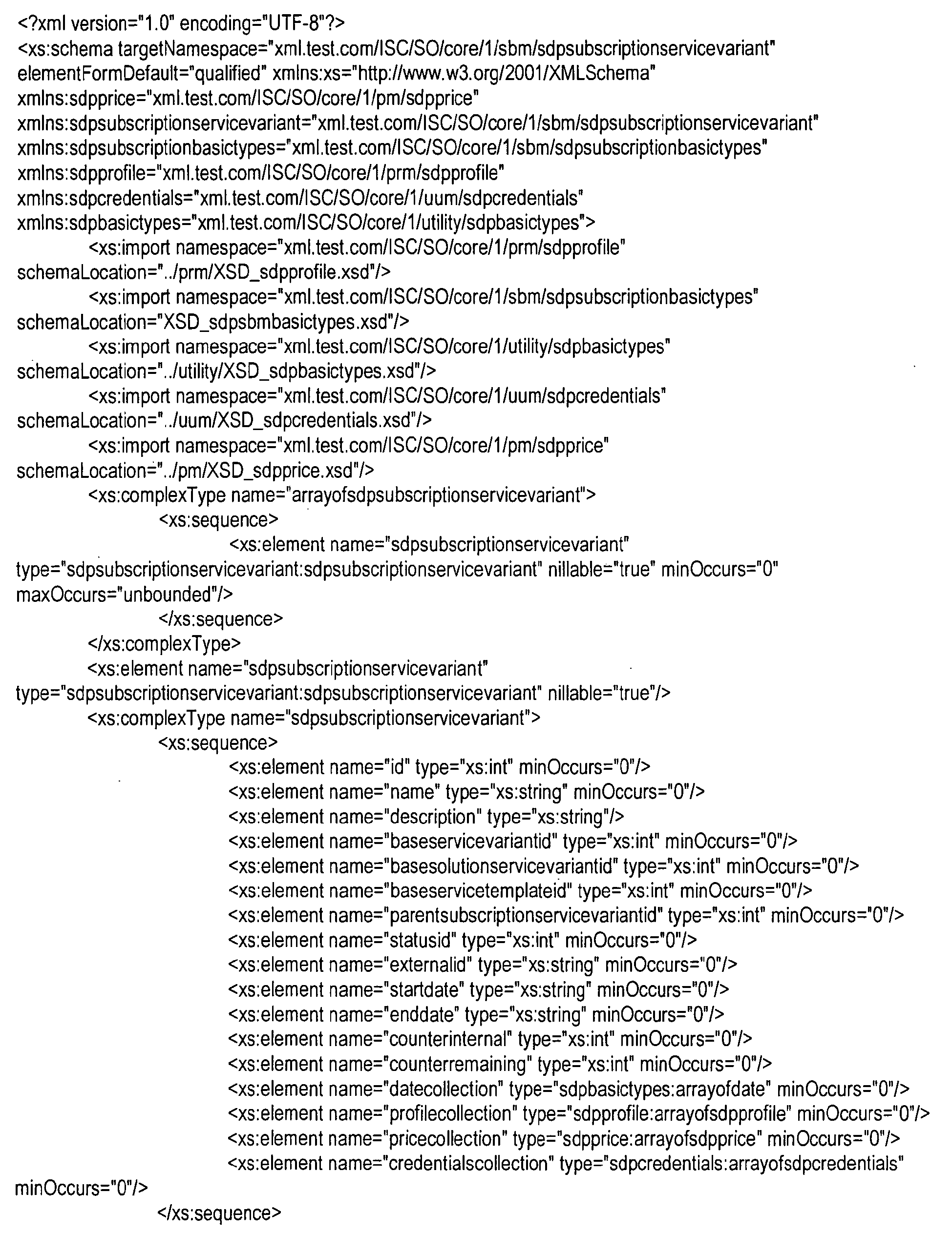

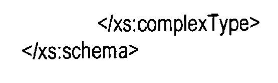

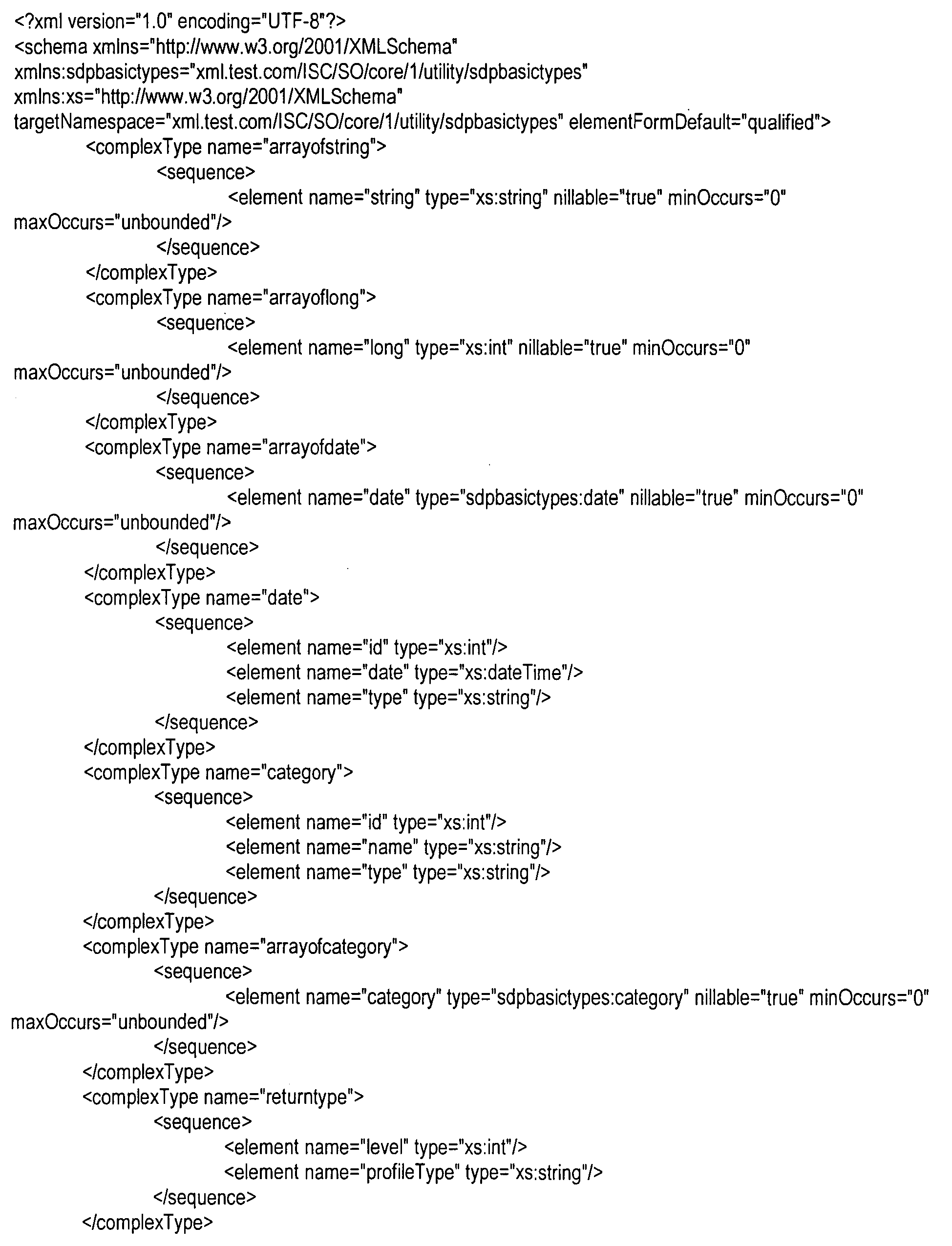

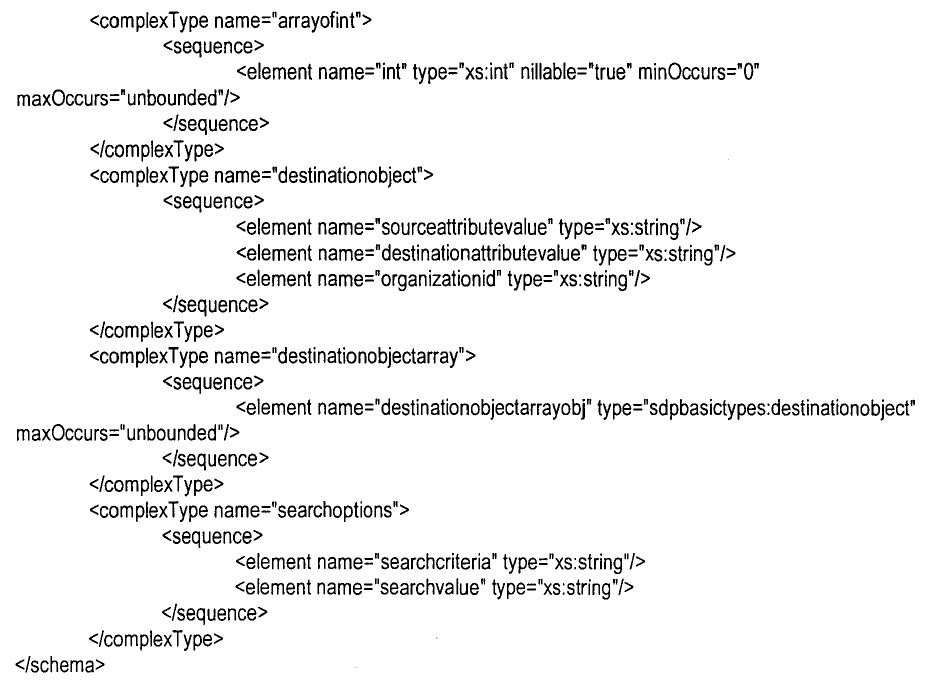

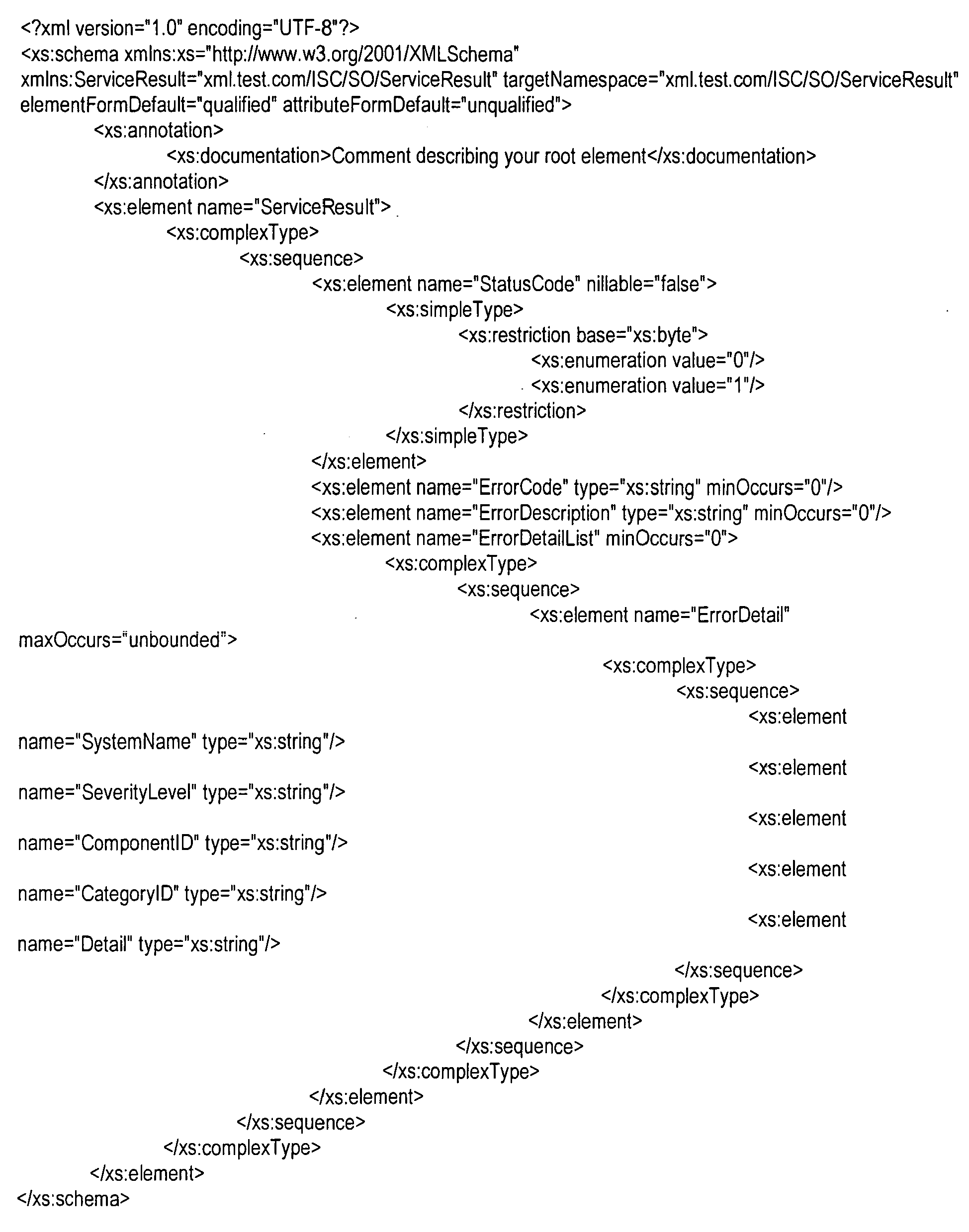

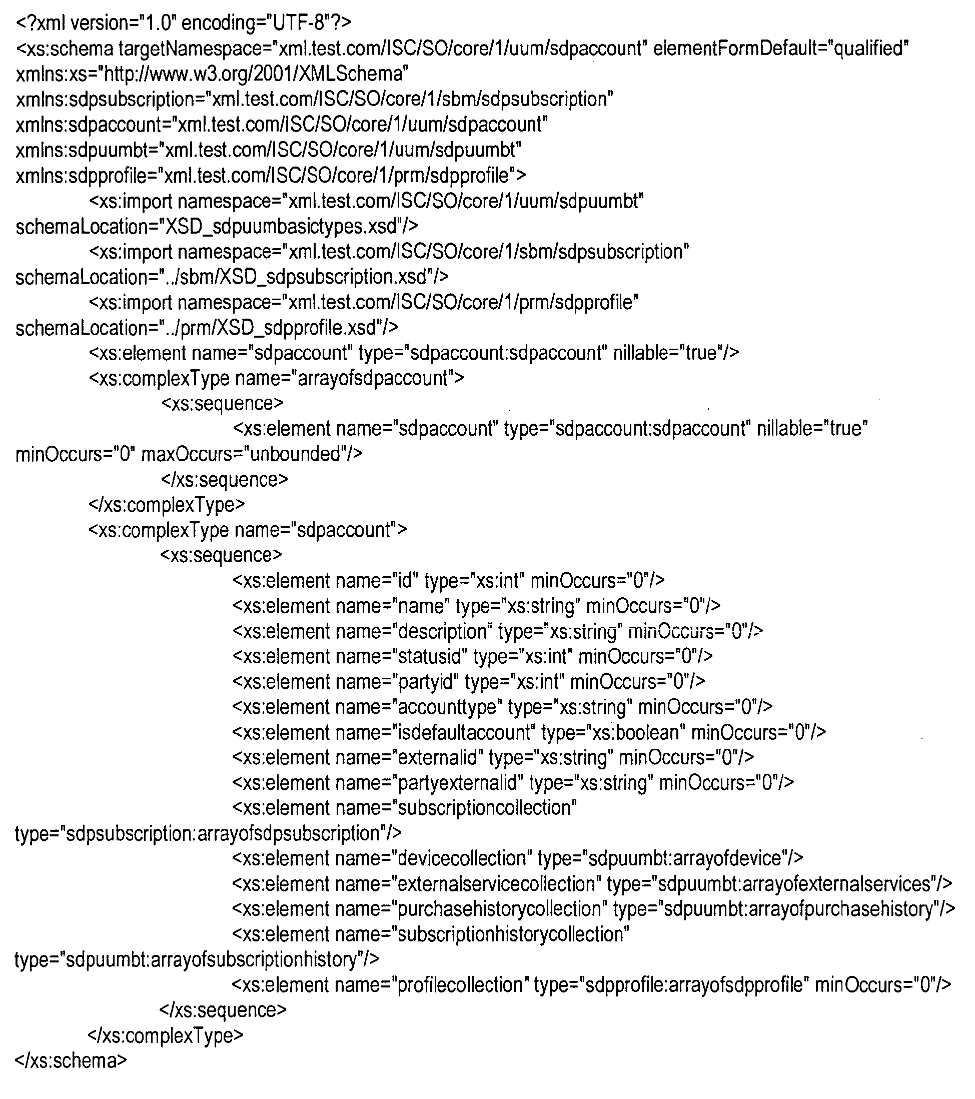

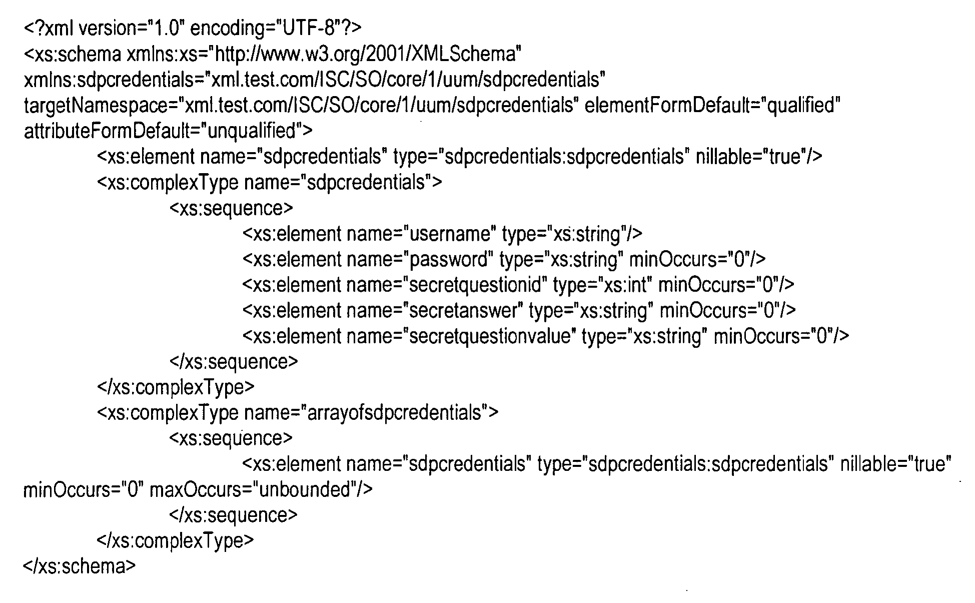

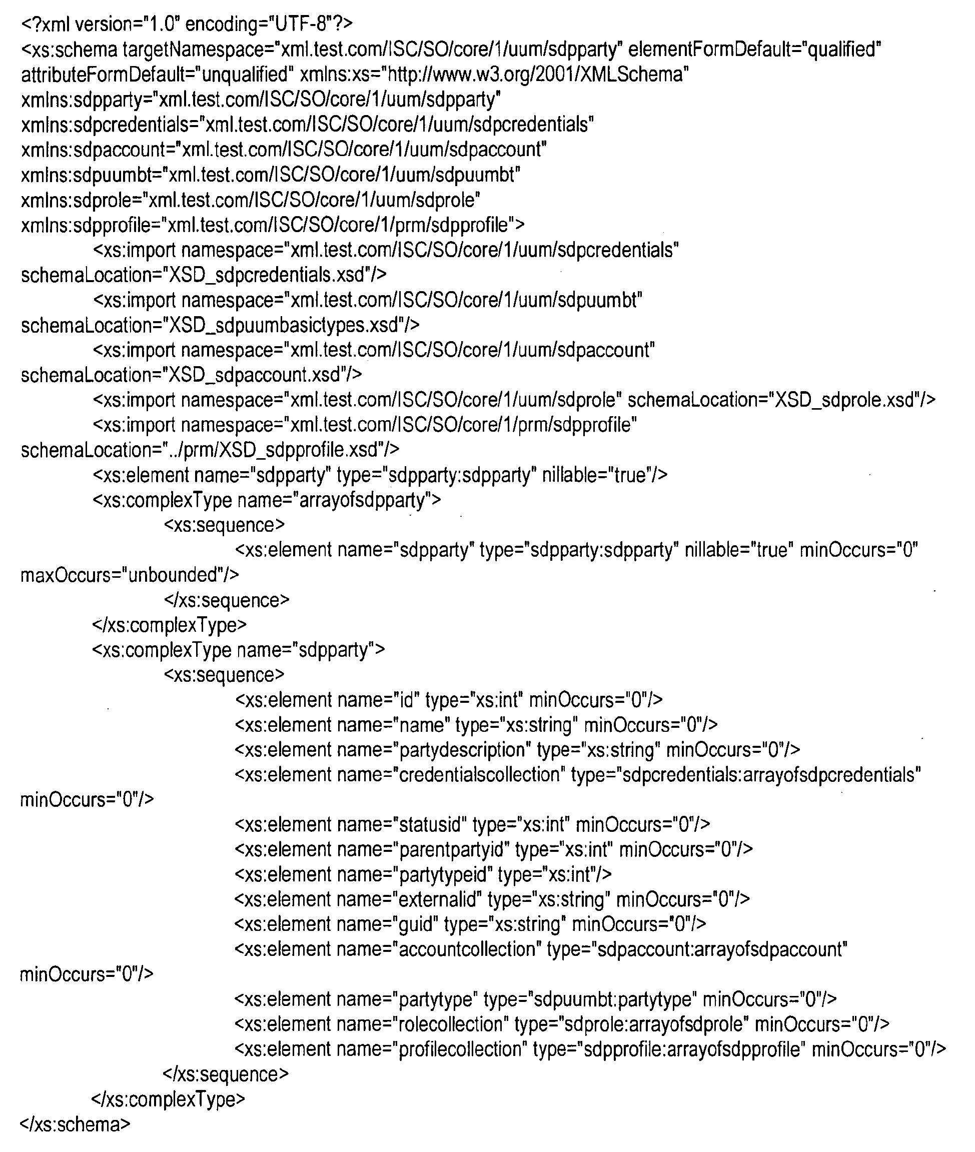

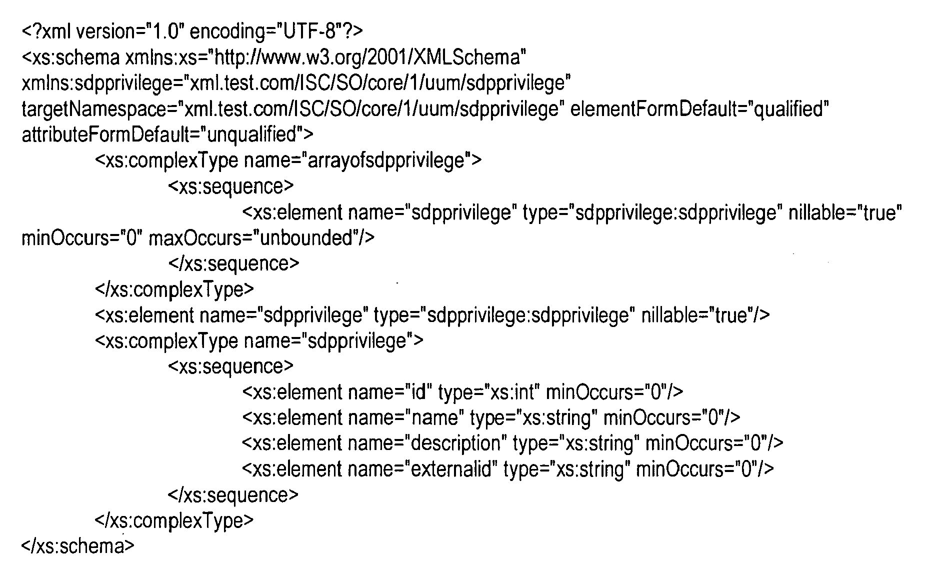

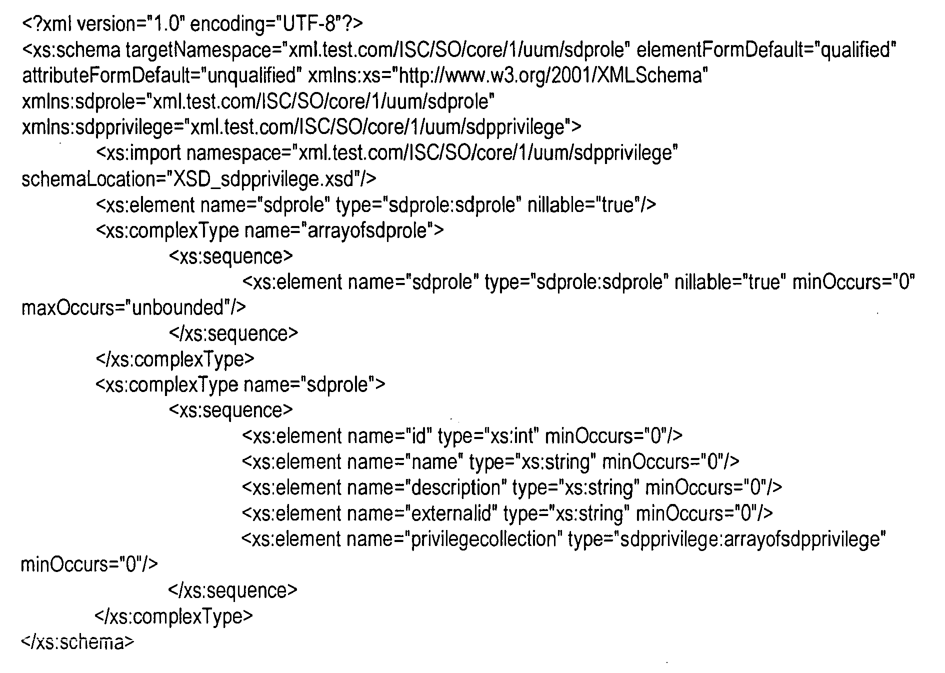

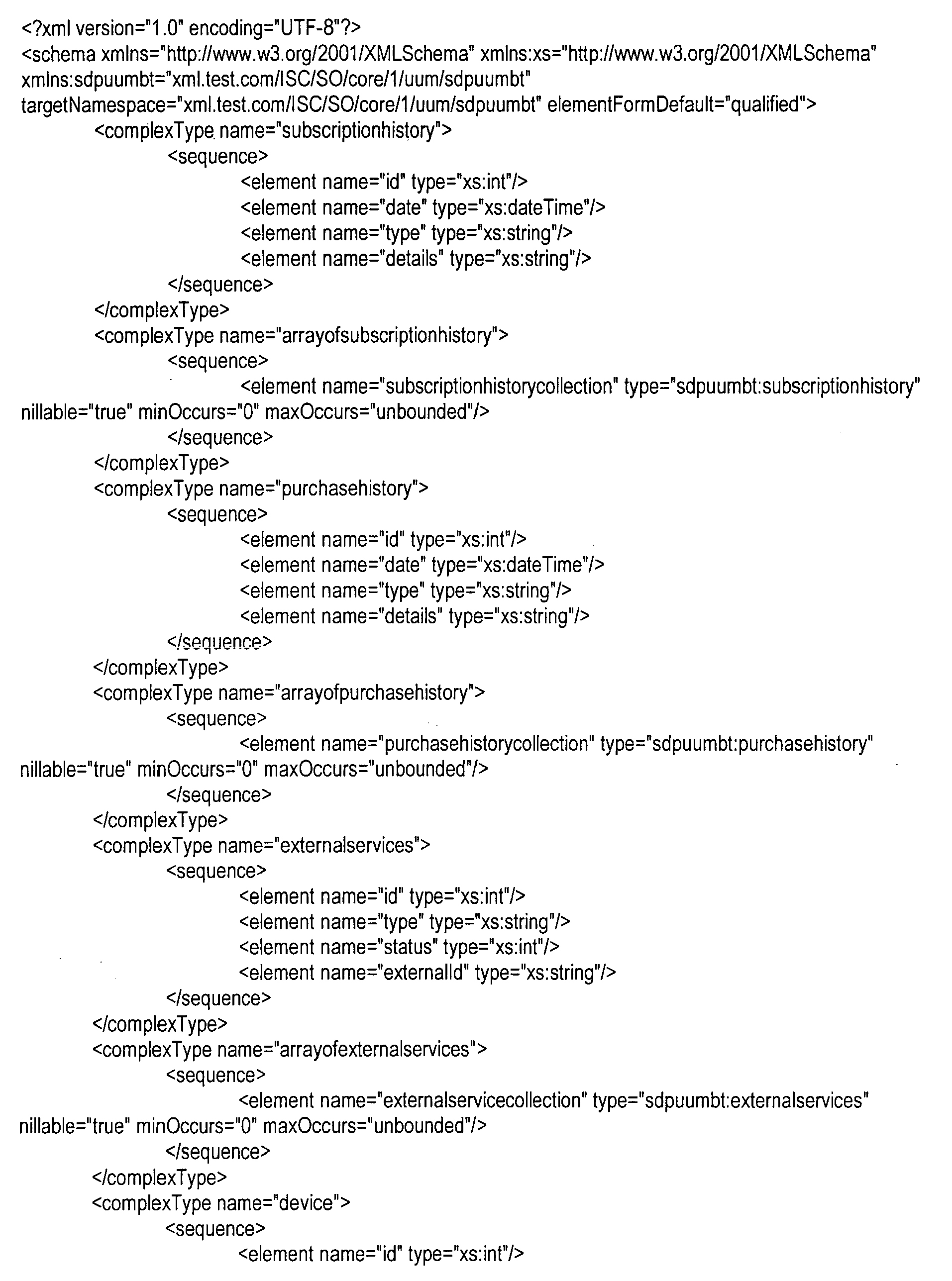

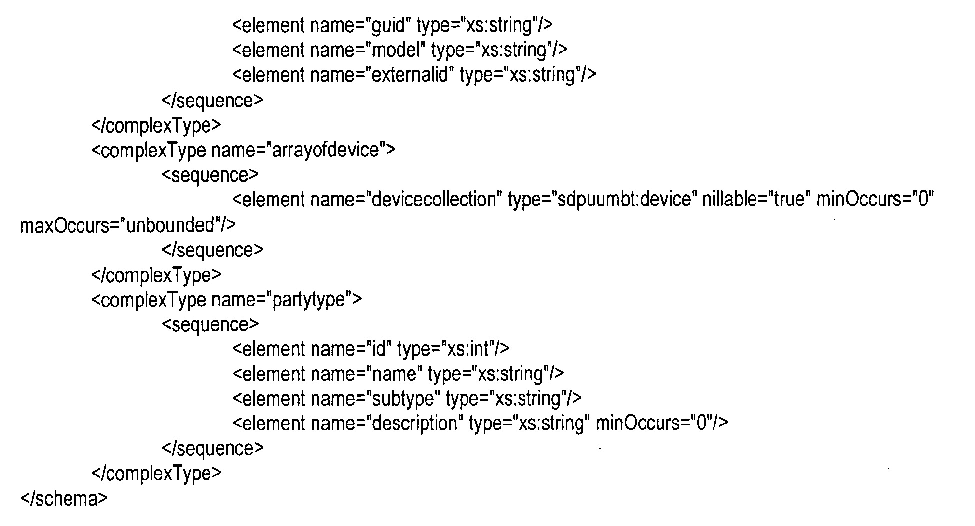

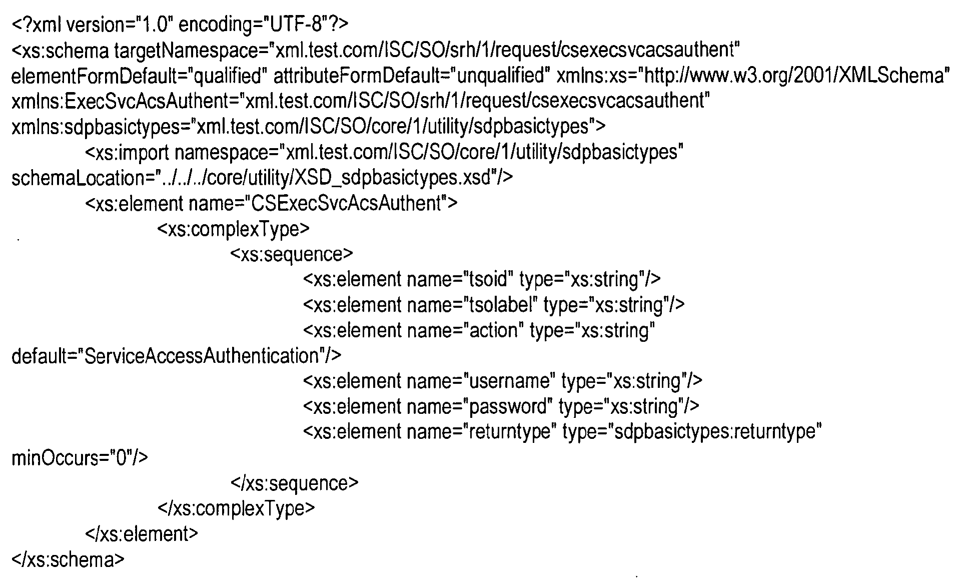

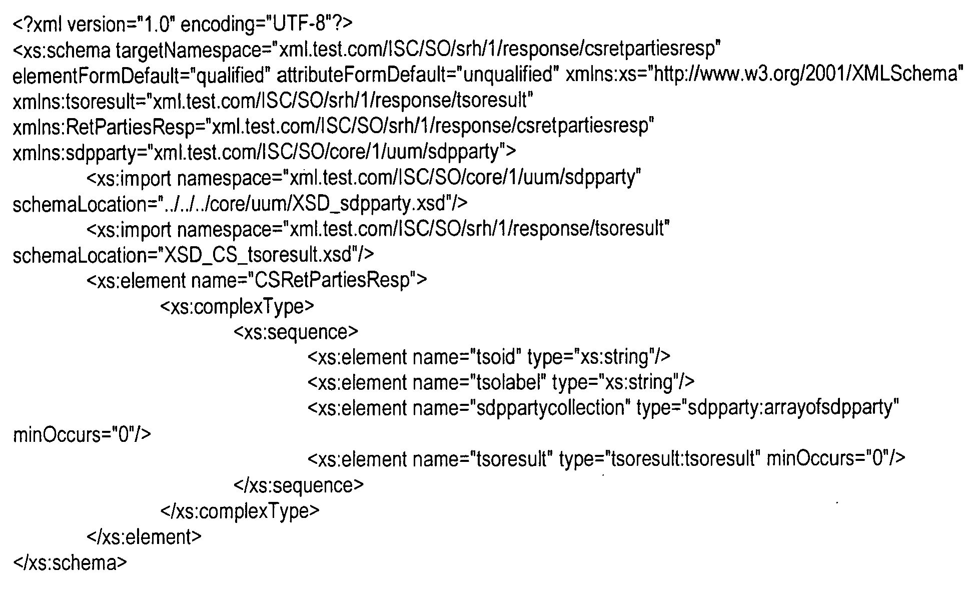

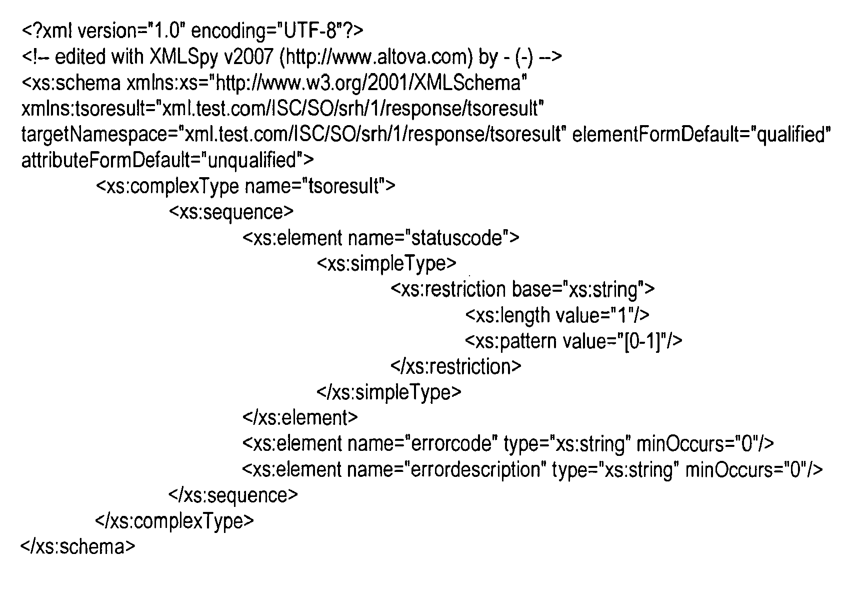

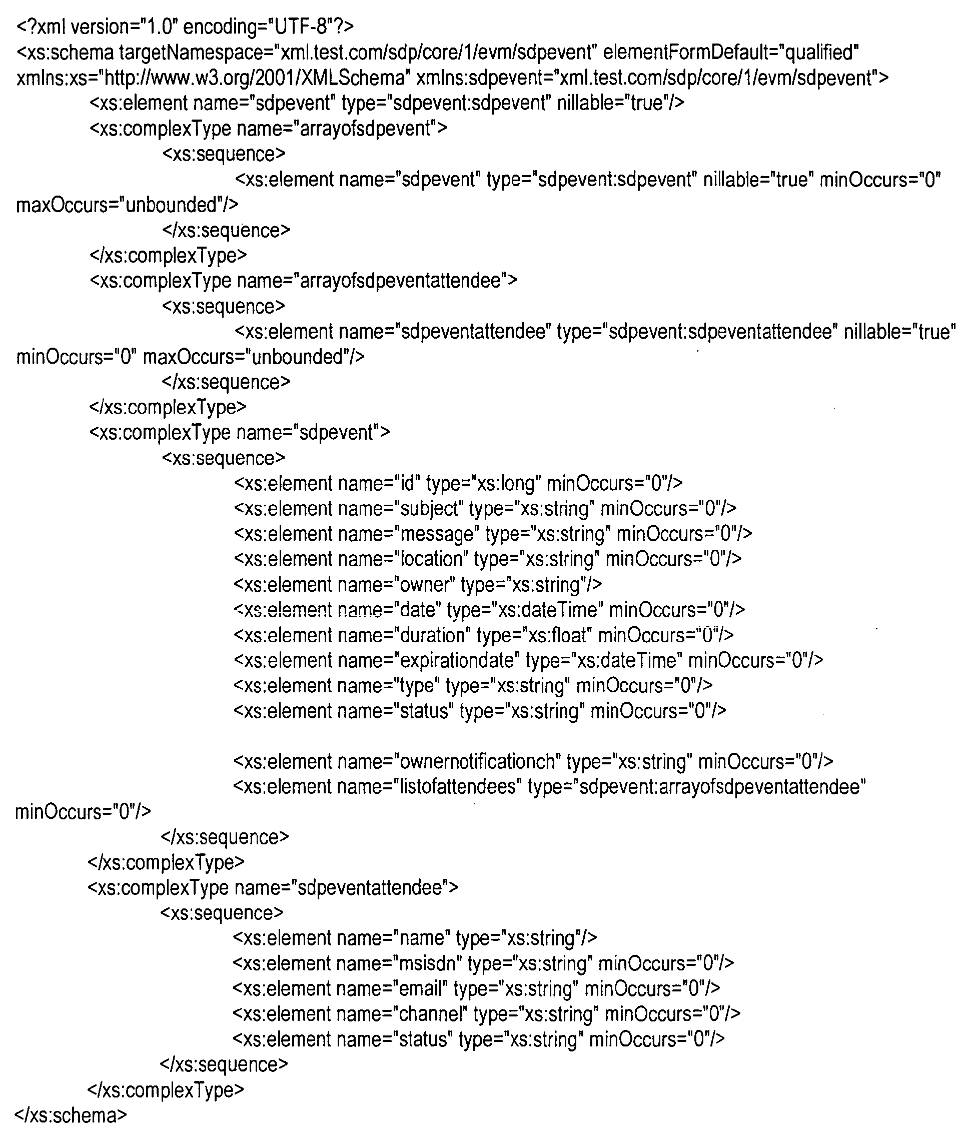

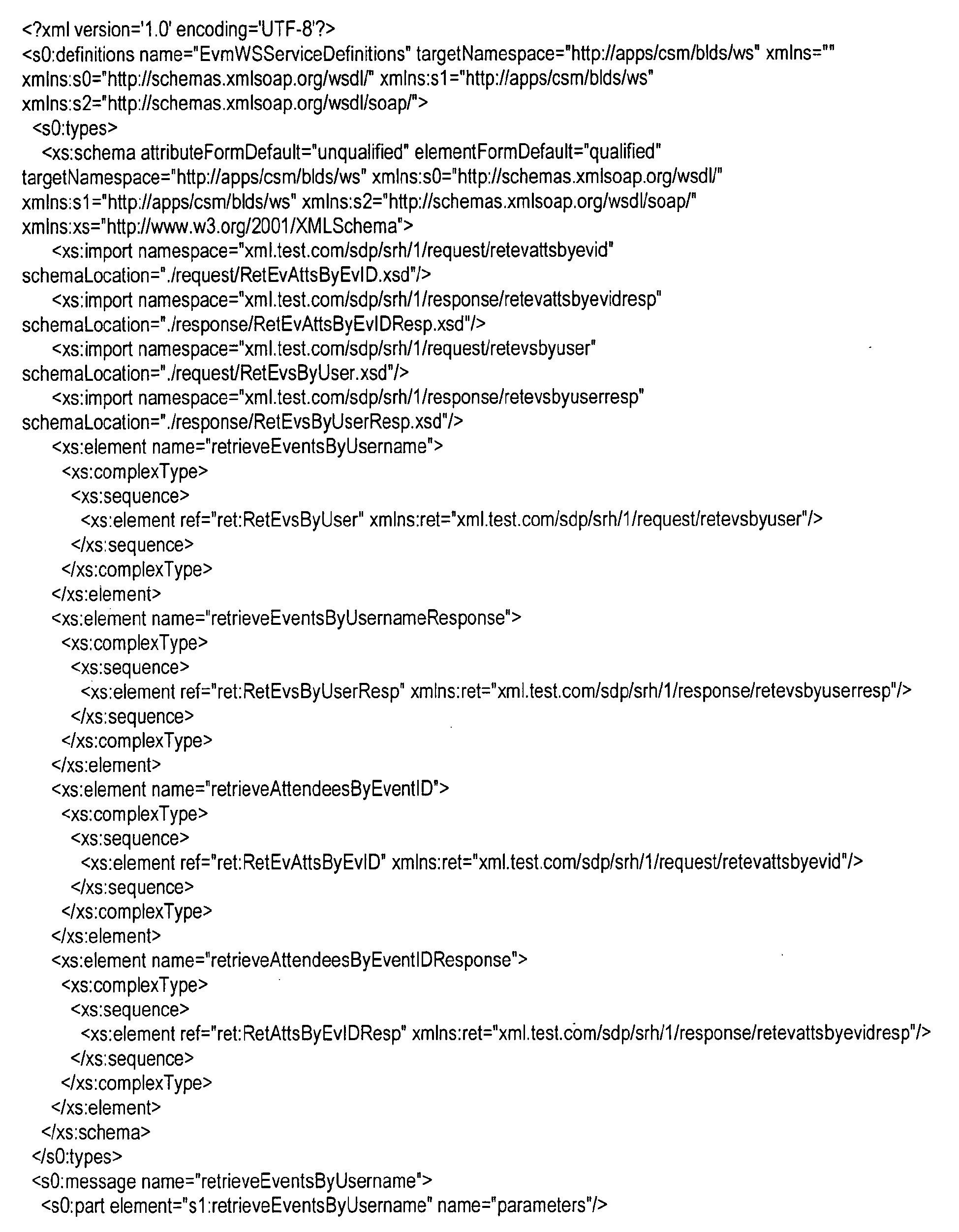

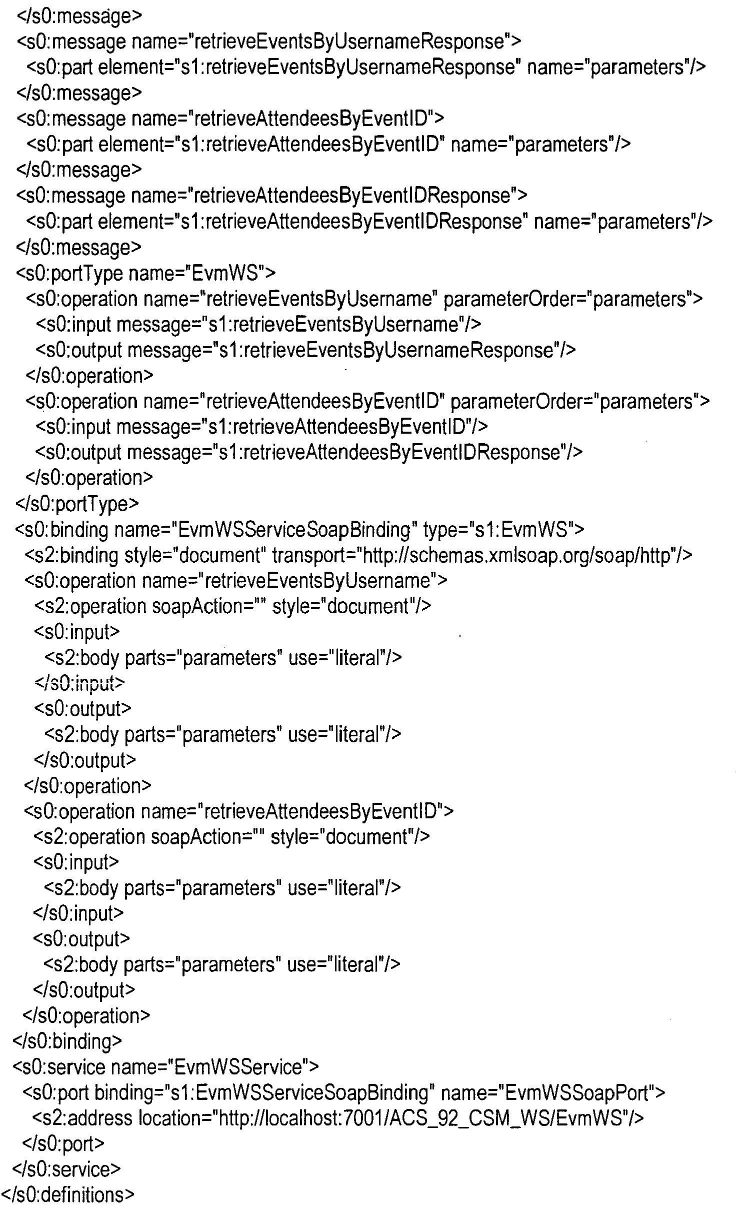

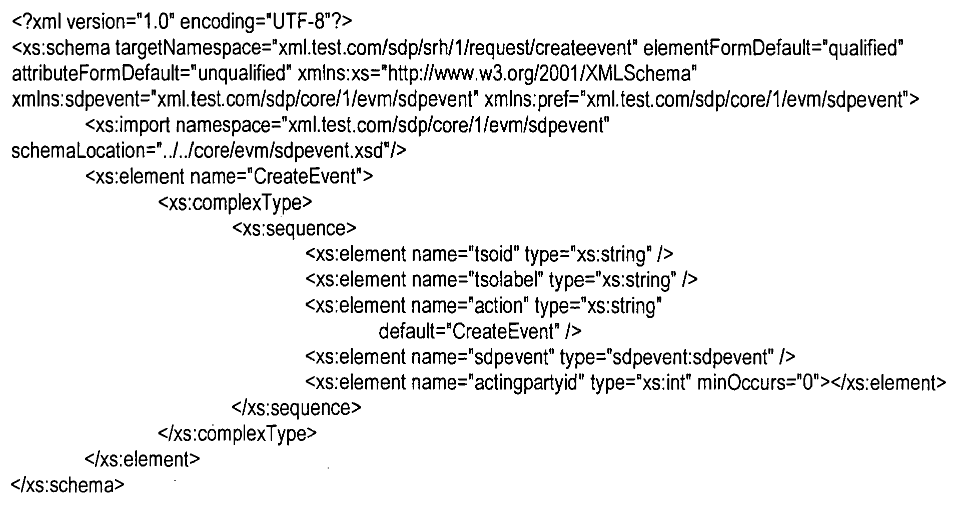

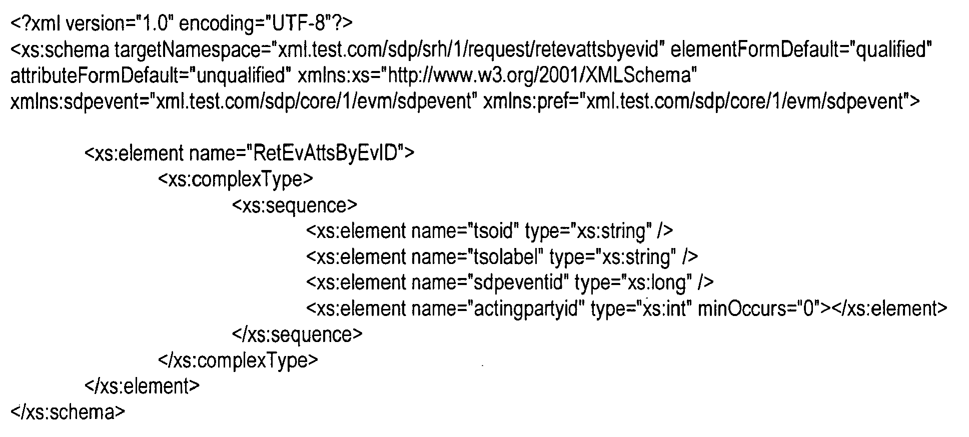

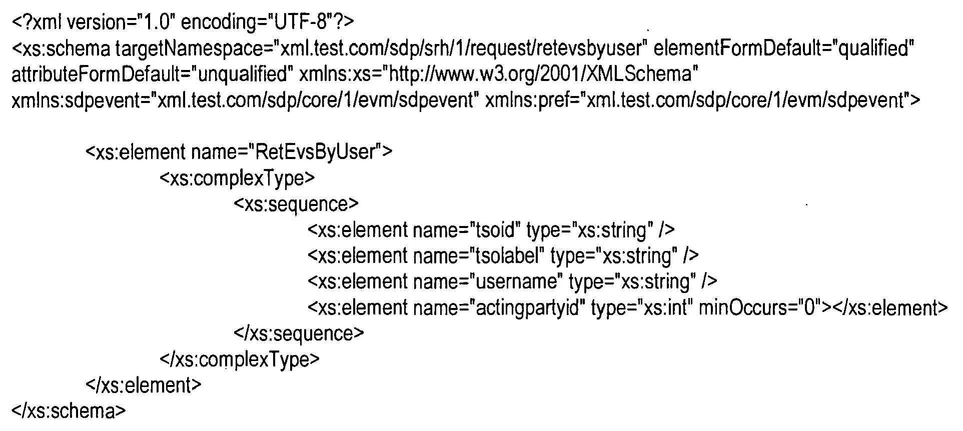

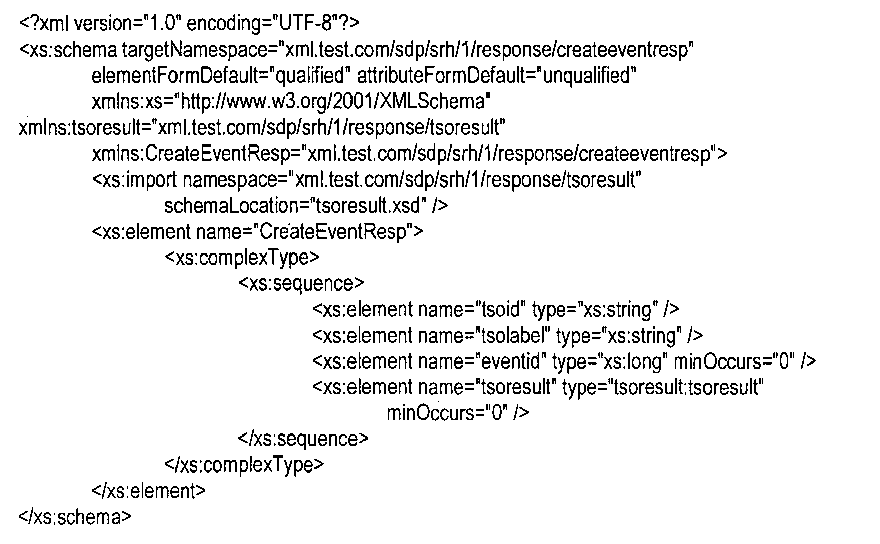

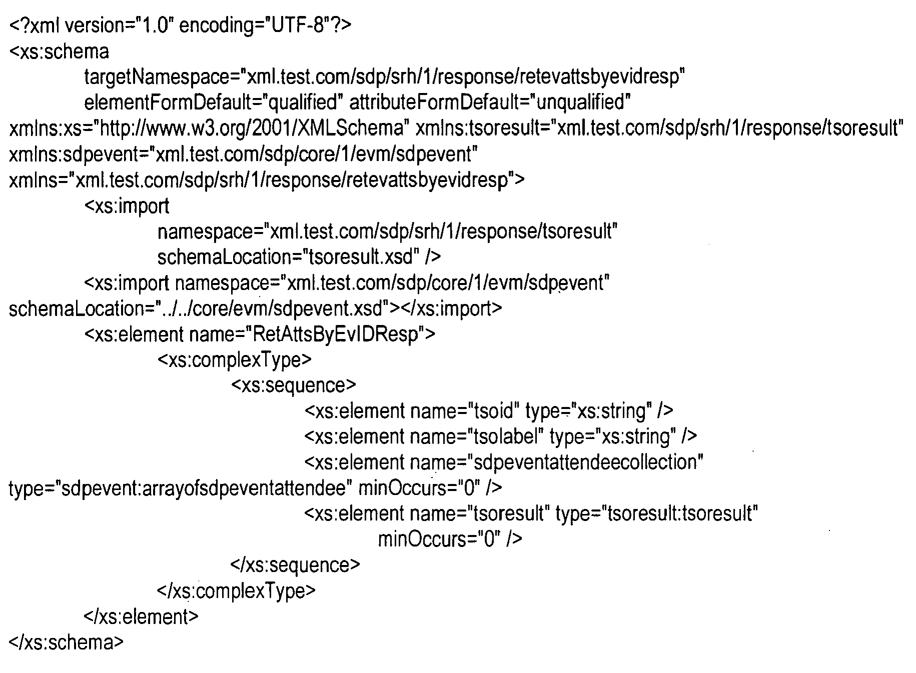

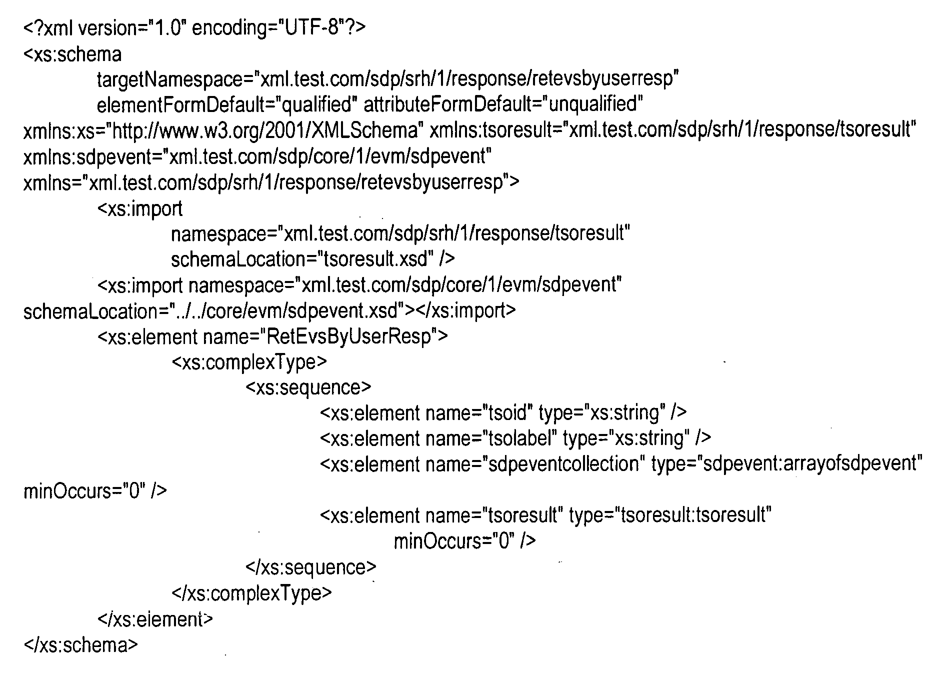

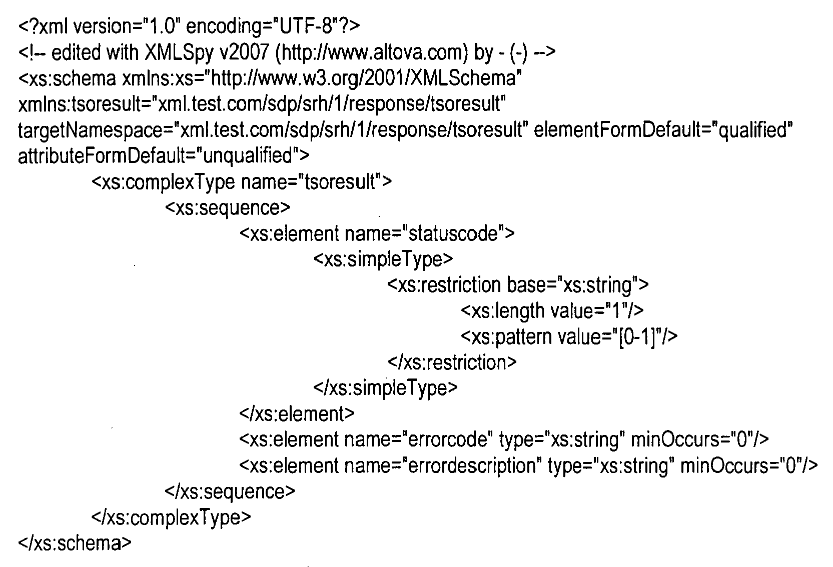

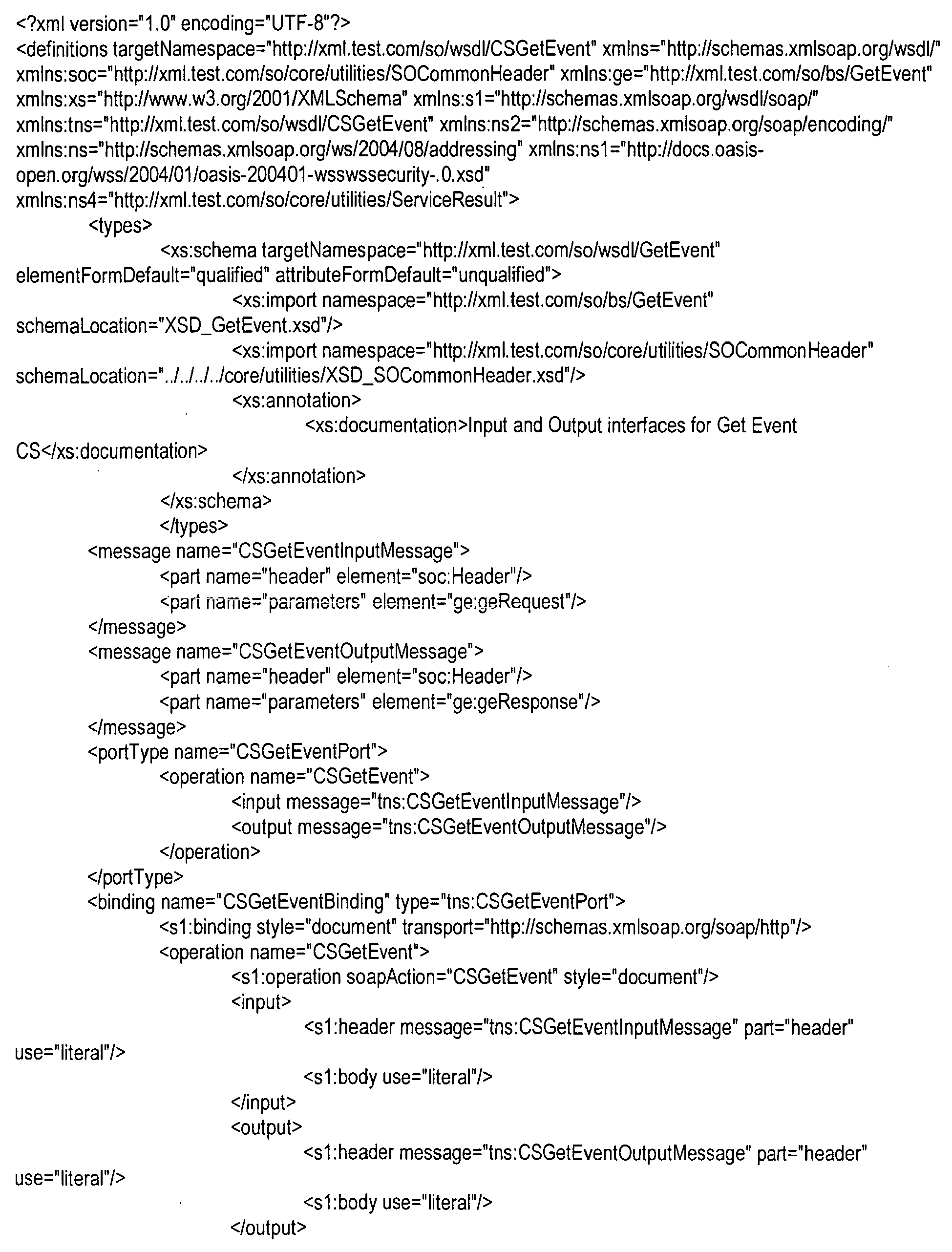

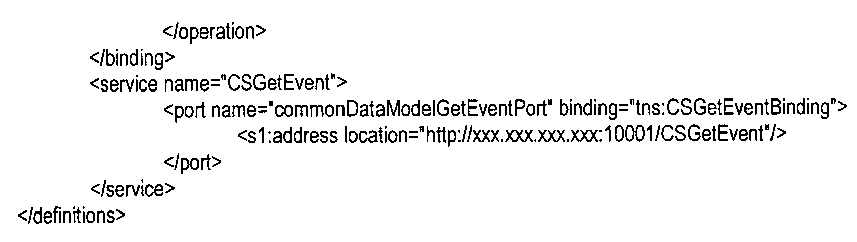

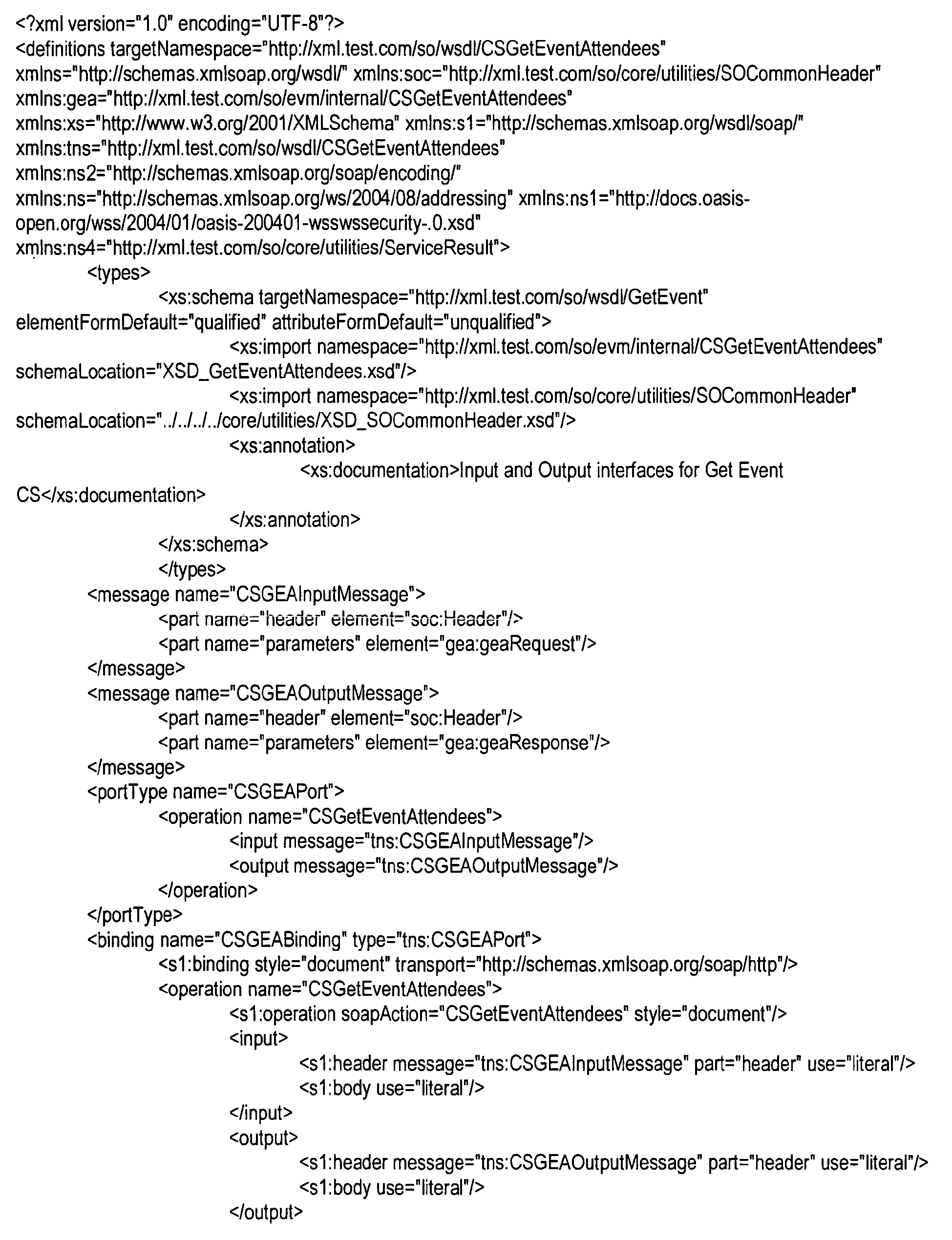

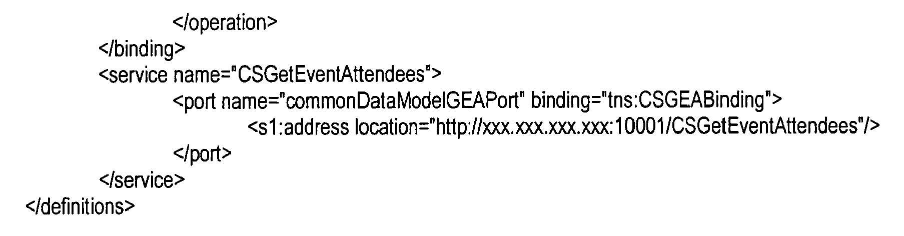

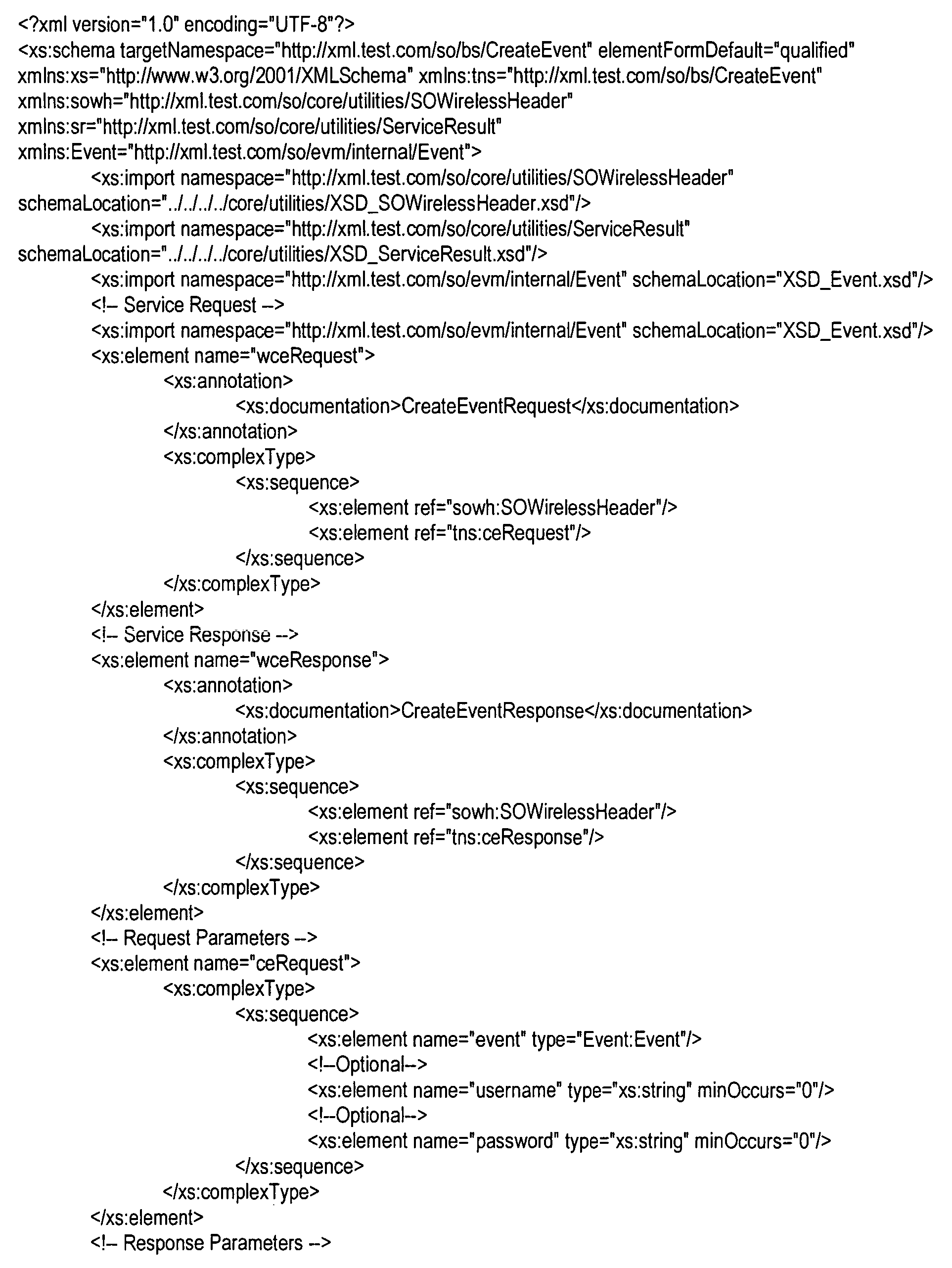

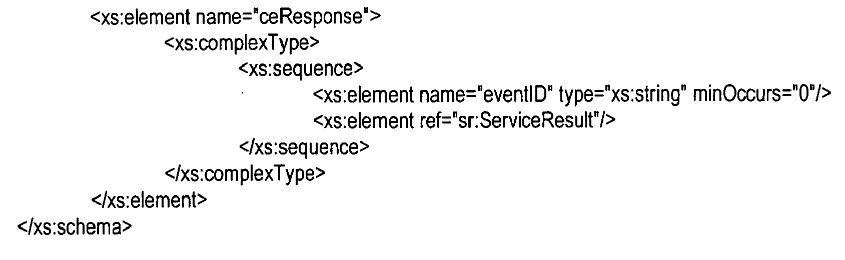

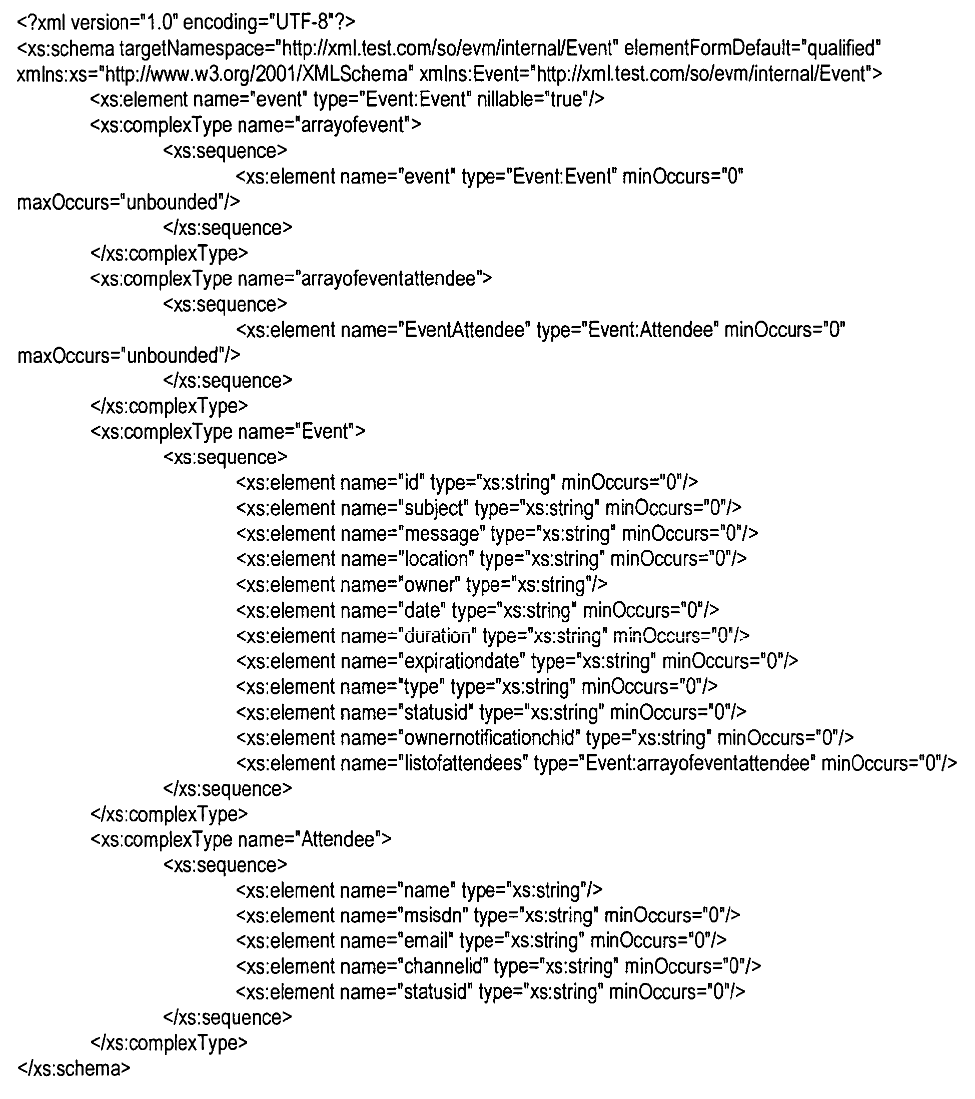

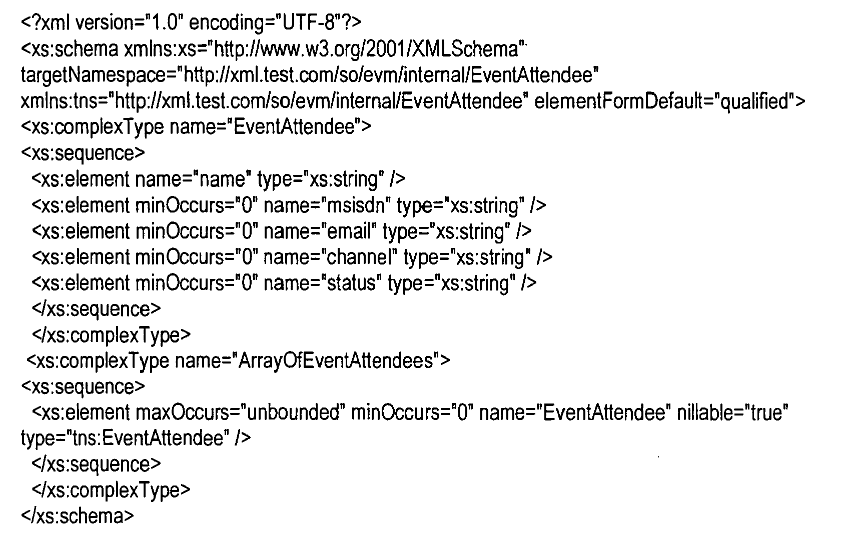

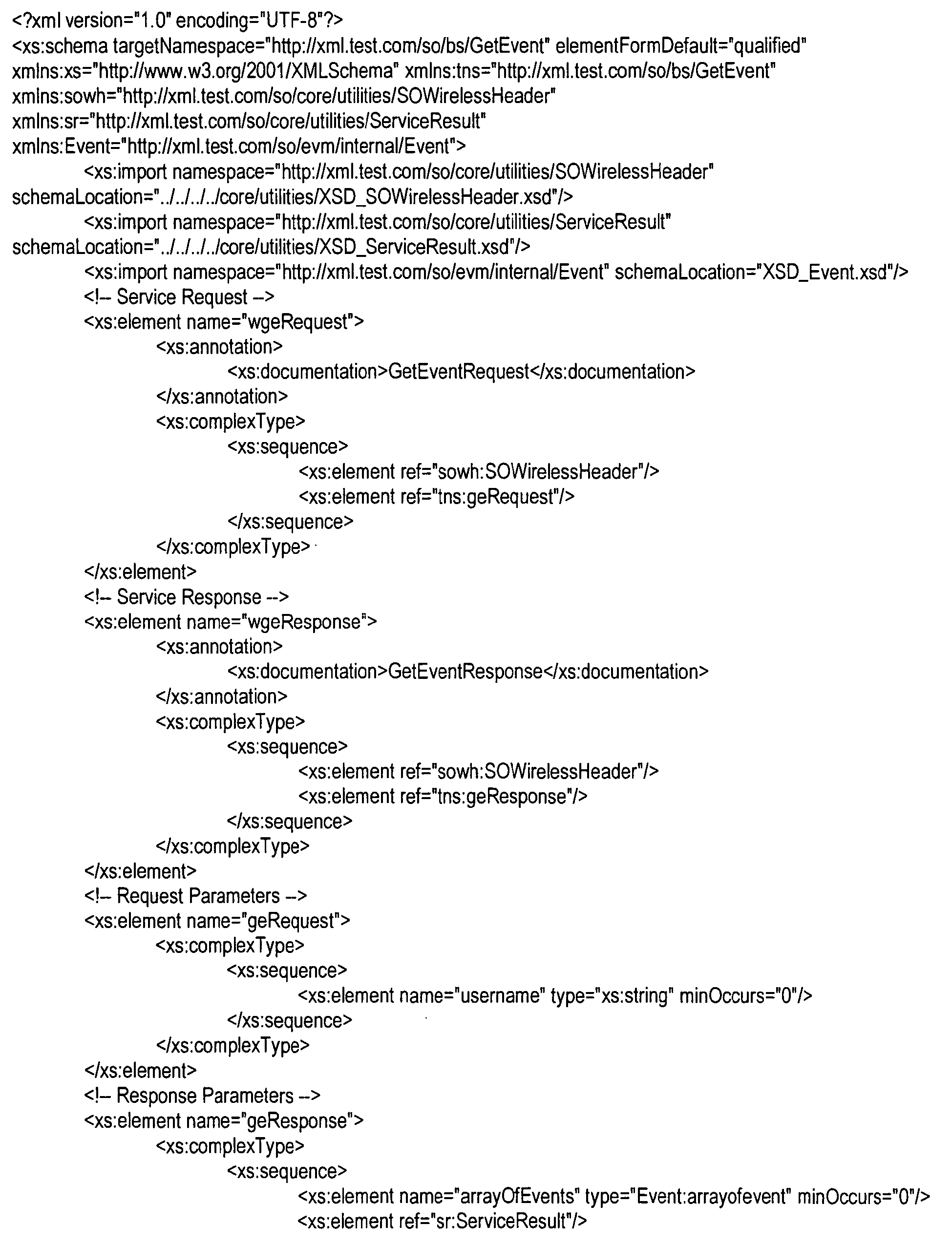

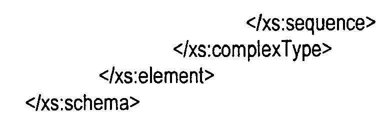

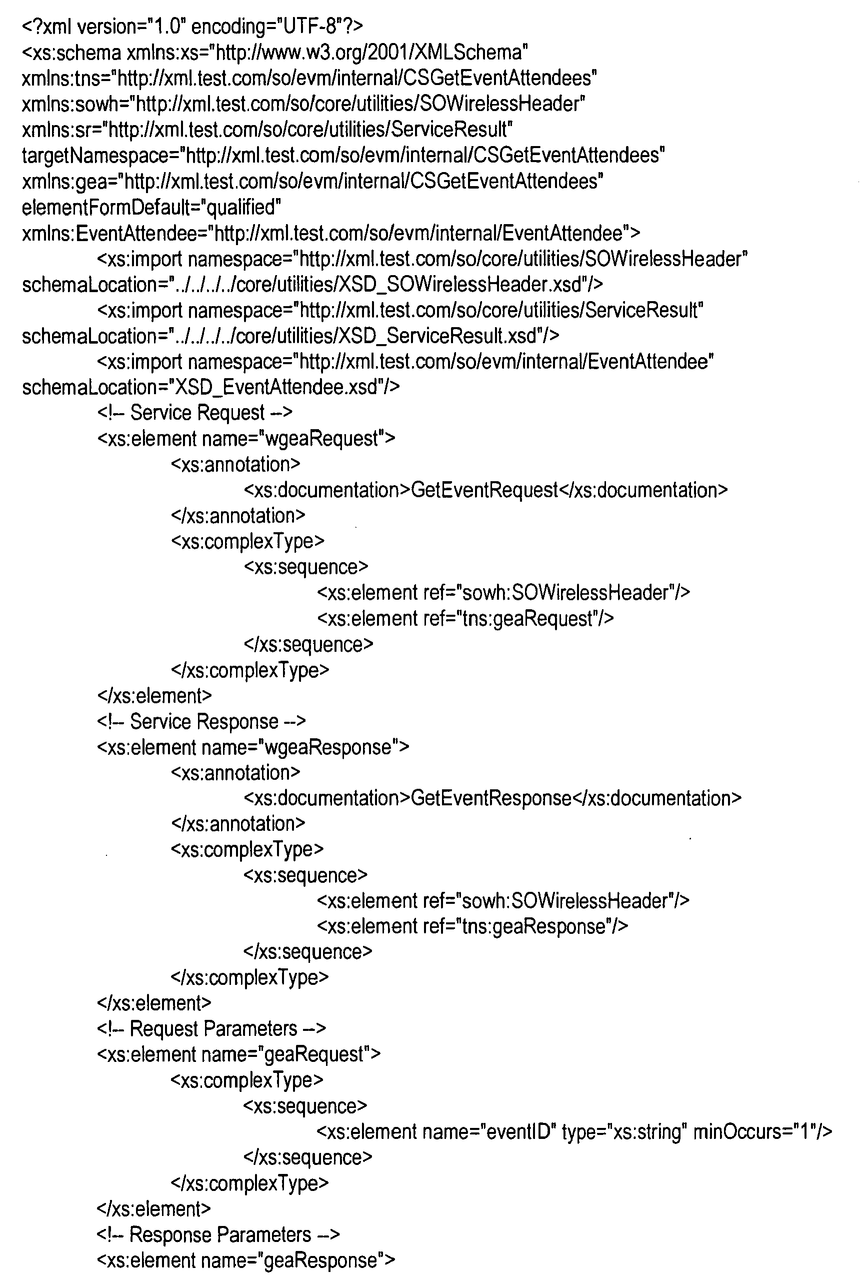

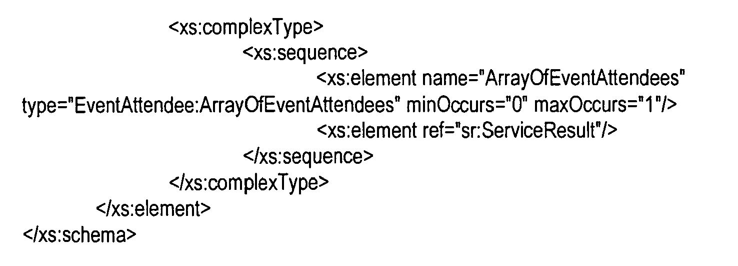

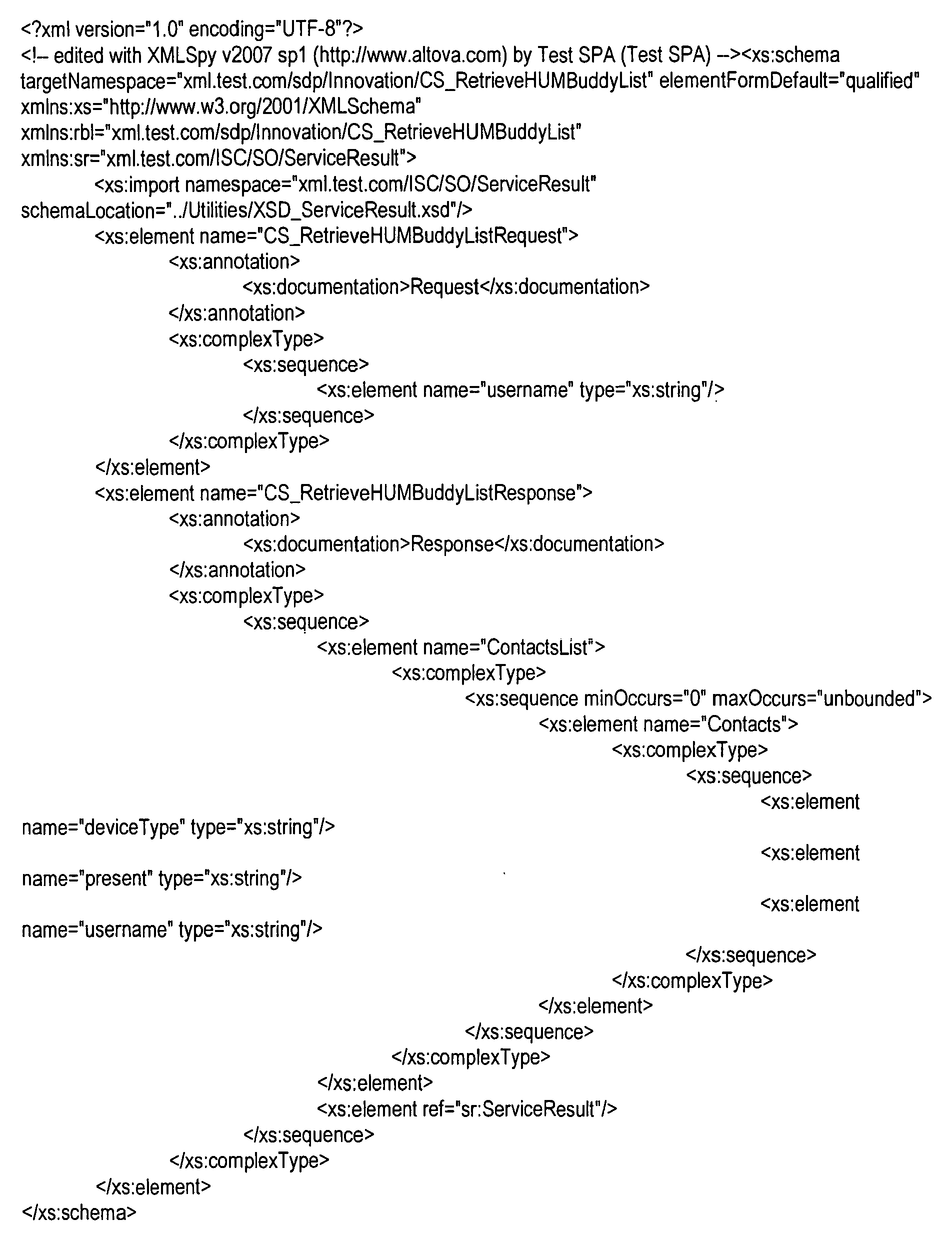

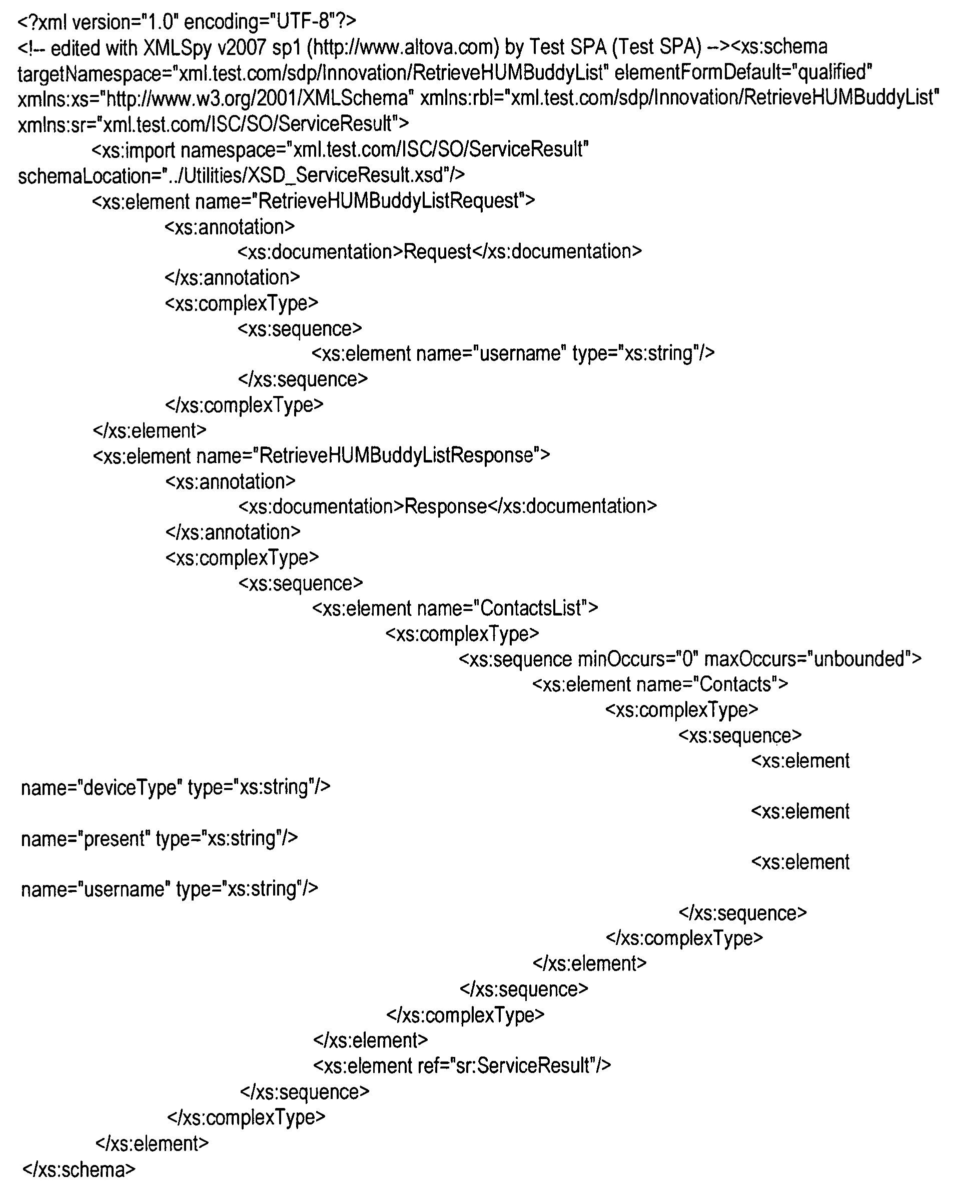

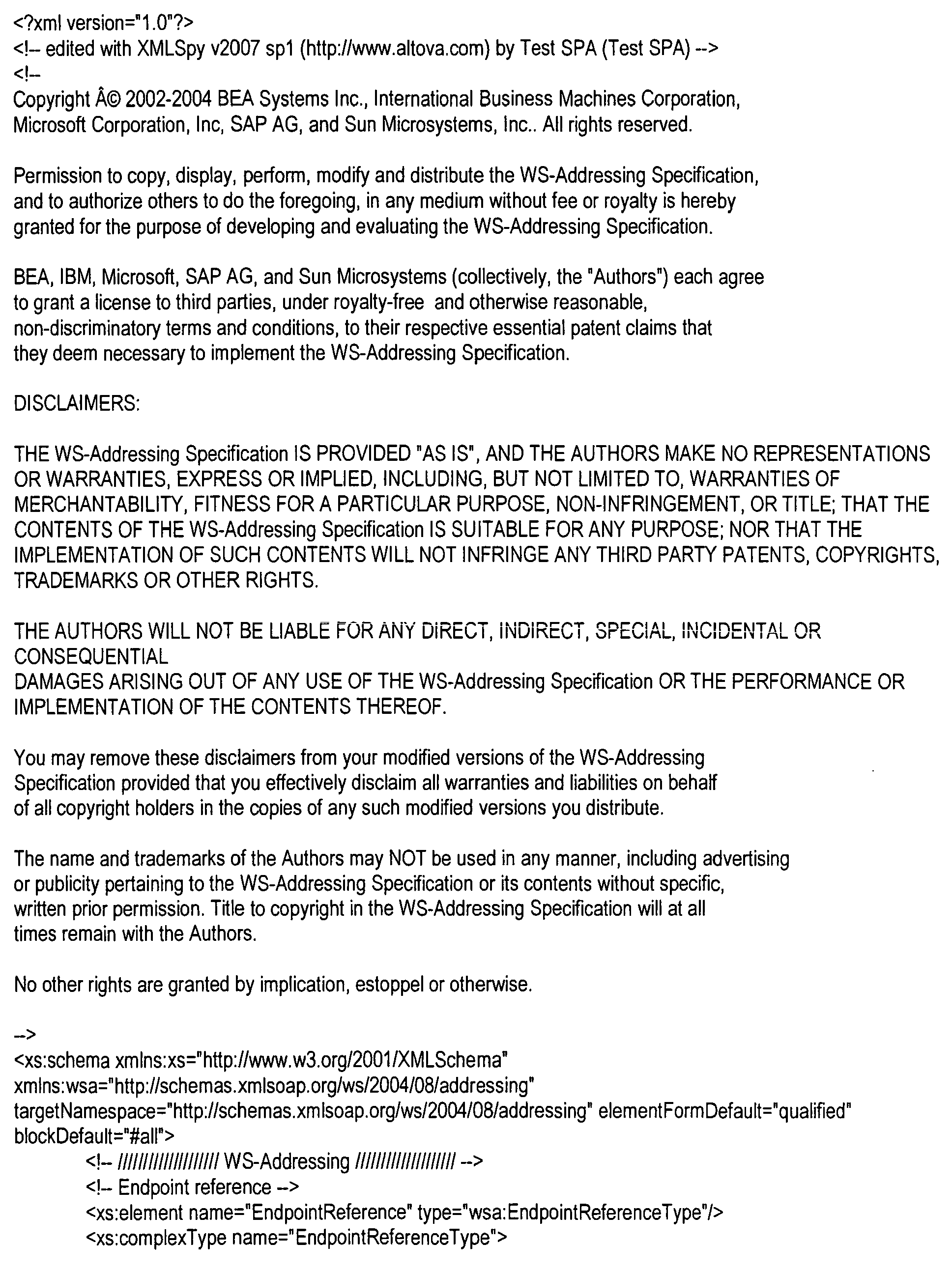

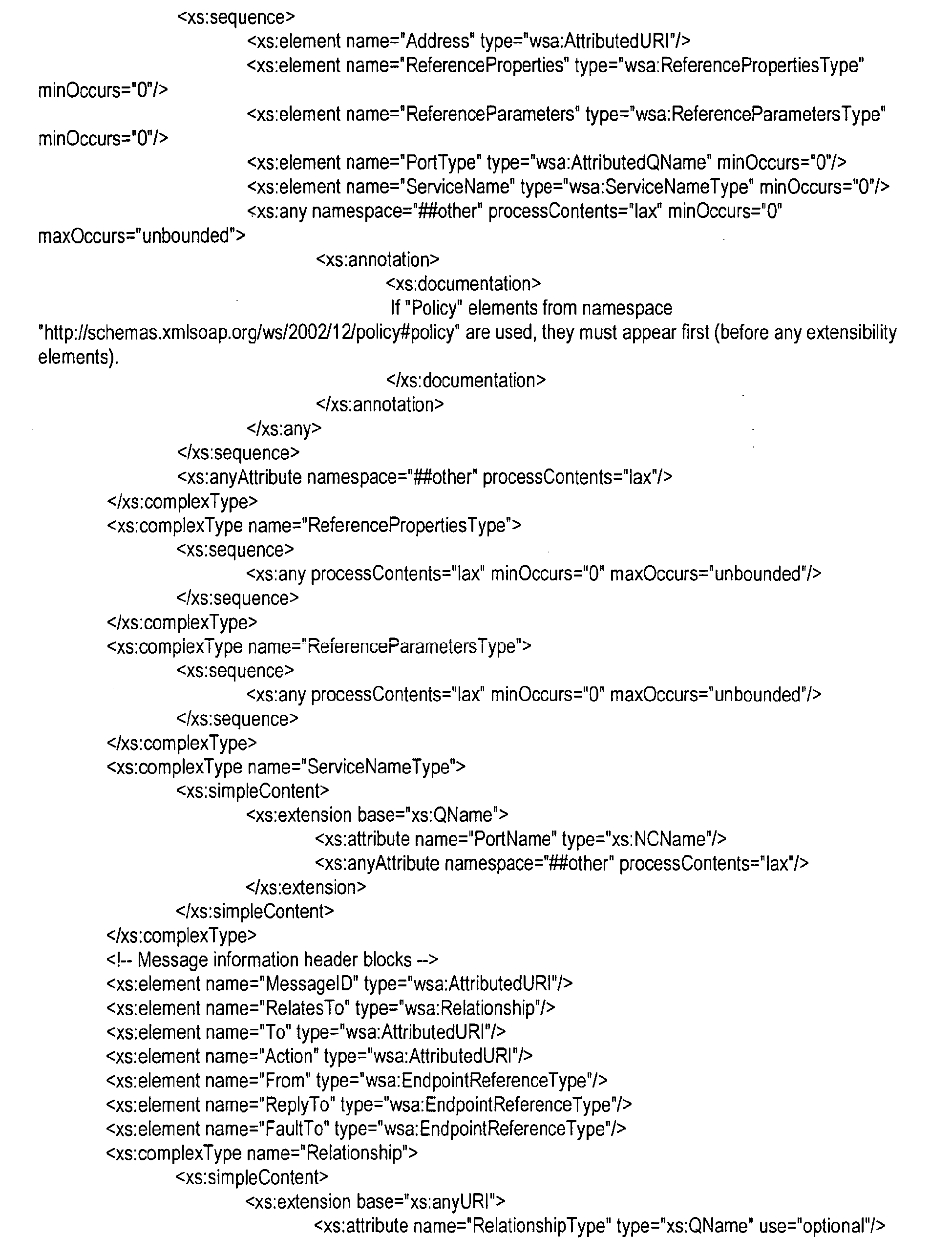

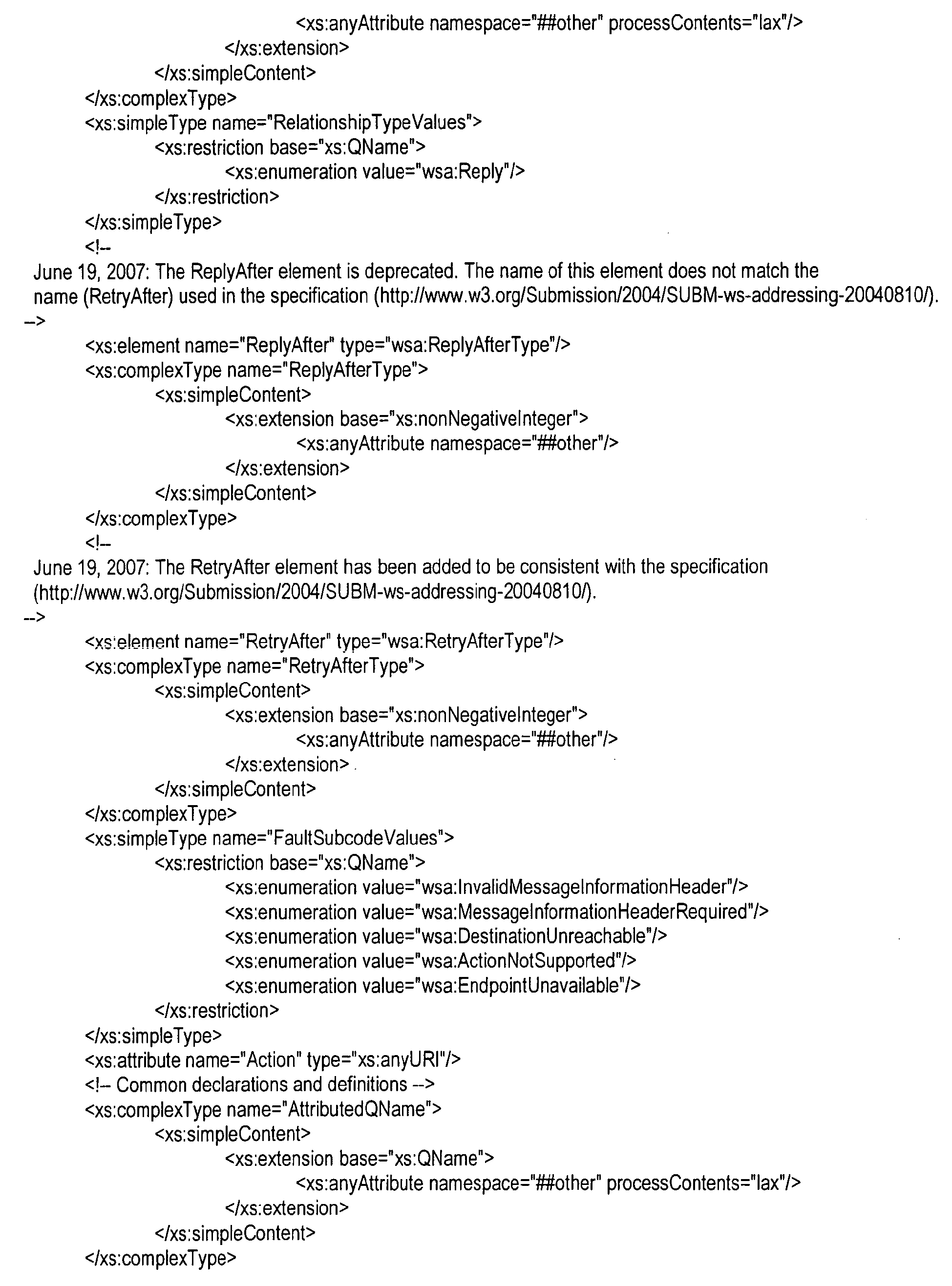

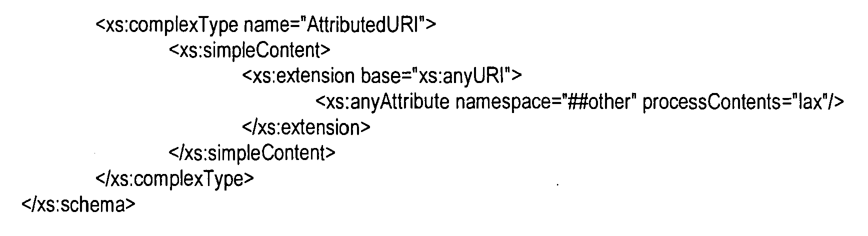

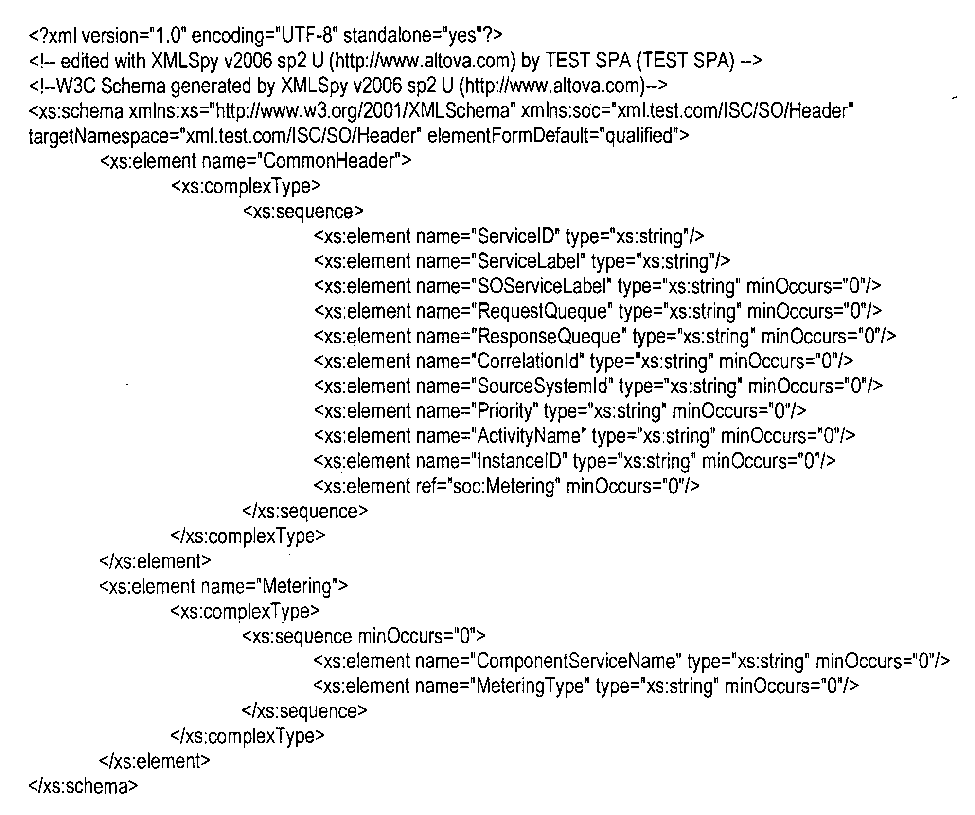

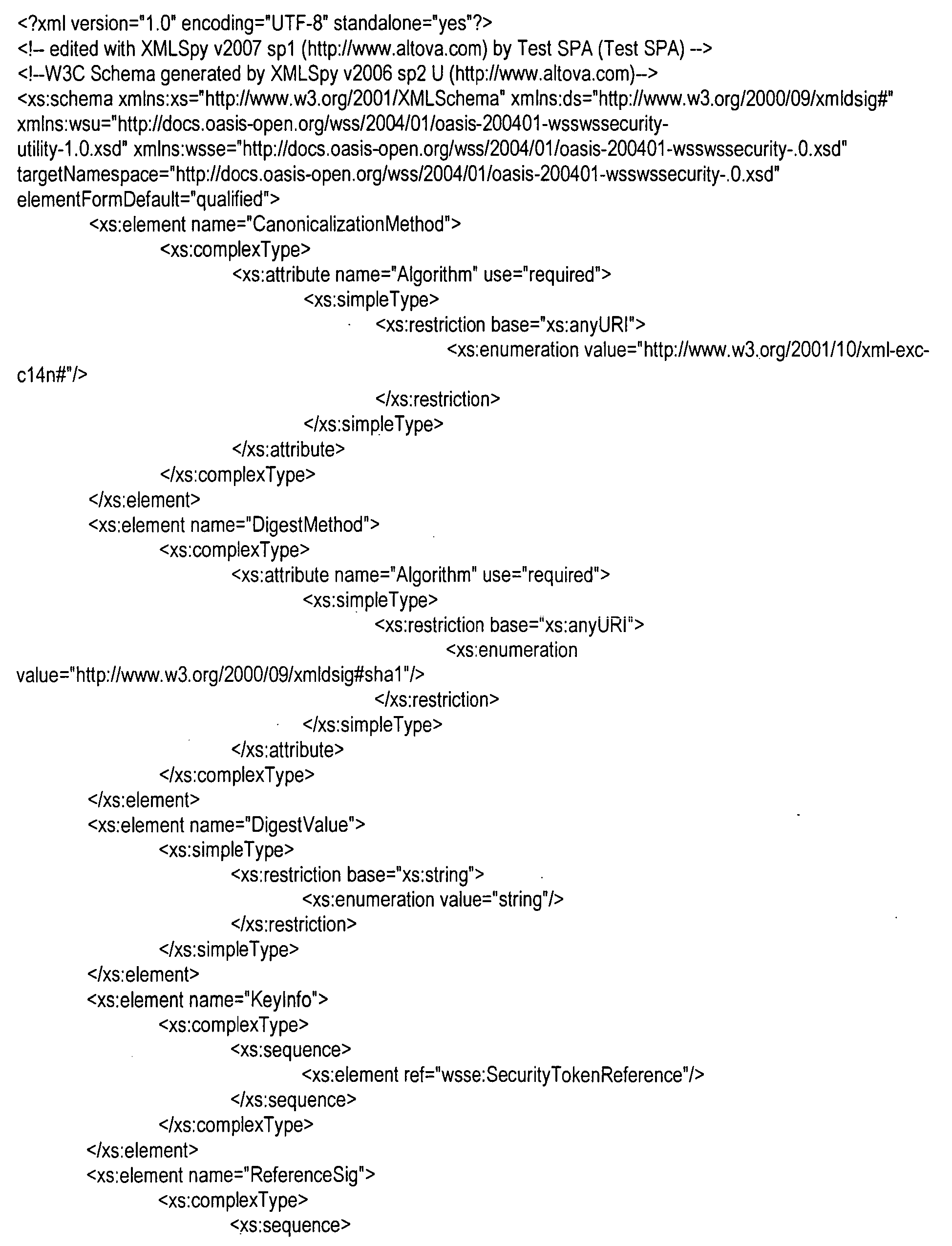

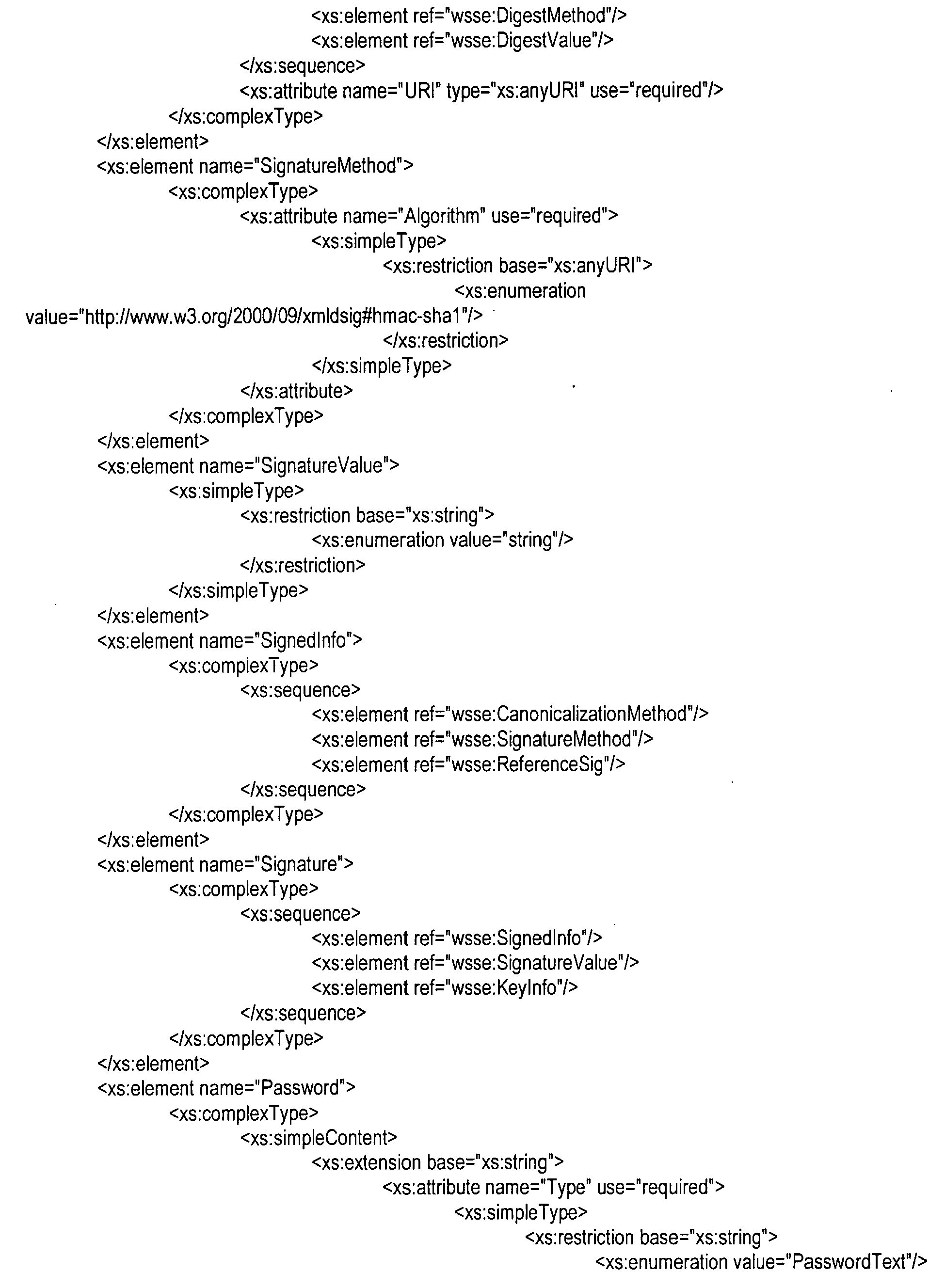

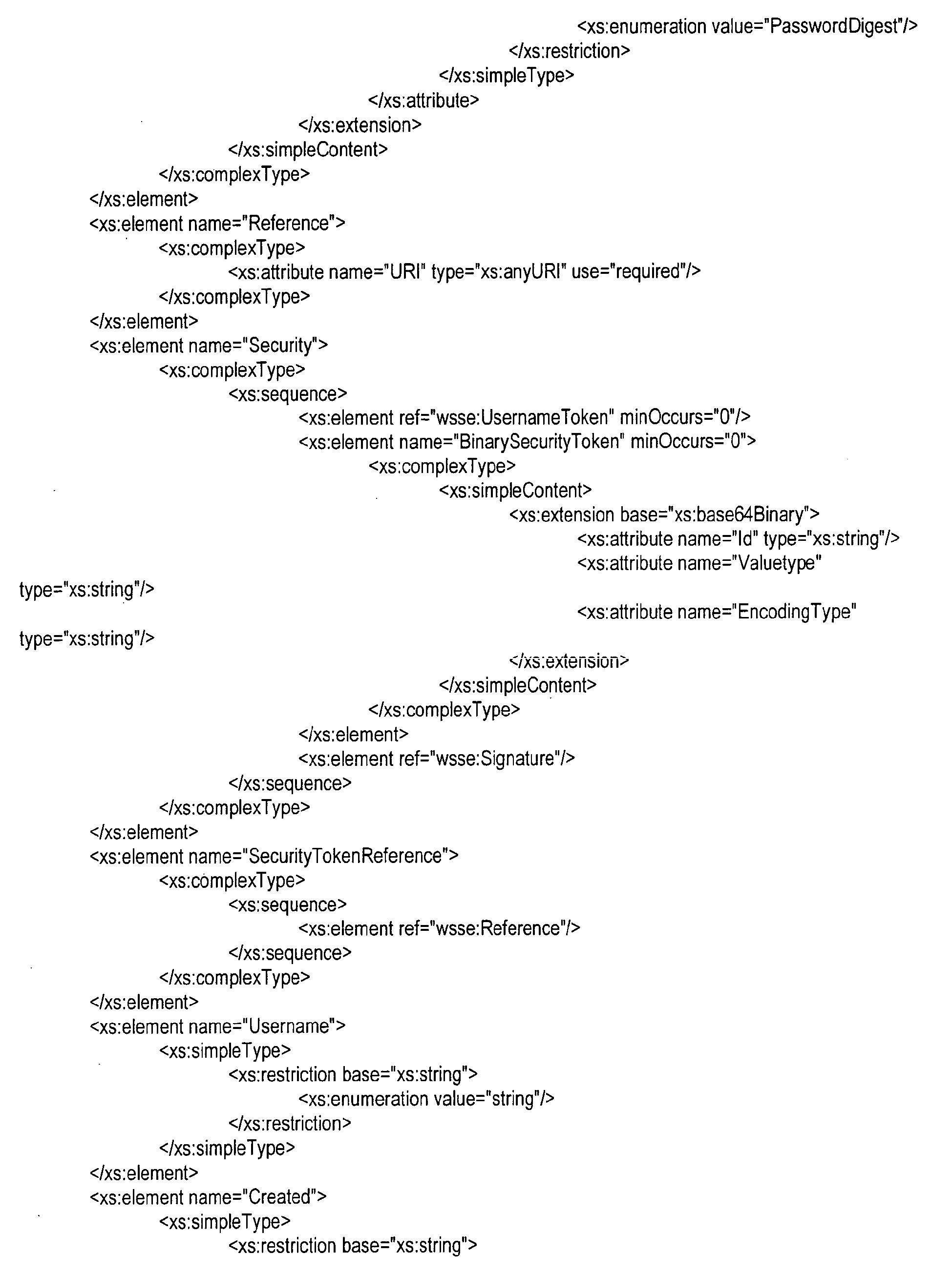

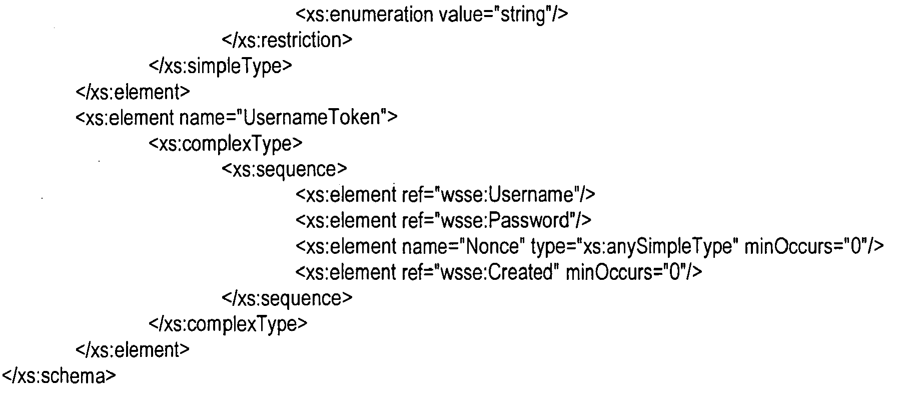

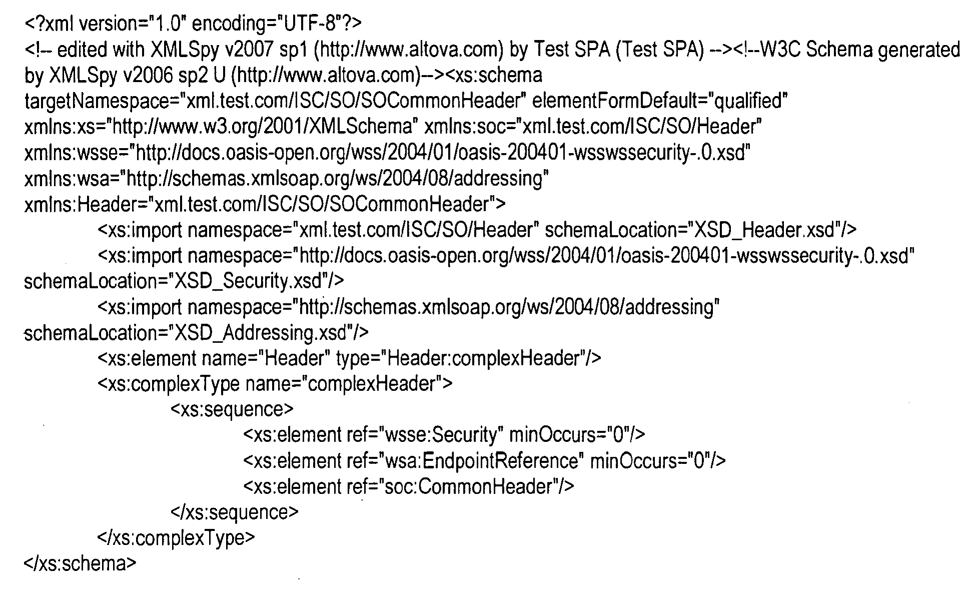

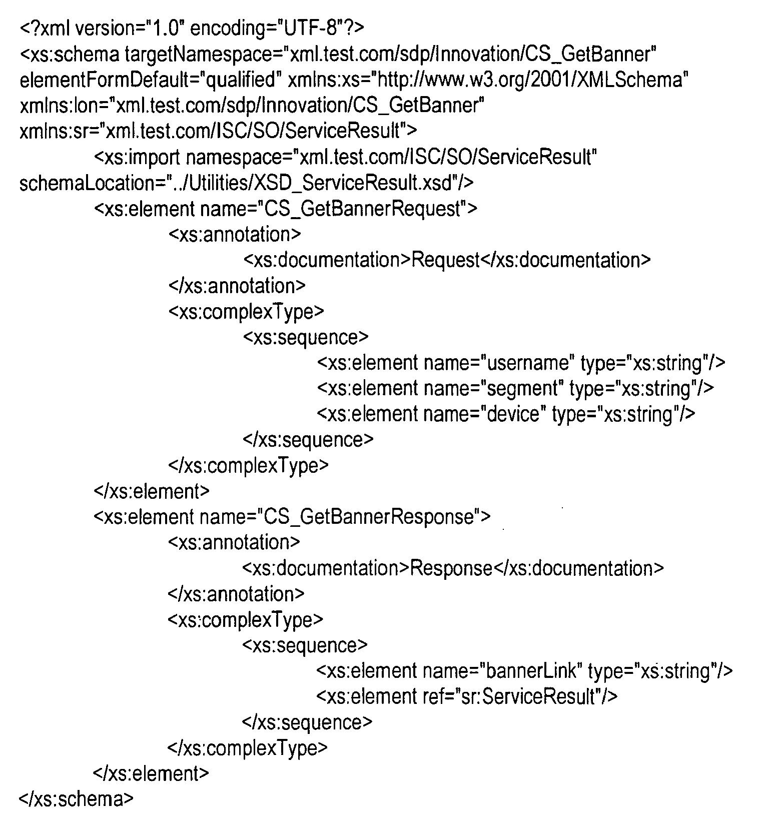

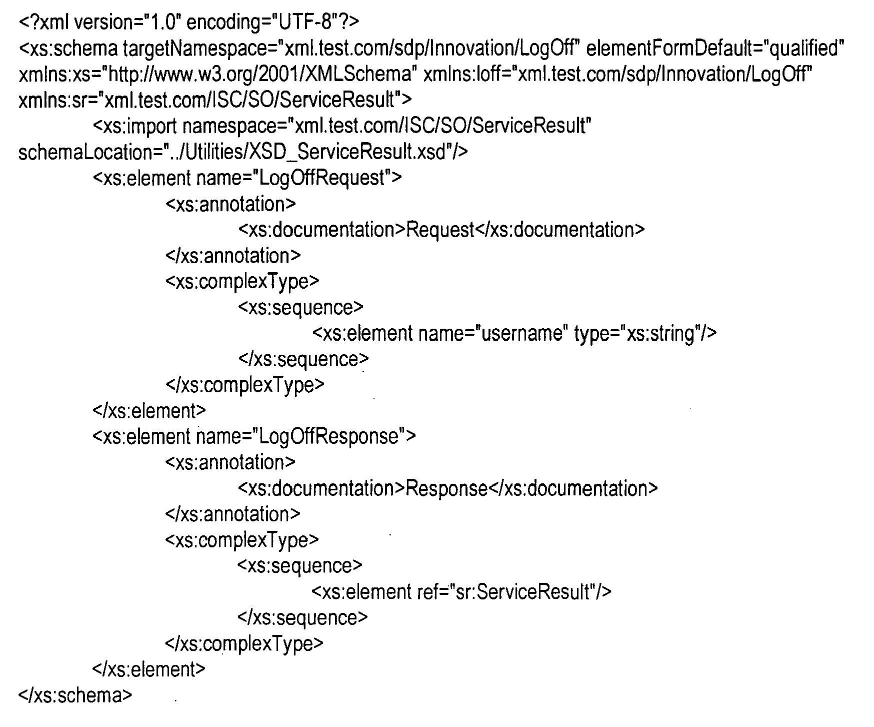

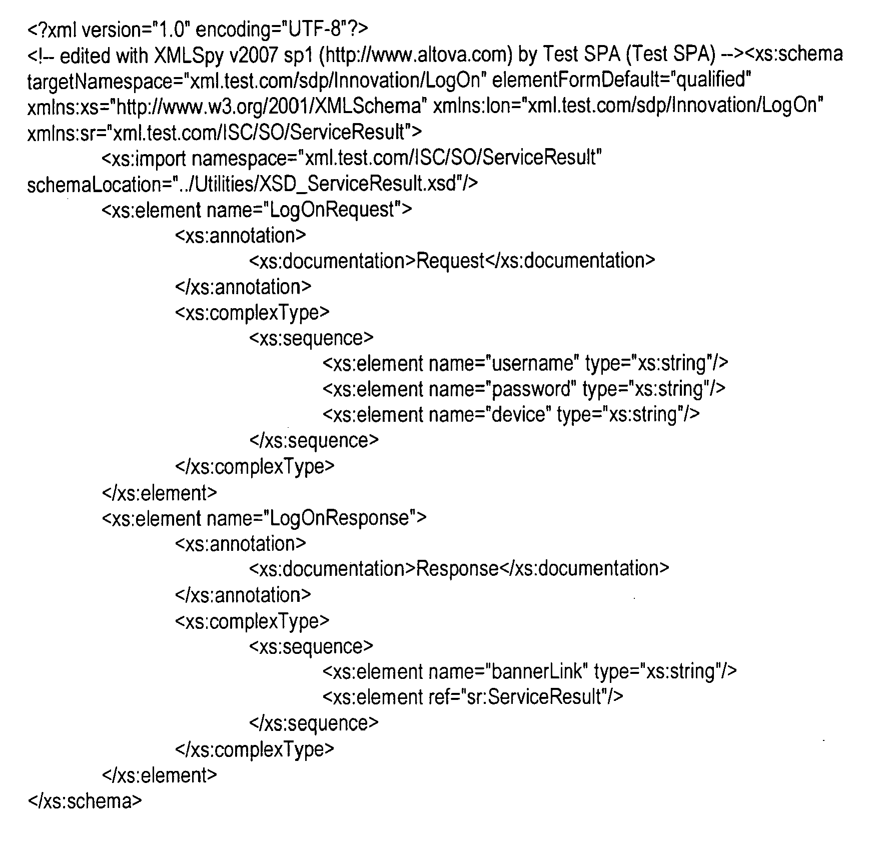

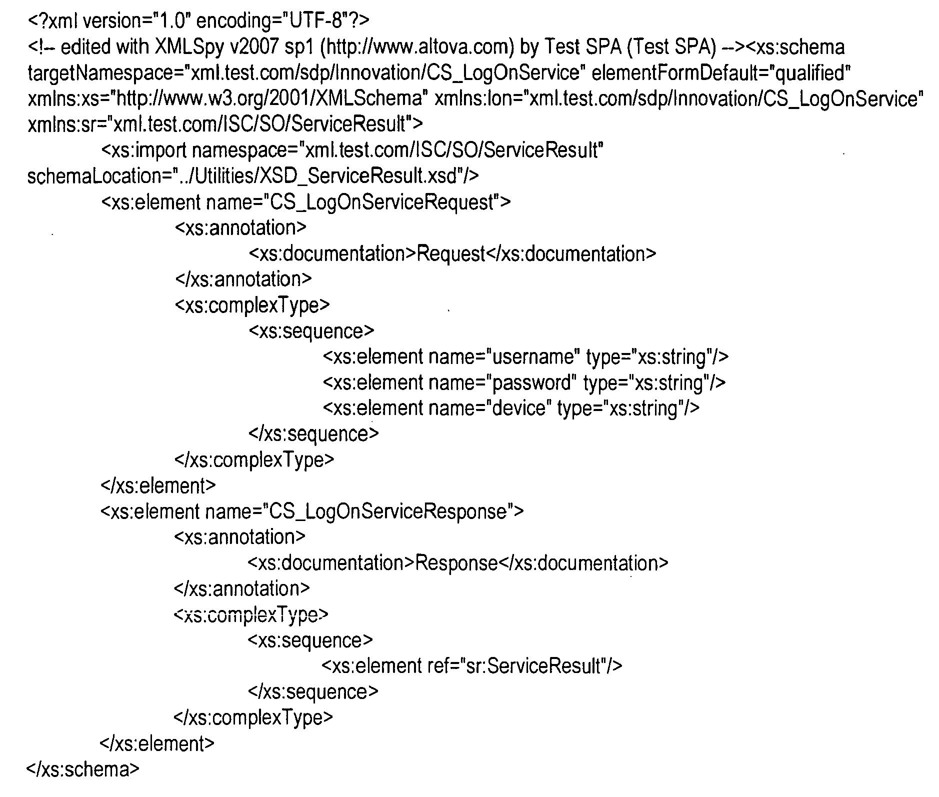

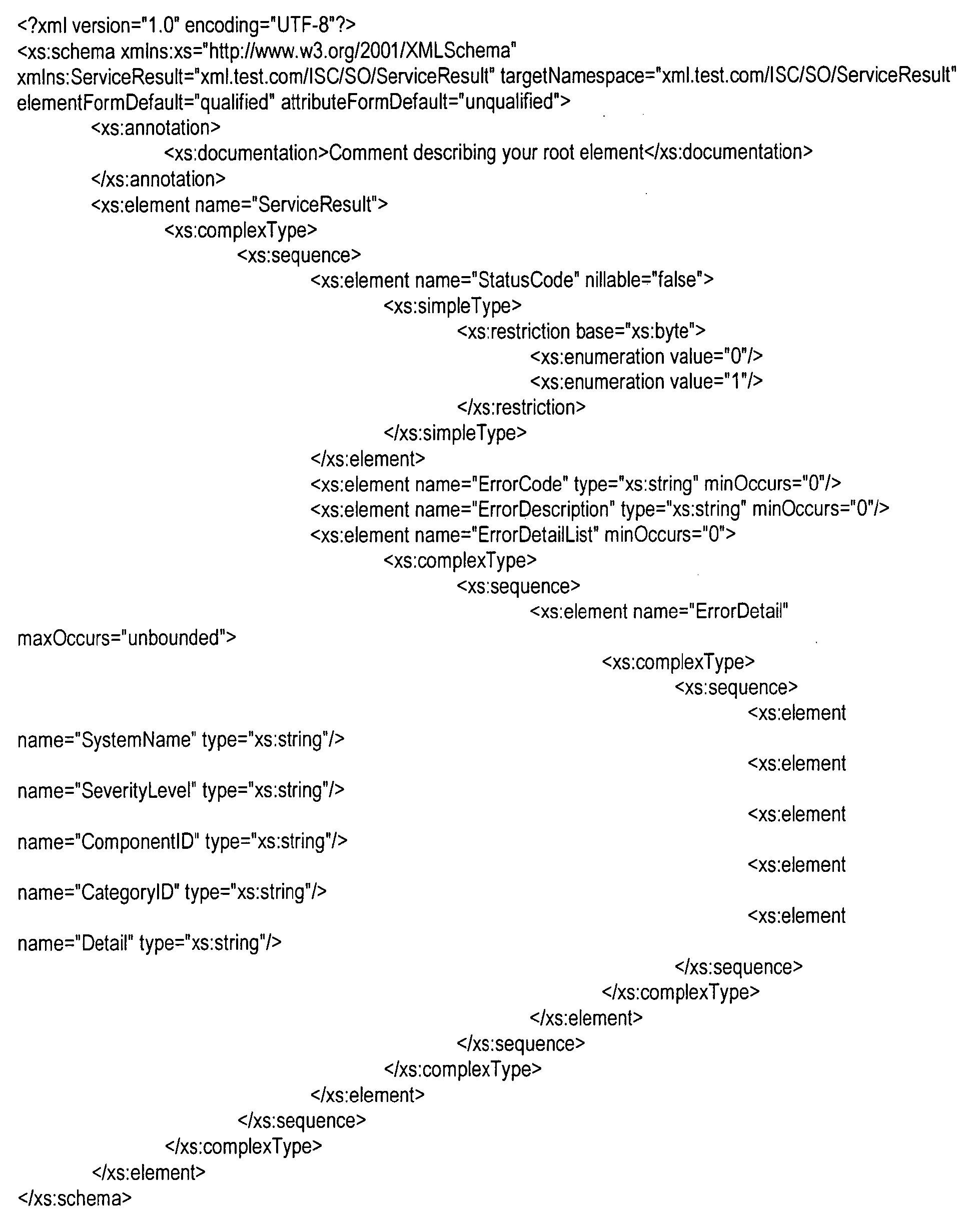

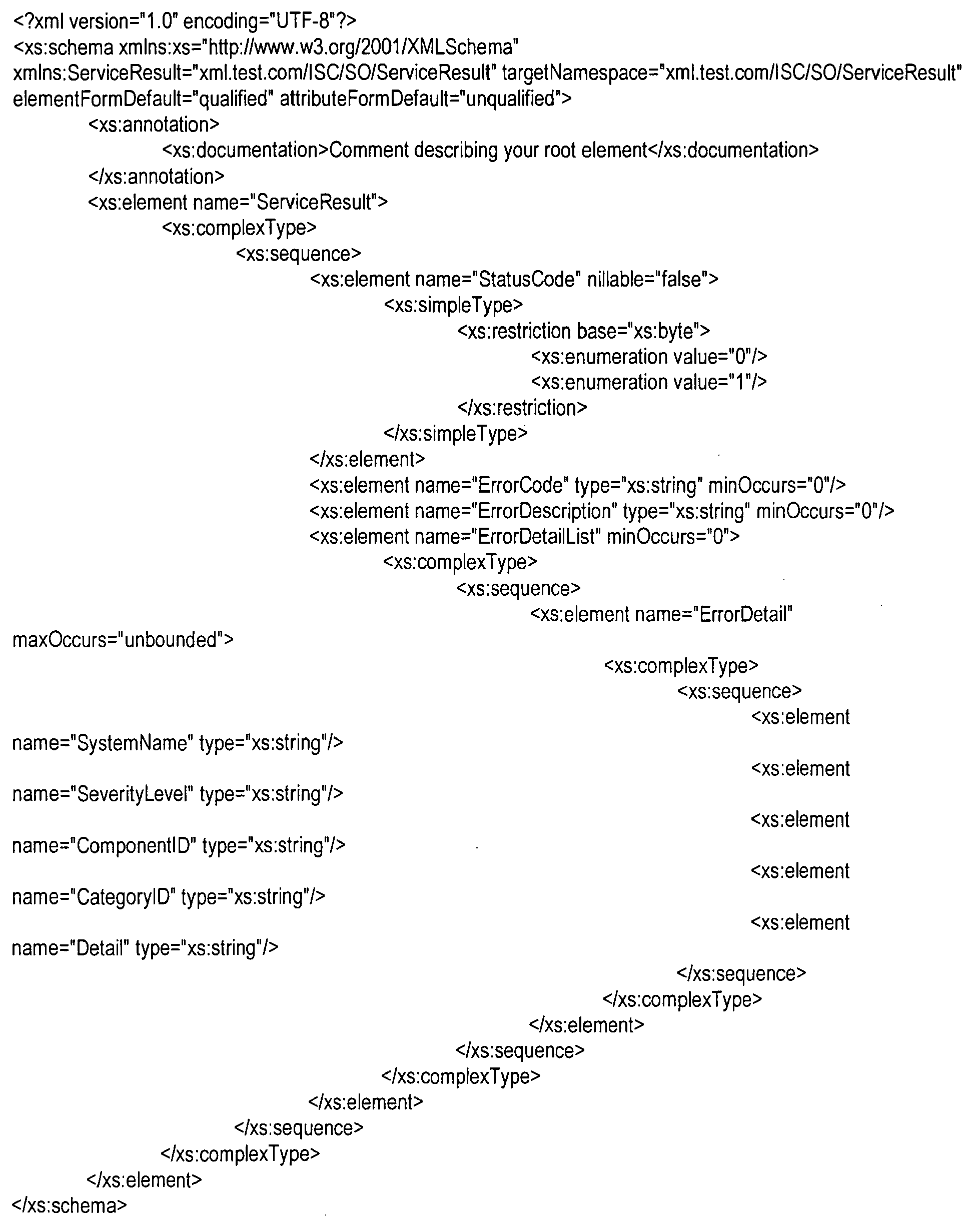

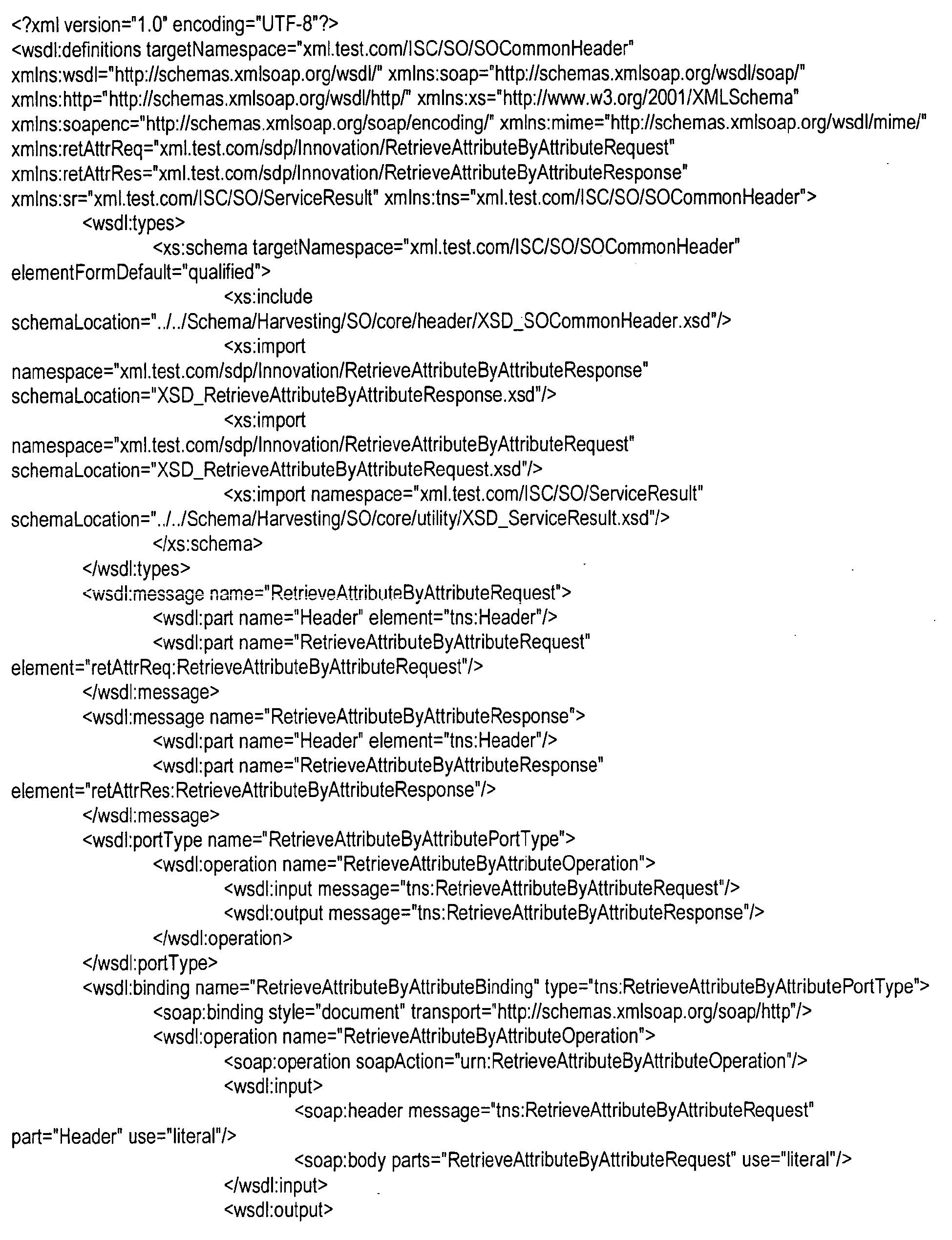

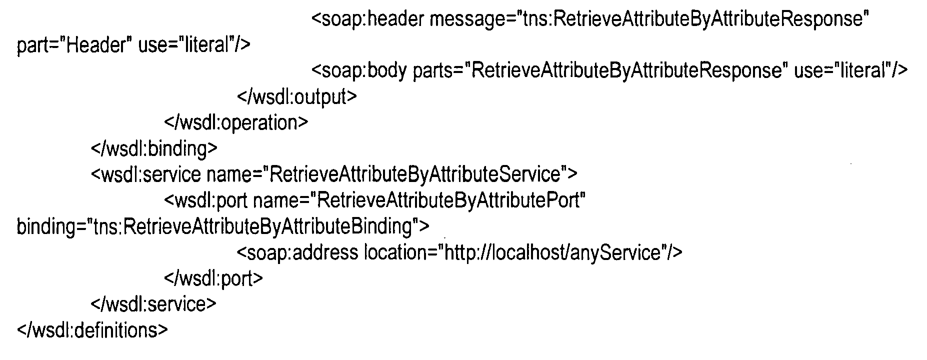

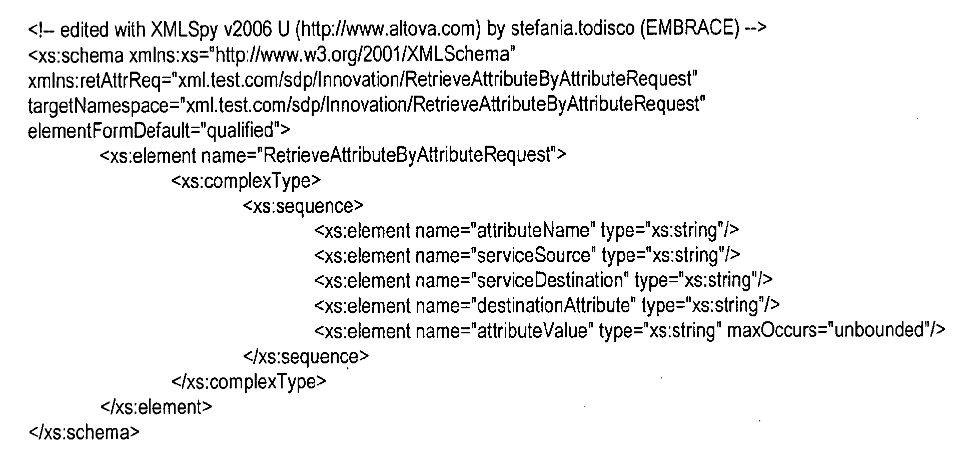

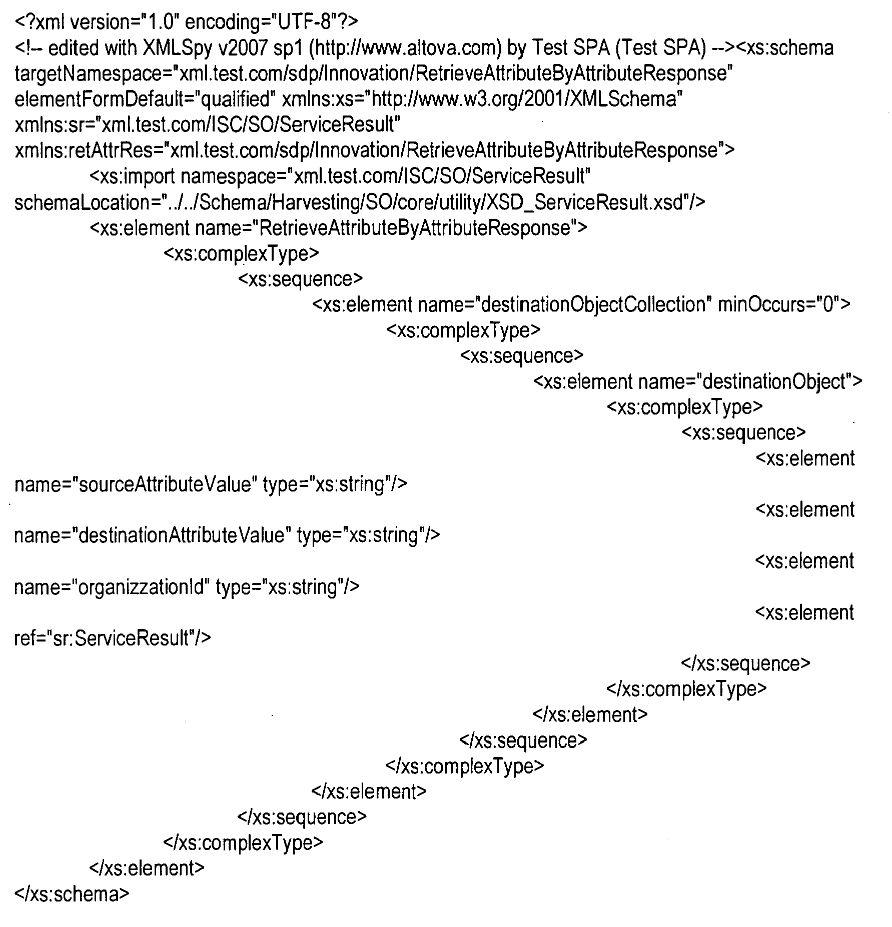

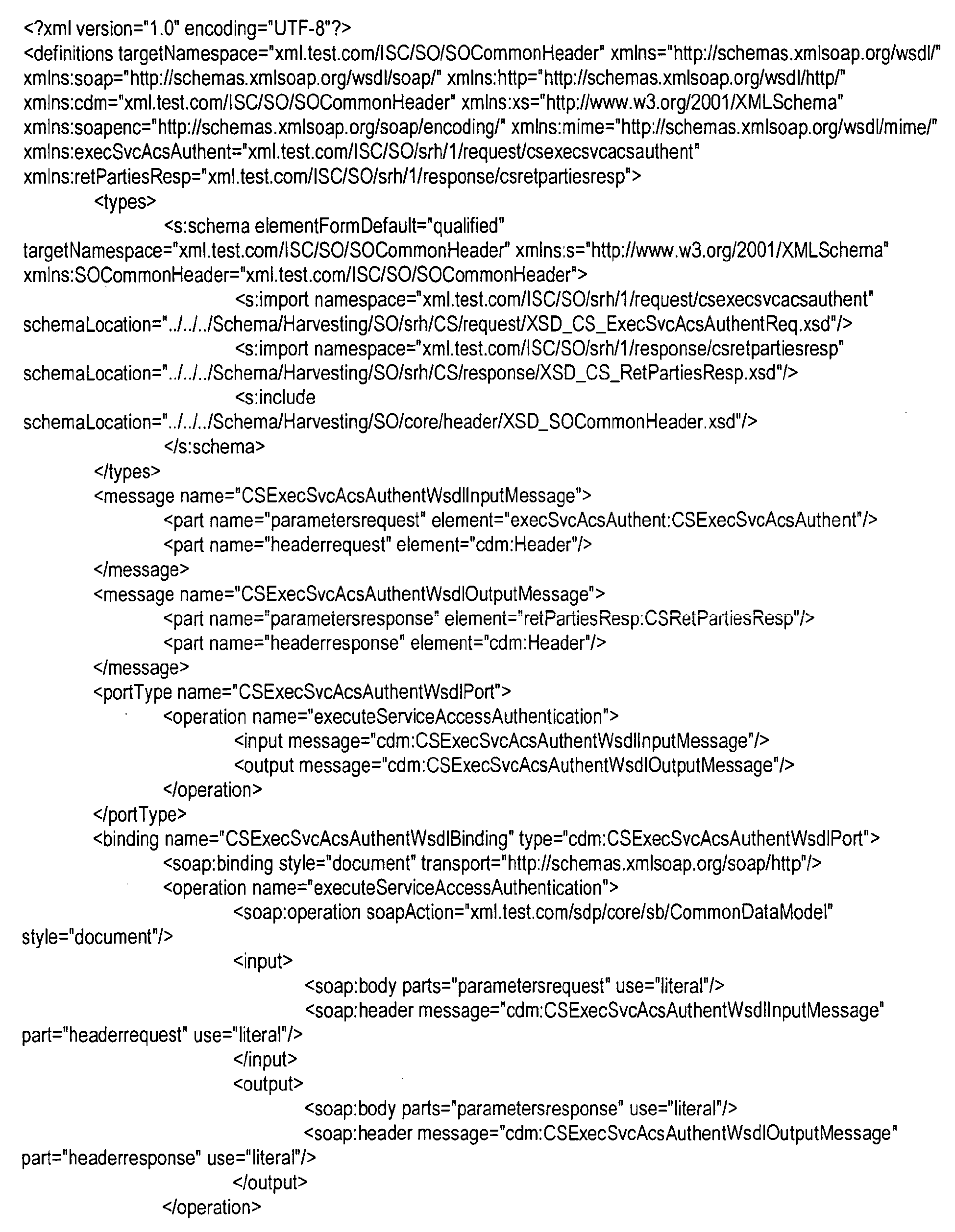

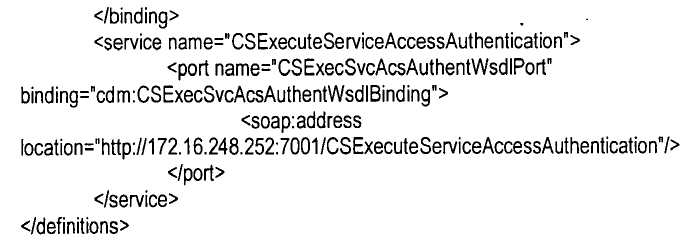

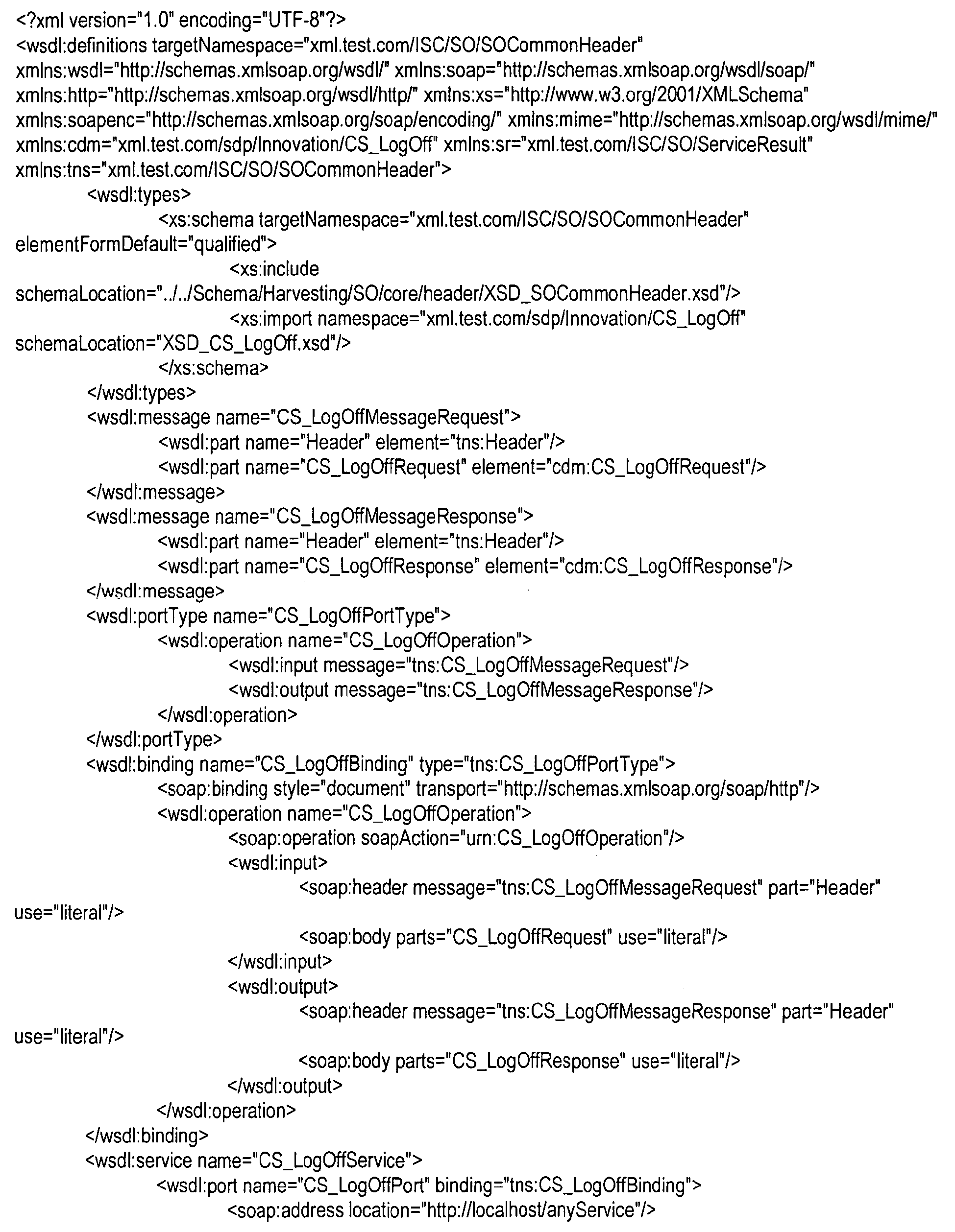

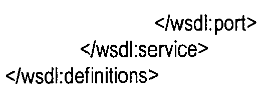

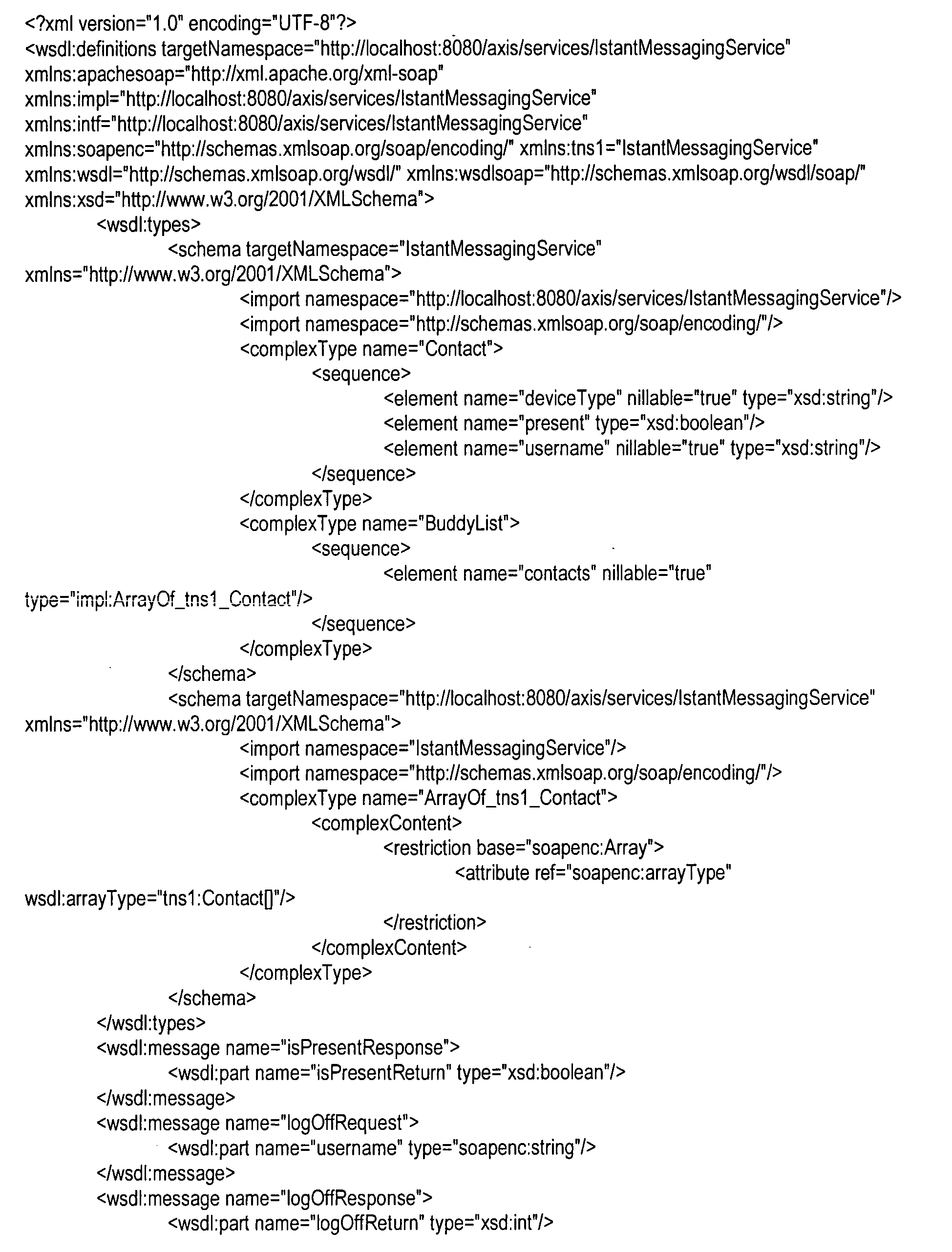

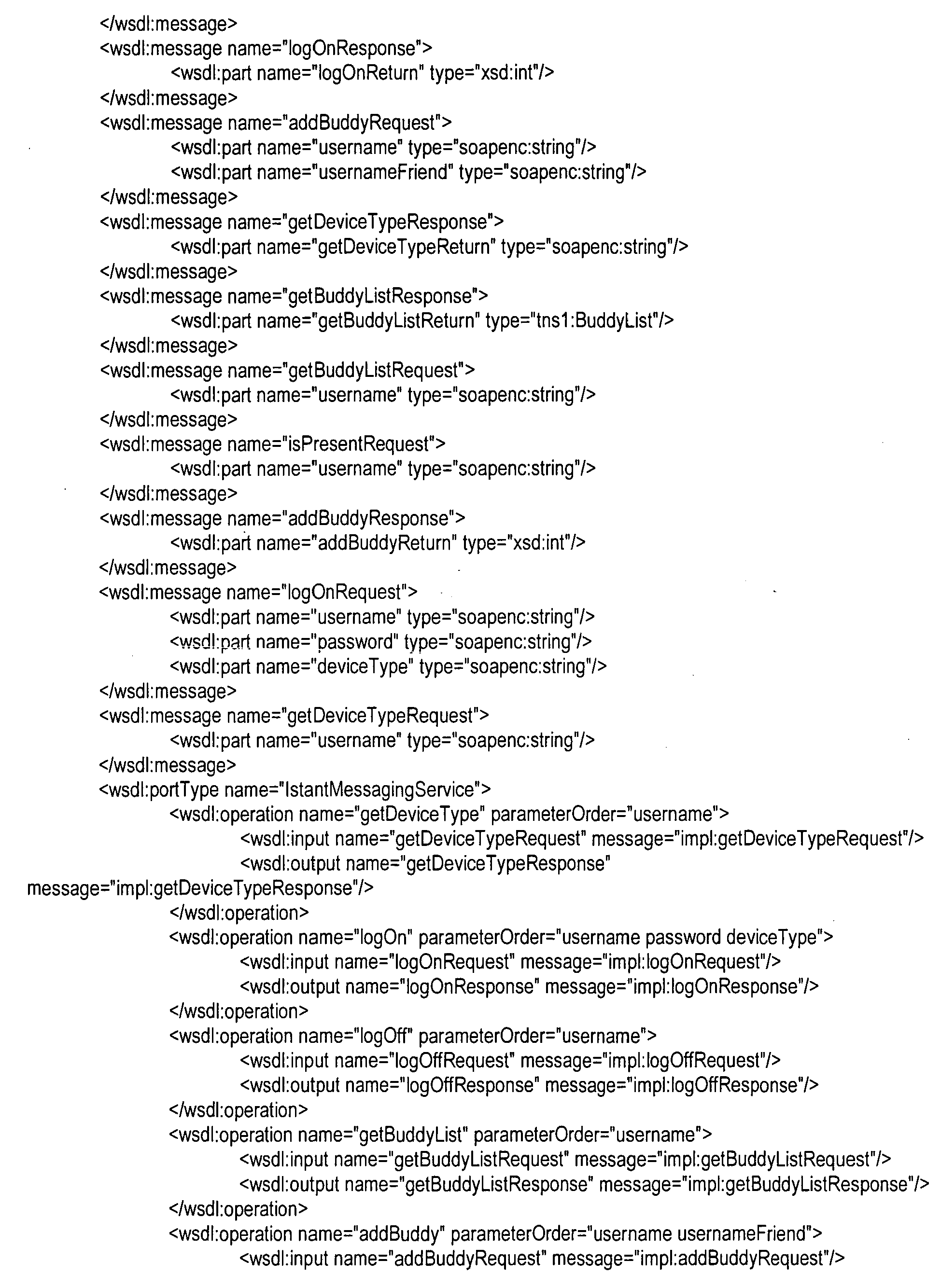

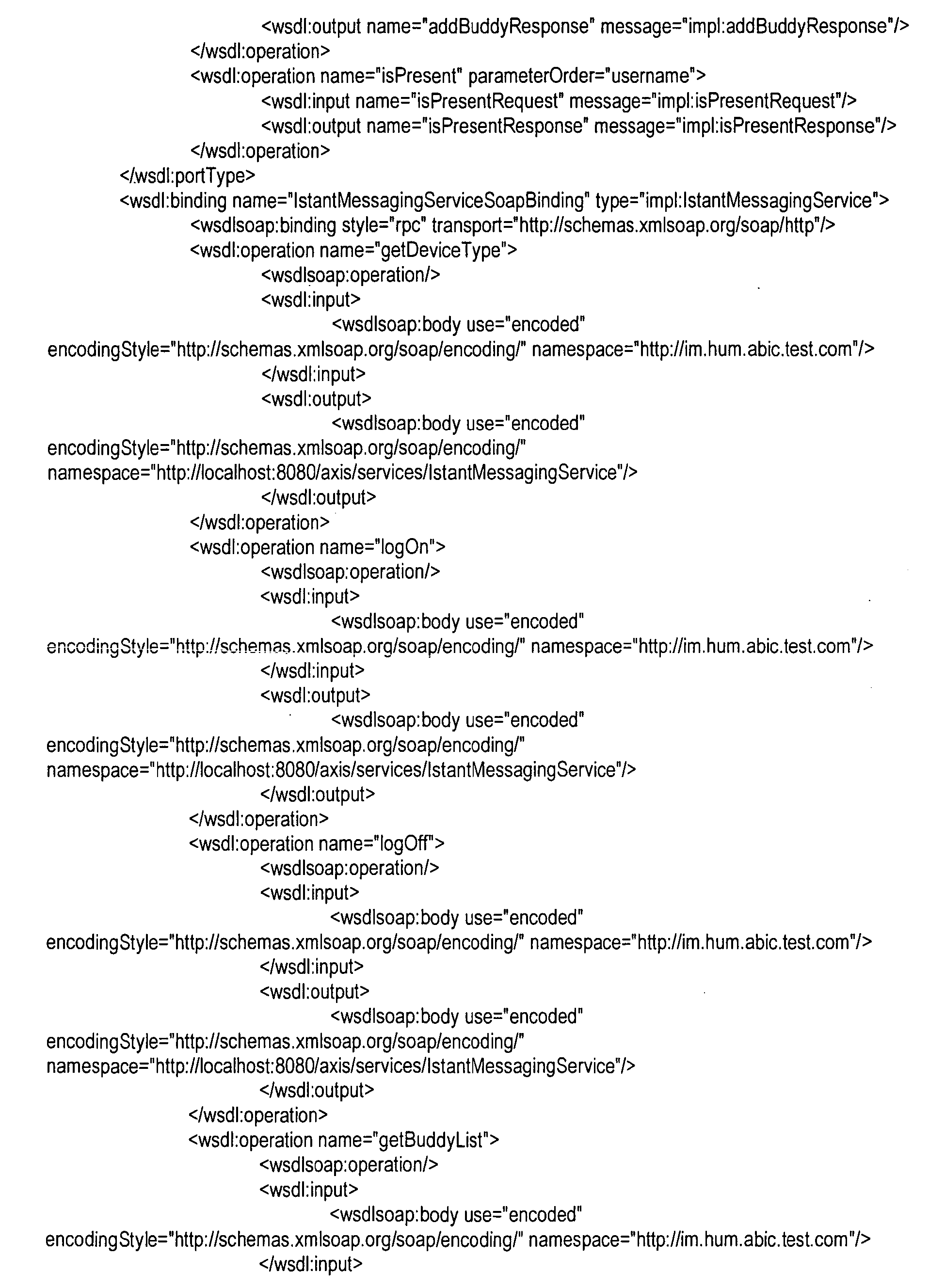

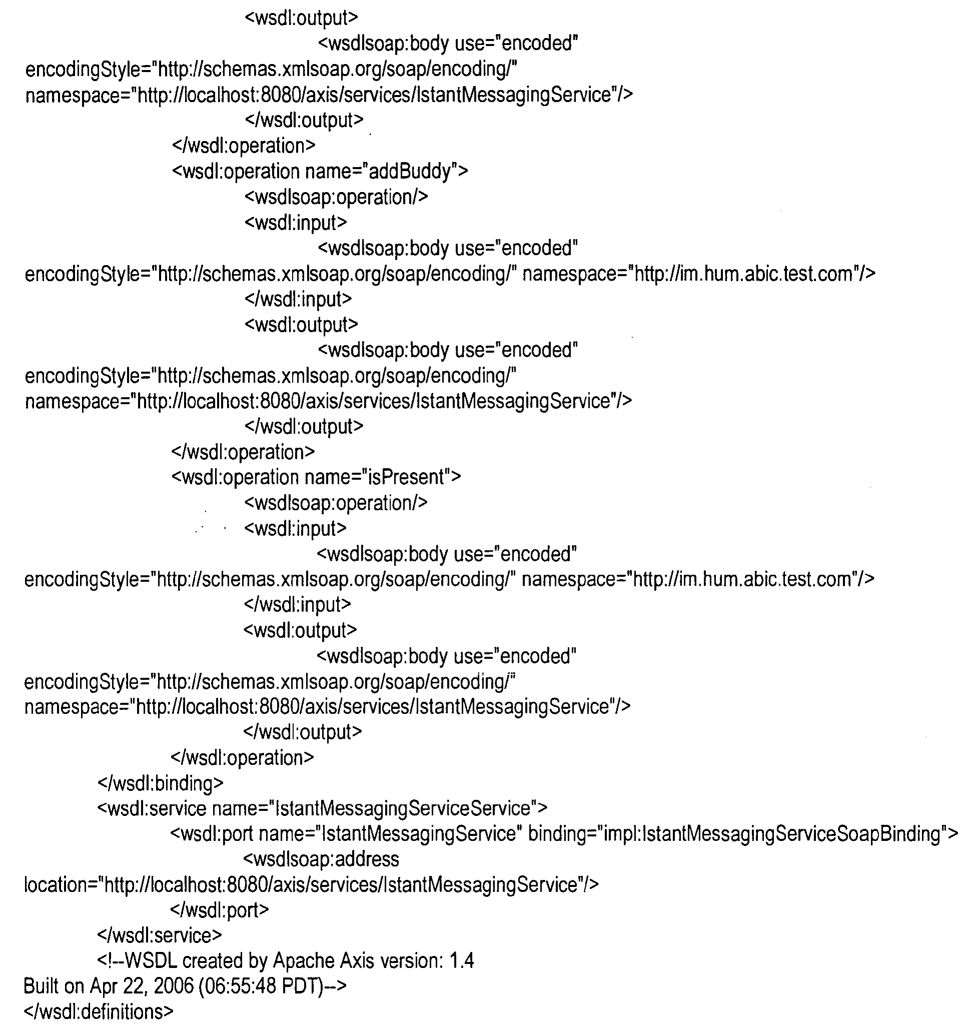

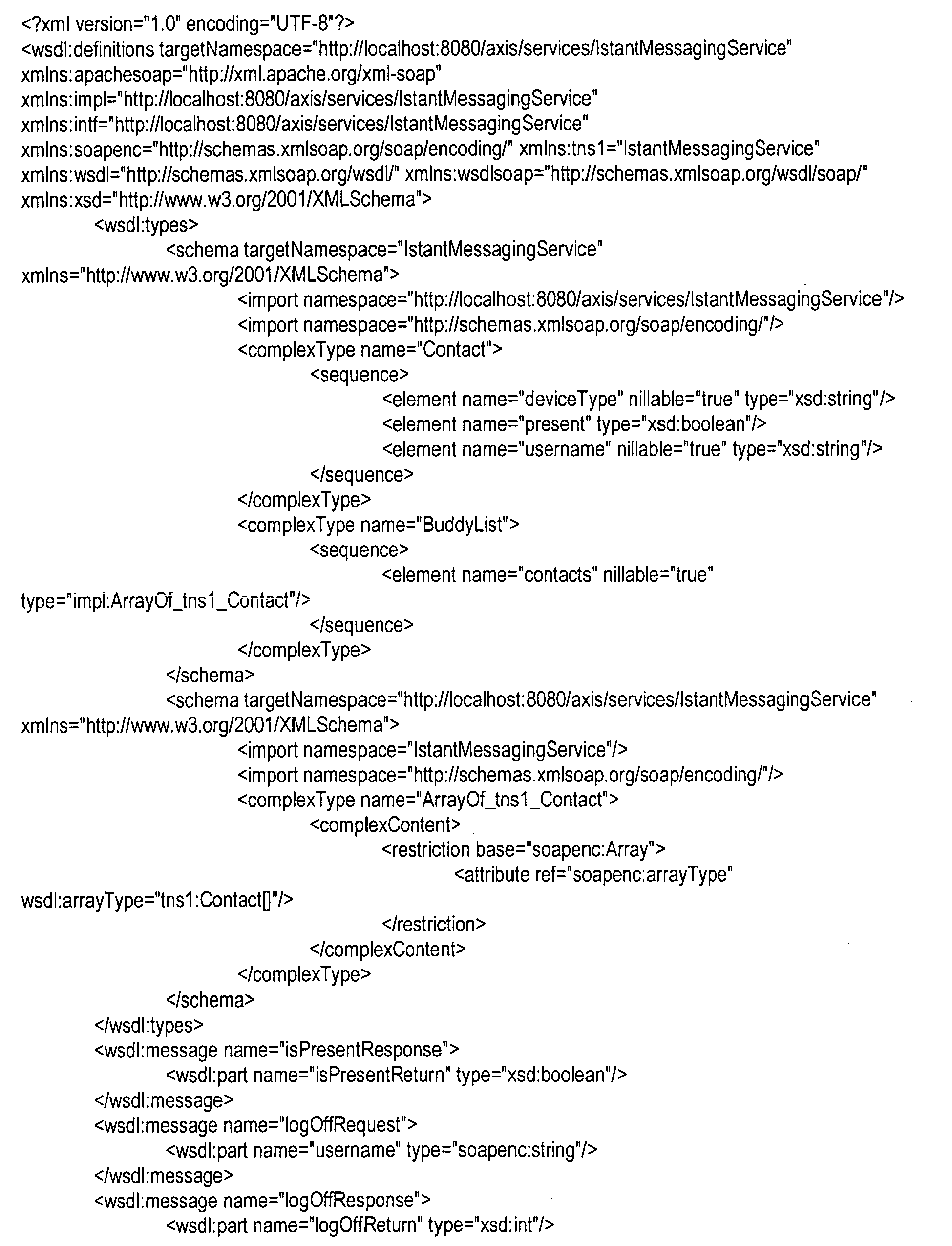

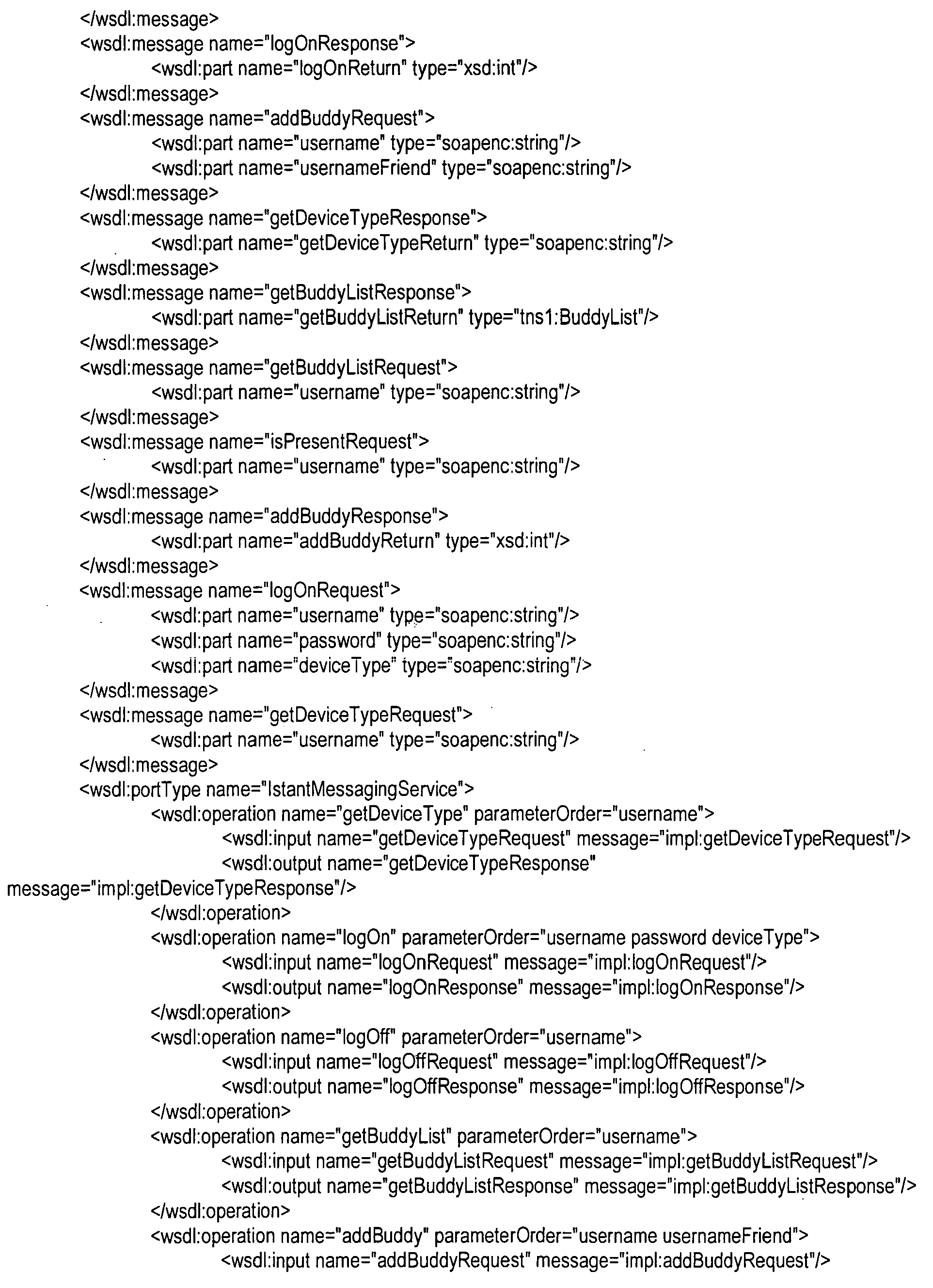

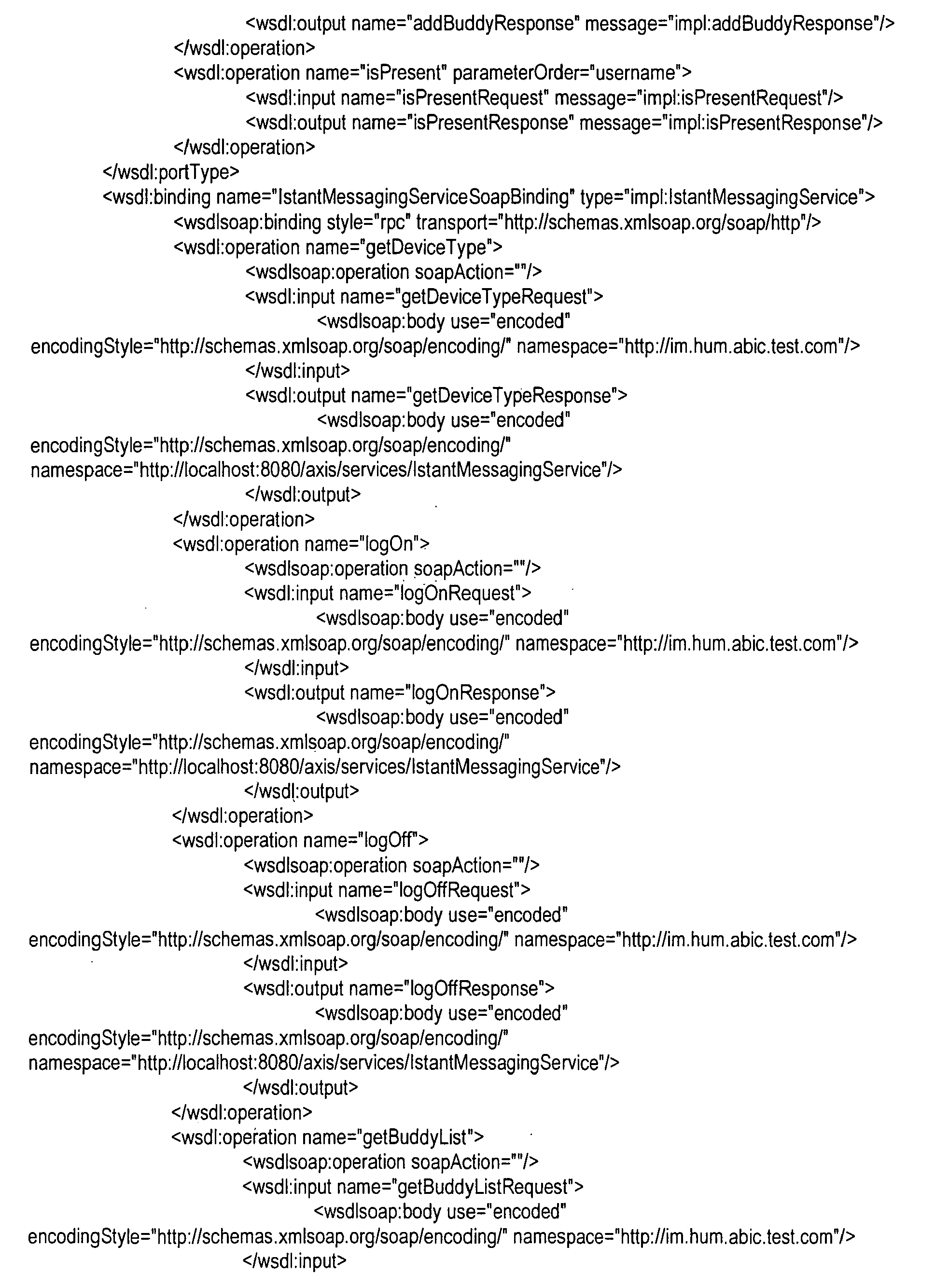

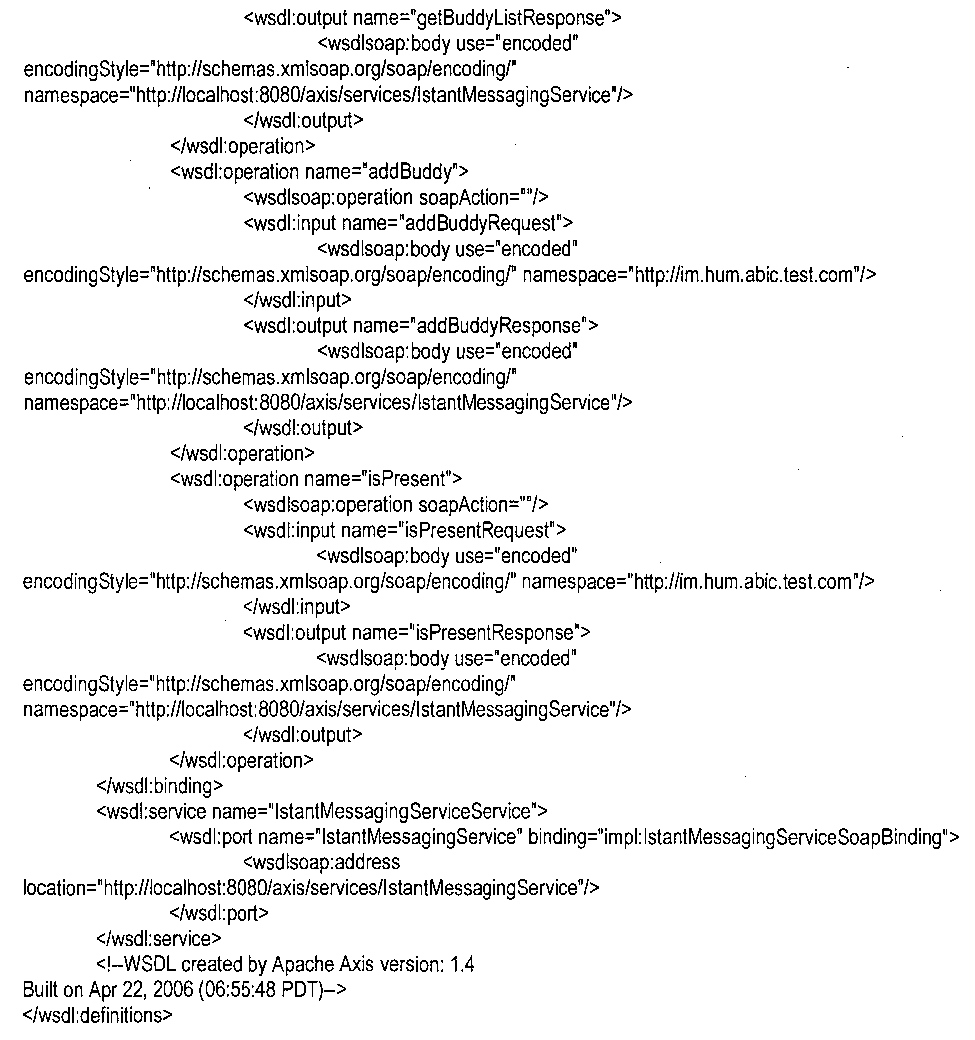

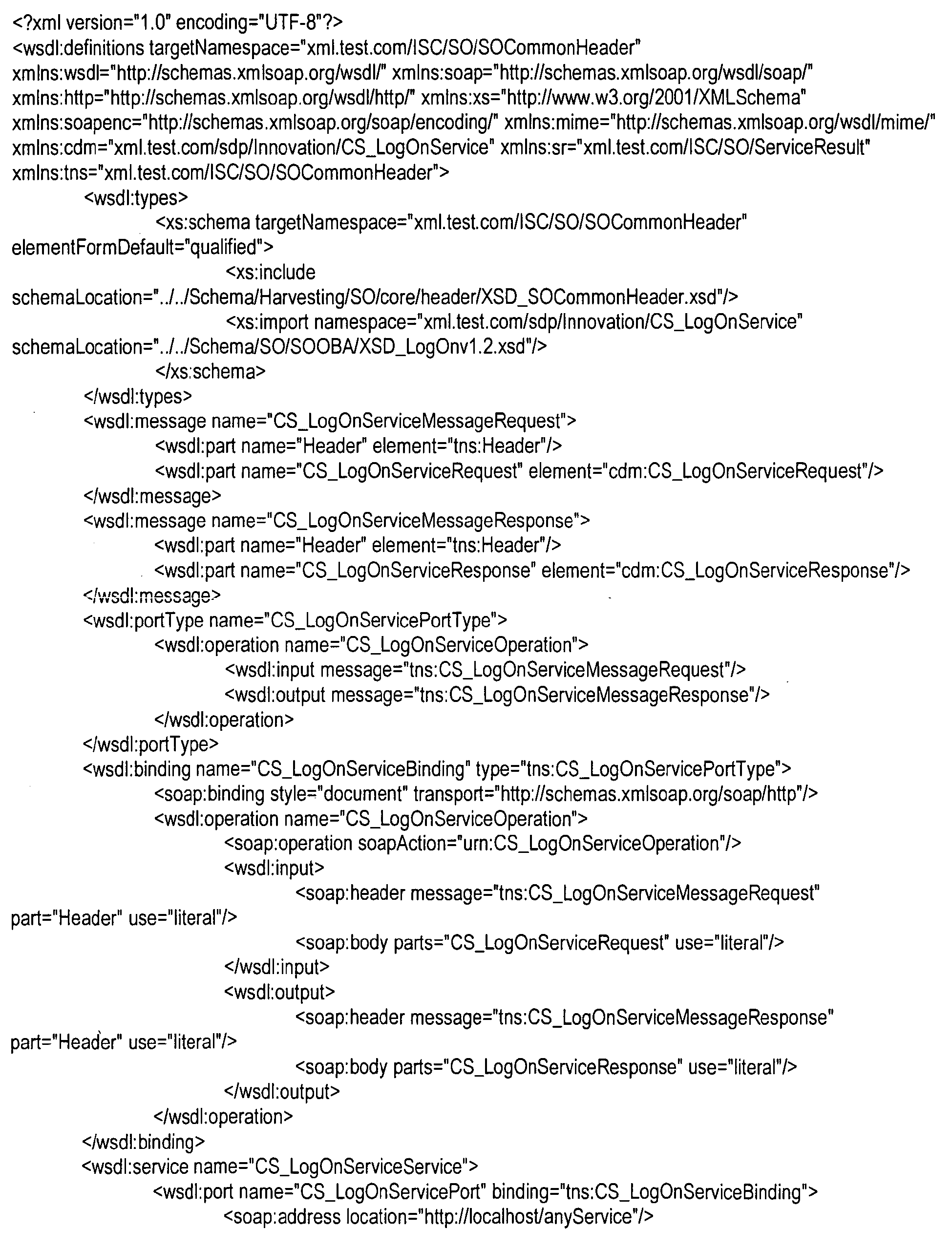

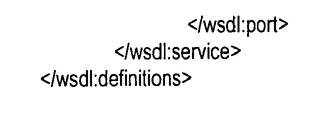

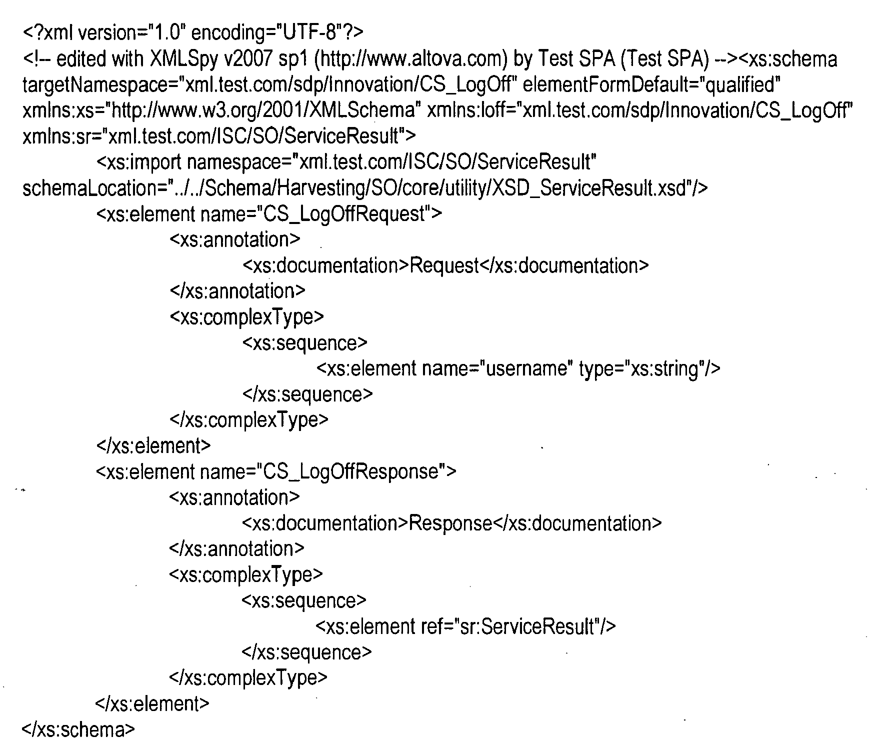

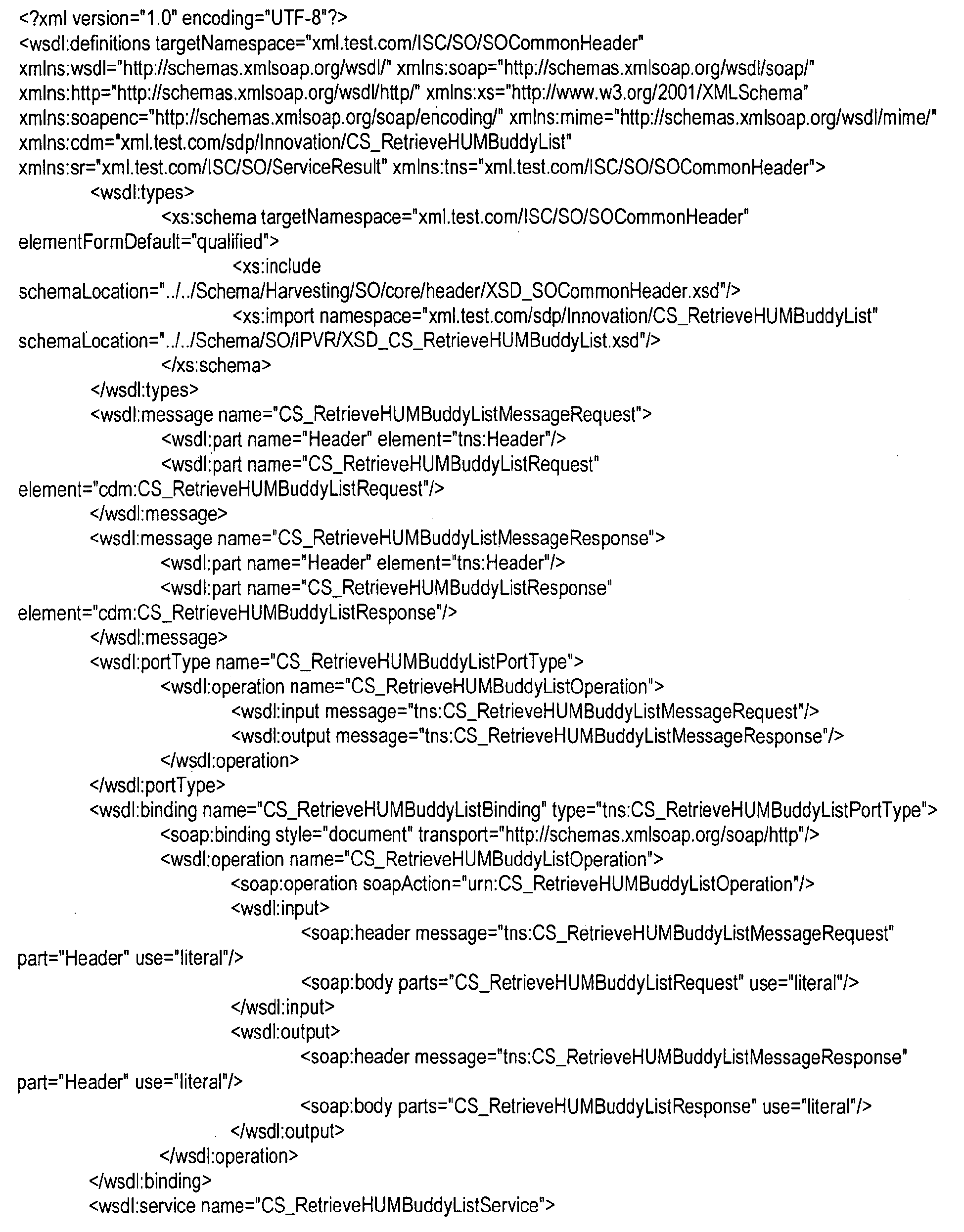

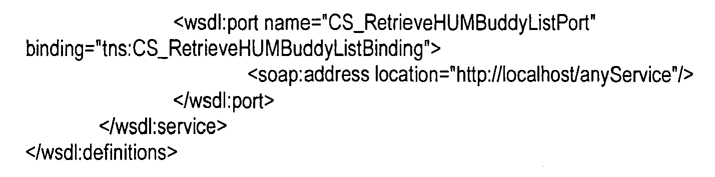

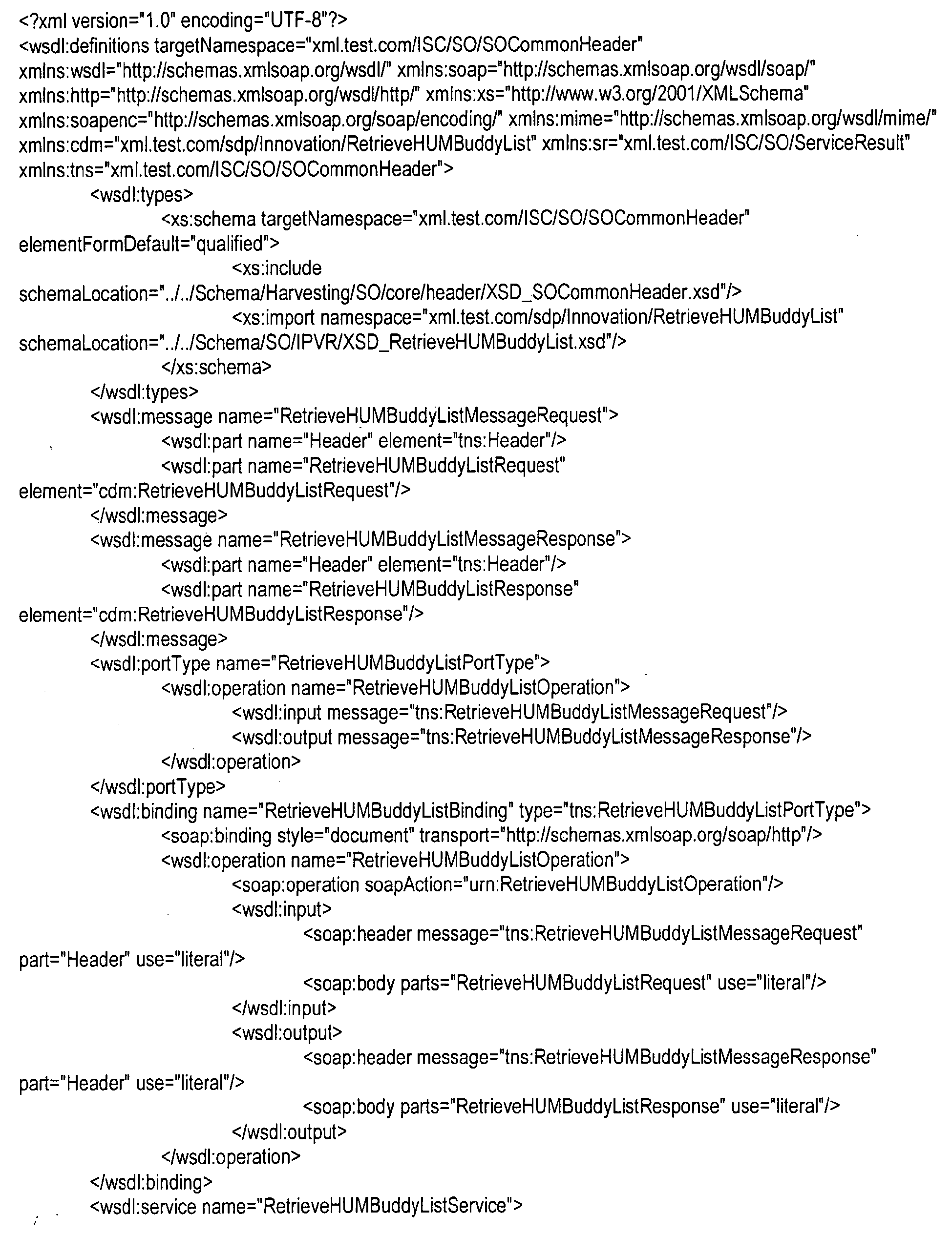

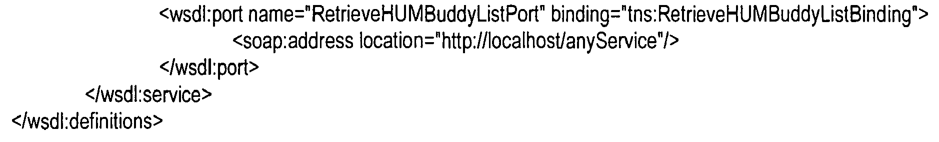

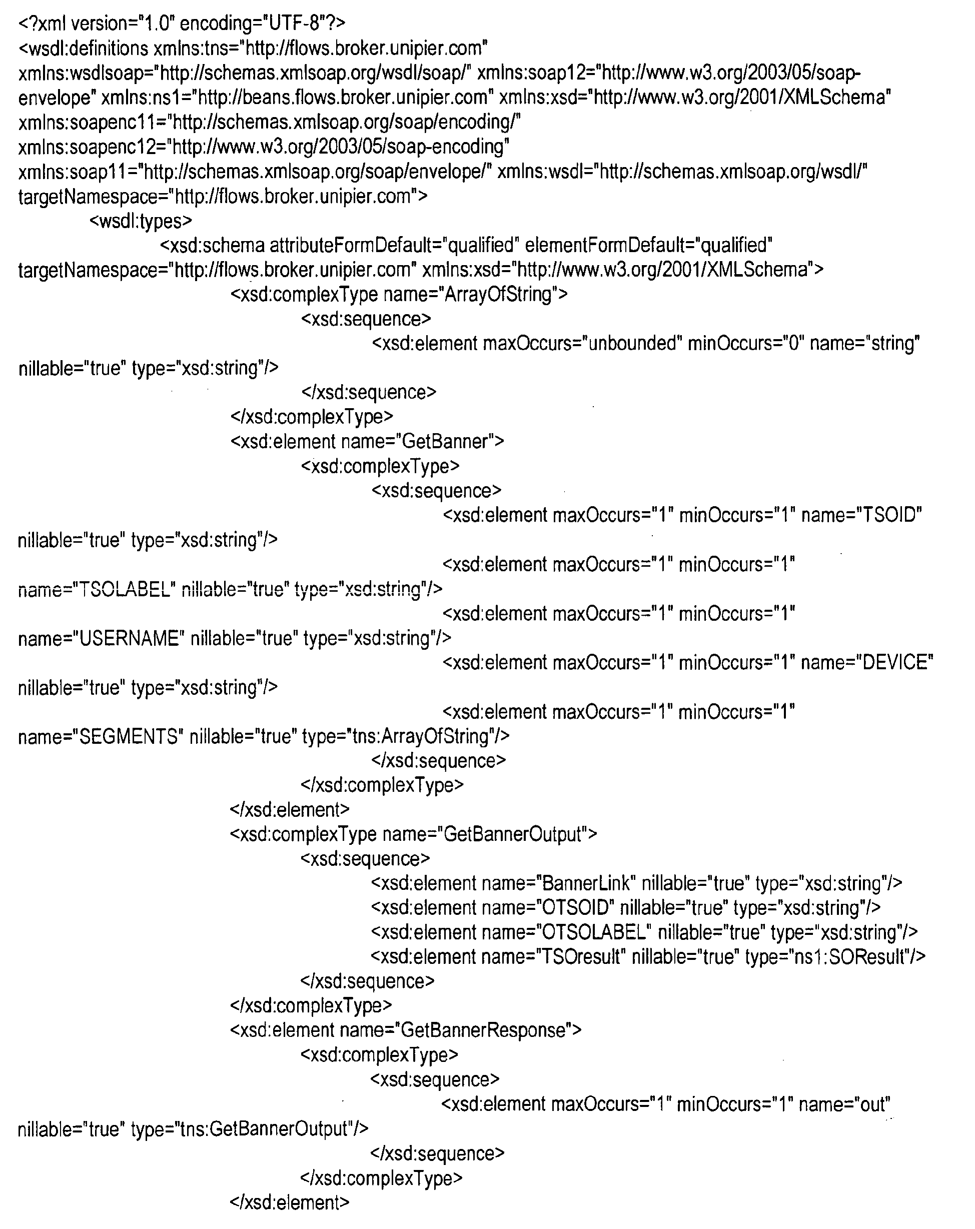

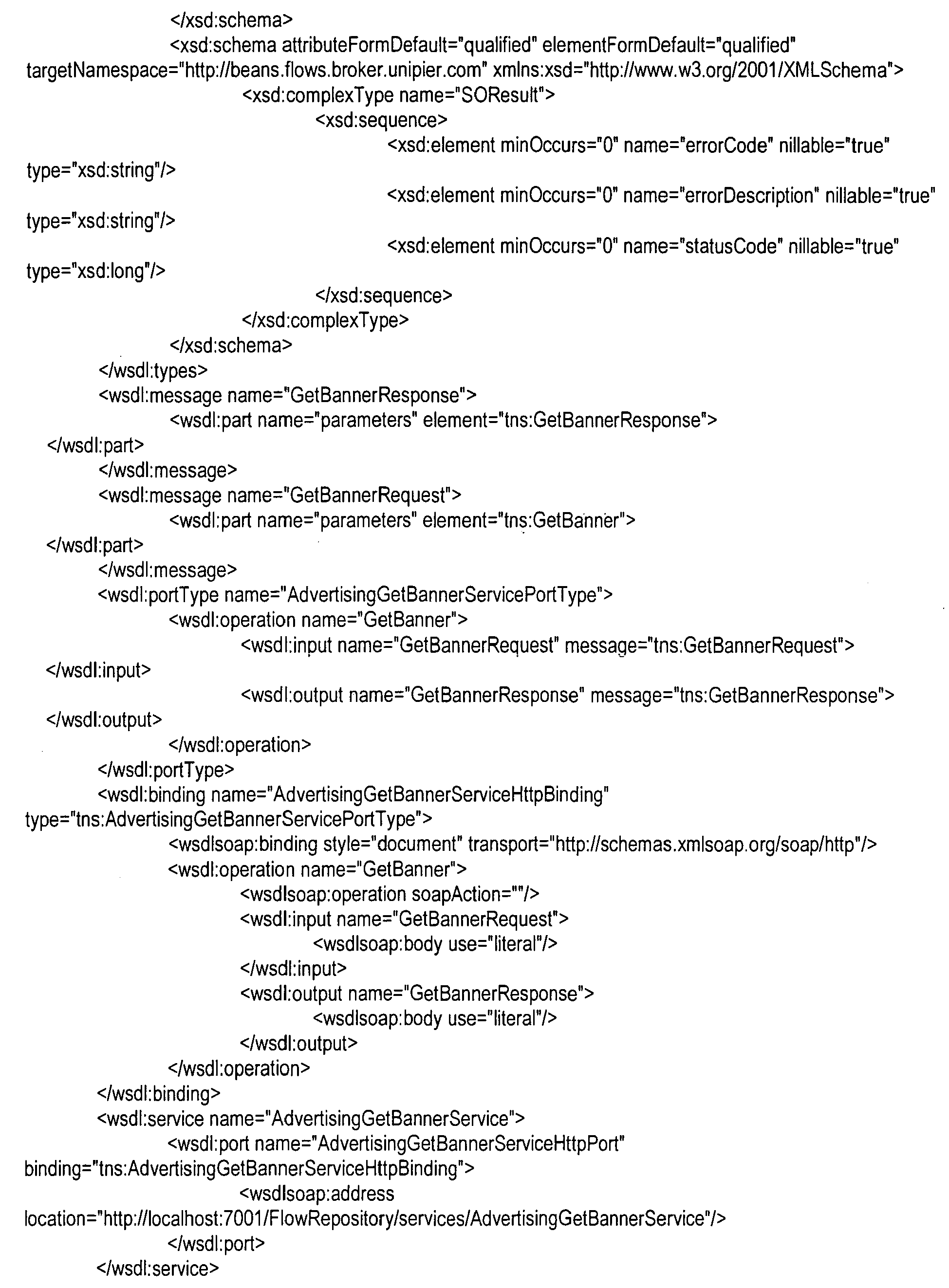

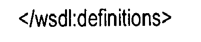

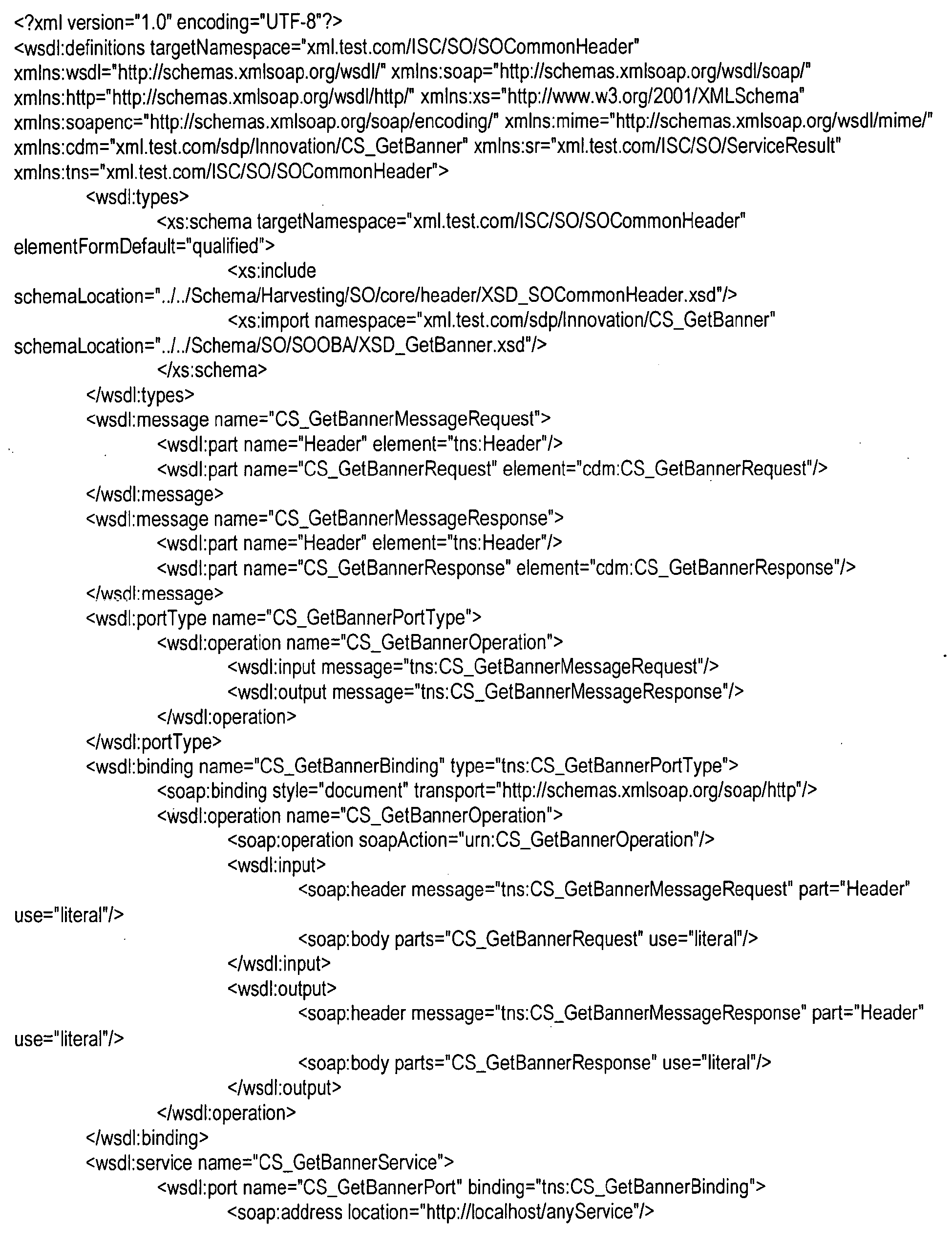

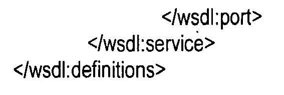

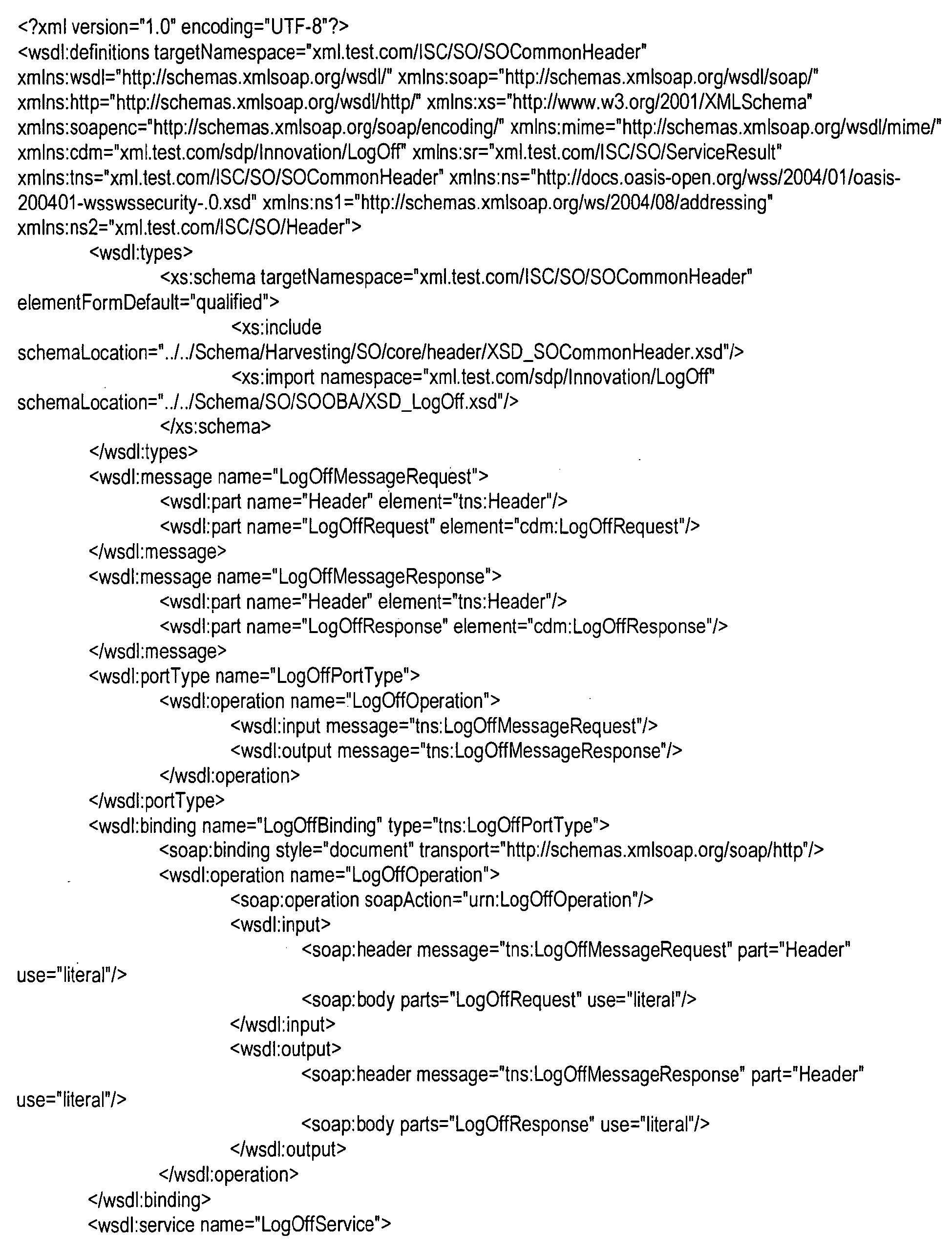

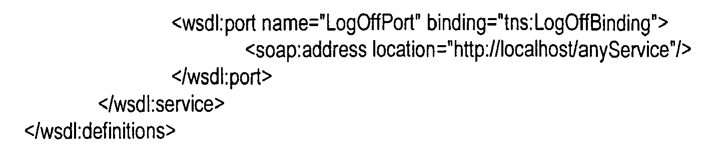

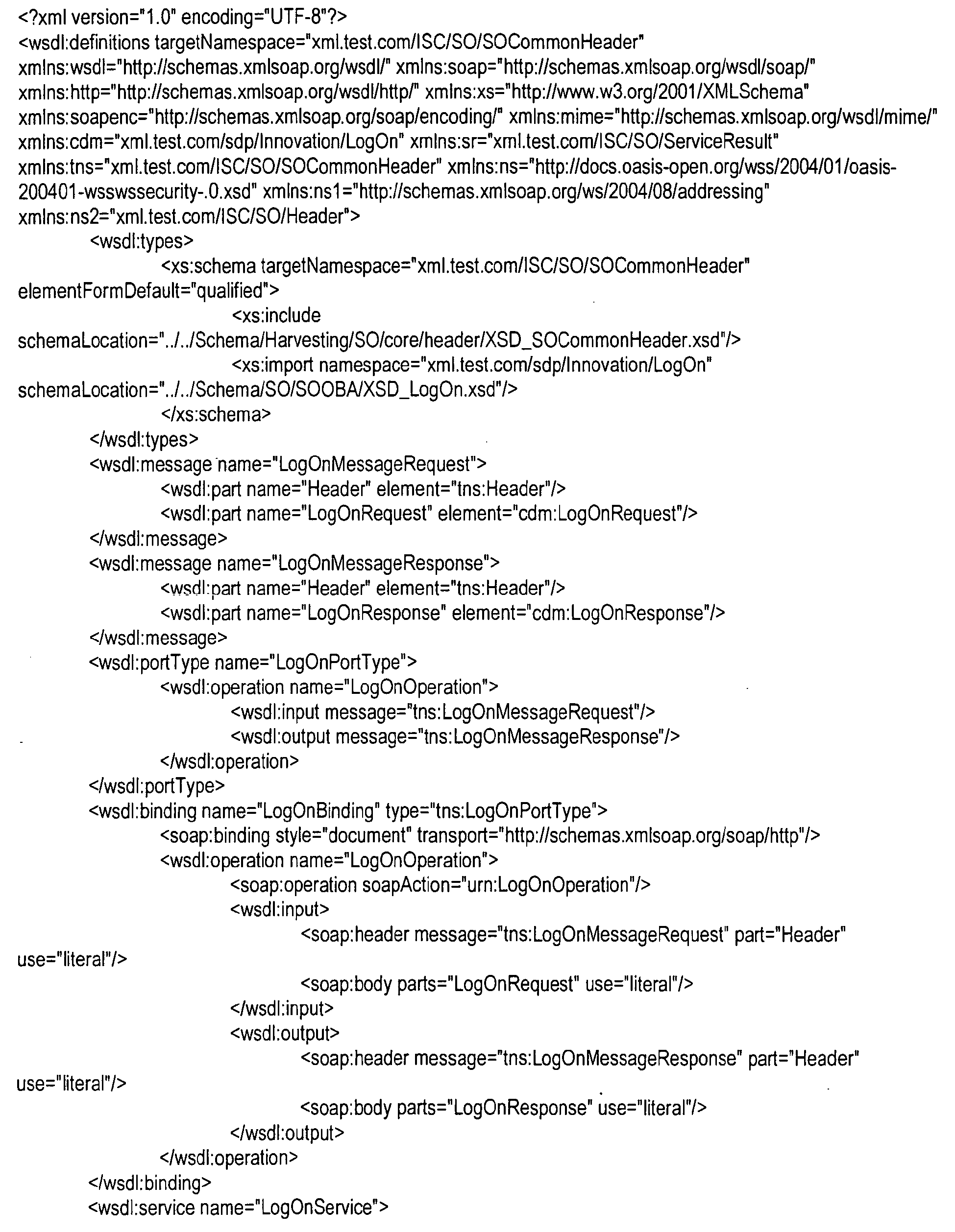

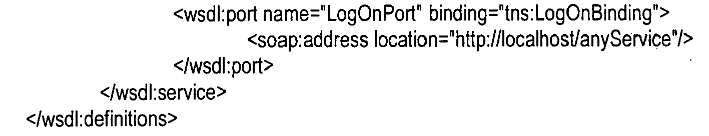

## Claims

1. A computer-implemented method for cross community invitation, comprising:
receiving, at an interface layer (110) a search query from a subscriber, the interface layer (110) installed on a subscriber's mobile device and interacting with a service delivery platform layer (120) and a network layer (130);
retrieving a location information of the subscriber in response to the search query;
retrieving, through a service delivery platform (120), a search result from a plurality of information sources (140) based on the search query, wherein the location information and search criteria are passed as inputs for the search;
wherein the service delivery platform (120) communicates with mobile devices (160), multiple different community contact sources (150) and the plurality of information sources (140) via the network layer (130);
returning the search result to the subscriber through the interface layer (110);
receiving a search result selection from the search result from the subscriber at the interface layer (110);
building a contact information list from community data for the subscriber and obtained across the multiple different community contact sources (150) in response to the search result selection, wherein building a contact information list includes
- obtaining credentials from the subscriber by invoking a converged subscription management (CSM) module (808); and
- providing the credentials to the contact sources to authorize retrieving the community data for the subscriber by executing a service access authentication on the CSM module (808);
wherein building the contact information list further comprises filtering the contact information list according to preference data retrieved through the service delivery platform (120),
wherein the service delivery platform updates the subscriber preference data on a Unified Messaging (UM) platform (818) internal to the service delivery platform (120), the UM platform (818) implements management of the contact information list;
wherein the multiple different community contact sources includes a first community contact source and a second community contact source; and
wherein building the contact information list further comprises:
obtaining a first contact source list from the first community contact source,
obtaining a second contact source list from the second community contact source, and
integrating the first contact source list from the second contact source list to form the contact information list,
wherein a contact list management for the community is implemented in the UM platform (818), wherein contact lists from various external communities are integrated and sent back by the service delivery platform to the Interface layer (110),
wherein a single service is exposed for retrieving the contact information list of the subscriber by invoking the multiple different communities in parallel, wherein a Provider ID field associated with each output result that the service gives back to the caller is defined to represent each of the multiple different communities;
returning the contact information list to the subscriber through the interface layer (110);
receiving a contact selection from the contact information list from the subscriber at the interface layer (110); and
transmitting an invitation message based on the contact selection to recipients corresponding to the contact selection, wherein the service delivery platform (120) determines how to contact each of the recipients and sends the invitation message via the determined methods of communication, the determined methods including short messaging services (SMS) and community messages;
wherein a common data model implements a common structure for messages managed by the service delivery platform (120), wherein the common structure for the messages defines a Simple Object Access Protocol (SOAP) message body structure, wherein the SOAP header structure and parameters are moved into the SOAP body structure (2500), and wherein the common data model defines the SOAP body structure (2500) composed of a header element (2502) and a body element (2504), wherein the header element includes a service ID to identify a transaction and a service label to identify a target workflow; and
wherein departures from the common data model are permitted by:
detecting a message request that requires invocation of an API from an external system, and in response
transforming the message request from a schema of the common data model to a schema of an external data model as requested by an interface specification of the external system.

2. The method of claim 1, further comprising:
obtaining an invitation accept response to the invitation messages from at least one of the recipients; and
communicating the invitation accept response to the subscriber.

3. The method of claim 1 or 2, further comprising:
obtaining event status information, the event status information including a list of recipients from which an invitation accept response has been obtained; and
transmitting the event status information through the interface layer (110) to the subscriber.

4. The method of any one of the preceding claims, further comprising:
retrieving through the service delivery platform (120) an announcement message from an announcement message source based on the search query; and
sending the announcement message to the subscriber through the interface layer (110).

5. The method of any one of the preceding claims, wherein
returning the search result comprises returning a map comprising the search result to the subscriber through the interface layer.

6. The method of any one of the preceding claims, wherein the search query includes a search keyword and a search category.

7. The method of any one of the preceding claims, wherein the plurality of information sources includes at least an external information source or an internal information source with respect to the service delivery platform (120).

8. The method of any one of the preceding claims, wherein the multiple different contact sources include at least an external contact source, an internal contact source or a local contact database with respect to the service delivery platform.

9. The method of any one of the preceding claims, wherein retrieving through the service delivery platform (120) the search result comprises retrieving the search result arising from the search query and the location information.

10. The method of claim 9, wherein retrieving the location information of the subscriber in response to the search query includes retrieving the location information from a global positioning system (GPS) or from a location server which obtains the subscriber's location information based on the subscriber's last known location.

## Patentansprüche

1. Computerimplementiertes Verfahren für Community-übergreifende Einladung, umfassend:
Empfangen, an einer Schnittstellenschicht (110), einer Suchanfrage von einem Teilnehmer, wobei die Schnittstellenschicht (110) auf einem Mobilgerät des Teilnehmers installiert ist und mit einer Dienstbereitstellung-Plattformschicht (120) und einer Netzwerkschicht (130) interagiert;
Abrufen einer Standortinformation des Teilnehmers ansprechend auf die Suchanfrage;
Abrufen, durch eine Dienstbereitstellungsplattform (120), eines Suchergebnisses aus einer Mehrzahl von Informationsquellen (140) basierend auf der Suchanfrage, wobei die Standortinformation und Suchkriterien als Eingaben für die Suche genehmigt bzw. übergeben werden;
wobei die Dienstbereitstellungsplattform (120) mit Mobilgeräten (160), mehreren unterschiedlichen Community-Kontaktquellen (150) und der Mehrzahl von Informationsquellen (140) über die Netzwerkschicht (130) kommuniziert;
Zurückgeben des Suchergebnisses an den Teilnehmer durch die Schnittstellenschicht (110);
Empfangen einer Suchergebnisauswahl aus dem Suchergebnis von dem Teilnehmer an der Schnittstellenschicht (110);
Erstellen einer Kontaktinformationsliste aus Community-Daten für den Teilnehmer und erhalten über die mehreren unterschiedlichen Community-Kontaktquellen (150) ansprechend auf die Suchergebnisauswahl, wobei das Erstellen einer Kontaktinformationsliste beinhaltet:
- Erhalten von Anmeldedaten von dem Teilnehmer durch Aufrufen eines Converged-Subscription-Management(CSM)-Moduls (808); und
- Bereitstellen der Anmeldedaten an die Kontaktquellen zum Autorisieren des Abrufens der Community-Daten für den Teilnehmer durch Ausführen einer Dienstzugangsauthentifizierung an dem CSM-Modul (808);
wobei das Erstellen der Kontaktinformationsliste ferner ein Filtern der Kontaktinformationsliste gemäß Präferenzdaten umfasst, die durch die Dienstbereitstellungsplattform (120) abgerufen werden,
wobei die Dienstbereitstellungsplattform die Teilnehmerpräferenzdaten auf einer Unified-Messaging(UM)-Plattform (818) aktualisiert, die intern zu der Dienstbereitstellungsplattform (120) ist, wobei die UM-Plattform (818) die Verwaltung der Kontaktinformationsliste implementiert;
wobei die mehreren unterschiedlichen Community-Kontaktquellen eine erste Community-Kontaktquelle und eine zweite Community-Kontaktquelle enthalten; und
wobei das Erstellen der Kontaktinformationsliste ferner umfasst:
Erhalten einer ersten Kontaktquellenliste aus der ersten Community-Kontaktquelle,
Erhalten einer zweiten Kontaktquellenliste aus der zweiten Community-Kontaktquelle, und
Integrieren der ersten Kontaktquellenliste von bzw. aus der zweiten Kontaktquellenliste, um die Kontaktinformationsliste zu bilden,
wobei eine Kontaktlistenverwaltung für die Community in der UM-Plattform (818) implementiert wird, wobei Kontaktlisten von verschiedenen externen Communities integriert werden und durch die Dienstbereitstellungsplattform an die Schnittstellenschicht (110) zurückgeschickt werden,
wobei ein einzelner Dienst offengelegt wird zum Abrufen der Kontaktinformationsliste des Teilnehmers durch paralleles Aufrufen der mehreren unterschiedlichen Communities, wobei ein Provider ID-Feld, das mit jedem Ausgabeergebnis assoziiert bzw. verknüpft ist, welches der Dienst an den Anrufer bzw. Aufrufer zurückgibt, dahingehend definiert wird, jede der mehreren unterschiedlichen Communities zu repräsentieren;
Zurückgeben der Kontaktinformationsliste an den Teilnehmer durch die Schnittstellenschicht (110);
Empfangen einer Kontaktauswahl aus der Kontaktinformationsliste von dem Teilnehmer an der Schnittstellenschicht (110); und
Übertragen einer Einladungsnachricht basierend auf der Kontaktauswahl an Empfänger entsprechend der Kontaktauswahl, wobei die Dienstbereitstellungsplattform (120) bestimmt, wie jeder der Empfänger zu kontaktieren ist, und die Einladungsnachricht über die bestimmten Kommunikationsverfahren versendet, wobei die bestimmten Verfahren Kurzmitteilungsdienste (SMS) und Community-Nachrichten umfassen;
wobei ein gemeinsames Datenmodell eine gemeinsame Struktur für Nachrichten implementiert, die von der Dienstbereitstellungsplattform (120) verwaltet wird, wobei die gemeinsame Struktur für die Nachrichten eine Simple-Object-Access-Protocol(SOAP)-Nachrichtekörperstruktur definiert, wobei die SOAP-Kopfzeilenstruktur und Parameter in die SOAP-Körperstruktur (2500) bewegt bzw. verschoben werden, und wobei das gemeinsame Datenmodell die SOAP-Körperstruktur (2500) definiert, die aus einem Kopfzeilenelement (2502) und einem Körperelement (2504) besteht, wobei das Kopfzeilenelement eine Service-ID, um eine Transaktion zu identifizieren, und ein Service-Label enthält, um einen Ziel- bzw. Soll-Workflow zu identifizieren; und
wobei Abweichungen von dem gemeinsamen Datenmodell erlaubt sind durch:
Detektieren einer Nachrichtenanfrage, die ein Aufrufen eines API von bzw. aus einem externen System erfordert, und ansprechend darauf
Umwandeln der Nachrichtenanfrage von einem Schema des gemeinsamen Datenmodells zu einem Schema eines externen Datenmodells, wie es durch eine Schnittstellenspezifikation des externen Systems gefordert wird.

2. Verfahren nach Anspruch 1, ferner umfassend:
Erhalten einer Einladungsannahmeantwort auf die Einladungsnachrichten von zumindest einem der Empfänger; und
Kommunizieren der Einladungsannahmeantwort an den Teilnehmer.

3. Verfahren nach Anspruch 1 oder 2, ferner umfassend:
Erhalten von Ereignisstatusinformationen, wobei die Ereignisstatusinformationen eine Liste von Empfängern enthalten, von denen eine Einladungsannahmeantwort erhalten wurde; und
Übertragen der Ereignisstatusinformationen durch die Schnittstellenschicht (110) an den Teilnehmer.

4. Verfahren nach einem der vorhergehenden Ansprüche, ferner umfassend:
Abrufen, durch die Dienstbereitstellungsplattform (120), einer Ankündigungsnachricht von einer Ankündigungsnachrichtenquelle basierend auf der Suchanfrage; und
Senden der Ankündigungsnachricht an den Teilnehmer durch die Schnittstellenschicht (110).

5. Verfahren nach einem der vorhergehenden Ansprüche, wobei das Zurückgeben des Suchergebnisses das Zurückgeben einer Karte, die das Suchergebnis umfasst, an den Teilnehmer durch die Schnittstellenschicht umfasst.

6. Verfahren nach einem der vorhergehenden Ansprüche, wobei die Suchanfrage einen Suchbegriff und eine Suchkategorie beinhaltet.

7. Verfahren nach einem der vorhergehenden Ansprüche, wobei die Mehrzahl von Informationsquellen zumindest eine externe Informationsquelle oder eine interne Informationsquelle bezüglich der Dienstbereitstellungsplattform (120) enthält.

8. Verfahren nach einem der vorhergehenden Ansprüche, wobei die mehreren unterschiedlichen Kontaktquellen zumindest eine externe Kontaktquelle, eine interne Kontaktquelle oder eine lokale Kontaktdatenbank bezüglich der Dienstbereitstellungsplattform enthalten.

9. Verfahren nach einem der vorhergehenden Ansprüche, wobei das Abrufen des Suchergebnisses durch die Dienstbereitstellungsplattform (120) das Abrufen des Suchergebnisses umfasst, das sich aus der Suchanfrage und den Standortinformationen ergibt.

10. Verfahren nach Anspruch 9, wobei das Abrufen der Standortinformationen des Teilnehmers ansprechend auf die Suchanfrage das Abrufen der Standortinformationen von einem globalen Positionierungssystem (GPS) oder von einem Standortserver beinhaltet, der die Standortinformationen des Teilnehmers basierend auf dem letzten bekannten Standort des Teilnehmers gewinnt.

## Revendications

1. Procédé mis en oeuvre par ordinateur pour une invitation intercommunautés, comprenant :
recevoir, au niveau d'une couche d'interface (110), une requête de recherche d'un abonné, la couche d'interface (110) étant installée sur un dispositif mobile de l'abonné et interagissant avec une couche de plate-forme de livraison de service (120) et une couche de réseau (130) ;
récupérer une information d'emplacement de l'abonné en réponse à la requête de recherche ;
récupérer, à travers une plate-forme de livraison de service (120), un résultat de recherche d'une pluralité de sources d'informations (140) en fonction de la requête de recherche, dans lequel l'information d'emplacement et des critères de recherche sont passés comme entrées pour la recherche ;
dans lequel la plate-forme de livraison de service (120) communique avec des dispositifs mobiles (160), des sources de contacts de multiples communautés différentes (150) et la pluralité de sources d'informations (140) par le biais de la couche de réseau (130) ;
renvoyer le résultat de recherche à l'abonné à travers la couche d'interface (110) ;
recevoir une sélection de résultats de recherche provenant du résultat de recherche de l'abonné au niveau de la couche d'interface (110) ;
élaborer une liste de coordonnées à partir de données communautaires pour l'abonné et obtenues en travers des sources de contacts de multiples communautés différentes (150) en réponse à la sélection de résultats de recherche, dans lequel élaborer une liste de coordonnées inclut
- obtenir un justificatif d'identité de l'abonné en appelant un module de gestion d'abonnement convergent (CSM) (808) ; et
- fournir le justificatif d'identité aux sources de contacts pour autoriser la récupération des données communautaires pour l'abonné en exécutant une authentification d'accès au service sur le module CSM (808) ;
dans lequel élaborer la liste de coordonnées comprend en outre filtrer la liste de coordonnées en fonction de données de préférence récupérées à travers la plate-forme de livraison de service (120),
dans lequel la plate-forme de livraison de service met à jour les données de préférence d'abonné sur une plate-forme de Messagerie Unifiée (MU) (818) interne à la plate-forme de livraison de service (120), la plate-forme MU (818) met en oeuvre une gestion de la liste de coordonnées ;
dans lequel les sources de contacts de multiples communautés différentes incluent une première source de contacts communautaires et une seconde source de contacts communautaires ; et
dans lequel élaborer la liste de coordonnées comprend en outre :
obtenir une première liste de source de contacts de la première source de contacts communautaires,
obtenir une seconde liste de source de contacts de la seconde source de contacts communautaires, et
intégrer la première liste de source de contacts depuis la seconde liste de source de contacts pour former la liste de coordonnées,
dans lequel une gestion de liste de contacts pour la communauté est mise en oeuvre dans la plate-forme MU (818), dans lequel des listes de contacts provenant de diverses communautés externes sont intégrées et renvoyées par la plate-forme de livraison de service à la couche d'interface (110),
dans lequel un seul service est exposé pour récupérer la liste de coordonnées de l'abonné en appelant les multiples communautés différentes en parallèle, dans lequel un champ d'identifiant de fournisseur associé à chaque résultat émis que le service redonne à l'appelant est défini pour représenter chacune des multiples communautés différentes ;
renvoyer la liste de coordonnées à l'abonné à travers la couche d'interface (110) ;
recevoir une sélection de contacts provenant de la liste de coordonnées de l'abonné au niveau de la couche d'interface (110) ; et
transmettre un message d'invitation en fonction de la sélection de contacts à des destinataires correspondant à la sélection de contacts, dans lequel la plate-forme de livraison de service (120) détermine la manière de contacter chacun des destinataires et envoie le message d'invitation par le biais des procédés de communication déterminés, les procédés déterminés incluant des SMS et des messages communautaires ;
dans lequel un modèle de données commun met en oeuvre une structure commune pour des messages gérée par la plate-forme de livraison de service (120), dans lequel la structure commune pour les messages définit une structure de corps de message à protocole SOAP, dans lequel la structure et les paramètres d'entête SOAP sont déplacés dans la structure de corps SOAP (2500), et dans lequel le modèle de données commun définit la structure de corps SOAP (2500) composée d'un élément d'entête (2502) et d'un élément de corps (2504), dans lequel l'élément d'entête inclut un identifiant de service pour identifier une transaction et une étiquette de service pour identifier un flux de travail cible ; et
dans lequel des écarts du modèle de données commun sont permis en :
détectant une demande de message qui requiert l'appel d'une API depuis un système externe, et en réponse
transformant la demande de message d'un schéma du modèle de données commun à un schéma d'un modèle de données externe tel que demandé par une spécification d'interface du système externe.

2. Procédé selon la revendication 1, comprenant en outre :
obtenir une réponse d'acceptation d'invitation aux messages d'invitation d'au moins un des destinataires ; et
communiquer la réponse d'acceptation d'invitation à l'abonné.

3. Procédé selon la revendication 1 ou 2, comprenant en outre :
obtenir des informations de statut d'événement, les informations de statut d'événement incluant une liste de destinataires desquels une réponse d'acceptation d'invitation a été obtenue ; et
transmettre les informations de statut d'événement à travers la couche d'interface (110) à l'abonné.

4. Procédé selon l'une quelconque des revendications précédentes, comprenant en outre :
récupérer à travers la plate-forme de livraison de service (120) un message d'annonce d'une source de messages d'annonce en fonction de la requête de recherche ; et
envoyer le message d'annonce à l'abonné à travers la couche d'interface (110).

5. Procédé selon l'une quelconque des revendications précédentes, dans lequel renvoyer le résultat de recherche comprend renvoyer une carte comprenant le résultat de recherche à l'abonné à travers la couche d'interface.

6. Procédé selon l'une quelconque des revendications précédentes, dans lequel la requête de recherche inclut un mot-clé de recherche et une catégorie de recherche.

7. Procédé selon l'une quelconque des revendications précédentes, dans lequel la pluralité de sources d'informations inclut au moins une source d'informations externe ou une source d'informations interne par rapport à la plate-forme de livraison de service (120).

8. Procédé selon l'une quelconque des revendications précédentes, dans lequel les multiples sources de contacts différentes incluent au moins une source de contacts externe, une source de contacts interne ou une base de données de contacts locale par rapport à la plate-forme de livraison de service.

9. Procédé selon l'une quelconque des revendications précédentes, dans lequel récupérer à travers la plate-forme de livraison de service (120) le résultat de recherche comprend récupérer le résultat de recherche résultant de la requête de recherche et de l'information d'emplacement.

10. Procédé selon la revendication 9, dans lequel récupérer l'information d'emplacement de l'abonné en réponse à la requête de cherche inclut récupérer l'information d'emplacement d'un système de localisation GPS ou d'un serveur d'emplacement qui obtient l'information d'emplacement de l'abonné en fonction du dernier emplacement connu de l'abonné.
